(19) Europäisches Patentamt
European Patent Office
Office européen des brevets

(11) **EP 4 351 235 A1**

(12) **EUROPEAN PATENT APPLICATION**
published in accordance with Art. 153(4) EPC

(43) Date of publication:
**10.04.2024 Bulletin 2024/15**

(21) Application number: **22827301.7**

(22) Date of filing: **25.05.2022**

(51) International Patent Classification (IPC):
**H04W 52/36** (2009.01)

(52) Cooperative Patent Classification (CPC):
**H04W 52/36; H04W 72/04**

(86) International application number:
**PCT/CN2022/095006**

(87) International publication number:
**WO 2022/267804 (29.12.2022 Gazette 2022/52)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **22.06.2021 CN 202110694205**

(71) Applicant: **Huawei Technologies Co., Ltd.**
**Shenzhen, Guangdong 518129 (CN)**

(72) Inventors:
• **LU, Yuxin**
**Shenzhen, Guangdong 518129 (CN)**
• **LIU, Chenchen**
**Shenzhen, Guangdong 518129 (CN)**
• **HU, Mengshi**
**Shenzhen, Guangdong 518129 (CN)**
• **GAN, Ming**
**Shenzhen, Guangdong 518129 (CN)**

(74) Representative: **Thun, Clemens**
**Mitscherlich PartmbB**
**Patent- und Rechtsanwälte**
**Karlstraße 7**
**80333 München (DE)**

(54) **RESOURCE INDICATION METHOD AND APPARATUS**

(57)     This application provides a resource indication method and apparatus, and relates to the field of communication technologies. In the method, the first communication apparatus may receive resource indication information. The resource indication information may include resource unit allocation information for indicating one or more first VRUs, and station information of a station to which the one or more first VRUs are allocated. There is a mapping relationship between the first PRU and the first VRU. The first communication apparatus transmits data on the first PRU. Because a continuous VRU is mapped to a discrete PRU, it is equivalent to reducing a quantity of subcarriers per MHz, so that the second communication apparatus can support a larger transmit power. This application is applied to a wireless local area network system supporting IEEE 802.11ax next-generation Wi-Fi protocols, for example, 802.11 series protocols such as the 802.11be or the EHT.

FIG. 7

**Description**

**CROSS-REFERENCE TO RELATED APPLICATIONS**

This application claims priority to Chinese Patent Application No. 202110694205.4, filed with the China National Intellectual Property Administration on June 22, 2021 and entitled "RESOURCE INDICATION METHOD AND APPARATUS", which is incorporated herein by reference in its entirety.

**TECHNICAL FIELD**

This application relates to the field of communication technologies, and in particular, to a resource indication method and apparatus.

**BACKGROUND**

Currently, a low power indoor (low power indoor, LPI) communication manner is defined in a related technology, and a maximum transmit power and a maximum spectral density are strictly limited. For an access point (access point, AP), a maximum power is 36 decible-milliwatts (decible-milliwatts, dBm), and a maximum power spectral density is 5 decible-milliwatts/megahertz (decible-milliwatts/megahertz, dBm/MHz). For a station (station, STA), a maximum power is 24 dBm, and a maximum power spectral density is -1 dBm/MHz.

However, a transmit power of a device is limited by both the maximum power and the maximum power spectral density. In other words, the transmit power of the device cannot exceed the maximum power or the maximum power spectral density. Therefore, if the maximum power and the power spectral density are limited, a corresponding transmit bandwidth may be expanded to implement a larger transmit power of a device. In other words, subcarriers allocated to the device become more discrete in frequency domain, that is, a quantity of subcarriers per MHz is reduced. Because resource units (resource units, RUs) of different sizes may correspond to a plurality of combinations of discrete subcarriers, more RUs or RU combinations need to be defined, and these RUs or RU combinations need to be indicated.

**SUMMARY**

This application provides a resource indication method and apparatus, to increase a transmit power of a device.

According to a first aspect, a resource indication method is provided. The method may be performed by a first communication apparatus, or may be performed by a chip having a function similar to that of the first communication apparatus. The first communication apparatus may be a communication device at a receive end, for example, may be a STA or an AP. In the method, the first communication apparatus may receive resource indication information. The resource indication information may include resource unit allocation information for indicating one or more first virtual resource units (virtual resource units, VRUs) and station information of a station to which the one or more first VRUs are allocated, where the first VRU includes a plurality of subcarriers continuous in frequency domain; and the first communication apparatus determines a first physical resource unit (physical resource unit, PRU) based on the resource indication information, where there is a mapping relationship between the first PRU and the first VRU, and the first PRU includes a plurality of subcarrier groups discrete in frequency domain, one subcarrier group includes one subcarrier, or includes at least two continuous subcarriers; and the first communication apparatus transmits data on the first PRU.

Based on the foregoing solution, the first communication apparatus may notify a second communication apparatus that an RU allocated to the second communication apparatus is a VRU, but the second communication apparatus sends data on a discrete PRU to which a continuous VRU is mapped. Because a continuous VRU is mapped to a discrete PRU, it is equivalent to reducing a quantity of subcarriers per MHz, so that the second communication apparatus can support a larger transmit power

In a possible implementation, the mapping relationship includes: A difference between an index of one first VRU in the one or more first VRUs and an index of the first PRU corresponding to the one first VRU is a first specified value; or an index of one first VRU in the one or more first VRUs is the same as an index of the first PRU corresponding to the one first VRU; and the index of the one first VRU in the one or more first VRUs is determined based on the resource unit allocation information.

Based on the foregoing solution, the first VRU may be mapped to a discrete first PRU based on the indices of the first VRU, and the second communication apparatus sends data on the discrete PRU, so that the second communication apparatus can support a larger transmit power

In a possible implementation, the mapping relationship specifically includes: Mapping is performed by using each 26-tone RU of 9 26-tone RUs included in each 20 MHz as a minimum unit, indices of the 9 26-tone RUs are respectively {1, 2, 3, 4, 5, 6, 7, 8, 9}+q, and indices obtained by mapping the 9 26-tone RUs are respectively {1, 7, 3, 9, 5, 6, 2, 8, 4}+q, {6, 2, 8, 4, 5, 1, 7, 3, 9}+q, {1, 2, 8, 9, 5, 6, 7, 3, 4}+q, or {6, 7, 3, 4, 5, 1, 2, 8, 9}+q, where q is an integer, q = 9*b, b is an integer, b indicates a quantity of 20 MHz included in a maximum resource bandwidth allocated by the second communication apparatus minus 1, and q = 0, 9, 18, 27, or the like; and one first VRU in the one or more first VRUs is one or more of the 26-tone RUs whose indices are {1, 2, 3, 4, 5, 6, 7, 8, 9}+q, and the first PRU corresponding to the one first VRU in the one or more first VRUs is one or more of 26-tone RUs whose indices are {1, 7, 3, 9, 5, 6, 2, 8, 4}+q, or the first PRU corresponding to the one first VRU in the one or more first VRUs is one or more of 26-tone RUs whose indices are {6, 2, 8, 4, 5, 1, 7, 3, 9}+q, or the first PRU corresponding to the one first VRU in the one or more first VRUs is one or more of 26-tone RUs whose indices are {1, 2, 8, 9, 5, 6, 7, 3, 4}+q, or the first PRU corresponding to the one first VRU in the one or more first VRUs is one or more of 26-tone RUs whose indices are {6, 7, 3, 4, 5, 1, 2, 8, 9}+q.

Based on the foregoing solution, a plurality of first VRUs may be mapped in a similar symmetry manner to obtain a plurality of first PRUs. In the symmetric manner, continuous VRUs may be fairly mapped to discrete PRUs. Therefore, when a quantity of VRUs allocated by the first communication apparatus is small and a bandwidth is small, the allocated VRUs can also be mapped to discrete PRUs as much as possible.

In a possible implementation, the mapping relationship specifically includes: A maximum resource bandwidth allocated by the second communication apparatus may be greater than or equal to 40 MHz, the maximum resource bandwidth may include at least two 242-tone RUs, mapping is performed by using each 26-tone RU in 18 26-tone RUs included in the at least two 242-tone RUs as a minimum unit, indices of the 18 26-tone RUs are respectively {1, 2, 3, 4, 5, 6, 7, 8, 9}, {10, 11, 12, 13, 14, 15, 16, 17, 18}+m, and indices obtained by mapping the 18 26-tone RUs are respectively {1, 11+m, 3, 13+m, 5, 6, 16+m, 8, 18+m}, {10+m, 2, 12+m, 4, 14+m, 15+m, 7, 17+m, 9}, or {10+m, 2, 12+m, 4, 5, 15+m, 7, 17+m, 9}, {1, 11+m, 3, 13+m, 14+m, 6, 16+m, 8, 18+m}, where m is an integer, m = 9*a, a is an integer, a indicates a quantity of 242-tone RUs between the at least two 242-tone RUs, and m = 0, 9, 18, 27, or the like.

Based on the foregoing solution, a spacing between two continuous VRUs may be long, and the continuous VRUs may be mapped to discrete PRUs as much as possible. When a quantity of VRUs allocated by the first communication apparatus is large and a bandwidth is large, more discrete PRUs may be obtained.

In a possible implementation, a sequence number of a subcarrier in the first PRU determined for a subcarrier with a sequence number of k in the first VRUs based on the mapping relationship is k', and satisfies the following equation:

$$k' = M_t * x * \mathrm{mod}(k, M_c) + \lfloor k/M_c \rfloor$$

$M_t$ indicates a quantity of first VRUs that participate in mapping in each 20 MHz, $M_t$ is an integer, $1 \leq M_t \leq 9$, x is an integer, x = 1, 2, 4, 8, 16, or the like, $M_t*x$ indicates a total quantity of the first VRUs that participate in mapping, mod( ) indicates a modulo operation, $M_c$ indicates a quantity of subcarriers that participate in mapping in one first VRU, $1 \leq M_c \leq 26$, and k = 0, 1, 2, ..., or $M_t*M_c*x$-l. Herein, x may indicate a quantity of 20 MHz included in a maximum bandwidth indicated by the resource unit allocation information.

Based on the foregoing solution, subcarriers in a VRU may be mapped to subcarriers on a PRU, and a spacing between two continuous subcarriers may be expanded according to the foregoing equation, so that subcarriers included in the PRU are more discrete.

In a possible implementation, indices of subcarriers included in the first VRU are respectively [0, 1, 2, ..., $M_c$ - 1]+n*$M_c$, and indices of subcarrier groups included in the first PRU are respectively [0, 1*$M_t*x$, 2*$M_t*x$, 3*$M_t*x$, ..., ($M_c$ - 1)*$M_t*x$]+n, where n = 0, 1, 2, ..., or $M_t*x$ - 1.

Based on the foregoing solution, subcarriers included in the first VRU may be mapped to subcarriers included in the first PRU based on subcarrier indices, and a spacing between two continuous subcarriers is expanded, so that the subcarriers included in the PRU are more discrete.

According to a second aspect, a resource indication method is provided. The method may be performed by a second communication apparatus, or may be performed by a chip having a function similar to that of the second communication apparatus. The second communication apparatus may be a communication device at a transmit end, for example, may be an AP. In the method, the second communication apparatus sends resource indication information, where the resource indication information includes resource unit allocation information for indicating one or more first virtual resource units VRUs and station information of a station to which the one or more first VRUs are allocated, and the first VRU includes a plurality of subcarriers continuous in frequency domain; the second communication apparatus receives data on a first physical resource unit PRU, where there is a mapping relationship between the first PRU and the first VRU, the first PRU includes a plurality of subcarrier groups discrete in frequency domain, and one subcarrier group includes one subcarrier or includes at least two continuous subcarriers; and the second communication apparatus receives the data on the first PRU.

In a possible implementation, the mapping relationship includes: A difference between an index of one first VRU in the one or more first VRUs and an index of the first PRU corresponding to the one first VRU is a first specified value; or an index of one first VRU in the one or more first VRUs is the same as an index of the first PRU corresponding to the one first VRU; and the index of the one first VRU in the one or more first VRUs is determined based on the resource unit allocation information.

In a possible implementation, the mapping relationship specifically includes: Mapping is performed by using each 26-tone RU of 9 26-tone RUs included in each 20 MHz as a minimum unit, indices of the 9 26-tone RUs are respectively {1, 2, 3, 4, 5, 6, 7, 8, 9}+q, and indices obtained by mapping the 9 26-tone RUs are respectively {1, 7, 3, 9, 5, 6, 2, 8, 4}+q, {6, 2, 8, 4, 5, 1, 7, 3, 9}+q, {1, 2, 8, 9, 5, 6, 7, 3, 4}+q, or {6, 7, 3, 4, 5, 1, 2, 8, 9}+q, where q is an integer, q = 9*b, b is an integer, b indicates a quantity of 20 MHz included in a maximum resource bandwidth allocated by the second communication apparatus minus 1, and q = 0, 9, 18, 27, or the like; and one first VRU in the one or more first VRUs is one or more of the 26-tone RUs whose indices are {1, 2, 3, 4, 5, 6, 7, 8, 9}+q, and the first PRU corresponding to the one first VRU in the one or more first VRUs is one or more of 26-tone RUs whose indices are {1, 7, 3, 9, 5, 6, 2, 8, 4}+q, or the first PRU corresponding to the one first VRU in the one or more first VRUs is one or more of 26-tone RUs whose indices are {6, 2, 8, 4, 5, 1, 7, 3, 9}+q, or the first PRU corresponding to the one first VRU in the one or more first VRUs is one or more of 26-tone RUs whose indices are {1, 2, 8, 9, 5, 6, 7, 3, 4}+q, or the first PRU corresponding to the one first VRU in the one or more first VRUs is one or more of 26-tone RUs whose indices are {6, 7, 3, 4, 5, 1, 2, 8, 9}+q.

In a possible implementation, the mapping relationship specifically includes: A maximum resource bandwidth allocated by the second communication apparatus may be greater than or equal to 40 MHz, the maximum resource bandwidth may include at least two 242-tone RUs, mapping is performed by using each 26-tone RU in 18 26-tone RUs included in the at least two 242-tone RUs as a minimum unit, indices of the 18 26-tone RUs are respectively {1, 2, 3, 4, 5, 6, 7, 8, 9}, {10, 11, 12, 13, 14, 15, 16, 17, 18}+m, and indices obtained by mapping the 18 26-tone RUs are respectively {1, 11+m, 3, 13+m, 5, 6, 16+m, 8, 18+m}, {10+m, 2, 12+m, 4, 14+m, 15+m, 7, 17+m, 9}, or {10+m, 2, 12+m, 4, 5, 15+m, 7, 17+m, 9}, {1, 11+m, 3, 13+m, 14+m, 6, 16+m, 8, 18+m}, where m is an integer, m = 9*a, a is an integer, a indicates a quantity of 242-tone RUs between the at least two 242-tone RUs, and m = 0, 9, 18, 27, or the like.

In a possible implementation, a sequence number of a subcarrier in the first PRU determined for a subcarrier with a sequence number of k in the first VRUs based on the mapping relationship is k', and satisfies the following equation:

$$k' = M_t * x * \mathrm{mod}(k, M_c) + \lfloor k/M_c \rfloor$$

$M_t$ indicates a quantity of first VRUs that participate in mapping in each 20 MHz, $M_t$ is an integer, $1 \le M_t \le 9$, x is an integer, x = 1, 2, 4, 8, 16, or the like, $M_t$*x indicates a total quantity of the first VRUs that participate in mapping, mod( ) indicates a modulo operation, $M_c$ indicates a quantity of subcarriers that participate in mapping in one first VRU, $1 \le M_c \le 26$, and k = 0, 1, 2, ..., or $M_t$*$M_c$*x-1. Herein, x may indicate a quantity of 20 MHz included in a maximum bandwidth indicated by the resource unit allocation information.

In a possible implementation, indices of subcarriers included in the first VRU are respectively [0, 1, 2, ..., $M_c$ - 1]+n*$M_c$, and indices of subcarrier groups included in the first PRU are respectively [0, 1*$M_t$*x, 2*$M_t$*x, 3*$M_t$*x, ..., ($M_e$ - 1)*$M_t$*x]+n, where n = 0, 1, 2, ..., or $M_t$*x - 1.

According to a third aspect, a communication apparatus is provided. The communication apparatus may be configured to perform the method according to any one of the first aspect or the possible implementations of the first aspect. Specifically, the communication apparatus may include modules or units configured to perform the method according to any one of the first aspect or the possible implementations of the first aspect. For example, the communication apparatus includes a processing unit and a transceiver unit. For example, the communication apparatus is the foregoing communication device at the receive end. The transceiver unit is configured to receive resource indication information, where the resource indication information includes resource unit allocation information for indicating one or more first virtual resource units VRUs and station information of a station to which the one or more first VRUs are allocated, and the first VRU includes a plurality of subcarriers continuous in frequency domain. The processing unit is configured to determine a first physical resource unit PRU based on the resource indication information, where there is a mapping relationship between the first PRU and the first VRU, the first PRU includes a plurality of subcarrier groups discrete in the frequency domain, and one subcarrier group includes one subcarrier or includes at least two continuous subcarriers. The transceiver unit is further configured to transmit data on the first PRU.

In a design, the mapping relationship includes: A difference between an index of one first VRU in the one or more first VRUs and an index of the first PRU corresponding to the one first VRU is a first specified value; or an index of one first VRU in the one or more first VRUs is the same as an index of the first PRU corresponding to the one first VRU; and the index of the one first VRU in the one or more first VRUs is determined based on the resource unit allocation information.

In a design, the mapping relationship specifically includes: Mapping is performed by using each 26-tone RU of 9 26-tone RUs included in each 20 MHz as a minimum unit, indices of the 9 26-tone RUs are respectively {1, 2, 3, 4, 5, 6, 7, 8, 9}+q, and indices obtained by mapping the 9 26-tone RUs are respectively {1, 7, 3, 9, 5, 6, 2, 8, 4}+q, {6, 2, 8, 4, 5, 1, 7, 3, 9}+q, {1, 2, 8, 9, 5, 6, 7, 3, 4}+q, or {6, 7, 3, 4, 5, 1, 2, 8, 9}+q, where q is an integer, q = 9*b, b is an integer, b indicates a quantity of 20 MHz included in a maximum resource bandwidth allocated by the second communication apparatus minus 1, and q = 0, 9, 18, 27, or the like; and one first VRU in the one or more first VRUs is one or more of the 26-tone RUs whose indices are {1, 2, 3, 4, 5, 6, 7, 8, 9}+q, and the first PRU corresponding to the one first VRU in the one or more first VRUs is one or more of 26-tone RUs whose indices are {1, 7, 3, 9, 5, 6, 2, 8, 4}+q, or the first PRU corresponding to the one first VRU in the one or more first VRUs is one or more of 26-tone RUs whose indices are {6, 2, 8, 4, 5, 1, 7, 3, 9}+q, or the first PRU corresponding to the one first VRU in the one or more first VRUs is one or more of 26-tone RUs whose indices are {1, 2, 8, 9, 5, 6, 7, 3, 4}+q, or the first PRU corresponding to the one first VRU in the one or more first VRUs is one or more of 26-tone RUs whose indices are {6,7,3,4,5,1,2,8,9}+q .

In a design, the mapping relationship specifically includes: A maximum resource bandwidth allocated by the second communication apparatus may be greater than or equal to 40 MHz, the maximum resource bandwidth may include at least two 242-tone RUs, mapping is performed by using each 26-tone RU in 18 26-tone RUs included in the at least two 242-tone RUs as a minimum unit, indices of the 18 26-tone RUs are respectively {1, 2, 3, 4, 5, 6, 7, 8, 9}, {10, 11, 12, 13, 14, 15, 16, 17, 18}+m, and indices obtained by mapping the 18 26-tone RUs are respectively {1, 114m, 3, 13+m, 5, 6, 16+m, 8, 184m}, {10+m, 2, 12+m, 4, 14+m, 15+m, 7, 17+m, 9}, or {104m, 2, 12+m, 4, 5, 15+m, 7, 17+m, 9}, {1, 114m, 3, 13+m, 14+m, 6, 16+m, 8, 184m}, where m is an integer, m = 9*a, a is an integer, a indicates a quantity of 242-tone RUs between the at least two 242-tone RUs, and m = 0, 9, 18, 27, or the like.

In a design, a sequence number of a subcarrier in the first PRU determined for a subcarrier with a sequence number of k in the first VRUs based on the mapping relationship is k', and satisfies the following equation:

$$k' = M_t * x * \mathrm{mod}(k, M_c) + \lfloor k/M_c \rfloor$$

$M_t$ indicates a quantity of first VRUs that participate in mapping in each 20 MHz, $M_t$ is an integer, $1 \le M_t \le 9$, x is an integer, x = 1, 2, 4, 8, 16, or the like, $M_t*x$ indicates a total quantity of the first VRUs that participate in mapping, mod( ) indicates a modulo operation, $M_c$ indicates a quantity of subcarriers that participate in mapping in one first VRU, $1 \le M_c \le 26$, and k = 0, 1, 2, ..., or $M_t*M_c*x-1$. Herein, x may indicate a quantity of 20 MHz included in a maximum bandwidth indicated by the resource unit allocation information.

In a design, indices of subcarriers included in the first VRU are respectively [0, 1, 2, ..., $M_c$ - 1]+$\eta*M_{(c}$, and indices of subcarrier groups included in the first PRU are respectively [0, 1*$M_t*x$, 2*$M_t*x$, 3*$M_t*x$, ..., (M,-1)*$M_t*x$]+n, where n = 0, 1, 2, ..., or $M_t*x$ - 1.

According to a fourth aspect, a communication apparatus is provided. The communication apparatus may be configured to perform the method according to any one of the second aspect or the possible implementations of the second aspect. Specifically, the communication apparatus may include modules or units configured to perform the method according to any one of the second aspect or the possible implementations of the second aspect. For example, the communication apparatus includes a processing unit and a transceiver unit. For example, the communication apparatus is the foregoing communication device at the transmit end. The processing unit is configured to generate resource indication information, where the resource indication information includes resource unit allocation information for indicating one or more first virtual resource units VRUs and station information of a station to which the one or more first VRUs are allocated, and the first VRU includes a plurality of subcarriers continuous in frequency domain. The transceiver unit is configured to send the resource indication information. The transceiver unit is further configured to receive data on a first PRU.

In a design, a mapping relationship includes: A difference between an index of one first VRU in the one or more first VRUs and an index of the first PRU corresponding to the one first VRU is a first specified value; or an index of one first VRU in the one or more first VRUs is the same as an index of the first PRU corresponding to the one first VRU; and the index of the one first VRU in the one or more first VRUs is determined based on the resource unit allocation information.

In a design, the mapping relationship specifically includes: Mapping is performed by using each 26-tone RU of 9 26-tone RUs included in each 20 MHz as a minimum unit, indices of the 9 26-tone RUs are respectively {1, 2, 3, 4, 5, 6, 7, 8, 9}+q, and indices obtained by mapping the 9 26-tone RUs are respectively {1, 7, 3, 9, 5, 6, 2, 8, 4}+q, {6, 2, 8, 4, 5, 1, 7, 3, 9}+q, {1, 2, 8, 9, 5, 6, 7, 3, 4}+q, or {6, 7, 3, 4, 5, 1, 2, 8, 9}+q, where q is an integer, q = 9*b, b is an integer, b indicates a quantity of 20 MHz included in a maximum resource bandwidth allocated by the second communication apparatus minus 1, and q = 0, 9, 18, 27, or the like; and one first VRU in the one or more first VRUs is one or more of the 26-tone RUs whose indices are {1, 2, 3, 4, 5, 6, 7, 8, 9}+q, and the first PRU corresponding to the one first VRU in the one or more first VRUs is one or more of 26-tone RUs whose indices are {1, 7, 3, 9, 5, 6, 2, 8, 4}+q, or the first PRU corresponding to the one first VRU in the one or more first VRUs is one or more of 26-tone RUs whose indices are {6, 2, 8, 4, 5, 1, 7, 3, 9}+q, or the first PRU corresponding to the one first VRU in the one or more first VRUs is one or more of 26-tone RUs whose indices are {1, 2, 8, 9, 5, 6, 7, 3, 4}+q, or the first PRU corresponding to the one first VRU in the one or more first VRUs is one or more of 26-tone RUs whose indices are {6, 7, 3, 4, 5, 1, 2, 8, 9}+q.

In a design, the mapping relationship specifically includes: A maximum resource bandwidth allocated by the second communication apparatus may be greater than or equal to 40 MHz, the maximum resource bandwidth may include at least two 242-tone RUs, mapping is performed by using each 26-tone RU in 18 26-tone RUs included in the at least two 242-tone RUs as a minimum unit, indices of the 18 26-tone RUs are respectively {1, 2, 3, 4, 5, 6, 7, 8, 9}, {10, 11, 12, 13, 14, 15, 16, 17, 18}+m, and indices obtained by mapping the 18 26-tone RUs are respectively {1, 11+m, 3, 13+m, 5, 6, 16+m, 8, 18+m}, {10+m, 2, 12+m, 4, 14+m, 15+m, 7, 17+m, 9}, or {10+m, 2, 12+m, 4, 5, 15+m, 7, 17+m, 9}, {1, 11+m, 3, 13+m, 14+m, 6, 16+m, 8, 18+m}, where m is an integer, m = 9*a, a is an integer, a indicates a quantity of 242-tone RUs between the at least two 242-tone RUs, and m = 0, 9, 18, 27, or the like.

In a design, a sequence number of a subcarrier in the first PRU determined for a subcarrier with a sequence number of k in the first VRUs based on the mapping relationship is k', and satisfies the following equation:

$$k' = M_t * x * \mod(k, M_c) + \lfloor k/M_c \rfloor$$

$M_t$ indicates a quantity of first VRUs that participate in mapping in each 20 MHz, $1 \le M_t \le 9$, x = 1, 2, 4, 8, 16, or the like, $M_t$*x indicates a total quantity of the first VRUs that participate in mapping, mod( ) indicates a modulo operation, $M_c$ indicates a quantity of subcarriers that participate in mapping in one first VRU, $1 \le M_c \le 26$, and k = 0, 1, 2, ..., or $M_t$*M,*x-1.

In a design, indices of subcarriers included in the first VRU are respectively [0, 1, 2, ..., $M_c$ - 1]+n* $M_c$, and indices of subcarrier groups included in the first PRU are respectively [0, 1*$M_t$ * x, 2*$M_t$ * x, 3*$M_t$ * x, ..., (M,-1)*$M_t$ * x]+n, where n = 0, 1, 2, ..., or $M_t$ * x - 1.

According to a fifth aspect, an embodiment of this application provides a communication apparatus. The communication apparatus may be the communication apparatus according to any one of the third aspect and the fourth aspect in the foregoing embodiments, or a chip disposed in the communication apparatus according to any one of the third aspect and the fourth aspect. The communication apparatus includes a communication interface and a processor, and optionally, further includes a memory. The memory is configured to store a computer program, instructions, or data. The processor is coupled to the memory and the communication interface. When the processor reads the computer program, the instructions, or the data, the communication apparatus performs the method performed by the communication device at the transmit end or the communication device at the receive end in the method embodiment according to any one of the first aspect and the second aspect.

It should be understood that the communication interface may be implemented by using an antenna, a feeder, a codec, or the like in the communication apparatus. Alternatively, if the communication apparatus is a chip disposed in a communication device at a transmit end or a communication device at a receive end, the communication interface may be an input/output interface of the chip, for example, an input/output pin. The communication apparatus may further include a transceiver, configured to perform communication between the communication apparatus and another device. For example, when the communication apparatus is a communication device at a transmit end, the another device is a communication device at a receive end; or when the communication apparatus is a communication device at a receive end, the another device is a communication device at a transmit end.

According to a sixth aspect, an embodiment of this application provides a chip system. The chip system includes a processor, and may further include a memory, configured to implement the method performed by the communication apparatus according to any one of the third aspect and the fourth aspect. In a possible implementation, the chip system further includes the memory, configured to store program instructions and/or data. The chip system may include a chip, or may include a chip and another discrete component.

According to a seventh aspect, an embodiment of this application provides a communication system. The communication system includes the communication apparatus in the third aspect and the fourth aspect.

According to an eighth aspect, this application provides a computer-readable storage medium. The computer-readable storage medium stores a computer program or instructions. When the computer program or the instructions are run, the method performed by the communication device at the receive end in the foregoing aspects is implemented, or the method performed by the communication device at the transmit end in the foregoing aspects is implemented.

According to a ninth aspect, a computer program product is provided. The computer program product includes computer program code or instructions. When the computer program code or the instructions are run, the method performed by the communication device at the receive end in the foregoing aspects is implemented, or the method performed by the communication device at the transmit end in the foregoing aspects is implemented.

For beneficial effects of the second aspect to the eighth aspect and implementations of the second aspect to the eighth aspect, refer to descriptions of beneficial effects of the method in the first aspect and implementations of the first aspect.

**BRIEF DESCRIPTION OF DRAWINGS**

FIG. 1 shows a network architecture of a wireless local area network to which an embodiment of this application is applicable;

FIG. 2 is a schematic diagram of a tone plan and an RU plan of 20 MHz;

FIG. 3 is a schematic diagram of a tone plan and an RU plan of 40 MHz;

FIG. 4 is a schematic diagram of a tone plan and an RU plan of 80 MHz;

FIG. 5 is a schematic diagram of a plan of 26-tone RUs with discrete subcarriers;

FIG. 6 is a schematic diagram of a plan of 52-tone RUs with discrete subcarriers;

FIG. 7 is an example flowchart of a resource indication method according to an embodiment of this application;

FIG. 8 is a schematic diagram of VRU permutation according to an embodiment of this application;

FIG. 9A is one schematic diagram of a permutation manner 1 according to an embodiment of this application;

FIG. 9B is one schematic diagram of a permutation manner 1 according to an embodiment of this application;

FIG. 10A is one schematic diagram of a permutation manner 1 according to an embodiment of this application;

FIG. 10B is one schematic diagram of a permutation manner 1 according to an embodiment of this application;

FIG. 11A is one schematic diagram of a permutation manner 2 according to an embodiment of this application;

FIG. 11B is one schematic diagram of a permutation manner 2 according to an embodiment of this application;

FIG. 11C is one schematic diagram of a permutation manner 2 according to an embodiment of this application;

FIG. 11D is one schematic diagram of a permutation manner 2 according to an embodiment of this application;

FIG. 11E is one schematic diagram of a permutation manner 2 according to an embodiment of this application;

FIG. 11F is one schematic diagram of a permutation manner 2 according to an embodiment of this application;

FIG. 12A is one schematic diagram of subcarrier mapping according to an embodiment of this application;

FIG. 12B is one schematic diagram of subcarrier mapping according to an embodiment of this application;

FIG. 13 is a schematic diagram of distributed subcarriers of a 242-tone RU according to an embodiment of this application;

FIG. 14 is a schematic diagram of distributed subcarriers of a 484-tone RU according to an embodiment of this application;

FIG. 15A and FIG. 15B show a schematic diagram of distributed subcarriers of a 996-tone RU according to an embodiment of this application;

FIG. 16 is a schematic diagram of a structure of a communication apparatus according to an embodiment of this application; and

FIG. 17 is a schematic diagram of another structure of a communication apparatus according to an embodiment of this application.

**DESCRIPTION OF EMBODIMENTS**

To make objectives, technical solutions, and advantages of embodiments of this application clearer, the following further describes embodiments of this application in detail with reference to the accompanying drawings.

Embodiments of this application may be applied to a wireless local area network (wireless local area network, WLAN) scenario, and may be applied to an IEEE 802.11 system standard, for example, 802.11 a/b/g, 802.11n, 802.11ac, 802.11 ax, or a next-generation standard, for example, 802.1 1be, or a further next-generation standard. Alternatively, embodiments of this application may be applied to a wireless local area network system, for example, an internet of things (internet of things, IoT) network or a vehicle-to-everything (Vehicle to X, V2X) network. Certainly, embodiments of this application may be further applied to another possible communication system, for example, an LTE system, an LTE frequency division duplex (frequency division duplex, FDD) system, LTE time division duplex (time division duplex, TDD), a universal mobile telecommunication system (universal mobile telecommunication system, UMTS), a worldwide interoperability for microwave access (worldwide interoperability for microwave access, WiMAX) communication system, a 5G communication system, and a future 6G communication system.

The following uses an example in which embodiments of this application are applicable to a WLAN scenario. It should be understood that the WLAN develops from the 802.11a/g standard, and goes through 802.11n, 802.11 ac, 802.11 ax, and 802.1 1be that is currently being discussed. 802.11n can also be referred to as high throughput (high throughput, HT), 802.11ac can also be referred to as very high throughput (very high throughput, VHT), 802.11 ax can also be referred to as high efficiency (high efficiency, HE) or Wi-Fi 6, and 802.11be can also be referred to as extremely high throughput (extremely high throughput, EHT) or Wi-Fi 7. Standards before HT, such as 802.11a/b/g, are collectively referred to as non-high throughput (Non-HT).

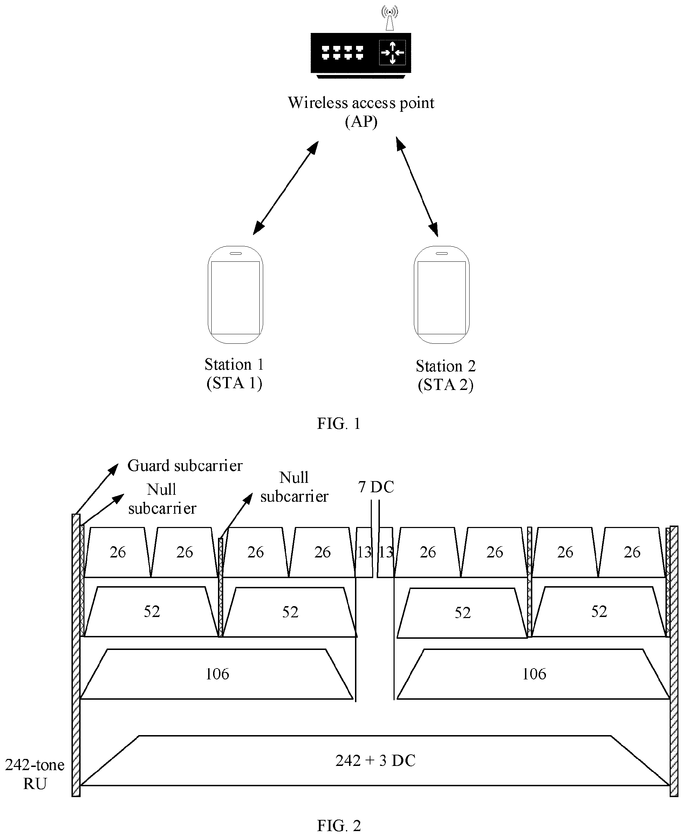

FIG. 1 is a diagram of a network architecture of a WLAN to which an embodiment of this application is applicable.

In FIG. 1, that the WLAN includes one wireless access point (access point, AP) and two stations (stations, STAs) is used as an example. A STA associated with an AP can receive a radio frame sent by the AP, and can also send a radio frame to the AP. In addition, embodiments of this application are also applicable to communication between APs. For example, the APs may communicate with each other by using a distributed system (distributed system, DS). Embodiments of this application are also applicable to communication between STAs. It should be understood that quantities of APs and STAs in FIG. 1 are merely an example. There may be more or less APs and STAs.

The access point may be an access point used by a terminal device (such as a mobile phone) to access a wired (or wireless) network, and is mainly deployed at home, in a building, and in a park. A typical coverage radius is tens of meters to 100-odd meters. Certainly, the access point may alternatively be deployed outdoors. The access point is equivalent to a bridge that connects the wired network and the wireless network. A main function of the access point is to connect various wireless network clients together and then connect the wireless network to the Ethernet. Specifically, the access point may be a terminal device (such as a mobile phone) or a network device (such as a router) with a Wi-Fi chip. The access point may be a device that supports the 802.11be standard. Alternatively, the access point may be a device that supports a plurality of wireless local area network (wireless local area networks, WLAN) standards of the 802.11 family such as 802.11ax, 802.11ac, 802.11n, 802.11g, 802.11b, 802.11a, and 802.11be next-generation. The access point in this application may be a high efficiency (high efficiency, HE) AP, an extremely high throughput (extremely high throughput, EHT) AP, or an access point applicable to a future generation Wi-Fi standard.

The station may be a wireless communication chip, a wireless sensor, a wireless communication terminal, or the like, and may also be referred to as a user. For example, the station may be a mobile phone, a tablet computer, a set-top box, a smart television set, a smart wearable device, a vehicle-mounted communication device, a computer, or the like that supports a Wi-Fi communication function. Optionally, the station may support the 802.11be standard. Alternatively, the station may support a plurality of wireless local area network (wireless local area network, WLAN) standards of the 802.11 family such as 802.11ax, 802.11ac, 802.11n, 802.11g, 802.11b, 802.11a, and 802.11be next-generation.

The station in this application may be a high efficiency (high efficiency, HE) STA or an extremely high throughput (extremely high throughput, EHT) STA, or may be a STA applicable to a future-generation Wi-Fi standard.

For example, the access point and the station may be devices used in the internet of vehicles, internet of things nodes, sensors, or the like in the internet of things (IoT, internet of things), smart cameras, smart remote controls, or smart water or electricity meters in smart home, sensors in smart city, and the like.

The AP and the STA in embodiments of this application may be an AP and a STA that are applicable to an IEEE 802.11 system standard. The AP is an apparatus that is deployed in a wireless communication network and that provides a wireless communication function for a STA associated with the AP. The AP may be used as a center of the communication system, and is usually a network-side product that supports MAC and PHY in the 802.11 system standard, for example, may be a communication device such as a base station, a router, a gateway, a repeater, a communication server, a switch, or a bridge. The base station may include a macro base station, a micro base station, a relay station, or the like in various forms. Herein, for ease of description, the devices mentioned above are collectively referred to as an AP. The STA is usually a terminal product that supports media access control (media access control, MAC) and a physical layer (physical, PHY) of the 802.11 system standard, for example, a mobile phone or a notebook computer.

The AP communicates with the STA. The AP may allocate a resource to the STA. The STA receives and sends data on the allocated resource. For example, an orthogonal frequency division multiple access (orthogonal frequency division multiple access, OFDMA) technology or a multi-user multiple-input multiple-output (multi-user multiple-input multiple-output, MU-MIMO) technology may be used for wireless communication between the AP and the STA. It should be understood that a resource actually occupied by the STA for data transmission is a PRU, but a resource allocated by the AP to the STA may be a PRU, or may be a virtual resource unit VRU. A VRU is a virtual RU, and is relative to a PRU. If the resource allocated by the AP to the STA may be a VRU, after receiving the VRU, the STA may convert the VRU into a PRU, and then send data on the PRU.

In the OFDMA technology and the MU-MIMO technology, a spectral bandwidth is divided into several RUs in a WLAN protocol. For example, bandwidth configurations supported by the 802.11ax protocol include 20 MHz, 40 MHz, 80 MHz, 160 MHz, and 80+80 MHz. For example, in addition to the bandwidth configurations supported by the 802.11ax protocol, bandwidth configurations supported by the 802.11be protocol may further include 320 MHz. A difference between 160 MHz and 80+80 MHz lies in that the former is a continuous frequency band, and two 80 MHz of the latter may be separated. In other words, 160 MHz formed by 80+80 MHz is discontinuous. The IEEE 802.11 ax protocol specifies that a spectral bandwidth of 20 MHz, 40 MHz, 80 MHz, or 160 MHz may be divided into a plurality of types of RUs including a 26-tone RU, a 52-tone RU, a 106-tone RU, a 242-tone RU (a largest RU in a 20 MHz bandwidth), a 484-tone RU (a largest RU in a 40 MHz bandwidth), a 996-tone RU (a largest RU in an 80 MHz bandwidth), and a 2*996-tone RU (a largest RU in a 160 MHz bandwidth). Each RU includes continuous subcarriers. For example, the 26-tone RU is an RU including 26 continuous subcarriers. In the following descriptions, the 26-tone RU is denoted as a 26-tone RU, the 52-tone RU is denoted as a 52-tone RU, and so on. In addition to the 26-tone RU, the 52-tone RU, and the like that are used to transmit data, the entire bandwidth further includes another subcarrier, for example, one or more of a guard (Guard) subcarrier, a null subcarrier, a direct current (direct current, DC) subcarrier, and a pilot subcarrier.

FIG. 2 is a schematic diagram of a tone plan and an RU plan of 20 MHz. As shown in FIG. 2, when a bandwidth is 20 MHz, the entire bandwidth may include an entire 242-tone RU, or may include various combinations of 26-tone RUs, 52-tone RUs and 106-tone RUs. For example, 20 MHz may include eight 26-tone RUs, four 52-tone RUs, or two 106-tone RUs. It may be learned from FIG. 2 that a bandwidth of one 242-tone RU is approximately 20 MHz, a bandwidth of one 106-tone RU is approximately 8 MHz, a bandwidth of one 52-tone RU is approximately 4 MHz, and a bandwidth of one 26-tone RU is approximately 2 MHz. It should be noted that the entire bandwidth further includes one or more of some guard subcarriers, null subcarriers, direct current subcarriers, and pilot subcarriers. For example, the 20 MHz shown in FIG. 2 further includes a guard subcarrier, a null subcarrier, and a direct current subcarrier.

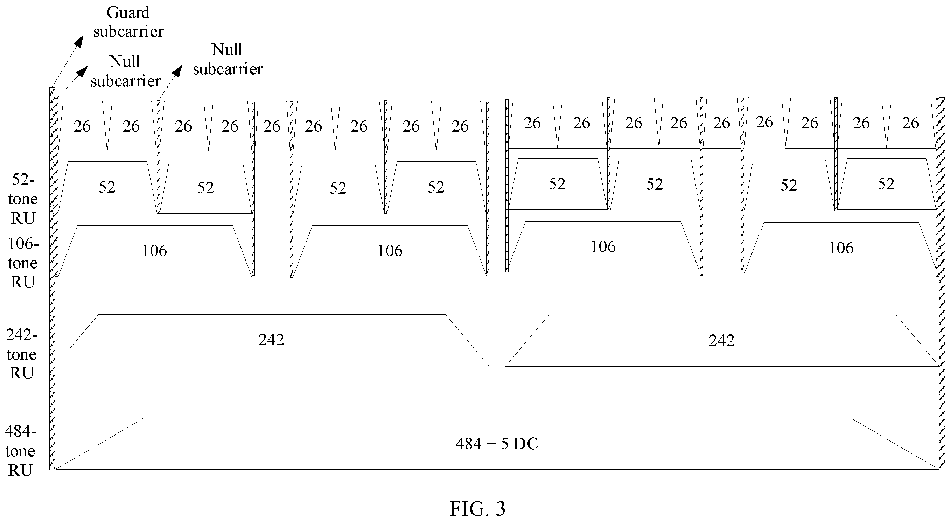

As shown in FIG. 3, when a bandwidth is 40 MHz, the entire bandwidth is approximately equivalent to two replications of a 20 MHz tone plan. The entire bandwidth may include an entire 484-tone RU, or may include various combinations of 26-tone RUs, 52-tone RUs, 106-tone RUs, and 242-tone RUs, as shown in FIG. 3. "5 DC" in FIG. 3 represents five direct current subcarriers. Similar to 20 MHz, 40 MHz also includes one or more of some guard subcarriers, null subcarriers, and direct current subcarriers. It should be understood that a bandwidth of the 484-tone RU is approximately 40 MHz.

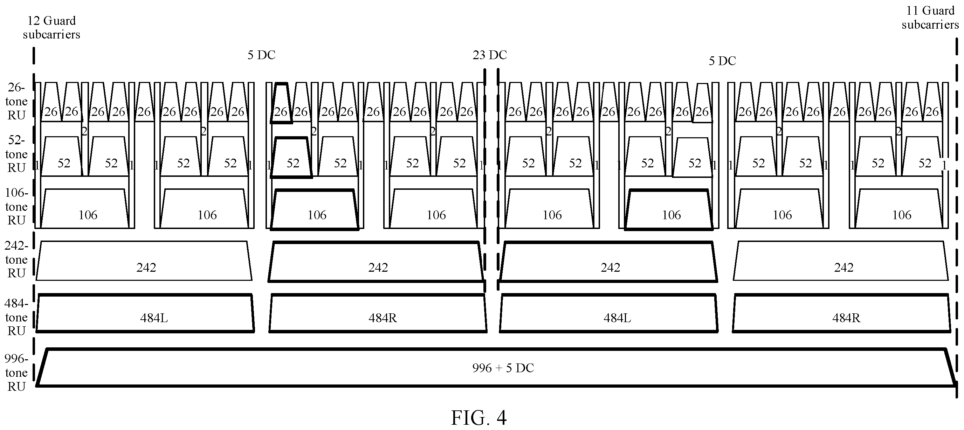

As shown in FIG. 4, when a bandwidth is 80 MHz, the entire bandwidth includes resource units in a form of four 242-tone RUs. The entire bandwidth may include an entire 996-tone RU or various combinations of 26-tone RUs, 52-tone RUs, 106-tone RUs, 242-tone RUs, and 484-tone RUs, as shown in FIG. 4. 484L and 484R in FIG. 4 represent a left half part and a right half part of a 484-tone RU, each including 242 subcarriers, which is another schematic diagram of "484 + 5 DC" in FIG. 3. In FIG. 4, "5 DC" represents five direct current subcarriers, and "23 DC" represents 23 direct current subcarriers. Similar to 20 MHz, 80 MHz also includes one or more of some guard subcarriers, null subcarriers, and direct current subcarriers. It should be understood that a bandwidth of the 996-tone RU is approximately 80 MHz.

It should be understood that when a bandwidth is 160 MHz, the entire bandwidth may be considered as two replications of an 80 MHz tone plan. The entire bandwidth may include an entire 2*996-tone RU, or may include various combinations of 26-tone RUs, 52-tone RUs, 106-tone RUs, 242-tone RUs, 484-tone RUs, or 996-tone RUs. Similarly, when a bandwidth is 320 MHz, the entire bandwidth may be considered as four replications of an 80 MHz tone plan, and the entire bandwidth may include resource units in a form of four 996-tone RUs. For simplicity, a tone plan and an RU plan of 160 MHz and 320 MHz are not separately described again.

In the foregoing various tone plans, in a form of 242-tone RUs, RUs on the left of FIG. 2 to FIG. 4 correspond to a lowest frequency, and RUs on the right of FIG. 2 to FIG. 4 correspond to a highest frequency. From left to right, the 242-tone RUs may be numbered: 1st, 2nd, ..., and 16th. It should be noted that a maximum of sixteen 242-tone RUs one-to-one correspond to sixteen 20 MHz channels in ascending order of frequencies.

In addition to the foregoing several RUs, the 802.11be protocol further introduces a 52+26-tone RU including a 52-tone RU and a 26-tone RU, a 106+26-tone RU including a 106-tone RU and a 26-tone RU, a 484+242-tone RU including a 484-tone RU and a 242-tone RU, a 996+484-tone RU including a 996-tone RU and a 484-tone RU, a 242+484+996-tone RU including a 242-tone RU, a 484-tone RU, and a 996-tone RU, a 2*996+484-tone RU including two 996-tone RUs and a 484-tone RU, a 3*996-tone RU including three 996-tone RUs, a 3*996+484-tone RU including three 996-tone RUs and a 484-tone RU, and the like. The combined RUs may be referred to as a multi-RU. It should be understood that the multi-RU is an RU including a plurality of RUs. In some embodiments, the multi-RU may be denoted as a multi-RU, or may be denoted as an MRU.

At a bandwidth level, a 26-tone RU corresponds to approximately 2 MHz, a 52-tone RU corresponds to approximately 4 MHz, and a 106-tone RU corresponds to approximately 8 MHz. A 242-tone RU corresponds to approximately 20 MHz. Details are not described again.

Before the method provided in this application is described, related concepts in this application are first described.

(1) Continuous RU

The continuous RU in this application includes an RU and an MRU defined in the standard. The RU defined in the standard may be an RU including a plurality of continuous subcarriers, and the MRU defined in the standard may be an RU including two continuous subcarrier groups. A plurality of subcarriers included in each continuous subcarrier group are continuous, and the two subcarrier groups are spaced by only one or more of a guard subcarrier, a null subcarrier, or a direct current subcarrier. All RUs supported in the 802.11ax may be understood as continuous RUs. A continuous RU may also be referred to as a regular RU. Certainly, the continuous RU may alternatively have another name. A specific name of the continuous RU is not limited in embodiments of this application.

In embodiments of this application, a continuous RU including K subcarriers (for example, data subcarriers and pilot subcarriers) is referred to as a continuous K-tone RU. For example, a continuous 26-tone RU is a continuous RU including 26 subcarriers. In other words, a concept of the continuous K-tone RU is the same as a concept of the K-tone RU in the existing 802.11 ax standard.

2. Discrete RU (discrete RU, DRU)

Compared with a continuous RU, an RU that includes a plurality of subcarrier groups discrete in frequency domain may be referred to as a discrete RU. In other words, the discrete RU includes a plurality of subcarrier groups, and any two subcarrier groups are discrete in frequency domain. One subcarrier group includes one subcarrier, or one subcarrier group includes at least two continuous subcarriers. In other words, one subcarrier group includes one subcarrier or includes a plurality of continuous subcarriers. The discrete RU may also be referred to as a distributed RU (distributed RU, DRU). Certainly, in another embodiment, the discrete RU may have another name. The name of the discrete RU is not limited in this application. In this application, a quantity of subcarrier groups included in one discrete RU is greater than or equal to 2.

In embodiments of this application, a discrete RU including K subcarriers may be referred to as a discrete K-tone RU. For example, a discrete 26-tone RU is a discrete RU including 26 subcarriers. For a value of K, refer to a value of K used for a continuous RU. For example, when the bandwidth is 20 MHz, 20 MHz may include a combination of one or more of discrete 26-tone RUs, discrete 52-tone RUs, discrete 106-tone RUs, or discrete 242-tone RUs.

In this application, one discrete RU and another discrete RU may form a discrete MRU. The discrete MRU can be allocated to one or more stations. For example, a discrete 242-tone RU and a discrete 484-tone RU may form a discrete 484+242-tone RU.

In some examples, quantities of subcarriers included in any two of the plurality of subcarrier groups included in the discrete RU may be the same or may be different. For example, a quantity of subcarriers in each subcarrier group may be 1. For another example, quantities of subcarriers in some subcarrier groups are 1, and quantities of subcarriers in the other subcarrier groups are 2. In other words, one discrete RU may include four subcarrier groups, and quantities of subcarriers in the four subcarrier groups may be 1, 1, 2, and 2 sequentially.

In some examples, when a quantity of subcarrier groups included in the discrete RU is greater than or equal to 3, in the plurality of discrete subcarrier groups included in the discrete RU, quantities of subcarriers between every two adjacent subcarrier groups may be the same or may be different. The every two adjacent subcarrier groups are two adjacent subcarrier groups of one discrete RU.

At present, a transmit power of a device is limited by both a maximum power and a maximum power spectral density. In other words, the transmit power of the device cannot exceed the maximum power or the maximum power spectral density. In other words, a transmit power of each MHz cannot exceed a given value. For example, Table 1 shows a correspondence between a maximum transmit power of a device and a bandwidth in an LPI scenario.

**Table 1**

| Bandwidth | Maximum transmit power of an AP | Maximum transmit power of a STA |
|---|---|---|
| 20 MHz | 18 dBm | 12 dBm |
| 40 MHz | 21 dBm | 15 dBm |
| 80 MHz | 24 dBm | 18 dBm |
| 160 MHz | 27 dBm | 21 dBm |
| 320 MHz | 30 dBm | 24 dBm |

It should be understood that 20 MHz in Table 1 is used as an example, 18 dBm - 5 dBm = 13 dB, and 13 dB = 10^1.3 = 19.95, which is approximately equal to 20 MHz. It may be learned that a maximum power in a transmit bandwidth is approximately equal to a value obtained when each MHz reaches the maximum transmit power. If the power spectral density is limited, a corresponding transmit bandwidth may be expanded to implement a larger transmit power of a device. It may be learned from the tone plans and the RU plans in FIG. 2 to FIG. 4 that all subcarriers in the bandwidth are continuous, in other words, the RU in FIG. 2 to FIG. 4 is a continuous RU. Compared with a discrete RU, a continuous RU includes subcarriers corresponding to a smaller bandwidth, and therefore the maximum transmit power of the device cannot be increased by using the transmit bandwidth. For example, an AP allocates a discrete 26-tone RU to a STA. The discrete 26-tone RU also includes 26 subcarriers. However, the 26 subcarriers may be distributed on a plurality of 26-tone RUs. Compared with the foregoing continuous 26-tone RU, the discrete 26-tone RU has no additional subcarrier allocated to the device, but has the subcarriers that are allocated to the device and that become more discrete in frequency domain. Therefore, a quantity of subcarriers per MHz is reduced. From a perspective of subcarriers, this is equivalent to expanding the bandwidth corresponding to each subcarrier. Therefore, the device can support a larger transmit power.

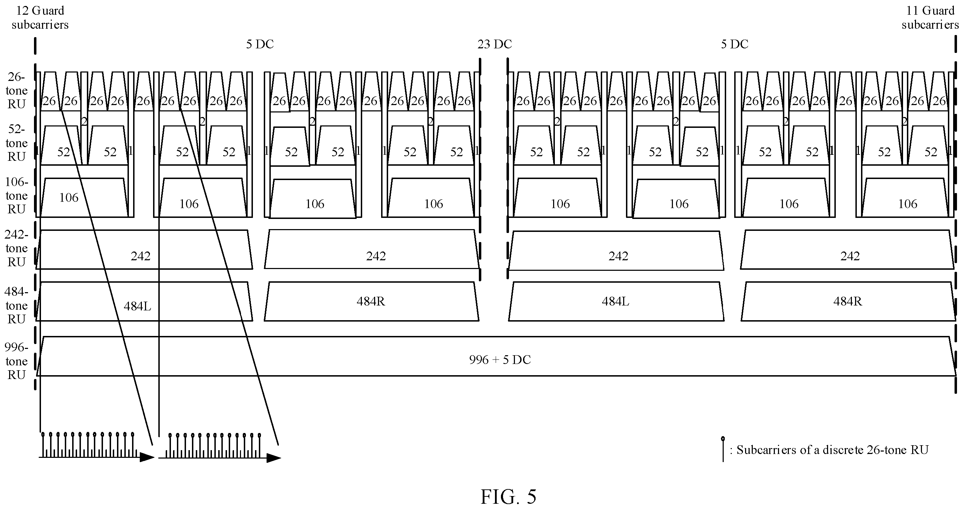

For example, FIG. 5 is a schematic diagram of a plan of 26-tone RUs with discrete subcarriers. In FIG. 5, 80 MHz is used as an example. A 26-tone RU includes 24 data subcarriers and 2 pilot subcarriers. As shown in FIG. 5, the 24 data subcarriers may include 12 data subcarriers in a first continuous 26-tone RU and 12 subcarriers in a sixth continuous 26-tone RU.

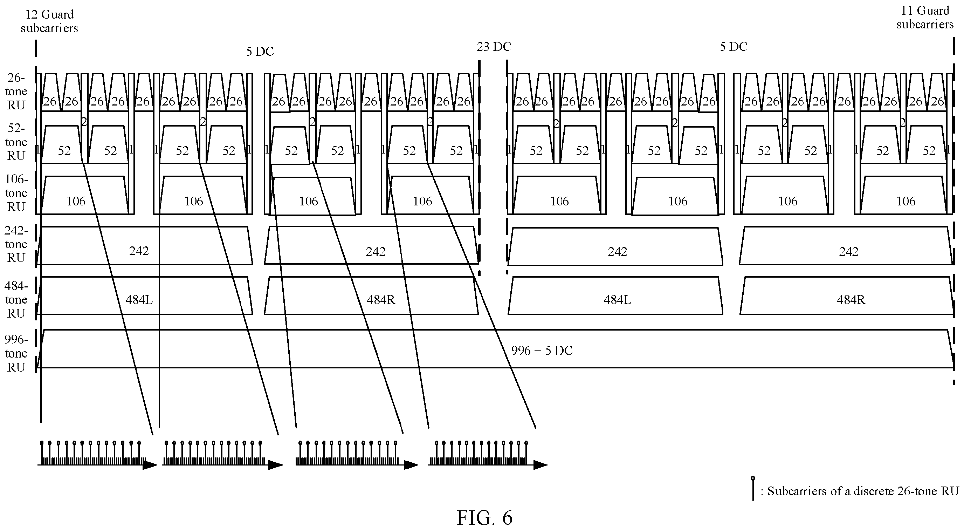

For another example, FIG. 6 is a schematic diagram of a plan of 52-tone RUs with discrete subcarriers. In FIG. 6, 80 MHz is used as an example. A 52-tone RU includes 48 data subcarriers and 4 pilot subcarriers. As shown in FIG. 6, 48 data subcarriers may include 12 subcarriers in a first continuous 52-tone RU, 12 subcarriers in a third continuous 52-tone RU, 12 subcarriers in a fifth continuous 26-tone RU, and 12 subcarriers in a seventh continuous 26-tone RU.

It should be noted that discrete distribution (discrete design) of data subcarriers in FIG. 5 and FIG. 6 is merely an example. Discrete distribution of data subcarriers is not limited in this embodiment of this application.

It may be learned from FIG. 5 and FIG. 6 that a quantity of subcarriers per MHz is reduced due to discrete distribution of data subcarriers on a discrete RU. From the perspective of subcarriers, it is equivalent to expanding a bandwidth corresponding to each subcarrier. Therefore, each subcarrier may have a larger transmit power. However, in the manner in FIG. 5 and FIG. 6, more discrete RUs or discrete RU combinations need to be defined, for example, various RUs or RU combinations formed by discrete subcarriers. In addition, to indicate more types of discrete RUs or discrete MRUs (including various RUs or RU combinations formed by discrete subcarriers), an existing method for allocating continuous RUs formed by continuous subcarriers needs to be changed, which is complex to implement for a transmit end. In addition, in a possible case, for example, some predefined discrete subcarrier sets may have an intersection. In this case, a discrete RU (for example, an x-tone RU) is allocated, and another discrete RU (for example, a y-tone RU) cannot be used for sending. For another example, if preamble puncturing occurs, a predefined RU cannot be used, and RU utilization is low.

This application provides a resource indication method. The method is essentially to provide a mapping relationship between a VRU and a PRU. The mapping relationship may map a continuous VRU into a discrete PRU. Based on the mapping relationship, a transmit end may notify a receive end that an RU allocated to the receive end is a continuous VRU, but the transmit end sends data on a discrete PRU to which the continuous VRU is mapped. Because a continuous VRU is mapped to a discrete PRU, it is equivalent to reducing a quantity of subcarriers per MHz, so that the transmit end can support a larger transmit power

It should be noted that, in this embodiment of this application, subcarriers that need to be discrete may include subcarriers (also referred to as data subcarriers in this specification) for carrying data and subcarriers (also referred to as pilot subcarriers in this specification) for carrying a pilot, or may include only subcarriers for carrying data. This is not limited in this application.

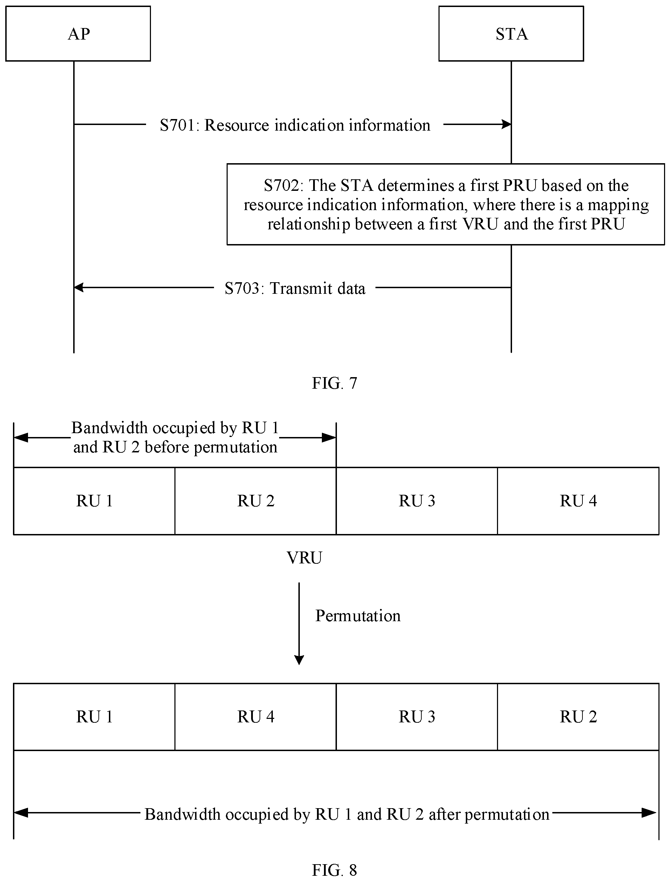

The technical solutions provided in embodiments of this application are described below in detail with reference to the accompanying drawings. In the following descriptions, an example in which the transmit end is a first communication apparatus and the receive end is a second communication apparatus is used to describe how the first communication apparatus indicates an allocated resource to the second communication apparatus. The first communication apparatus may be an AP, and the second communication apparatus may be a STA or an AP; or the first communication apparatus may be a STA, and the second communication apparatus may be a STA or an AP. For ease of description, the following uses an example in which the first communication apparatus is an AP, and the second communication apparatus is a STA. FIG. 7 is an example flowchart of a resource indication method according to an embodiment of this application. The procedure is described below.

S701: An AP sends resource indication information to a STA, and correspondingly the STA receives the resource indication information from the AP.

The resource indication information may include resource unit allocation information for indicating one or more first VRUs, and station information of a station to which the one or more first VRUs are allocated. The first VRU may include a plurality of subcarriers continuous in frequency domain. In other words, the first VRU may be a continuous RU. For a definition of the continuous RU, refer to the foregoing descriptions. Details are not described herein again.

It should be understood that the AP may allocate a VRU to one STA, or may allocate VRUs to a plurality of STAs at the same time. For example, the AP allocates a first VRU to a STA 1, and allocates a second VRU to a STA 2.

S702: The STA determines a first PRU based on the resource indication information, where there is a mapping relationship between the first VRU and the first PRU.

For example, before sending data to the AP, the STA may map the first VRU to the first PRU based on the mapping relationship between the first VRU and the first PRU, and send the data on the first PRU.

S703: The STA transmits the data on the first PRU, and correspondingly the AP receives the data on the first PRU.

The solution of mapping a VRU to a PRU provided in this embodiment of this application may be applicable to uplink transmission (namely, transmission from the STA to the AP). In other words, the STA may transmit data to the AP on the first PRU. Alternatively, the solution may be applicable to downlink transmission (namely, transmission from the AP to the STA). In other words, the AP may transmit data to the STA on the first PRU.

Based on the foregoing solution, the resource allocated by the AP to the STA is a continuous RU (namely, the first VRU). To enable the STA to obtain a larger transmit power, in this application, the continuous RU may be mapped to a discrete RU (namely, the first PRU), and the STA sends data to the AP on the discrete RU, so that the STA can obtain a larger transmit power. It should be understood that the STA sends data to the AP on the discrete RU, and the AP receives data from the STA on the discrete RU, or may send data to the STA on the discrete RU. In other words, the STA does not receive or send data on the continuous RU allocated by the AP to the STA. It may be considered that the continuous RU allocated by the AP to the STA is a VRU, and the discrete RU is a PRU. The VRU is mapped to the PRU, so that the discrete RU subcarriers are distributed on a larger bandwidth, so that a transmit end can transmit at a larger transmit power. In this way, the transmit end may use an existing resource unit allocation manner, namely, a resource unit allocation manner of allocating a continuous RU, without a need to redefine various types of distributed RUs or care about how to select and allocate a distributed RU, to increase a maximum transmit power of a device, be compatible with an existing Wi-Fi protocol, and reduce complexity of resource allocation.

In addition, a discrete RU (the first PRU) with a plurality of discrete subcarriers is obtained by using the method provided in this embodiment of this application. The plurality of discrete subcarriers may occupy adjacent frequency bands. Therefore, an average value of channel estimation of the plurality of subcarriers may be used as a value of channel estimation, so that an estimation result can be more accurate. This channel estimation method is referred to as channel smoothing (channel smoothing).

In this embodiment of this application, the AP may use a current continuous RU allocation manner, that is, use a resource unit allocation subfield (RU Allocation subfield) to allocate a resource. Generally, the AP allocates a resource to the STA by using the resource unit allocation subfield, and the STA considers that the allocated resource is a physical resource. For example, the AP sends resource allocation information to the STA, where the resource allocation information is carried in a resource unit allocation subfield and indicates an RU allocated by the AP to the STA. However, in this embodiment of this application, the resource allocated to the STA by using the resource unit allocation subfield is not a resource actually used by the AP to send data. Therefore, when allocating the resource to the STA, the AP notifies the STA that the resource allocated by the AP to the STA is a VRU. For example, the AP may send the resource allocation information to the STA, where the resource allocation information indicates that the RU allocated by the AP to the STA is the first VRU. For example, the resource allocation information may be carried in a resource allocation subfield, or the resource allocation information may be carried in a signal field (signal field, SIG) included in a physical layer protocol data unit (physical layer protocol data unit, PPDU), for example, a universal field (universal SIG, U-SIG) or an extremely high throughput signal field (extremely high throughput signal field, EHT-SIG).

In this embodiment of this application, a VRU is mapped to a PRU, to make subcarriers more discrete. Locations of the VRU and the PRU on a frequency band may be determined based on a subcarrier sequence number or an RU sequence number. For details, refer to subsequent Table 2 to Table 6. Therefore, in this embodiment of this application, the first VRU or a subcarrier included in the first VRU may be mapped. To be specific, a sequence number of the first VRU is mapped to a sequence number of the first PRU, or a subcarrier sequence number of a subcarrier included in the first VRU is mapped to a subcarrier sequence number of a subcarrier included in the first PRU.

**Table 2: Data and pilot subcarrier indices for RUs in a 20 MHz EHT PPDU**

| Data and pilot subcarrier indices for RUs in a 20 MHz EHT PPDU | | | | |
|---|---|---|---|---|
| RU type (type) | RU index and subcarrier range (RU index and subcarrier range) | | | |
| 26-tone RU | RU 1 [-121: -96] | RU2 [-95: -70] | RU 3 [-68: -43] | RU4 [-42: -17] | RU 5 [-16: -4, 4: 16] |
| | RU6 [17: 42] | RU7 [43: 68] | RU 8 [70: 95] | RU9 [96: 121] | |
| 52-tone RU | RU 1 [-121: -70] | RU 2 [-68: -17] | RU 3 [17: 68] | RU 4 [70: 121] | |
| 106-tone RU | RU 1 [-122: -17] | | RU 2 [17: 122] | | |
| 242-tone RU | RU 1 [-122: -2,2:122] | | | | |

**Table 3: Data and pilot subcarrier indices for RUs in a 40 MHz EHT PPDU**

| Data and pilot subcarrier indices for RUs in a 40 MHz EHT PPDU | | | | | |
|---|---|---|---|---|---|
| RU type (type) | RU index and subcarrier range (RU index and subcarrier range) | | | | |
| 26-tone RU | RU 1 [-243: -218] | RU2 [-217: -192] | RU3 [-189: -164] | RU4 [-163: -138] | RU 5 [-136: -111] |
| | RU 6 [-109: -84] | RU 7 [-83: -58] | RU 8 [-55: -30] | RU 9 [-29: -4] | |
| | RU 10 [4: 29] | RU 11 [30: 55] | RU 12 [58: 83] | RU 13 [84: 109] | RU 14 [111: 136] |
| | RU 15 [138: 163] | RU 16 [164: 189] | RU 17 [192: 217] | RU 18 [218: 243] | |
| 52-tone RU | RU 1 [-243: -192] | RU2 [-189: -138] | RU3 [-109: -58] | RU 4 [-55: -4] | |
| | RU 5 [4: 55] | RU 6 [58: 109] | RU7 [138: 189] | RU 8 [192: 243] | |
| 106-tone RU | RU 1 [-243: -138] | RU2 [-109: -4] | RU 3 [4: 109] | RU 4 [138: 243] | |
| 242-tone RU | RU 1 [-244: -3] | | RU 2 [3: 244] | | |
| RU type (type) | RU index and subcarrier range (RU index and subcarrier range) | | | | |
| 484-tone RU | RU 1 [-244: -3, 3: 244] | | | | |

**Table 4: Data and pilot subcarrier indices for RUs in an 80 MHz EHT PPDU**

| Data and pilot subcarrier indices for RUs in an 80 MHz EHT PPDU | | | | | |
|---|---|---|---|---|---|
| RU type (type) | RU index and subcarrier range (RU index and subcarrier range) | | | | |
| 26-tone RU | RU 1 [-499: -474] | RU 2 [-473: -448] | RU 3 [-445: -420] | RU 4 [-419: -394] | RU5 [-392: -367] |
| | RU6 [-365: -340] | RU 7 [-339: -314] | RU 8 [-311: -286] | RU9 [-285: -260] | |
| | RU 10 [-252: -227] | RU11 [-226:-201] | RU12 [-198: -173] | RU13 [-172: -147] | RU 14 [-145: -120] |
| | RU 15 [-118: -93] | RU 16 [-92: -67] | RU 17 [-64: -39] | RU 18 [-38: -13] | RU 19 [not defined] |
| | RU 20 [13: 38] | RU 21 [39: 64] | RU 22 [67: 92] | RU 23 [93: 118] | RU 24 [120: 145] |
| | RU 25 [147: 172] | RU 26 [173: 198] | RU 27 [201: 226] | RU 28 [227: 252] | |
| | RU 29 [260: 285] | RU 30 [286: 311] | RU 31 [314: 339] | RU 32 [340: 365] | RU 33 [367: 392] |
| | RU 34 [394: 419] | RU 35 [420: 445] | RU 36 [448: 473] | RU 37 [474: 499] | |

(continued)

| Data and pilot subcarrier indices for RUs in an 80 MHz EHT PPDU | | | | |
|---|---|---|---|---|
| RU type (type) | RU index and subcarrier range (RU index and subcarrier range) | | | |
| 52-tone RU | RU 1 [-499: -448] | RU2 [-445: -394] | RU3 [-365: -314] | RU 4 [-311: -260] | |
| | RU 5 [-252: -201] | RU 6 [-198: -147] | RU 7 [-118: -67] | RU 8 [-64: -13] | |
| | RU 9 [13: 64] | RU 10 [67: 118] | RU 11 [147: 198] | RU 12 [201: 252] | |
| | RU 13 [260: 311] | RU 14 [314: 365] | RU 15 [394: 445] | RU 16 [448: 499] | |
| 106-toneRU | RU 1 [-499: -394] | RU2 [-365: -260] | RU3 [-252: -147] | RU 4 [-118: -13] | |
| RU type (type) | RU index and subcarrier range (RU index and subcarrier range) | | | |
| | RU 5 [13: 118] | RU6 [147: 252] | RU7 [260: 365] | RU 8 [394: 499] | |
| 242-toneRU | RU 1 [-500: -259] | RU2 [-253: -12] | RU 3 [12: 253] | RU 4 [259: 500] | |
| 484-toneRU | RU 1 [-500: -259, -253: -12] | RU 2 [12: 253, 259: 500] | | | |
| 996-toneRU | RU 1 [-500: -3, 3: 500] | | | | |

**Table 5: Data and pilot subcarrier indices for RUs in a 160 MHz EHT PPDU**

| Data and pilot subcarrier indices for RUs in a 160 MHz EHT PPDU | | | | |
|---|---|---|---|---|
| RU type (type) | RU index and subcarrier range (RU index and subcarrier range) | | | |
| 26-tone RU | RU 1 [-1011: -986] | RU 2 [-985: -960] | RU 3 [-957: -932] | RU 4 [-931: -906] | RU5 [-904: -879] |
| | RU 6 [-877: -852] | RU 7 [-851: -826] | RU 8 [-823: -798] | RU9 [-797: -772] | |
| | RU 10 [-764: -739] | RU11 [-738: -713] | RU 12 [-710: -685] | RU13 [-684: -659] | RU 14 [-657: -632] |
| | RU 15 [-630: -605] | RU 16 [-604: -579] | RU 17 [-576: -551] | RU 18 [-550: -525] | RU 19 [not defined] |
| | RU 20 [-499: -474] | RU 21 [-473: -448] | RU 22 [-445: -420] | RU 23 [-419: -394] | RU 24 [-392: -367] |
| | RU 25 [-365: -340] | RU 26 [-339: -314] | RU 27 [-311: -286] | RU 28 [-285: -260] | |
| | RU 29 [-252: -227] | RU 30 [-226: -201] | RU 31 [-198: -173] | RU 32 [-172: -147] | RU 33 [-145: -120] |
| | RU 34 [-118: -93] | RU 35 [-92: -67] | RU 36 [-64: -39] | RU 37 [-38: -13] | |
| | RU 38 [13: 38] | RU 39 [39: 64] | RU 40 [67: 92] | RU 41 [93: 118] | RU 42 [120: 145] |
| RU type (type) | RU index and subcarrier range (RU index and subcarrier range) | | | |
| | RU 43 [147: 172] | RU 44 [173: 198] | RU 45 [201: 226] | RU 46 [227: 252] | |
| | RU 47 [260: 285] | RU 48 [286: 311] | RU 49 [314: 339] | RU 50 [340: 365] | RU 51 [367: 392] |
| | RU 52 [394: 419] | RU 53 [420: 445] | RU 54 [448: 473] | RU 55 [474: 499] | RU 56 [not defined] |
| | RU 57 [525: 550] | RU 58 [551: 576] | RU 59 [579: 604] | RU 60 [605: 630] | RU 61 [632: 657] |
| | RU 62 [659: 684] | RU 63 [685: 710] | RU 64 [713:738] | RU 65 [739: 764] | |
| | RU 66 [772: 797] | RU 67 [798: 823] | RU 68 [826: 851] | RU 69 [852: 877] | RU 70 [879: 904] |
| | RU 71 [906: 931] | RU 72 [932: 957] | RU 73 [960: 985] | RU 74 [986: 1011] | |

(continued)

| RU type (type) | RU index and subcarrier range (RU index and subcarrier range) | | | | |
|---|---|---|---|---|---|
| 52-tone RU | RU 1 [-1011: -960] | RU2 [-957: -906] | RU3 [-877: -826] | RU 4 [-823: -772] | |
| | RU 5 [-764: -713] | RU 6 [-710: -659] | RU 7 [-630: -579] | RU8 [-576: -525] | |
| | RU 9 [-499: -448] | RU 10 [-445: -394] | RU 11 [-365: -314] | RU 12 [-311: -260] | |
| | RU 13 [-252: -201] | RU 14 [-198: -147] | RU 15 [-118: -67] | RU 16 [-64: -13] | |
| | RU 17 [13: 64] | RU 18 [67: 118] | RU 19 [147: 198] | RU 20 [201: 252] | |
| | RU 21 [260: 311] | RU 22 [314: 365] | RU 23 [394: 445] | RU 24 [448: 499] | |
| | RU 25 [525: 576] | RU 26 [579: 630] | RU 27 [659: 710] | RU 28 [713: 764] | |
| | RU 29 [772: 823] | RU 30 [826: 877] | RU 31 [906: 957] | RU 32 [960: 1011] | |
| 106-toneRU | RU 1 [-1011: -906] | RU2 [-877: -772] | RU3 [-764: -659] | RU 4 [-630: -525] | |
| | RU5 [-499: -394] | RU6 [-365: -260] | RU 7 [-252:-147] | RU 8 [-118: -13] | |
| | RU 9 [13: 118] | RU 10 [147: 252] | RU 11 [260: 365] | RU 12 [394: 499] | |
| | RU 13 [525: 630] | RU 14 [659: 764] | RU 15 [772: 877] | RU 16 [906: 1011] | |
| 242-toneRU | RU 1 [-1012: -771] | RU2 [-765: -524] | RU3 [-500: -259] | RU 4 [-253: -12] | |
| | RU 5 [12: 253] | RU6 [259: 500] | RU7 [524: 765] | RU 8 [771: 1012] | |
| 484-toneRU | RU 1 [-1012: -771, -765: -524] | RU2 [-500: -259, -253: -12] | RU3 [12: 253, 259: 500] | RU4 [524: 765, 771: 1012] | |
| 996-toneRU | RU 1 [-1012: -515, -509: -12] | RU2 [12: 509, 515: 1012] | | | |
| 2*996-tone RU | RU 1 [-1012: -515, -509: -12, 12: 509, 515: 1012] | | | | |

**Table 6: Data and pilot subcarrier indices for RUs in a 320 MHz EHT PPDU**

| Data and pilot subcarrier indices for RUs in a 320 MHz EHT PPDU | | | | |
|---|---|---|---|---|
| RU type (type) | RU index and subcarrier range (RU index and subcarrier range) | | | |
| 26-tone RU | RU 1<br>[-2035: -2010] | RU2<br>[-2009: -1984] | RU3<br>[-1981: -1956] | RU4<br>[-1955: -1930] | RU 5<br>[-1928: -1903] |
| | RU6<br>[-1901: -1876] | RU7<br>[-1875: -1850] | RU 8<br>[-1847: -1822] | RU 9<br>[-1821: -1796] | |
| | RU 10<br>[-1788: -1763] | RU 11<br>[-1762: -1737] | RU 12<br>[-1734: -1709] | RU 13<br>[-1708: -1683] | RU 14<br>[-1681: -1656] |
| | RU 15<br>[-1654: -1629] | RU 16<br>[-1628: -1603] | RU 17<br>[-1600: -1575] | RU 18<br>[-1574: -1549] | RU 19<br>[not defined] |
| | RU 20<br>[-1523: -1498] | RU 21<br>[-1497: -1472] | RU 22<br>[-1469: -1444] | RU 23<br>[-1443: -1418] | RU 24<br>[-1416: -1391] |
| | RU 25<br>[-1389:-1364] | RU 26<br>[-1363:-1338] | RU 27<br>[-1335:-1310] | RU 28<br>[-1309:-1284] | |

(continued)

| RU type (type) | RU index and subcarrier range (RU index and subcarrier range) | | | | |
|---|---|---|---|---|---|
| | RU 29 [-1276:-1251] | RU 30 [-1250: -1225] | RU 31 [-1222: -1197] | RU 32 [-1196: -1171] | RU 33 [-1169:-1144] |
| | RU 34 [-1142: -1117] | RU 35 [-1116: -1091] | RU 36 [-1088:-1063] | RU 37 [-1062:-1037] | |
| | RU 38 [-1011: -986] | RU 39 [-985: -960] | RU 40 [-957: -932] | RU 41 [-931: -906] | RU 42 [-904: -879] |
| | RU 43 [-877: -852] | RU 44 [-851: -826] | RU 45 [-823: -798] | RU 46 [-797:-772] | |
| | RU 47 [-764: -739] | RU 48 [-738:-713] | RU 49 [-710: -685] | RU 50 [-684:-659] | RU 51 [-657:-632] |
| | RU 52 [-630: -605] | RU 53 [-604: -579] | RU 54 [-576: -551] | RU 55 [-550: -525] | RU 56 [not defined] |
| | RU 57 [-499: -474] | RU 58 [-473: -448] | RU 59 [-445:-420] | RU 60 [-419:-394] | RU 61 [-392: -367] |
| | RU 62 [-365: -340] | RU 63 [-339:-314] | RU 64 [-311: -286] | RU 65 [-285:-260] | |
| | RU 66 [-252: -227] | RU 67 [-226:-201] | RU 68 [-198: -173] | RU 69 [-172: -147] | RU 70 [-145: -120] |
| | RU 71 [-118:-93] | RU 72 [-92: -67] | RU 73 [-64: -39] | RU 74 [-38: -13] | |
| | RU 75 [13: 38] | RU 76 [39: 64] | RU 77 [67: 92] | RU 78 [93: 118] | RU 79 [120: 145] |
| | RU 80 [147: 172] | RU 81 [173: 198] | RU 82 [201: 226] | RU 83 [227: 252] | |
| | RU 84 [260: 285] | RU 85 [286: 311] | RU 86 [314: 339] | RU 87 [340: 365] | RU 88 [367: 392] |
| | RU 89 [394: 419] | RU 90 [420: 445] | RU 91 [448: 473] | RU 92 [474: 499] | RU 93 [not defined] |
| | RU 94 [525: 550] | RU 95 [551: 576] | RU 96 [579: 604] | RU 97 [605: 630] | RU 98 [632: 657] |

Specifically:

| RU type (type) | RU index and subcarrier range (RU index and subcarrier range) | | | | |
|---|---|---|---|---|---|
| 26-tone RU | RU 99 [659: 684] | RU 100 [685: 710] | RU 101 [713: 738] | RU 102 [739: 764] | |

(continued)

| RU type (type) | RU index and subcarrier range (RU index and subcarrier range) | | | | |
|---|---|---|---|---|---|
| | RU 103 [772: 797] | RU 104 [798: 823] | RU 105 [826: 851] | RU 106 [852: 877] | RU 107 [879: 904] |
| | RU 108 [906: 931] | RU 109 [932: 957] | RU 110 [960: 985] | RU 111 [986: 1011] | |
| | RU 112 [1037: 1062] | RU 113 [1063: 1088] | RU 114 [1091: 1116] | RU 115 [1117: 1142] | RU 116 [1144: 1169] |
| | RU 117 [1171: 1196] | RU 118 [1197: 1222] | RU 119 [1225: 1250] | RU 120 [1251: 1276] | |
| | RU 121 [1284: 1309] | RU 122 [1310: 1335] | RU 123 [1338: 1363] | RU 124 [1364: 1389] | RU 125 [1391: 1416] |
| | RU 126 [1418: 1443] | RU 127 [1444: 1469] | RU 128 [1472: 1497] | RU 129 [1498: 1523] | RU 130 [not defined] |
| | RU 131 [1549: 1574] | RU 132 [1575: 1600] | RU 133 [1603: 1628] | RU 134 [1629: 1654] | RU 135 [1656: 1681] |
| | RU 136 [1683: 1708] | RU 137 [1709: 1734] | RU 138 [1737: 1762] | RU 139 [1763: 1788] | |
| | RU 140 [1796: 1821] | RU 141 [1822: 1847] | RU 142 [1850: 1875] | RU 143 [1876: 1901] | RU 144 [1903: 1928] |
| | RU 145 [1930: 1955] | RU 146 [1956: 1981] | RU 147 [1984: 2009] | RU 148 [2010: 2035] | |
| 52-tone RU | RU 1 [-2035: -1984] | RU2 [-1981: -1930] | RU3 [-1901: -1850] | RU 4 [-1847: -1796] | |
| | RU5 [-1788: -1737] | RU6 [-1734: -1683] | RU7 [-1654: -1603] | RU 8 [-1600: -1549] | |
| | RU 9 [-1523: -1472] | RU 10 [-1469: -1418] | RU 11 [-1389: -1338] | RU 12 [-1335: -1284] | |
| | RU 13 [-1276: -1225] | RU 14 [-1222: -1171] | RU 15 [-1142: -1091] | RU 16 [-1088: -1037] | |
| | RU 17 [-1011: -960] | RU 18 [-957: -906] | RU 19 [-877: -826] | RU 20 [-823: -772] | |
| | RU 21 [-764: -713] | RU 22 [-710: -659] | RU 23 [-630: -579] | RU 24 [-576: -525] | |
| | RU 25 [-499: -448] | RU 26 [-445: -394] | RU 27 [-365: -314] | RU 28 [-311: -260] | |
| | RU 29 [-252: -201] | RU 30 [-198: -147] | RU 31 [-118: -67] | RU 32 [-64: -13] | |
| | RU 33 [13: 64] | RU 34 [67: 118] | RU 35 [147: 198] | RU 36 [201: 252] | |
| | RU 37 [260: 311] | RU 38 [314: 365] | RU 39 [394: 445] | RU 40 [448: 499] | |

| RU type (type) | RU index and subcarrier range (RU index and subcarrier range) | | | |
|---|---|---|---|---|
| 52-tone RU | RU 41 [525: 576] | RU 42 [579: 630] | RU 43 [659: 710] | RU 44 [713: 764] |
| | RU 45 [772: 823] | RU 46 [826: 877] | RU 47 [906: 957] | RU 48 [960: 1011] |
| | RU 49 [1037: 1088] | RU 50 [1091: 1142] | RU 51 [1171: 1222] | RU 52 [1225: 1276] |
| | RU 53 [1284: 1335] | RU 54 [1338: 1389] | RU 55 [1418: 1469] | RU 56 [1472: 1523] |
| | RU 57 [1549: 1600] | RU 58 [1603: 1654] | RU 59 [1683: 1734] | RU 60 [1737: 1788] |
| | RU 61 [1796: 1847] | RU 62 [1850: 1901] | RU 63 [1930: 1981] | RU 64 [1984: 2035] |
| 106-tone RU | RU 1 [-2035: -1930] | RU2 [-1901: -1796] | RU3 [-1788: -1683] | RU 4 [-1654: -1549] |
| | RU 5 [-1523: -1418] | RU 6 [-1389: -1284] | RU 7 [-1276:-1171] | RU8 [-1142: -1037] |
| | RU 9 [-1011: -906] | RU 10 [-877: -772] | RU 11 [-764: -659] | RU 12 [-630: -525] |
| | RU 13 [-499:-394] | RU 14 [-365: -260] | RU 15 [-252: -147] | RU 16 [-118: -13] |
| | RU 17 [13: 118] | RU 18 [147: 252] | RU 19 [260: 365] | RU 20 [394: 499] |
| | RU 21 [525: 630] | RU 22 [659: 764] | RU 23 [772: 877] | RU 24 [906: 1011] |
| | RU 25 [1037: 1142] | RU 26 [1171: 1276] | RU 27 [1284: 1389] | RU 28 [1418: 1523] |
| | RU 29 [1549: 1654] | RU 30 [1683: 1788] | RU 31 [1796: 1901] | RU 32 [1930: 2035] |
| 242-tone RU | RU 1 [-2036: -1795] | RU2 [-1789: -1548] | RU3 [-1524: -1283] | RU 4 [-1277: -1036] |
| | RU 5 [-1012: -771] | RU6 [-765: -524] | RU7 [-500: -259] | RU 8 [-253: -12] |
| | RU 9 [12: 253] | RU 10 [259: 500] | RU 11 [524: 765] | RU 12 [771: 1012] |
| | RU 13 [1036: 1277] | RU 14 [1283: 1524] | RU 15 [1548: 1789] | RU 16 [1795: 2036] |
| 484-tone RU | RU 1 [-2036: -1795, -1789: -1548] | RU2 [-1524: -1283, -1277: -1036] | RU3 [-1012: -771, -765: -524] | RU 4 [-500: -259, -253: -12] |
| | RU 5 [12: 253, 259: 500] | RU6 [524: 765, 771: 1012] | RU7 [1036: 1277, 1283: 1524] | RU 8 [1548: 1789, 1795: 2036] |

| RU type (type) | RU index and subcarrier range (RU index and subcarrier range) | | | | |
|---|---|---|---|---|---|
| 996-tone RU | RU 1 [-2036: -1539, -1533: -1036] | RU2 [-1012: -515, -509: -12] | RU3 [12: 509, 515: 1012] | RU 4 [1036: 1533, 1539: 2036] | |
| 2*996-tone RU | RU 1 [-2036: -1539, -1533: -1036, -1012: -515, -509:-12] | RU2 [12: 509, 515: 1012, 1036: 1533, 1539: 2036] | | | |
| 4*996-tone RU | RU 1 [-2036: -1539, -1533: -1036, -1012: -515, -509: -12, 12: 509, 515: 1012, 1036: 1533, 1539: 2036] | | | | |

As shown in the foregoing Table 2 to Table 6, currently division of continuous RUs and subcarrier sequence numbers or subcarrier indices corresponding to corresponding RUs have been specified. The AP may send resource unit indication information to the STA, so that the STA may learn of a specific RU on which a resource is transmitted to the AP. It should be noted that, in this embodiment of this application, a sequence number of each subcarrier may still be a subcarrier number (for example, a subcarrier number specified in the foregoing tables) of the subcarrier on a corresponding actual frequency band, or may be customized. In this embodiment of this application, a specific implementation form of a sequence number of a subcarrier is not limited.

In a possible implementation, a sequence number of a subcarrier may be a subcarrier number of the subcarrier on a corresponding actual frequency band. For example, sequence numbers of 242 subcarriers corresponding to first 20 MHz of 80 MHz are sequentially -500 to -259; sequence numbers of 242 subcarriers corresponding to second 20 MHz are sequentially -253 to -12; sequence numbers of 242 subcarriers corresponding to third 20 MHz are sequentially 12 to 253; and sequence numbers of 242 subcarriers corresponding to fourth 20 MHz are sequentially 259 to 500.

In another possible implementation, sequence numbers of subcarriers may not be existing subcarrier numbers (subcarrier numbers on an actual frequency band), but may be renumbered, for example, numbered from 0 or 1. For example, sequence numbers of 242 subcarriers corresponding to first 20 MHz of 80 MHz are 0 to 241 or 1 to 242. In other words, in this embodiment of this application, sequence numbers of subcarriers participating in mapping may be continuously numbered in ascending order on the frequency band. For example, if all 26 subcarriers of a first 26-tone RU of 20 MHz participate in mapping, the subcarriers may be numbered from 0 to 25. It should be noted that the sequence numbers of the subcarriers participating in mapping may not be continuously numbered in ascending order on the frequency band. This is not limited in this application.

In addition, it should be uniformly noted that, in this embodiment of this application, a 996-tone RU, a 484-tone RU, a 242-tone RU, a 106-tone RU, and a 52-tone RU may be considered as including a plurality of 26-tone RUs. For example, as shown in FIG. 3, a 52-tone RU may be considered as including two 26-tone RUs, and a 106-tone RU may be considered as including four 26-tone RUs. Details are not described below again. The 106-tone RU, the 242-tone RU, and the 996-tone RU further include subcarriers other than subcarriers in the 26-tone RUs. For details, refer to the foregoing Table 2 to Table 6.

It should be understood that the 242-tone RU may be considered as including 9 26-tone RUs, and an equivalent resource allocation bandwidth is 20 MHz. The 484-tone RU may be considered as including 18 26-tone RUs, and an equivalent resource allocation bandwidth is 40 MHz. The 996-tone RU may be considered as including 36 26-tone RUs, and an equivalent resource allocation bandwidth is 80 MHz. The 2*996-tone RU and 3*996-tone RU may be considered as including a plurality of 996-tone RUs, and equivalent resource allocation bandwidths are 160 MHz and 320 MHz respectively. For example, the 2*996-tone RU may be considered as including two 996-tone RUs, that is, including 2*36 26-tone RUs; and the 3*996-tone RU may be considered as including three 996-tone RUs, that is, including 3*36 26-tone RUs. The resource allocation bandwidth herein refers to a maximum bandwidth that can be allocated by the transmit end to the receive end. Using a 242-tone RU as an example, it may be considered that a maximum bandwidth allocated by the AP to one or more STAs is the 242-tone RU (20 MHz), and each STA transmits data on an RU of a corresponding size and location according to an indication.

The following describes several possible mapping relationships between the VRU and the PRU.

Mapping relationship 1: In this embodiment of this application, the first VRU may be mapped to the first PRU through permutation of the VRU.

In an example, permutation is performed by using a K-tone RU as a minimum unit. Relative locations of K-tone RUs in the VRU may be adjusted through permutation, so that adjacent K-tone RUs on a frequency band may be distributed to farther locations on the frequency band, and RUs in the PRU obtained through permutation may be distributed on a larger bandwidth. As shown in FIG. 8, after permutation of an RU 2 and an RU 4, the RU 1 and the RU 2 are far away from each other on a frequency band. It is assumed that the first VRU allocated by the AP to the STA 1 includes the RU 1 and the RU 2, and the RU 2 included in the first PRU obtained through permutation is actually located at a location whose index is the RU 4 in frequency domain. In other words, the RUs in the first PRU are distributed on a larger bandwidth.

It should be understood that, because permutation is performed by using a K-tone RU as a minimum unit, relative locations of subcarriers in the K-tone RU are not changed. In other words, when the 26-tone RU is used as a minimum unit, relative locations of 26 subcarriers in the 26-tone RU after permutation are the same as relative locations of 26 subcarriers in a 26-tone RU before permutation.

K may be 26 or 52. In other words, permutation may be performed by using a 26-tone RU as a minimum unit, or permutation may be performed by using a 52-tone RU as a minimum unit.

The following describes two different permutation manners by using an example in which a 26-tone RU is used as a minimum unit.

Permutation manner 1: Pairwise permutation is performed inside a 242-tone RU.

It may be understood that the 242-tone RU herein may be considered as including 9 26-tone RUs in the first row shown in FIG. 2, or may be equivalent to a resource transmission bandwidth of 20 M. When pairwise permutation is performed on 26-tone RUs in the 242-tone RU, a 26-tone RU (namely, a 26-tone RU separated by 7 DC) that is located in the middle in frequency domain in each 242-tone RU may not be considered. For remaining 8 26-tone RUs in the 242-tone RU, permutation is performed on 26-tone RUs at symmetrical locations every two 26-tone RUs.

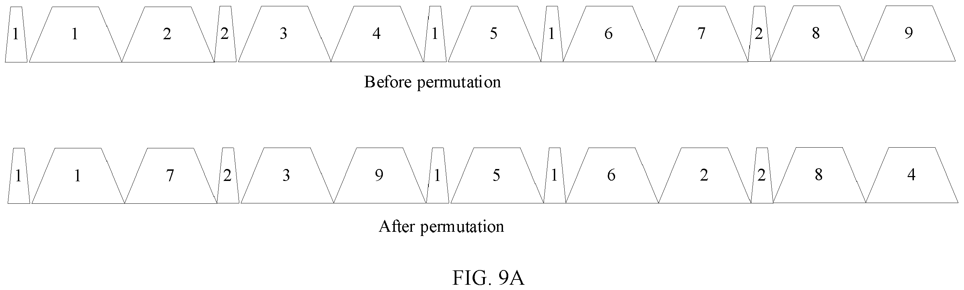

FIG. 9A is a schematic diagram of a permutation manner 1 according to an embodiment of this application. The 242-tone RU includes 9 26-tone RUs, and indices of the 9 26-tone RUs are respectively {1, 2, 3, 4, 5, 6, 7, 8, 9}+q. An RU whose index is 5 and that is located in the middle in frequency domain may not be considered. Permutation is performed on an RU whose index is 2 and an RU whose index is 7 at symmetrical locations, and permutation is performed on an RU whose index is 4 and an RU whose index is 9 at symmetrical locations. That is, indices of RUs included in a PRU obtained through permutation are respectively {1, 7, 3, 9, 5, 6, 2, 8, 4}+q. Herein, q is an integer, q = 9*b, b is an integer, b indicates a quantity of 20 MHz included in a maximum resource bandwidth allocated by the AP minus 1, and q = 0, 9, 18, 27, or the like.

One first VRU allocated by the AP may be one or more of the 9 26-tone RUs before permutation. For example, if one first VRU allocated by the AP is a 52-tone RU, the first VRU allocated by the AP may be considered as including two 26-tone RUs. The first PRU corresponding to the first VRU may be one or more of the 9 26-tone RUs after permutation of the corresponding first VRU. For example, it is assumed that the first VRU allocated by the AP to the STA 1 includes 26-tone RUs 1 and 2 before permutation shown in FIG. 9A. In this case, the STA 1 may obtain the first PRU after permutation based on the mapping relationship between the VRU and the PRU. Actually, RUs included in the first PRU are RUs whose indices are respectively 1 and 7 in frequency domain.

It should be noted that a pilot subcarrier included in an RU may participate in permutation, or may not participate in permutation. Assuming that the pilot subcarrier does not participate in permutation, the frequency domain occupied by the pilot subcarrier remains unchanged before and after permutation. It is assumed that each 26-tone RU includes two pilot subcarriers, and the first VRU allocated by the AP to the STA 1 includes 26-tone RUs 1 and 2 before permutation shown in FIG. 9A. In this case, RUs actually included in the obtained PRU are RUs whose indices are respectively 1 and 7 in frequency domain. Because the pilot subcarriers do not participate in permutation, the pilot subcarriers included in the RU whose index is 2 do not change in frequency domain after permutation, and are still located in the frequency domain of the RU whose index is 2 before permutation, and a frequency domain of the remaining 24 subcarriers after permutation is actually a frequency domain of the RU whose index is 7 before permutation. Alternatively, a pilot subcarrier on each PRU may be reallocated. This is not specifically limited in this application.

It should be understood that, for a bandwidth of 40 MHz, 80 MHz, 160 MHz, or 320 MHz, the bandwidth may be considered as including a plurality of 242-tone RUs, and pairwise permutation is performed inside each 242-tone RU. For example, 40 MHz may be divided into two 242-tone RUs, and permutation shown in FIG. 9A is performed on each 242-tone RU.

For example, it is assumed that the first VRU allocated by the AP to the STA includes the RU 1 and the RU 2 in the 26-tone RU shown in Table 2, and subcarrier indices of the RU 1 and the RU 2 include [-121: -96] and [-95: -70]. In this case, the STA may map, to the first PRU in the permutation manner shown in FIG. 9A, the first VRU allocated by the AP. In other words, the first PRU includes the RU 1 and the RU 7 in the 26-tone RU shown in Table 2, and subcarrier indices include [-121: -96] and [43: 68.

Locations of the VRU and the PRU on a frequency band may be determined based on a subcarrier sequence number or an RU sequence number. Therefore, in the permutation manner shown in FIG. 9A, the mapping relationship between the VRU and the PRU in a 20 MHz bandwidth may be indicated by using a relationship in Table 2 and Table 7. For example, the STA may search Table 7 based on the first VRU indicated by the AP, to determine RUs and subcarrier indices of the first PRU. For example, it is assumed that the first VRU indicated by the AP includes an RU 1 and an RU 2 in a 26-tone RU of 20 MHz. In this case, the STA may search Table 7 to determine that subcarrier indices of the first PRU include [-121: -96] and [43: 68], and send data on these PRU subcarriers. For another example, if the first VRU indicated by the AP includes an RU 3 and an RU 4 in a 26-tone RU of 20 MHz, the STA may search Table 7 to determine that subcarrier indices of the first PRU include [-68: -43] and [96: 121], and send data on these PRU subcarriers.

**Table 7: Mapping table of data and pilot subcarrier indices for RUs in a 20 MHz EHT PPDU**

| Data and pilot subcarrier indices for RUs in a 20 MHz EHT PPDU | | | | |
|---|---|---|---|---|
| RU type (type) | | | | |
| | RU index and subcarrier range (RU index and subcarrier range) | | | |
| | | | | |
| 26-tone RU | RU 1 [-121: -96] | RU 2 [43: 68] | RU 3 [-68: -43] | RU 4 [96: 121] | RU 5 [-16: -4, 4: 16] |
| | RU 6 [17: 42] | RU 7 [-95: -70] | RU 8 [70: 95] | RU 9 [-42: -17] | |
| 52-tone RU | RU 1 [-121: -96,43: 68] | RU 2 [-68: -43,96: 121] | RU 3 [17: 42,-95:-70] | RU 4 [70: 95,-42:-17] | |
| 106-tone RU | RU 1 [-122,-121: -96,43: 68,-68:-43,96: 121] | | RU 2 [17: 42, -95: -70,70: 95,-42:-17,122] | | |
| 242-tone RU | RU 1 [-122: -2,2:122] | | | | |

It should be noted that subcarriers whose indices are -122 and 122 in the 106-tone RU and the 242-tone RU (the 242-tone RU herein means that the RU allocated by the AP and received by the STA is a 242-tone RU in size) in the foregoing Table 7 do not participate in permutation. Therefore, frequency domain locations of the two subcarriers do not change before and after permutation.

It should be understood that mapped index tables of the data and pilot subcarrier indices for RUs in 40 MHz to 320 MHz shown in Table 3 to Table 6 may also be determined in the permutation manner shown in FIG. 9A. For details, refer to the foregoing manner of determining mapped index tables of the data and pilot subcarrier indices for RUs in a 20 MHz bandwidth, that is, refer to the determining manner in Table 7. For example, it is assumed that the first VRU indicated by the AP includes an RU 1 and an RU 2 in a 26-tone RU of 40 MHz. In this case, the STA may determine that the RUs included in the first PRU may be the RU 1 and the RU 7 in the 26-tone RU shown in Table 3. In other words, subcarrier indices of the first PRU include [-243: -218] and [-83: -58]. Similarly, if the pilot subcarriers do not participate in permutation, indices of the pilot subcarriers do not change before and after permutation. Details are not described herein again.

The following shows a mapped index table of the data and pilot subcarrier indices for RUs in 40 MHz to 320 MHz corresponding to Table 3 to Table 6.

**Table 8: Mapping table of data and pilot subcarrier indices for RUs in a 40 MHz EHT PPDU**

| Data and pilot subcarrier indices for RUs in a 40 MHz EHT PPDU | | | | |
|---|---|---|---|---|
| RU type (type) | RU index and subcarrier range (RU index and subcarrier range) | | | |
| 26-tone RU | RU 1 [-243: -218] | RU 2 [-83: -58] | RU 3 [-189: -164] | RU 4 [-29: -4] | RU 5 [-136: -111] |
| | RU 6 [-109: -84] | RU 7 [-217: -192] | RU 8 [-55: -30] | RU 9 [-163: -138] | |
| | RU 10 [4: 29] | RU 11 [164: 189] | RU 12 [58: 83] | RU 13 [218: 243] | RU 14 [111: 136] |
| | RU 15 [138: 163] | RU 1 [30: 55] | RU 17 [192: 217] | RU 18 [84: 109] | |
| 52-tone RU | RU 1 [-243:-218,-83: -58] | RU 2 [-189:-164,-29: -4] | RU 3 [-109:-84,-217: -192] | RU4 [-55: -30, -163: -138] | |
| | RU 5 [4: 29, 164: 189] | RU 6 [58: 83. 218: 243] | RU 7 [138: 163, 30: 55] | RU 8 [192: 217, 84: 109] | |
| 106-tone RU | RU 1 [-243: -218,-83: -58, -189:-164, -29: -4] | RU 2 [-109: -84,-217: -192, -55: -30, -163:-138] | RU 3 [4: 29, 164: 189, 58: 83. 218: 243] | RU 4 [138: 163, 30: 55, 192: 217, 84: 109] | |
| 242-tone RU | RU 1 [-244,-243: -218, -83: -58, -189: -164, -29: -4, -109: -84, -217:-192, -55: -30, -163: -138, -3] | | RU 2 [3, 4: 29, 164: 189, 58: 83. 218: 243, 138: 163, 30: 55, 192: 217, 84: 109, 244] | | |
| 484-tone RU | RU 1 [-244: -3, 3: 244] | | | | |

It should be noted that subcarriers whose indices are -244, 244, 3, and -3 in the foregoing Table 8 do not participate in permutation. Therefore, the subcarriers do not change in frequency domain before and after permutation.

**Table 9: Data and pilot subcarrier indices for RUs in an 80 MHz EHT PPDU**

| Data and pilot subcarrier indices for RUs in an 80 MHz EHT PPDU | | | | |
|---|---|---|---|---|
| RU type (type) | RU index and subcarrier range (RU index and subcarrier range) | | | |
| 26-tone RU | RU 1 [-499: -474] | RU 2 [-339: -314] | RU 3 [-445: -420] | RU 4 [-285: -260] | RU 5 [-392: -367] |
| | RU 6 [-365: -340] | RU 7 [-473: -448] | RU 8 [-311: -286] | RU 9 [-419: -394] | |
| | RU 10 [-252: -227] | RU 11 [-92: -67] | RU 12 [-198:-173] | RU 13 [-38: -13] | RU 14 [-145: -120] |
| | RU 15 [-118: -93] | RU 16 [-226: -201] | RU 17 [-64: -39] | RU 18 [-172: -147] | RU 19 [not defined] |

(continued)

| Data and pilot subcarrier indices for RUs in an 80 MHz EHT PPDU | | | | |
|---|---|---|---|---|
| RU type (type) | RU index and subcarrier range (RU index and subcarrier range) | | | |
| | RU 20 [13: 38] | RU 21 [173: 198] | RU 22 [67: 92] | RU 23 [227: 252] | RU 24 [120: 145] |
| | RU 25 [147: 172] | RU 26 [39: 64] | RU 27 [201: 226] | RU 28 [93: 118] | |
| | RU 29 [260: 285] | RU 30 [420: 445] | RU 31 [314: 339] | RU 32 [474: 499] | RU 33 [367: 392] |
| | RU 34 [394: 419] | RU 35 [286: 311] | RU 36 [448: 473] | RU 37 [340: 365] | |
| 52-tone RU | RU 1 [-499: -474,-339: -314] | RU 2 [-445: -420,-285: -260] | RU 3 [-365: -340,-473: -448] | RU 4 [-311: -286,-419: -394] | |
| | RU 5 [-252: -227, -92: -67] | RU 6 [-198: -173, -38: -13] | RU 7 [-118: -93, -226: -201] | RU 8 [-64: -39, -172:-147] | |
| | RU 9 [13: 38, 173: 198] | RU 10 [67: 92, 227: 252] | RU 11 [147: 172, 39: 64] | RU 12 [201: 226, 93: 118] | |
| | RU 13 [260: 285, 420: 445] | RU 14 [314: 339, 474: 499] | RU 15 [394: 419, 286: 311] | RU 16 [448: 473, 340: 365] | |
| 106-toneRU | RU 1 [-499: -474,-339: -314, -445: -420, -285: -260] | RU 2 [-365:-340,-473:-448,-311: -286, -419: -394] | RU 3 [-252: -227, -92: -67,-198:-173,-38: -13] | RU 4 [-118: -93, -226:-201,-64:-39,-172: -147] | |
| | RU 5 [13: 38, 173: 198, 67: 92, 227: 252] | RU 6 [147: 172, 39: 64, 201: 226, 93: 118] | RU 7 [260: 285, 420: 445, 314: 339, 474: 499] | RU 8 [394: 419, 286: 311, 448: 473, 340: 365] | |
| RU type (type) | RU index and subcarrier range (RU index and subcarrier range) | | | |
| 242-toneRU | RU 1 [-500, -499: - 474, -339: -314, -445:-420,-285: -260, -365: -340, -473:-448,-311: -286, -419: -394, -259] | RU 2 [-253, -252: - 227, -92: -67, - 198: -173, -38: - 13, -118: -93, - 226: -201, -64: - 39, -172: -147, - 12] | RU 3 [12, 13: 38, 173: 198, 67: 92, 227: 252, 147: 172, 39: 64,201: 226, 93: 118, 253] | RU 4 [259, 260: 285, 420: 445, 314: 339, 474:499,- 118:-93, -226: -201, - 64: -39, -172: - 147,500] | |

(continued)

| RU type (type) | RU index and subcarrier range (RU index and subcarrier range) | | | | |
|---|---|---|---|---|---|
| 484-toneRU | RU 1<br>[-500, -499: - 474,-339: -314, -445: -420, -285: -260, -365: -340, -473:-448,-311: -286, -419: -394, -259,-253,-252: -227, -92: -67, - 198:-173, -38: - 13, -118: -93, - 226: -201, -64: - 39,-172: -147,-12] | RU 2<br>[12, 13: 38, 173: 198, 67: 92, 227: 252, 147: 172, 39: 64,201: 226, 93: 118,253,259, 260: 285, 420: 445, 314: 339, 474: 499,-118:-93,-226:-201,-64: -39, -172:-147, 500] | | | |
| 996-toneRU | RU 1<br>[-500: -3, 3: 500] | | | | |

It should be noted that subcarriers whose indices are -500, -259, -256, -12, 12, 253, 259, and 500 in the foregoing Table 9 do not participate in mapping. Therefore, the subcarriers do not change in frequency domain before and after permutation.

**Table 10: Data and pilot subcarrier indices for RUs in a 160 MHz EHT PPDU**

Data and pilot subcarrier indices for RUs in a 160 MHz EHT PPDU

| RU type (type) | RU index and subcarrier range (RU index and subcarrier range) | | | | |
|---|---|---|---|---|---|
| 26-tone RU | RU 1 | RU 2 | RU 3 | RU 4 | RU 5 |

| RU type (type) | RU index and subcarrier range (RU index and subcarrier range) | | | | |
|---|---|---|---|---|---|
| | [−1011: −986] | [−851: −826] | [−957: −932] | [−797: −772] | [−904: −879] |
| | RU 6 [−877: −852] | RU 7 [−985: −960] | RU 8 [−823: −798] | RU 9 [−931: −906] | |
| | RU 10 [−764: −739] | RU 11 [−604: −579] | RU 12 [−710: −685] | RU 13 [−550: −525] | RU 14 [−657: −632] |
| | RU 15 [−630: −605] | RU 16 [−738: −713] | RU 17 [−576: −551] | RU 18 [−684: −659] | RU 19 [not defined] |
| | RU 20 [−499: −474] | RU 21 [−339: −314] | RU 22 [−445: −420] | RU 23 [−285: −260] | RU 24 [−392: −367] |
| | RU 25 [−365: −340] | RU 26 [−473: −448] | RU 27 [−311: −286] | RU 28 [−419: −394] | |
| | RU 29 [−252: −227] | RU 30 [−92: −67] | RU 31 [−198: −173] | RU 32 [−38: −13] | RU 33 [−145: −120] |
| | RU 34 [−118: −93] | RU 35 [−226: −201] | RU 36 [−64: −39] | RU 37 [−172: −147] | |
| | RU 38 [13: 38] | RU 39 [173: 198] | RU 40 [67: 92] | RU 41 [227: 252] | RU 42 [120: 145] |
| | RU 43 [147: 172] | RU 44 [39: 64] | RU 45 [201: 226] | RU 46 [93: 118] | |
| | RU 47 [260: 285] | RU 48 [420: 445] | RU 49 [314: 339] | RU 50 [474: 499] | RU 51 [367: 392] |
| | RU 52 [394: 419] | RU 53 [286: 311] | RU 54 [448: 473] | RU 55 [340: 365] | RU 56 [not defined] |
| | RU 57 [525: 550] | RU 58 [685: 710] | RU 59 [579: 604] | RU 60 [739: 764] | RU 61 [632: 657] |
| | RU 62 [659: 684] | RU 63 [551: 576] | RU 64 [713: 738] | RU 65 [605: 630] | |
| | RU 66 [772: 797] | RU 67 [932: 957] | RU 68 [826: 851] | RU 69 [986: 1011] | RU 70 [879: 904] |
| | RU 71 [906: 931] | RU 72 [798: 823] | RU 73 [960: 985] | RU 74 [852: 877] | |
| 52-tone RU | RU 1 [−1011: −986, −851: −826] | RU 2 [−957: −932, −797: −772] | RU 3 [−877: −852, −985: −960] | RU 4 [−823: −798, −931: −906] | |

| RU type (type) | RU index and subcarrier range (RU index and subcarrier range) | | | | |
|---|---|---|---|---|---|
| | RU 5 [–764: –739, –604: –579] | RU 6 [–710: –685, –550: –525] | RU 7 [–630: –605, –738: –713] | RU 8 [–576: –551, –684: –659] | |
| | RU 9 [–499: –474, –339: –314] | RU 10 [–445: –420, –285: –260] | RU 11 [–365: –340, –473: –448] | RU 12 [–311: –286, –419: –394] | |
| | RU 13 [–252: –227, –92: –67] | RU 14 [–198: –173, –38: –13] | RU 15 [–118: –93, –226: –201] | RU 16 [–64: –39, –172: –147] | |
| | RU 17 [13: 38 173: 198] | RU 18 [67: 92, 227: 252] | RU 19 [147: 172, 39: 64] | RU 20 [201: 226, 93: 118] | |
| | RU 21 [260: 285, 420: 445] | RU 22 [314: 339, 474: 499] | RU 23 [394: 419, 286: 311] | RU 24 [448: 473, 340: 365] | |
| | RU 25 [525: 550, 685: 710] | RU 26 [579: 604, 739: 764] | RU 27 [659: 684, 551: 576] | RU 28 [713: 738, 605: 630] | |
| | RU 29 [772: 797, 932: 957] | RU 30 [826: 851, 986: 1011] | RU 31 [906: 931, 798: 823] | RU 32 [960: 985, 852: 877] | |
| 106-tone RU | RU 1 [–1011: –986, –851: –826, –957: –932, –797: –772] | RU 2 [–877: –852, –985: –960, –823: –798, –931: –906] | RU 3 [–764: –739, –604: –579, –710: –685, –550: –525] | RU 4 [–630: –605, –738: –713, –576: –551, –684: –659] | |
| | RU 5 [–499: –474, –339: –314, –445: –420, –285: –260] | RU 6 [–365: –340, –473: –448, –311: –286, –419: –394] | RU 7 [–252: –227, –92: –67, –198: –173, –38: –13] | RU 8 [–118: –93, –226: –201, –64: –39, –172: –147] | |
| | RU 9 [13: 38 173: 198, 67: 92, 227: 252] | RU 10 [147: 172, 39: 64, 201: 226, 93: 118] | RU 11 [260: 285, 420: 445, 314: 339, 474: 499] | RU 12 [394: 419, 286: 311, 448: 473, 340: 365] | |
| | RU 13 [525: 550, 685: | RU 14 [659: 684, 551: | RU 15 [772: 797, 932: | RU 16 [906: 931, 798: | |

| RU type (type) | RU index and subcarrier range (RU index and subcarrier range) | | | | |
|---|---|---|---|---|---|
| | 710, 579: 604, 739: 764] | 576, 713: 738, 605: 630] | 957, 826: 851, 986: 1011] | 823, 960: 985, 852: 877] | |
| 242-tone RU | RU 1 [−1012, −1011: −986, −851: −826, −957: −932, −797: −772, −877: −852, −985: −960, −823: −798, −931: −906, −771] | RU 2 [−765, −764: −739, −604: −579, −710: −685, −550: −525, −630: −605, −738: −713, −576: −551, −684: −659, −524] | RU 3 [−500, −499: −474, −339: −314, −445: −420, −285: −260, −365: −340, −473: −448, −311: −286, −419: −394, −259] | RU 4 [−253, −252: −227, −92: −67, −198: −173, −38: −13, −118: −93, −226: −201, −64: −39, −172: −147, −12] | |
| | RU 5 [12, 13: 38 173: 198, 67: 92, 227: 252, 147: 172, 39: 64, 201: 226, 93: 118, 253] | RU 6 [259, 260: 285, 420: 445, 314: 339, 474: 499, 394: 419, 286: 311, 448: 473, 340: 365, 500] | RU 7 [524, 525: 550, 685: 710, 579: 604, 739: 764, 659: 684, 551: 576, 713: 738, 605: 630, 765] | RU 8 [771, 772: 797, 932: 957, 826: 851, 986: 1011, 906: 931, 798: 823, 960: 985, 852: 877, 1012] | |
| 484-tone RU | RU 1 [−1012, −1011: −986, −851: −826, −957: −932, −797: −772, −877: −852, −985: −960, −823: −798, −931: −906, −771, −765, −764: −739, −604: −579, −710: −685, −550: −525, −630: −605, −738: −713, −576: −551, −684: −659, −524] | RU 2 [−500, −499: −474, −339: −314, −445: −420, −285: −260, −365: −340, −473: −448, −311: −286, −419: −394, −259, −253, −252: −227, −92: −67, −198: −173, −38: −13, −118: −93, −226: −201, −64: −39, −172: −147, −12] | RU 3 [12, 13: 38 173: 198, 67: 92, 227: 252, 147: 172, 39: 64, 201: 226, 93: 118, 253, 259, 260: 285, 420: 445, 314: 339, 474: 499, 394: 419, 286: 311, 448: 473, 340: 365, 500] | RU 4 [524, 525: 550, 685: 710, 579: 604, 739: 764, 659: 684, 551: 576, 713: 738, 605: 630, 765, 771, 772: 797, 932: 957, 826: 851, 986: 1011, 906: 931, 798: 823, 960: 985, 852: 877, 1012] | |
| 996-tone RU | RU 1 [−1012, −1011: −986, −851: −826, −957: −932, −797: −772, −877: −852, −985: −960, −823: − | RU 2 [12, 13: 38 173: 198, 67: 92, 227: 252, 147: 172, 39: 64, 201: 226, 93: 118, 253, 259, | | | |

| RU type (type) | RU index and subcarrier range (RU index and subcarrier range) | | | | |
|---|---|---|---|---|---|
| | 798, −931: −906, −771, −765, −764: −739, −604: −579, −710: −685, −550: −525, −630: −605, −738: −713, −576: −551, −684: −659, −524, −500, −499: −474, −339: −314, −445: −420, −285: −260, −365: −340, −473: −448, −311: −286, −419: −394, −259, −253, −252: −227, −92: −67, −198: −173, −38: −13, −118: −93, −226: −201, −64: −39, −172: −147, −12] | 260: 285, 420: 445, 314: 339, 474: 499, 394: 419, 286: 311, 448: 473, 340: 365, 500, 524, 525: 550, 685: 710, 579: 604, 739: 764, 659: 684, 551: 576, 713: 738, 605: 630, 765, 771, 772: 797, 932: 957, 826: 851, 986: 1011, 906: 931, 798: 823, 960: 985, 852: 877, 1012] | | | |
| 2*996-tone RU | RU 1 [−1012: −515, −509: −12, 12: 509, 515: 1012] | | | | |

It should be noted that subcarriers whose indices are -1012, -771, -765, -524, -500, -259, -253, -12, 12, 253, 259, 600, 524, 765, 771, and 1012 in the foregoing Table 10 do not participate in permutation. Therefore, the subcarriers do not change in frequency domain before and after permutation.

**Table 11: Data and pilot subcarrier indices for RUs in a 320 MHz EHT PPDU**

Data and pilot subcarrier indices for RUs in a 320 MHz EHT PPDU

| RU type (type) | RU index and subcarrier range (RU index and subcarrier range) | | | | |
|---|---|---|---|---|---|
| 26-tone | RU 1 | RU 2 | RU 3 | RU 4 | RU 5 |

| RU type (type) | RU index and subcarrier range (RU index and subcarrier range) | | | | |
|---|---|---|---|---|---|
| RU | [−2035: −2010] | [−1875: −1850] | [−1981: −1956] | [−1821: −1796] | [−1928: −1903] |
| | RU 6<br>[−1901: −1876] | RU 7<br>[−2009: −1984] | RU 8<br>[−1847: −1822] | RU 9<br>[−1955: −1930] | |
| | RU 10<br>[−1788: −1763] | RU 11<br>[−1628: −1603] | RU 12<br>[−1734: −1709] | RU 13<br>[−1574: −1549] | RU 14<br>[−1681: −1656] |
| | RU 15<br>[−1654: −1629] | RU 16<br>[−1762: −1737] | RU 17<br>[−1600: −1575] | RU 18<br>[−1708: −1683] | RU 19<br>[not defined] |
| | RU 20<br>[−1523: −1498] | RU 21<br>[−1363: −1338] | RU 22<br>[−1469: −1444] | RU 23<br>[−1309: −1284] | RU 24<br>[−1416: −1391] |
| | RU 25<br>[−1389: −1364] | RU 26<br>[−1497: −1472] | RU 27<br>[−1335: −1310] | RU 28<br>[−1443: −1418] | |
| | RU 29<br>[−1276: −1251] | RU 30<br>[−1116: −1091] | RU 31<br>[−1222: −1197] | RU 32<br>[−1062: −1037] | RU 33<br>[−1169: −1144] |
| | RU 34<br>[−1142: −1117] | RU 35<br>[−1250: −1225] | RU 36<br>[−1088: −1063] | RU 37<br>[−1196: −1171] | |
| | RU 38<br>[−1011: −986] | RU 39<br>[−851: −826] | RU 40<br>[−957: −932] | RU 41<br>[−797: −772] | RU 42<br>[−904: −879] |
| | RU 43<br>[−877: −852] | RU 44<br>[−985: −960] | RU 45<br>[−823: −798] | RU 46<br>[−931: −906] | |
| | RU 47<br>[−764: −739] | RU 48<br>[−604: −579] | RU 49<br>[−710: −685] | RU 50<br>[−550: −525] | RU 51<br>[−657: −632] |
| | RU 52<br>[−630: −605] | RU 53<br>[−738: −713] | RU 54<br>[−576: −551] | RU 55<br>[−684: −659] | RU 56<br>[not defined] |
| | RU 57<br>[−499: −474] | RU 58<br>[−339: −314] | RU 59<br>[−445: −420] | RU 60<br>[−285: −260] | RU 61<br>[−392: −367] |
| | RU 62<br>[−365: −340] | RU 63<br>[−473: −448] | RU 64<br>[−311: −286] | RU 65<br>[−419: −394] | |
| | RU 66<br>[−252: −227] | RU 67<br>[−92: −67] | RU 68<br>[−198: −173] | RU 69<br>[−38: −13] | RU 70<br>[−145: −120] |
| | RU 71<br>[−118: −93] | RU 72<br>[−226: −201] | RU 73<br>[−64: −39] | RU 74<br>[−172: −147] | |

| RU type (type) | RU index and subcarrier range (RU index and subcarrier range) | | | | |
|---|---|---|---|---|---|
| | RU 75 [13: 38] | RU 76 [173: 198] | RU 77 [67: 92] | RU 78 [227: 252] | RU 79 [120: 145] |
| | RU 80 [147: 172] | RU 81 [39: 64] | RU 82 [201: 226] | RU 83 [93: 118] | |
| | RU 84 [260: 285] | RU 85 [420: 445] | RU 86 [314: 339] | RU 87 [474: 499] | RU 88 [367: 392] |
| | RU 89 [394: 419] | RU 90 [286: 311] | RU 91 [448: 473] | RU 92 [340: 365] | RU 93 [not defined] |
| | RU 94 [525: 550] | RU 95 [685: 710] | RU 96 [579: 604] | RU 97 [739: 764] | RU 98 [632: 657] |

Specifically:

| RU type (type) | RU index and subcarrier range (RU index and subcarrier range) | | | | |
|---|---|---|---|---|---|
| 26-tone RU | RU 99 [659: 684] | RU 100 [551: 576] | RU 101 [713: 738] | RU 102 [605: 630] | |
| | RU 103 [772: 797] | RU 104 [932: 957] | RU 105 [826: 851] | RU 106 [986: 1011] | RU 107 [879: 904] |
| | RU 108 [906: 931] | RU 109 [798: 823] | RU 110 [960: 985] | RU 111 [852: 877] | |
| | RU 112 [1037: 1062] | RU 113 [1197: 1222] | RU 114 [1091: 1116] | RU 115 [1251: 1276] | RU 116 [1144: 1169] |
| | RU 117 [1171: 1196] | RU 118 [1063: 1088] | RU 119 [1225: 1250] | RU 120 [1117: 1142] | |
| | RU 121 [1284: 1309] | RU 122 [1444: 1469] | RU 123 [1338: 1363] | RU 124 [1498: 1523] | RU 125 [1391: 1416] |
| | RU 126 [1418: 1443] | RU 127 [1310: 1335] | RU 128 [1472: 1497] | RU 129 [1364: 1389] | RU 130 [not defined] |
| | RU 131 [1549: 1574] | RU 132 [1709: 1734] | RU 133 [1603: 1628] | RU 134 [1763: 1788] | RU 135 [1656: 1681] |
| | RU 136 [1683: 1708] | RU 137 [1575: 1600] | RU 138 [1737: 1762] | RU 139 [1629: 1654] | |
| | RU 140 [1796: 1821] | RU 141 [1956: 1981] | RU 142 [1850: 1875] | RU 143 [2010: 2035] | RU 144 [1903: 1928] |
| | RU 145 [1930: 1955] | RU 146 [1822: 1847] | RU 147 [1984: 2009] | RU 148 [1876: 1901] | |

(continued)

| RU type (type) | RU index and subcarrier range (RU index and subcarrier range) | | | | |
|---|---|---|---|---|---|
| 52-tone RU | RU 1<br>[-2035: -2010,-1875: -1850] | RU 2<br>[-1981: -1956,-1821: -1796] | RU 3<br>[-1901: -1876,-2009: -1984] | RU4<br>[-1847: -1822,-1955: -1930] | |
| | RU 5<br>[-1788:-1763,-1628: -1603] | RU 6<br>[-1734: -1709,-1574: -1549] | RU 7<br>[-1654: -1629,-1762: -1737] | RU 8<br>[-1600: -1575,-1708: -1683] | |
| | RU 9<br>[-1523:-1498,-1363: -1338] | RU 10<br>[-1469: -1444,-1309: -1284] | RU 11<br>[-1389: -1364,-1497: -1472] | RU 12<br>[-1335: -1310,-1443: -1418] | |
| | RU 13<br>[-1276: -1251,-1116: -1091] | RU 14<br>[-1222: -1197,-1062: -1037] | RU 15<br>[-1142: -1117,-1250: -1225] | RU 16<br>[-1088:-1063,-1196: -1171] | |
| | RU 17<br>[-1011: -986,-851: -826] | RU 18<br>[-957: -932,-797: -772] | RU 19<br>[-877: -852,-985: -960] | RU 20<br>[-823: -798,-931: -906] | |
| | RU 21<br>[-764: -739,-604: -579] | RU 22<br>[-710: -685,-550: -525] | RU 23<br>[-630: -605,-738: -713] | RU 24<br>[-576: -551,-684: -659] | |
| | RU 25<br>[-499: -474,-339: -314] | RU 26<br>[-445: -420,-285: -260] | RU 27<br>[-365: -340,-473: -448] | RU 28<br>[-311: -286,-419: -394] | |
| | RU 29<br>[-252: -227, -92: -67] | RU 30<br>[-198: -173, -38: -13] | RU 31<br>[-118: -93, -226: -201] | RU 32<br>[-64: -39, -172:-147] | |
| | RU 33<br>[13: 38, 173: 198] | RU 34<br>[67: 92, 227: 252] | RU 35<br>[147: 172, 39: 64] | RU 36<br>[201: 226, 93: 118] | |
| | RU 37<br>[260: 285, 420: 445] | RU 38<br>[314: 339, 474: 499] | RU 39<br>[394: 419, 286: 311] | RU 40<br>[448: 473, 340: 365] | |

| RU type (type) | RU index and subcarrier range (RU index and subcarrier range) | | | | |
|---|---|---|---|---|---|
| 52-tone RU | RU 41<br>[525: 550, 685: 710] | RU 42<br>[579: 604, 739: 764] | RU 43<br>[659: 684, 551: 576] | RU 44<br>[713: 738, 605: 630] | |
| | RU 45<br>[772: 797, 932: 957] | RU 46<br>[826: 851, 986: 1011] | RU 47<br>[906: 931, 798: 823] | RU 48<br>[960: 985, 852: 877] | |
| | RU 49<br>[1037: 1062, 1197: 1222] | RU 50<br>[1091: 1116, 1251: 1276] | RU 51<br>[1171: 1196, 1171: 1196] | RU 52<br>[1225: 1250, 1117: 1142] | |
| | RU 53 | RU 54 | RU 55 | RU 56 | |

(continued)

| RU type (type) | RU index and subcarrier range (RU index and subcarrier range) | | | | |
|---|---|---|---|---|---|
| | [1284: 1309, 1444: 1469] | [1338: 1363, 1498: 1523] | [1418: 1443, 1310: 1335] | [1472: 1497, 1364: 1389] | |
| | RU 57<br>[1549: 1574, 1709: 1734] | RU 58<br>[1603: 1628, 1763: 1788] | RU 59<br>[1683: 1708, 1575: 1600] | RU 60<br>[1737: 1762, 1629: 1654] | |
| | RU 61 [1796: 1821, 1956: 1981] | RU 62 [1850: 1875, 2010: 2035] | RU 63 [1930: 1955, 1822: 1847] | RU 64 [1984: 2009, 1876: 1901] | |
| 106-tone RU | RU 1<br>[-2035: -2010,-1875: -1850,-1981: -1956,-1821: -1796] | RU 2<br>[-1901: -1876,-2009: -1984,-1847: -1822,-1955: -1930] | RU 3<br>[-1788: -1763,-1628: -1603,-1734: -1709,-1574: -1549] | RU 4<br>[-1654: -1629,-1762: -1737,-1600: -1575,-1708: -1683] | |
| | RU 5<br>[-1523: -1498,-1363: -1338,-1469: -1444,-1309: -1284] | RU 6<br>[-1389: -1364,-1497: -1472,-1335: -1310,-1443: -1418] | RU 7<br>[-1276: -1251,-1116: -1091,-1222: -1197,-1062:-1037] | RU 8<br>[-1142: -1117,-1250: -1225,-1088: -1063,-1196: -1171] | |
| | RU 9<br>[-1011: -986,-851: -826, -957: -932, -797: -772] | RU 10<br>[-877: -852,-985: -960, -823: -798, -931: -906] | RU 11<br>[-764: -739,-604: -579, -710: -685, -550: -525] | RU 12<br>[-630:-605,-738:-713, -576: -551, -684: -659] | |
| | RU 13<br>[-499: -474,-339: -314, -445: -420, -285: -260] | RU 14<br>[-365: -340,-473: -448, -311: -286, -419: -394] | RU 15<br>[-252: -227,-92: -67, -198: -173, -38: -13] | RU 16<br>[-118: -93, -226: -201, -64: -39,-172: -147] | |
| | RU 17<br>[13: 38, 173: 198, 67: 92, 227: 252] | RU 18<br>[147: 172, 39: 64, 201: 226,93:118] | RU 19<br>[260: 285, 420: 445, 314: 339, 474: 499] | RU 20<br>[394: 419, 286: 311, 448: 473, 340: 365] | |
| | RU 21<br>[525: 550, 685: 710, 579: 604, 739: 764] | RU 22<br>[659: 684, 551: 576, 713: 738, 605: 630] | RU 23<br>[772: 797, 932: 957, 826: 851, 986: 1011] | RU24<br>[906: 931,798: 823, 960: 985, 852: 877] | |
| | RU 25<br>[1037: 1062, 1197: 1222, 1091: 1116, 1251: 1276] | RU 26<br>[1171: 1196, 1171: 1196, 1225: 1250, 1117: 1142] | RU 27<br>[1284: 1309, 1444: 1469, 1338: 1363, 1498: 1523] | RU 28<br>[1418: 1443, 1310: 1335, 1472: 1497, 1364: 1389] | |
| | RU 29<br>[1549: 1574, 1709: 1734, 1603: 1628, 1763: 1788] | RU 30<br>[1683: 1708, 1575: 1600, 1737: 1762, 1629: 1654] | RU 31<br>[1796: 1821, 1956: 1981, 1850: 1875, 2010: 2035] | RU 32<br>[1930: 1955, 1822: 1847, 1984: 2009, 1876: 1901] | |

(continued)

| RU type (type) | RU index and subcarrier range (RU index and subcarrier range) | | | | |
|---|---|---|---|---|---|
| 242-tone RU | RU 1 [-2036,-2035:-2010, -1875:-1850, -1981:-1956, -1821:-1796, -1901:-1876, -2009:-1984,-1847:-1822,-1955:-1930, -1795] | RU 2 [-1789, -1788:-1763, -1628:-1603, -1734:-1709, -1574:-1549, -1654:-1629, -1762:-1737, -1600:-1575, -1708:-1683, -1548] | RU 3 [-1524, -1523:-1498, -1363:-1338, -1469:-1444, -1309:-1284, -1389:-1364, -1497:-1472, -1335:-1310, -1443:-1418, -1283] | RU 4 [-1277, -1276:-1251, -1116:-1091, -1222:-1197, -1062:-1037, -1142:-1117, -1250:-1225, -1088:-1063, -1196:-1171, -1036] | |
| | RU 5 [-1012, -1011:-986, -851:-826, -957: -932, -797:-772, -877, -852, -985:-960, -823: -798, -931:-906, -771] | RU 6 [-765, -764:-739, -604:-579, -710: -685, -550:-525, -630: -605, -738:-713, -576: -551, -684:-659, -524] | RU 7 [-500, -499:-474, -339: -314, -445:-420, -285: -260, -365: -340, -473:-448, -311: -286, -419: -394, -259] | RU 8 [-253, -252:-227, -92:-67,-198: -173, -38:-13, -118: -93,-226:-201, -64:-39, -172:-147,-12] | |
| | RU 9 [12, 13: 38, 173: 198, 67: 92,227: 252, 147: 172,39: 64,201: 226, 93: 118, 253] | RU 10 [259, 260: 285, 420: 445, 314: 339, 474: 499, 394: 419, 286: 311, 448: 473, 340: 365, 500] | RU 11 [524, 525: 550, 685: 710, 579: 604, 739: 764, 659: 684, 551: 576, 713: 738, 605: 630, 765] | RU 12 [771, 772: 797, 932: 957, 826: 851, 986: 1011, 906: 931,798: 823, 960: 985, 852: 877, 1012] | |
| | RU 13 [1036, 1037: 1062, 1197: 1222, 1091: 1116, 1251: 1276, 1171: 1196, 1171: 1196, 1225: 1250, 1117: 1142, 1277] | RU 14 [1283, 1284: 1309, 1444: 1469, 1338: 1363, 1498: 1523, 1418: 1443, 1310: 1335, 1472: 1497, 1364: 1389, 1524] | RU 15 [1548, 1549: 1574, 1709: 1734, 1603: 1628, 1763: 1788, 1683: 1708, 1575: 1600, 1737: 1762, 1629: 1654, 1789] | RU 16 [1795, 1796: 1821, 1956: 1981, 1850: 1875, 2010: 2035, 1930: 1955, 1822: 1847, 1984: 2009, 1876: 1901, 2036] | |

(continued)

| RU type (type) | RU index and subcarrier range (RU index and subcarrier range) | | | | |
|---|---|---|---|---|---|
| 484-tone RU | RU 1<br>[-2036, -2035:-2010, -1875:-1850, -1981:-1956, -1821:-1796, -1901:-1876,-2009:-1984, -1847:-1822,-1955:-1930, -1795,-1789, -1788:-1763, -1628:-1603, -1734:-1709,-1574:-1549,-1654:-1629,-1762:-1737,-1600:-1575,-1708:-1683,-1548] | RU 2<br>[-1524, -1523:-1498, -1363:-1338, -1469:-1444, -1309:-1284, -1389:-1364,-1497:-1472, -1335:-1310,-1443:-1418, -1283,-1277, -1276:-1251, -1116:-1091, -1222:-1197,-1062:-1037,-1142:-1117,-1250:-1225,-1088:-1063,-1196:-1171,-1036] | RU 3<br>[-1012, -1011:-986, -851: -826, -957: -932, -797: -772, -877: -852, -985: -960, -823: -798,-931:-906, -771,-765, -764: -739,-604:-579, -710:-685,-550: -525, -630: -605, -738: -713, -576: -551, -684: -659, -524] | RU 4<br>[-500,-499:-474,-339: -314, -445: -420, -285: -260, -365:-340, -473: -448, -311: -286,-419:-394, -259, -253, -252: -227,-92:-67,-198: -173, -38:-13, -118: -93,-226: -201, -64:-39, -172: -147,-12] | |
| | RU 5<br>[12, 13: 38, 173: 198, 67: 92, 227: 252,147: 172, 39: 64,201: 226, 93: 118,253,259, 260: 285, 420: 445,314: 339, 474: 499, 394: 419, 286: 311, 448: 473, 340: 365, 500] | RU 6<br>[524, 525: 550, 685: 710, 579: 604, 739: 764, 659: 684, 551: 576, 713: 738, 605: 630, 765, 771, 772: 797, 932: 957, 826: 851, 986: 1011, 906: 931, 798: 823, 960: 985, 852: 877, 1012] | RU 7<br>[1036, 1037: 1062, 1197: 1222, 1091: 1116, 1251: 1276, 1171: 1196, 1171: 1196, 1225: 1250, 1117: 1142, 1277: 1283, 1284: 1309, 1444: 1469, 1338: 1363, 1498: 1523, 1418: 1443, 1310: 1335, 1472: 1497, 1364: 1389, 1524] | RU 8<br>[1548, 1549: 1574, 1709: 1734, 1603: 1628, 1763: 1788, 1683: 1708, 1575: 1600, 1737: 1762, 1629: 1654, 1789, 1795, 1796: 1821, 1956: 1981, 1850: 1875, 2010: 2035, 1930: 1955, 1822: 1847, 1984: 2009, 1876: 1901, 2036] | |

| RU type (type) | RU index and subcarrier range (RU index and subcarrier range) | | | |
|---|---|---|---|---|
| 996-tone RU | RU 1 [−2036, −2035: −2010, −1875: −1850, −1981: −1956, −1821: −1796, −1901: −1876, −2009: −1984, −1847: −1822, −1955: −1930, −1795, −1789, −1788: −1763, −1628: −1603, −1734: −1709, −1574: −1549, −1654: −1629, −1762: −1737, −1600: −1575, −1708: −1683, −1548, −1524, −1523: −1498, −1363: −1338, −1469: −1444, −1309: −1284, −1389: −1364, −1497: −1472, −1335: −1310, −1443: −1418, −1283, −1277, −1276: − | RU 2 [−1012, −1011: −986, −851: −826, −957: −932, −797: −772, −877: −852, −985: −960, −823: −798, −931: −906, −771, −765, −764: −739, −604: −579, −710: −685, −550: −525, −630: −605, −738: −713, −576: −551, −684: −659, −524, −500, −499: −474, −339: −314, −445: −420, −285: −260, −365: −340, −473: −448, −311: −286, −419: −394, −259, −253, −252: −227, −92: −67, −198: −173, −38: −13, −118: −93, −226: −201, −64: −39, −172: −147, −12] | RU 3 [12, 13: 38, 173: 198, 67: 92, 227: 252, 147: 172, 39: 64, 201: 226, 93: 118, 253, 259, 260: 285, 420: 445, 314: 339, 474: 499, 394: 419, 286: 311, 448: 473, 340: 365, 500, 524, 525: 550, 685: 710, 579: 604, 739: 764, 659: 684, 551: 576, 713: 738, 605: 630, 765, 771, 772: 797, 932: 957, 826: 851, 986: 1011, 906: 931, 798: 823, 960: 985, 852: 877, 1012] | RU 4 [1036, 1037: 1062, 1197: 1222, 1091: 1116, 1251: 1276, 1171: 1196, 1171: 1196, 1225: 1250, 1117: 1142, 1277, 1283, 1284: 1309, 1444: 1469, 1338: 1363, 1498: 1523, 1418: 1443, 1310: 1335, 1472: 1497, 1364: 1389, 1524, 1548, 1549: 1574, 1709: 1734, 1603: 1628, 1763: 1788, 1683: 1708, 1575: 1600, 1737: 1762, 1629: 1654, 1789, 1795, 1796: 1821, 1956: 1981, 1850: 1875, 2010: 2035, 1930: 1955, 1822: 1847, 1984: 2009, 1876: 1901, 2036] |

| | | | | | |
|---|---|---|---|---|---|
| | 1251, −1116: − 1091, −1222: − 1197, −1062: − 1037, −1142: − 1117, −1250: − 1225, −1088: − 1063, −1196: − 1171, −1036] | | | | |
| 2*996-tone RU | RU 1 [−2036: −1539, −1533: −1036, −1012: −515, −509: −12] | RU 2 [12: 509, 515: 1012, 1036: 1533, 1539: 2036] | | | |
| 4*996-tone RU | RU 1 [−2036: −1539, −1533: −1036, −1012: −515, −509: −12, 12: 509, 515: 1012, 1036: 1533, 1539: 2036] | | | | |

It should be noted that subcarriers whose indices are -2036, -1795, -1789, -1548, -1524, -1283, -1277, -1036, -1012, -771, -765, -524, -500, -259, -253, -12, 12, 253, 259, 500, 524, 765, 771, 1012, 1036, 1277, 1283, 1524, 1548, 1789, 1795, and 2036 in the foregoing Table 11 do not participate in permutation. Therefore, frequency domain locations of the subcarriers do not change before and after permutation.

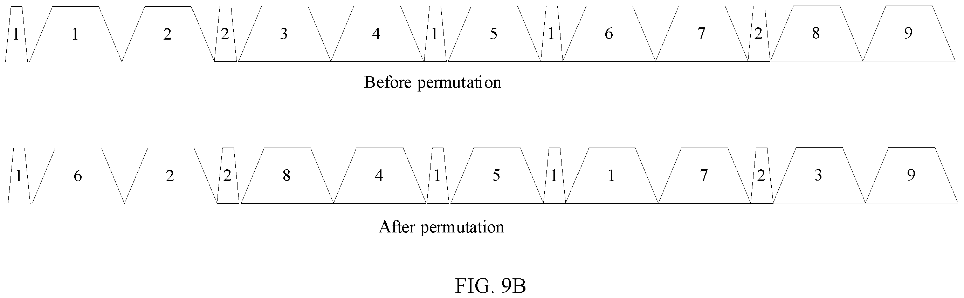

FIG. 9B is another schematic diagram of a permutation manner 1 according to an embodiment of this application. The 242-tone RU includes 9 26-tone RUs, and indices are respectively {1, 2, 3, 4, 5, 6, 7, 8, 9}. An RU whose index is 5 and that is located in the middle in frequency domain may not be considered. Permutation is performed on an RU whose index is 1 and an RU whose index is 6 at symmetrical locations, and permutation is performed on an RU whose index is 3 and an RU whose index is 8 at symmetrical locations. That is, indices of RUs included in a PRU obtained through permutation are {6, 2, 8, 4, 5, 1, 7, 3, 9}.

It is assumed that the first VRU allocated by the AP to the STA 1 includes 26-tone RUs 1 and 2 before permutation shown in FIG. 9A. In this case, the STA 1 may obtain the discrete first PRU based on the mapping relationship between the VRU and the PRU. Actually, RUs included in the first PRU are RUs whose indices are respectively 6 and 2 before permutation in frequency domain.

It should be noted that a pilot subcarrier may participate in permutation, or may not participate in permutation. Alternatively, a pilot subcarrier may be reallocated in the PRU obtained through permutation. This is not specifically limited in this application.

It should be understood that, for 40 MHz, 80 MHz, 160 MHz, 320 MHz, and the like, the bandwidth may be considered as including a plurality of 242-tone RUs, and pairwise permutation is performed inside each 242-tone RU.

For example, 40 MHz may be divided into two 242-tone RUs, and permutation shown in FIG. 9B is performed on each 242-tone RU.

For example, it is assumed that the first VRU allocated by the AP to the STA includes the RU 1 and the RU 2 in the 26-tone RU shown in Table 2. In this case, the STA may map, to the first PRU in the permutation manner shown in FIG. 9B, the first VRU allocated by the AP. In other words, the PRU includes the RU 6 and the RU 2 in the 26-tone RU shown in Table 2, and subcarrier indices include [17: 42] and [-95: -70].

Locations of the VRU and the PRU on a frequency band may be determined based on a subcarrier sequence number. Therefore, in the foregoing permutation manner shown in FIG. 9B, the mapping relationship between the VRU and the PRU in a 20 MHz bandwidth may be indicated by using a relationship in Table 2 and Table 12. For example, the STA may search Table 12 based on the first VRU indicated by the AP, to determine RUs and subcarrier indices of the first PRU.

For example, it is assumed that the first VRU indicated by the AP includes an RU 1 and an RU 2 in a 26-tone RU of 20 MHz. In this case, the STA may search Table 12 to determine that subcarrier indices of the first PRU include [17: 42] and [-95: -70], and send data on subcarriers of the first PRU. For another example, if the first VRU indicated by the AP includes an RU 3 and an RU 4 in a 26-tone RU of 20 MHz, the STA may search Table 12 to determine that subcarrier indices of the PRU include [70: 95] and [-42: -17], and send data on subcarriers of the first PRU.

**Table 12: Mapping table of data and pilot subcarrier indices for RUs in a 20 MHz EHT PPDU**

| Data and pilot subcarrier indices for RUs in a 20 MHz EHT PPDU | | | | |
|---|---|---|---|---|
| RU type (type) | | | | |
| | RU index and subcarrier range (RU index and subcarrier range) | | | |
| | | | | |
| 26-tone RU | RU 1 [17: 42] | RU 2 [-95: -70] | RU 3 [70: 95] | RU 4 [-42: -17] | RU 5 [-16: -4, 4: 16] |
| | RU 6 [-121: -96] | RU 7 [43: 68] | RU 8 [-68: -43] | RU 9 [96: 121] | |
| 52-tone RU | RU 1 [17: 42, -95:-70] | RU 2 [70: 95, -42:-17] | RU 3 [-121: -96, 43: 68] | RU 4 [-68: -43, 96: 121] | |
| 106-tone RU | RU 1 [-122, 17: 42, -95: -70, 70: 95,-42: -17] | | RU 2 [17: 122] | | |
| 242-tone RU | RU 1 [-122: -2, 2:122] | | | | |

It should be noted that subcarriers whose indices are 122 and -122 in the foregoing Table 12 do not participate in permutation. Therefore, the subcarriers do not change in frequency domain before and after permutation.

It should be understood that mapped index tables of the data and pilot subcarrier indices for RUs in 40 MHz to 320 MHz shown in Table 3 to Table 6 may also be determined based on the mapping relationship shown in FIG. 9B. For details, refer to the foregoing manner of determining mapped index tables of the data and pilot subcarrier indices for RUs in a 20 MHz bandwidth, that is, refer to the determining manner in Table 12. For example, it is assumed that the first VRU indicated by the AP includes an RU 1 and an RU 2 in a 26-tone RU of 40 MHz. In this case, the STA may determine that the RUs included in the first PRU may be the RU 6 and the RU 2 in the 26-tone RU shown in Table 3. In other words, subcarrier indices of the first PRU include [-109: -84] and [-217: -192].

The following shows a mapped index table of the data and pilot subcarrier indices for RUs in 40 MHz to 320 MHz corresponding to Table 3 to Table 6.

**Table 13: Data and pilot subcarrier indices for RUs in a 40 MHz EHT PPDU**

| Data and pilot subcarrier indices for RUs in a 40 MHz EHT PPDU | | | | |
|---|---|---|---|---|
| RU type (type) | RU index and subcarrier range (RU index and subcarrier range) | | | |
| 26-tone RU | RU 1 [-109: -84] | RU 2 [-217: -192] | RU 3 [-55: -30] | RU 4 [-163: -138] | RU 5 [-136: -111] |
| | RU 6 | RU 7 | RU 8 | RU 9 | |
| | [-243: -218] | [-83: -58] | [-189: -164] | [-29: -4] | |
| | RU 10 [138: 163] | RU 11 [30: 55] | RU 12 [192: 217] | RU 13 [84: 109] | RU 14 [111: 136] |
| | RU 15 [4: 29] | RU 16 [164: 189] | RU 17 [58: 83] | RU 18 [218: 243] | |
| RU type (type) | RU index and subcarrier range (RU index and subcarrier range) | | | |
| 52-tone RU | RU 1 [-109: -84,-217: -192] | RU2 [-55: -30, -163: -138] | RU 3 [-243: -218,-83: -58] | RU4 [-189: -164,-29: -4] | |
| | RU 5 [138: 163, 30: 55] | RU 6 [192: 217,84: 109] | RU 7 [4: 29, 164: 189] | RU 8 [58: 83, 218: 243] | |
| 106-tone RU | RU 1 [-109: -84,-217: -192, -55: -30, -163: -138] | RU 2 [-243: -218,-83: -58, -189:-164, -29: -4] | RU 3 [138: 163,30: 55, 192: 217, 84: 109] | RU 4 [4: 29, 164: 189, 58: 83, 218: 243] | |
| 242-tone RU | RU 1 [-244, -109: -84, -217: -192, -55: -30, -163: -138, -243: -218, -83: -58, -189: -164, -29: -4, -3] | | RU 2 [3, 138: 163, 30: 55, 192: 217, 84: 109, 4: 29, 164: 189, 58: 83, 218: 243, 244] | | |
| 484-tone RU | RU 1 [-244: -3, 3: 244] | | | | |

It should be noted that subcarriers whose indices are -244, 244, -3, and 3 in the foregoing Table 13 do not participate in permutation. Therefore, frequency domain locations of the subcarriers do not change before and after permutation.

**Table 14: Data and pilot subcarrier indices for RUs in an 80 MHz EHT PPDU**

| Data and pilot subcarrier indices for RUs in an 80 MHz EHT PPDU | | | | | |
|---|---|---|---|---|---|
| RU type (type) | RU index and subcarrier range (RU index and subcarrier range) | | | | |
| 26-tone RU | RU 1 [-365: -340] | RU 2 [-473: -448] | RU 3 [-311: -286] | RU 4 [-419: -394] | RU 5 [-392: -367] |
| | RU 6 [-499: -474] | RU 7 [-339: -314] | RU 8 [-445: -420] | RU 9 [-285: -260] | |
| RU type (type) | RU index and subcarrier range (RU index and subcarrier range) | | | | |
| | RU 10 [-118: -93] | RU 11 [-226: -201] | RU 12 [-64: -39] | RU 13 [-172: -147] | RU 14 [-145: -120] |
| | RU 15 [-252: -227] | RU 16 [-92: -67] | RU 17 [-198: -173] | RU 18 [-38: -13] | RU 19 [not defined] |
| | RU 20 [147: 172] | RU 21 [39: 64] | RU 22 [201: 226] | RU 23 [93: 118] | RU 24 [120: 145] |
| | RU 25 [13: 38] | RU 26 [173: 198] | RU 27 [67: 92] | RU 28 [227: 252] | |
| | RU 29 [394: 419] | RU 30 [286: 311] | RU 31 [448: 473] | RU 32 [340: 365] | RU 33 [367: 392] |
| | RU 34 [260: 285] | RU 35 [420: 445] | RU 36 [314: 339] | RU 37 [474: 499] | |
| 52-tone RU | RU 1 [-365: -340,-473: -448] | RU 2 [-311: -286, - 419: -394] | RU 3 [-499: -474, - 339: -314] | RU 4 [-445: -420,- 285: -260] | |
| | RU 5 [-118: -93, -226: -201] | RU 6 [-64: -39, -172: - 147] | RU 7 [-252: -227, -92: -67] | RU 8 [-198: -173, -38: -13] | |
| | RU 9 [147: 172, 39: 64] | RU 10 [201: 226, 93: 118] | RU 11 [13: 38, 173: 198] | RU 12 [67: 92, 227: 252] | |
| | RU 13 [394: 419, 286: 311] | RU 14 [448: 473, 340: 365] | RU 15 [260: 285, 420: 445] | RU 16 [314: 339, 474: 499] | |

(continued)

| RU type (type) | RU index and subcarrier range (RU index and subcarrier range) | | | | |
|---|---|---|---|---|---|
| 106-tone RU | RU 1 [-365: -340,-473: -448, -311: -286, -419: -394] | RU 2 [-499: -474, - 339: -314, -445: -420, -285: -260] | RU 3 [-118: -93, -226: -201, -64:-39, -172: -147] | RU 4 [-252: -227, -92: -67, -198: -173, -38: -13] | |
| | RU 5 [147: 172, 39: 64, 201: 226, 93: 118] | RU 6 [13: 38, 173: 198, 67: 92, 227: 252] | RU 7 [394: 419, 286:311,448: 473, 340:365] | RU 8 [260: 285, 420: 445, 314: 339, 474: 499] | |
| 242-tone RU | RU 1 [-500, -365:-340, -473: -448, -311: -286, -419: -394, -499: -474, -339: -314, -445: -420, -285: -260, -259] | RU 2 [-253, -118: -93, -226: -201, -64: -39, -172: -147, -252: -227, -92: -67, -198: -173, -38: -13, -12] | RU 3 [12, 147: 172, 39: 64, 201: 226, 93: 118, 13: 38, 173: 198, 67: 92, 227: 252, 253] | RU 4 [259, 394: 419, 286: 311, 448: 473, 340: 365, 260: 285, 420: 445, 314: 339, 474: 499, 500] | |
| 484-tone RU | RU 1 [-500, -365: - 340, -473: -448, -311: -286, -419: -394, -499: -474, -339: -314, -445: -420, -285: -260, -259, -253, -118: -93, -226:-201, -64:-39, -172: - 147, -252: -227, -92: -67, -198: - 173, -38: -13,-12] | RU 2 [12, 147: 172, 39:64, 201: 226, 93: 118, 13: 38, 173: 198, 67: 92, 227: 252, 253, 259, 394: 419, 286: 311, 448: 473, 340: 365, 260: 285, 420: 445, 314: 339, 474: 499, 500] | | | |
| 996-tone RU | RU 1 [-500: -3, 3: 500] | | | | |

It should be noted that subcarriers whose indices are -500, -259, -253, -12, 12, 253, 259, and 500 in the foregoing Table 14 do not participate in permutation. Therefore, the subcarriers do not change in frequency domain before and after permutation.

**Table 15: Data and pilot subcarrier indices for RUs in a 160 MHz EHT PPDU**

| Data and pilot subcarrier indices for RUs in a 160 MHz EHT PPDU | | | | | |
|---|---|---|---|---|---|
| RU type (type) | RU index and subcarrier range (RU index and subcarrier range) | | | | |
| 26-tone RU | RU 1 [-877: -852] | RU 2 [-985: -960] | RU 3 [-823: -798] | RU 4 [-931: -906] | RU 5 [-904: -879] |
| | RU 6 [-1011: -986] | RU 7 [-851: -826] | RU 8 [-957: -932] | RU 9 [-797: -772] | |

(continued)

| RU type (type) | RU index and subcarrier range (RU index and subcarrier range) | | | | |
|---|---|---|---|---|---|
| | RU 10 [-630: -605] | RU 11 [-738: -713] | RU 12 [-576: -551] | RU 13 [-684: -659] | RU 14 [-657: -632] |
| | RU 15 [-764: -739] | RU 16 [-604: -579] | RU 17 [-710: -685] | RU 18 [-550: -525] | RU 19 [not defined] |
| | RU 20 [-365: -340] | RU 21 [-473: -448] | RU 22 [-311: -286] | RU 23 [-419: -394] | RU 24 [-392: -367] |
| | RU 25 [-499: -474] | RU 26 [-339: -314] | RU 27 [-445: -420] | RU 28 [-285: -260] | |
| | RU 29 [-118: -93] | RU 30 [-226: -201] | RU 31 [-64: -39] | RU 32 [-172: -147] | RU 33 [-145: -120] |
| | RU 34 [-252: -227] | RU 35 [-92: -67] | RU 36 [-198: -173] | RU 37 [-38: -13] | |
| | RU 38 [147: 172] | RU 39 [39: 64] | RU 40 [201: 226] | RU 41 [93: 118] | RU 42 [120: 145] |
| | RU 43 [13: 38] | RU 44 [173: 198] | RU 45 [67: 92] | RU 46 [227: 252] | |
| | RU 47 [394: 419] | RU 48 [286: 311] | RU 49 [448: 473] | RU 50 [340: 365] | RU 51 [367: 392] |
| | RU 52 [260: 285] | RU 53 [420: 445] | RU 54 [314: 339] | RU 55 [474: 499] | RU 56 [not defined] |
| | RU 57 [659: 684] | RU 58 [551: 576] | RU 59 [713: 738] | RU 60 [605: 630] | RU 61 [632: 657] |
| | RU 62 [525: 550] | RU 63 [685: 710] | RU 64 [579: 604] | RU 65 [739: 764] | |
| | RU 66 [906: 931] | RU 67 [798: 823] | RU 68 [960: 985] | RU 69 [852: 877] | RU 70 [879: 904] |
| | RU 71 [772: 797] | RU 72 [932: 957] | RU 73 [826: 851] | RU 74 [986: 1011] | |

(continued)

| RU type (type) | RU index and subcarrier range (RU index and subcarrier range) | | | | |
|---|---|---|---|---|---|
| 52-tone RU | RU 1 [-877: -852, - 985: -960] | RU 2 [-823: -798, - 931: -906] | RU 3 [-1011: -986, - 851: -826] | RU 4 [-957: -932, -797: -772] | |
| | RU 5 [-630: -605, - 738: -713] | RU 6 [-576: -551, - 684: -659] | RU 7 [-764: -739, - 604: -579] | RU 8 [-710: -685, -550: -525] | |
| | RU 9 [-365: -340, - 473: -448] | RU 10 [-311: -286, - 419: -394] | RU 11 [-499: -474, - 339: -314] | RU 12 [-445: -420, -285: -260] | |
| | RU 13 [-118: -93, -226: -201] | RU 14 [-64: -39, -172: - 147] | RU 15 [-252: -227, -92: -67] | RU 16 [-198: -173, -38: -13] | |
| | RU 17 [147: 172, 39: 64] | RU 18 [201: 226, 93: 118] | RU 19 [13: 38, 173: 198] | RU 20 [67: 92, 227: 252] | |
| | RU 21 [394: 419, 286: 311] | RU 22 [448: 473, 340: 365] | RU 23 [260: 285, 420: 445] | RU 24 [314: 339, 474: 499] | |
| | RU 25 [659: 684, 551: 576] | RU 26 [713: 738, 605: 630] | RU 27 [525: 550, 685: 710] | RU 28 [579: 604, 739: 764] | |
| | RU 29 [906: 931, 798: 823] | RU 30 [960: 985, 852: 877] | RU 31 [772: 797, 932: 957] | RU 32 [826: 851, 986: 1011] | |
| 106-tone RU | RU 1 [-877: -852, - 985: -960, -823: -798, -931: -906] | RU 2 [-1011: -986,-851: -826, -957: -932, -797: -772] | RU 3 [-630: -605, - 738: -713, -576: -551, -684: -659] | RU 4 [-764: -739, -604: -579, -710: -685, -550: -525] | |
| | RU 5 [-365: -340, - 473: -448, -311: -286, -419: -394] | RU 6 [-499: -474, - 339: -314, -445: -420, -285: -260] | RU 7 [-118: -93, -226: -201, -64: -39, - 172: -147] | RU 8 [-252: -227, -92: -67, -198: -173, - 38: -13] | |
| | RU 9 [147: 172, 39: 64, 201: 226, 93: 118] | RU 10 [13: 38, 173: 198, 67: 92, 227: 252] | RU 11 [394: 419, 286: 311], 448: 473, 340: 365] | RU 12 [260: 285, 420: 445, 314: 339, 474: 499] | |
| | RU 13 [659: 684, 551: 576, 713: 738, 605: 630] | RU 14 [525: 550, 685: 710, 579: 604, 739: 764] | RU 15 [906: 931, 798: 823, 960: 985, 852: 877] | RU 16 [772: 797, 932: 957, 826: 851, 986: 1011] | |

(continued)

| RU type (type) | RU index and subcarrier range (RU index and subcarrier range) | | | | |
|---|---|---|---|---|---|
| 242-tone RU | RU 1<br>[-1012, -877: - 852, -985: -960, -823: -798, -931: -906, -1011: - 986, -851: -826, -957: -932, -797: -772, -771] | RU 2<br>[-765 -630: -605, -738: -713, -576: -551, -684: -659, -764: -739, -604: -579, -710: -685, -550: -525, -524] | RU 3<br>[-500, -365: - 340, -473: -448, -311: -286, -419: - 394, -499: -474, - 339: -314, -445: -420, -285: -260, -259] | RU 4<br>[-253, -118: -93, -226: -201, -64: -39, -172: -147, -252: -227, -92: - 67, -198: -173, -38: -13, -12] | |
| | RU 5<br>[12, 147: 172, 39: 64, 201: 226, 93: 118, 13: 38, 173: 198, 67: 92, 227: 252, 253] | RU 6<br>[259, 394: 419, 286: 311], 448: 473, 340: 365, 260: 285, 420: 445, 314: 339, 474: 499, 500] | RU 7<br>[524, 659: 684, 551: 576, 713: 738, 605: 630, 525: 550, 685: 710, 579: 604, 739: 764, 765] | RU 8<br>[771, 906: 931, 798: 823, 960: 985, 852: 877, 772: 797, 932: 957, 826: 851, 986: 1011, 1012] | |
| 484-tone RU | RU 1<br>[-1012, -877: - 852, -985: -960, -823: -798, -931: -906, -1011: -986, -851: -826, -957: -932, -797: -772, -771, -765 -630: -605, -738: -713, -576: -551, -684: -659, -764: -739, -604: -579, -710: -685, -550: -525, -524] | RU 2<br>[-500, -365: - 340, -473: -448, -311: -286, -419: -394, -499: -474, -339: -314, -445: -420, -285: -260, -259, -253, -118: -93, -226: -201, -64: -39, -172: - 147, -252: -227, -92: -67, -198: - 173, -38: -13, - 12] | RU 3<br>[12, 147: 172, 39: 64, 201: 226, 93: 118, 13: 38, 173: 198, 67: 92, 227: 252, 253, 259, 394: 419, 286: 311], 448: 473, 340: 365, 260: 285, 420: 445, 314: 339, 474: 499, 500] | RU 4<br>[524, 659: 684, 551: 576, 713: 738, 605: 630, 525: 550, 685: 710, 579: 604, 739: 764, 765, 771, 906: 931, 798: 823, 960: 985, 852: 877, 772: 797, 932: 957, 826: 851, 986: 1011, 1012] | |
| 996-tone RU | RU 1<br>[-1012, -877: - 852, -985: -960, -823: -798, -931: -906, -1011: -986, -851: -826, -957: -932, -797: -772, -771, -765 -630: -605, -738: -713, -576: -551, -684: -659, -764: -739, -604: -579, | RU 2<br>[12, 147: 172, 39: 64, 201: 226, 93: 118, 13: 38, 173: 198, 67: 92, 227: 252, 253, 259, 394: 419, 286: 311], 448: 473, 340: 365, 260: 285, 420: 445, 314: 339, 474: 499, 500, 524, | | | |
| | -710: -685, -550: -525, -524, -500, -365: -340, -473: -448, -311: -286, -419: -394, -499: -474, -339: -314, -445: -420, -285: -260, -259, -253, -118: -93, -226: -201, -64: -39, - 172: -147, -252: -227, -92: -67, - 198: -173, -38: - 13, -12] | 659: 684, 551: 576, 713: 738, 605: 630, 525: 550, 685: 710, 579: 604, 739: 764, 765, 771, 906: 931, 798: 823, 960: 985, 852: 877, 772: 797, 932: 957, 826: 851, 986: 1011, 1012] | | | |
| 2*996-tone RU | RU 1<br>[-1012: -515, -509: -12, 12: 509, 515: 1012] | | | | |

It should be noted that subcarriers whose indices are -1012, -771, -765, -524, -500, -259, -253, -12, 12, 253, 259, 500, 524, 765, 771, and 1012 in the foregoing Table 15 do not participate in permutation. Therefore, the subcarriers do not change in frequency domain before and after permutation.

**Table 16: Data and pilot subcarrier indices for RUs in a 320 MHz EHT PPDU**

| Data and pilot subcarrier indices for RUs in a 320 MHz EHT PPDU | | | | |
|---|---|---|---|---|
| RU type (type) | RU index and subcarrier range (RU index and subcarrier range) | | | |
| 26-tone RU | RU 1 [-1901: -1876] | RU 2 [-2009: -1984] | RU 3 [-1847: -1822] | RU 4 [-1955: -1930] | RU 5 [-1928: -1903] |
| | RU 6 [-2035: -2010] | RU 7 [-1875: -1850] | RU 8 [-1981: -1956] | RU 9 [-1821: -1796] | |
| | RU 10 [-1654: -1629] | RU 11 [-1762: -1737] | RU 12 [-1600: -1575] | RU 13 [-1708: -1683] | RU 14 [-1681: -1656] |

(continued)

| RU type (type) | RU index and subcarrier range (RU index and subcarrier range) | | | | |
|---|---|---|---|---|---|
| | RU 15 [-1788: -1763] | RU 16 [-1628: -1603] | RU 17 [-1734: -1709] | RU 18 [-1574: -1549] | RU 19 [not defined] |
| | RU 20 [-1389: -1364] | RU 21 [-1497: -1472] | RU 22 [-1335: -1310] | RU 23 [-1443: -1418] | RU 24 [-1416: -1391] |
| | RU 25 [-1523: -1498] | RU 26 [-1363: -1338] | RU 27 [-1469: -1444] | RU 28 [-1309: -1284] | |
| | RU 29 [-1142: -1117] | RU 30 [-1250: -1225] | RU 31 [-1088: -1063] | RU 32 [-1196: -1171] | RU 33 [-1169: -1144] |
| | RU 34 [-1276: -1251] | RU 35 [-1116: -1091] | RU 36 [-1222: -1197] | RU 37 [-1062: -1037] | |
| | RU 38 [-877: -852] | RU 39 [-985: -960] | RU 40 [-823: -798] | RU 41 [-931: -906] | RU 42 [-904: -879] |
| | RU 43 [-1011: -986] | RU 44 [-851: -826] | RU 45 [-957: -932] | RU 46 [-797: -772] | |
| | RU 47 [-630: -605] | RU 48 [-738: -713] | RU 49 [-576: -551] | RU 50 [-684: -659] | RU 51 [-657: -632] |
| | RU 52 [-764: -739] | RU 53 [-604: -579] | RU 54 [-710: -685] | RU 55 [-550: -525] | RU 56 [not defined] |
| | RU 57 [-365: -340] | RU 58 [-473: -448] | RU 59 [-311: -286] | RU 60 [-419: -394] | RU 61 [-392: -367] |
| | RU 62 [-499: -474] | RU 63 [-339: -314] | RU 64 [-445: -420] | RU 65 [-285: -260] | |
| | RU 66 [-118: -93] | RU 67 [-226: -201] | RU 68 [-64: -39] | RU 69 [-172: -147] | RU 70 [-145: -120] |
| | RU 71 [-252: -227] | RU 72 [-92: -67] | RU 73 [-198: -173] | RU 74 [-38: -13] | |
| | RU 75 [147: 172] | RU 76 [39: 64] | RU 77 [201: 226] | RU 78 [93: 118] | RU 79 [120: 145] |
| | RU 80 [13: 38] | RU 81 [173: 198] | RU 82 [67: 92] | RU 83 [227: 252] | |
| | RU 84 [394: 419] | RU 85 [286: 311] | RU 86 [448: 473] | RU 87 [340: 365] | RU 88 [367: 392] |
| | RU 89 [260: 285] | RU 90 [420: 445] | RU 91 [314: 339] | RU 92 [474: 499] | RU 93 [not defined] |
| | RU 94 [659: 684] | RU 95 [551: 576] | RU 96 [713: 738] | RU 97 [605: 630] | RU 98 [632: 657] |

Specifically:

| RU type (type) | RU index and subcarrier range (RU index and subcarrier range) | | | | |
|---|---|---|---|---|---|
| 26-tone RU | RU 99 [525: 550] | RU 100 [685: 710] | RU 101 [579: 604] | RU 102 [739: 764] | |
| | RU 103 [906: 931] | RU 104 [798: 823] | RU 105 [960: 985] | RU 106 [852: 877] | RU 107 [879: 904] |
| | RU 108 [772: 797] | RU 109 [932: 957] | RU 110 [826: 851] | RU 111 [986: 1011] | |
| | RU 112 [1171: 1196] | RU 113 [1063: 1088] | RU 114 [1225: 1250] | RU 115 [1117: 1142] | RU 116 [1144: 1169] |
| | RU 117 [1037: 1062] | RU 118 [1197: 1222] | RU 119 [1091: 1116] | RU 120 [1251: 1276] | |
| | RU 121 [1418: 1443] | RU 122 [1310: 1335] | RU 123 [1472: 1497] | RU 124 [1364: 1389] | RU 125 [1391: 1416] |
| | RU 126 [1284: 1309] | RU 127 [1444: 1469] | RU 128 [1338: 1363] | RU 129 [1498: 1523] | RU 130 [not defined] |
| | RU 131 [1683: 1708] | RU 132 [1575: 1600] | RU 133 [1737: 1762] | RU 134 [1629: 1654] | RU 135 [1656: 1681] |
| | RU 136 [1549: 1574] | RU 137 [1709: 1734] | RU 138 [1603: 1628] | RU 139 [1763: 1788] | |
| | RU 140 [1930: 1955] | RU 141 [1822: 1847] | RU 142 [1984: 2009] | RU 143 [1876: 1901] | RU 144 [1903: 1928] |
| | RU 145 [1796: 1821] | RU 146 [1956: 1981] | RU 147 [1850: 1875] | RU 148 [2010: 2035] | |
| 52-tone RU | RU 1 [-1901: -1876,-2009: -1984] | RU 2 [-1847: -1822,-1955: -1930] | RU 3 [-2035: -2010, -1875:-1850] | RU 4 [-1981: -1956, -1821:-1796] | |
| | RU 5 [-1654: -1629, -1762: -1737] | RU 6 [-1600: -1575, -1708: -1683] | RU 7 [-1788: -1763, -1628: -1603] | RU 8 [-1734: -1709,-1574: -1549] | |
| | RU 9 [-1389: -1364,-1497: -1472] | RU 10 [-1335: -1310,-1443: -1418] | RU 11 [-1523: -1498,-1363: -1338] | RU 12 [-1469: -1444,-1309: -1284] | |
| | RU 13 [-1142: -1117, -1250:-1225] | RU 14 [-1088: -1063,-1196: -1171] | RU 15 [-1276: -1251, -1116:-1091] | RU 16 [-1222: -1197,-1062: -1037] | |
| | RU 17 [-877: -852, -985: -960] | RU 18 [-823: -798, -931: -906] | RU 19 [-1011: -986,-851: -826] | RU 20 [-957: -932, -797: -772] | |
| | RU 21 [-630: -605, -738: -713] | RU 22 [-576: -551, -684: -659] | RU 23 [-764: -739, -604: -579] | RU 24 [-710: -685, -550: -525] | |

(continued)

| RU type (type) | RU index and subcarrier range (RU index and subcarrier range) | | | | |
|---|---|---|---|---|---|
| | RU 25 [-365: -340, -473: -448] | RU 26 [-311: -286, -419: -394] | RU 27 [-499: -474, -339: -314] | RU 28 [-445: -420, -285: -260] | |
| | RU 29 [-118: -93, -226: -201] | RU 30 [-64: -39, -172: - 147] | RU 31 [-252: -227, -92: -67] | RU 32 [-198: -173, -38: -13] | |
| | RU 33 [147: 172, 39: 64] | RU 34 [201: 226, 93: 118] | RU 35 [13: 38, 173: 198] | RU 36 [67: 92, 227: 252] | |
| | RU 37 [394: 419, 286: 311] | RU 38 [448: 473, 340: 365] | RU 39 [260: 285, 420: 445] | RU 40 [314: 339, 474: 499] | |

| RU type (type) | RU index and subcarrier range (RU index and subcarrier range) | | | | |
|---|---|---|---|---|---|
| 52-tone RU | RU 41 [659: 684, 551: 576] | RU 42 [713: 738, 605: 630] | RU 43 [525: 550, 685: 710] | RU 44 [579: 604, 739: 764] | |
| | RU 45 [906: 931, 798: 823] | RU 46 [960: 985, 852: 877] | RU 47 [772: 797, 932: 957] | RU 48 [826: 851, 986: 1011] | |
| | RU 49 [1171: 1196, 1063: 1088] | RU 50 [1225: 1250, 1117: 1142] | RU 51 [1037: 1062, 1197: 1222] | RU 52 [1091: 1116, 1251: 1276] | |
| | RU 53 [1418: 1443, 1310: 1335] | RU 54 [1472: 1497, 1364: 1389] | RU 55 [1284: 1309, 1444: 1469] | RU 56 [1338: 1363, 1498: 1523] | |
| | RU 57 [1683: 1708, 1575: 1600] | RU 58 [1737: 1762, 1629: 1654] | RU 59 [1549: 1574, 1709: 1734] | RU 60 [1603: 1628, 1763: 1788] | |
| | RU 61 [1930: 1955, 1822: 1847] | RU 62 [1984: 2009, 1876: 1901] | RU 63 [1796: 1821, 1956: 1981] | RU 64 [1850: 1875, 2010: 2035] | |
| 106-tone RU | RU 1 [-1901: -1876,-2009: -1984, - 1847: -1822, - 1955: -1930] | RU 2 [-2035: -2010, - 1875: -1850, - 1981: -1956, - 1821: -1796] | RU 3 [-1654: -1629,-1762: - 1737, - 1600: -1575, - 1708: -1683] | RU 4 [-1788: -1763,-1628: -1603, - 1734: -1709,- 1574: -1549] | |
| | RU 5 [-1389: -1364, - 1497: -1472,-1335: -1310,- 1443: -1418] | RU 6 [-1523: -1498,-1363: -1338, - 1469: -1444,- 1309: -1284] | RU 7 [-1142: -1117, - 1250: -1225,-1088: -1063,- 1196: -1171] | RU 8 [-1276: -1251, - 1116: -1091,-1222: -1197, - 1062:-1037] | |
| | RU 9 [-877:-852,-985:-960, -823: -798, -931: -906] | RU 10 [-1011: -986,-851: -826, -957: - 932, -797: -772] | RU 11 [-630: -605, -738:-713, -576: -551, -684: -659] | RU 12 [-764: -739, -604: -579, -710: -685, -550: -525] | |

(continued)

| RU type (type) | RU index and subcarrier range (RU index and subcarrier range) | | | | |
|---|---|---|---|---|---|
| | RU 13 [-365:-340, -473:-448, -311: -286, -419: -394] | RU 14 [-499:-474, -339: -314, -445: -420, -285: -260] | RU 15 [-118: -93, -226: -201, -64: -39, - 172: -147] | RU 16 [-252: -227, -92: -67, -198: -173, - 38: -13] | |
| | RU 17 [147: 172, 39: 64, 201: 226, 93: 118] | RU 18 [13: 38, 173: 198, 67: 92, 227: 252] | RU 19 [394: 419, 286: 311, 448: 473, 340: 365] | RU 20 [260: 285, 420: 445, 314: 339, 474: 499] | |
| | RU 21 [659: 684, 551: 576, 713: 738, 605: 630] | RU 22 [525: 550, 685: 710, 579: 604, 739: 764] | RU 23 [906: 931, 798: 823, 960: 985, 852: 877] | RU 24 [772: 797, 932: 957, 826: 851, 986: 1011] | |
| | RU 25 [1171: 1196, 1063: 1088, 1225: 1250, 1117: 1142] | RU 26 [1037: 1062, 1197: 1222, 1091: 1116, 1251: 1276] | RU 27 [1418: 1443, 1310: 1335, 1472: 1497, 1364: 1389] | RU 28 [1284: 1309, 1444: 1469, 1338: 1363, 1498: 1523] | |
| | RU 29 [1683: 1708, 1575: 1600, 1737: 1762, 1629: 1654] | RU 30 [1549: 1574, 1709: 1734, 1603: 1628, 1763: 1788] | RU 31 [1930: 1955, 1822: 1847, 1984: 2009, 1876: 1901] | RU 32 [1796: 1821, 1956: 1981, 1850: 1875, 2010: 2035] | |
| 242-tone RU | RU 1 [-2036, -1901: - 1876, -2009 :-1984, -1847:-1822, -1955:-1930, -2035:-2010, -1875:-1850, -1981:-1956, -1821:-1796, -1795] | RU 2 [-1789, -1654: - 1629, -1762:-1737, -1600:-1575, -1708:-1683, -1788:-1763, -1628:-1603, -1734:-1709, -1574:-1549, -1548] | RU 3 [-1524, -1389: - 1364, -1497:-1472, -1335:-1310, -1443:-1418, -1523:-1498, -1363:-1338, -1469:-1444, -1309:-1284, -1283] | RU 4 [-1277, -1142:-1117, -1250:-1225, -1088:-1063, -1196:-1171, -1276:-1251, -1116:-1091, -1222:-1197, -1062:-1037, -1036] | |
| | RU 5 [-1012, -877: - 852, -985: -960, - 823: -798, -931: - 906, -1011: -986, -851: -826, -957: -932, -797: -772, -771] | RU 6 [-765, -630: -605, -738: -713, -576: -551, -684: -659, -764: -739, -604: -579, -710: -685, -550: -525, -524] | RU 7 [-500, -365: -340, -473: -448, -311: -286, -419: -394, -499: -474, -339: -314, -445: -420, -285: -260, -259] | RU 8 [-253, -118: -93, -226: -201, -64: - 39, -172: -147, - 252: -227, -92: - 67, -198: -173, -38: -13, -12] | |
| | RU 9 [12, 147: 172, 39: 64, 201: 226, 93: 118, 13: 38, 173: 198, 67: 92, 227: 252, 253] | RU 10 [259, 394: 419, 286: 311, 448: 473, 340: 365, 260: 285, 420: 445, 314: 339, 474: 499, 500] | RU 11 [524, 659: 684, 551: 576, 713: 738, 605: 630, 525: 550, 685: 710, 579: 604, 739: 764, 765] | RU 12 [771, 906: 931, 798: 823, 960: 985, 852: 877, 772: 797, 932: 957, 826: 851, 986: 1011, 1012] | |
| | RU 13 [1036, 1171: 1196, 1063: 1088, 1225: 1250, 1117: 1142, 1037: 1062, 1197: 1222, 1091: 1116, 1251: 1276, 1277] | RU 14 [1283, 1418: 1443, 1310: 1335, 1472: 1497, 1364: 1389, 1284: 1309, 1444: 1469, 1338: 1363, 1498: 1523, 1524] | RU 15 [1548, 1683: 1708, 1575: 1600, 1737: 1762, 1629: 1654, 1549: 1574, 1709: 1734, 1603: 1628, 1763: 1788, 1789] | RU 16 [1795, 1930: 1955, 1822: 1847, 1984: 2009, 1876: 1901, 1796: 1821, 1956: 1981, 1850: 1875, 2010: 2035, 2036] | |

| RU type (type) | RU index and subcarrier range (RU index and subcarrier range) | | | |
|---|---|---|---|---|
| 484-tone RU | RU 1 | RU 2 | RU 3 | RU 4 |
| | [-2036, -1901: - 1876, -2009: - 1984, -1847:-1822, -1955: - 1930, -2035:-2010, -1875: - 1850, -1981: - 1956, -1821: - 1796, -1795, - 1789, -1654: - 1629, -1762:-1737, -1600: - 1575, -1708:-1683, -1788: - 1763, -1628:-1603, -1734:-1709, -1574:-1549, -1548] | [-1524, -1389: - 1364, -1497: - 1472, -1335:-1310, -1443: - 1418, -1523:-1498, -1363: - 1338, -1469: - 1444, -1309: - 1284, -1283, - 1277, -1142: - 1117, -1250:-1225, -1088: - 1063, -1196:-1171, -1276:-1251, -1116:-1091, -1222:-1197, -1062:-1037, -1036] | [-1012, -877: - 852, -985: -960, - 823: -798, -931:-906, -1011: -986, -851: -826, -957: -932, -797: -772, -771, -765, -630: -605, -738: -713, -576: -551, -684: -659, -764: -739, -604: -579, -710: -685, -550: -525, -524] | [-500, -365: -340, -473: -448, -311: -286, -419: -394, -499: -474, -339: -314, -445: -420, -285: -260, -259, -253, -118: -93, -226: -201, -64:-39, -172: -147, -252: -227, -92: - 67, -198: -173,-38: - 13, - 12] |
| | RU 5 [12, 147: 172, 39: 64, 201: 226, 93: 118, 13: 38, 173: 198, 67: 92, 227: 252, 253, 259, 394: 419, 286: 311, 448: 473, 340: 365, 260: 285, 420: 445, 314: 339, 474: 499, 500] | RU 6 [524, 659: 684, 551: 576, 713: 738, 605: 630, 525: 550, 685: 710, 579: 604, 739: 764, 765, 771, 906: 931, 798: 823, 960: 985, 852: 877, 772: 797, 932: 957, 826: 851, 986: 1011, 1012] | RU 7 [1036, 1171: 1196, 1063: 1088, 1225: 1250, 1117: 1142, 1037: 1062, 1197: 1222, 1091: 1116, 1251: 1276, 1277, 1283, 1418: 1443, 1310: 1335, 1472: 1497, 1364: 1389, 1284: 1309, 1444: 1469, 1338: 1363, 1498: 1523, 1524] | RU 8 [1548, 1683: 1708, 1575: 1600, 1737: 1762, 1629: 1654, 1549: 1574, 1709: 1734, 1603: 1628, 1763: 1788, 1789, 1795, 1930: 1955, 1822: 1847, 1984: 2009, 1876: 1901, 1796: 1821, 1956: 1981, 1850: 1875, 2010: 2035, 2036] |

| RU type (type) | RU index and subcarrier range (RU index and subcarrier range) | | | |
|---|---|---|---|---|
| 996-tone | RU 1 | RU 2 | RU 3 | RU 4 |
| RU | [−2036, −1901: − 1876, −2009: − | [−1012, −877: −852, −985: −960, −823: − | [12, 147: 172, 39: 64, 201: 226, 93: 118, 13: | [1036, 1171: 1196, 1063: 1088, 1225: |

| RU type (type) | RU index and subcarrier range (RU index and subcarrier range) | | | | |
|---|---|---|---|---|---|
| | 1984, –1847: –1822, –1955: –1930, –2035: –2010, –1875: –1850, –1981: –1956, –1821: –1796, –1795, –1789, –1654: –1629, –1762: –1737, –1600: –1575, –1708: –1683, –1788: –1763, –1628: –1603, –1734: –1709, –1574: –1549, –1548, –1524, –1389: –1364, –1497: –1472, –1335: –1310, –1443: –1418, –1523: –1498, –1363: –1338, –1469: –1444, –1309: –1284, –1283, –1277, –1142: –1117, –1250: –1225, –1088: –1063, –1196: –1171, –1276: –1251, –1116: –1091, –1222: –1197, –1062: –1037, –1036] | 798, –931: –906, –1011: –986, –851: –826, –957: –932, –797: –772, –771, –765, –630: –605, –738: –713, –576: –551, –684: –659, –764: –739, –604: –579, –710: –685, –550: –525, –524, –500, –365: –340, –473: –448, –311: –286, –419: –394, –499: –474, –339: –314, –445: –420, –285: –260, –259, –253, –118: –93, –226: –201, –64: –39, –172: –147, –252: –227, –92: –67, –198: –173, –38: –13, –12] | 38, 173: 198, 67: 92, 227: 252, 253, 259, 394: 419, 286: 311, 448: 473, 340: 365, 260: 285, 420: 445, 314: 339, 474: 499, 500, 524, 659: 684, 551: 576, 713: 738, 605: 630, 525: 550, 685: 710, 579: 604, 739: 764, 765, 771, 906: 931, 798: 823, 960: 985, 852: 877, 772: 797, 932: 957, 826: 851, 986: 1011, 1012] | 1250, 1117: 1142, 1037: 1062, 1197: 1222, 1091: 1116, 1251: 1276, 1277, 1283, 1418: 1443, 1310: 1335, 1472: 1497, 1364: 1389, 1284: 1309, 1444: 1469, 1338: 1363, 1498: 1523, 1524, 1548, 1683: 1708, 1575: 1600, 1737: 1762, 1629: 1654, 1549: 1574, 1709: 1734, 1603: 1628, 1763: 1788, 1789, 1795, 1930: 1955, 1822: 1847, 1984: 2009, 1876: 1901, 1796: 1821, 1956: 1981, 1850: 1875, 2010: 2035, 2036] | |
| | | | | | |
| 2*996-tone RU | RU 1 [–2036: –1539, | RU 2 [12: 509, | | | |

| RU type (type) | RU index and subcarrier range (RU index and subcarrier range) | | | | |
|---|---|---|---|---|---|
| | −1533: −1036, −1012: −515, −509: −12] | 515: 1012, 1036: 1533, 1539: 2036] | | | |
| 4*996-tone RU | RU 1 [−2036: −1539, −1533: −1036, −1012: −515, −509: −12, 12: 509, 515: 1012, 1036: 1533, 1539: 2036] | | | | |

It should be noted that subcarriers whose indices are -2036, -1795, -1789, -1548, -1524, -1283, -1277, -1036, -1012, -771, -765, -524, -500, -259, -253, -12, 12, 253, 259, 500, 524, 765, 771, 1012, 1036, 1277, 1283, 1524, 1548, 1789, 1795, and 2036 in the foregoing Table 15 do not participate in permutation. Therefore, the subcarriers do not change in frequency domain before and after permutation.

It may be understood that the permutation manner shown in FIG. 9A and FIG. 9B may be considered as that locations of 9 26-tone RUs included in each 242-tone RU are interchanged. The interchange herein may also be understood as a change in subcarrier locations. For example, after permutation, locations of the RU 1 and the RU 2 after permutation correspond to locations of the RU 1 and the RU 7 before permutation. In FIG. 9A, it may be considered that RUs at even-numbered locations except the middle 26-tone RU are interchanged on the left side and the right side of the middle 26-tone RU by using the middle 26-tone RU as a boundary. In FIG. 9B, it may be considered that RUs at odd-numbered locations except the middle 26-tone RU are interchanged on the left side and the right side of the middle 26-tone RU by using the middle 26-tone RU as a boundary.

FIG. 9A and FIG. 9B are described by using an example in which a 26-tone RU is used as a minimum unit of permutation. In some examples, permutation may be performed by using a 52-tone RU as a minimum unit.

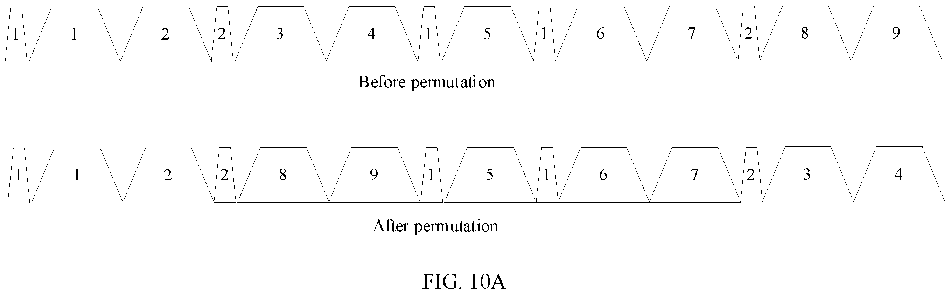

FIG. 10A is still another schematic diagram of a permutation manner 1 according to an embodiment of this application. The 242-tone RU includes 9 26-tone RUs, and indices are respectively {1, 2, 3, 4, 5, 6, 7, 8, 9}. An RU whose index is 5 and that is located in the middle in frequency domain may not be considered. Permutation is performed on an RU whose index is 3 and an RU whose index is 4 at symmetrical locations, and permutation is performed on an RU whose index is 8 and an RU whose index is 9 at symmetrical locations. That is, indices of RUs included in a PRU obtained through permutation are {1, 2, 8, 9, 5, 6, 7, 3, 4}.

It is assumed that the first VRU allocated by the AP to the STA 1 includes 26-tone RUs 1 to 4 before permutation shown in FIG. 10A. In this case, the STA 1 may obtain the first PRU after permutation based on the mapping relationship between the VRU and the PRU. Actually, RUs included in the first PRU are RUs whose indices are respectively 1, 2, 8, and 9 in frequency domain.

It should be noted that a pilot subcarrier included in an RU may participate in permutation, or may not participate in permutation. Alternatively, a pilot subcarrier may be reallocated in the PRU obtained through permutation. This is not specifically limited in this application.

It should be understood that, for 40 MHz, 80 MHz, 160 MHz, 320 MHz, and the like, the bandwidth may be considered as including a plurality of 242-tone RUs, and permutation is performed inside each 242-tone RU. For example, 40 MHz may be divided into two 242-tone RUs, and permutation shown in FIG. 10A is performed on each 242-tone RU.

It is assumed that the first VRU allocated by the AP to the STA includes the RU 1 and the RU 4 in the 26-tone RU shown in Table 2, and subcarrier indices of the RU 1 and the RU 4 include [-121: -96], [-95: -70], [-68: -43], and [-42:

-17]. In this case, the STA may map, to the first PRU in the permutation manner shown in FIG. 10A, the first VRU allocated by the AP. In other words, the first PRU includes the RU 1, the RU 2, the RU 8, and the RU 9 in the 26-tone RU shown in Table 2, and subcarrier indices include [-121: -96], [-95: -70], [70: 95], and [96: 121].

Locations of the VRU and the PRU on a frequency band may be determined based on a subcarrier sequence number. Therefore, in the foregoing permutation manner shown in FIG. 9B, the mapping relationship between the VRU and the PRU in a 20 MHz bandwidth may be indicated by using a relationship in Table 2 and Table 17. For example, the STA may search Table 17 based on the first VRU indicated by the AP, to determine RUs and subcarrier indices of the first PRU. For example, it is assumed that the first VRU indicated by the AP includes an RU 2 and an RU 3 in a 26-tone RU of 20 MHz. In this case, the STA may search Table 9 to determine that subcarrier indices of the first PRU include [-95: -70] and [70: 95], and send data on subcarriers of the first PRU.

**Table 17: Mapping table of data and pilot subcarrier indices for RUs in a 20 MHz EHT PPDU**

| Data and pilot subcarrier indices for RUs in a 20 MHz EHT PPDU | | | | | |
|---|---|---|---|---|---|
| RU type (type) | RU index and subcarrier range (RU index and subcarrier range) | | | | |
| 26-tone RU | RU 1 [-121: -96] | RU 2 [-95: -70] | RU 3 [70: 95] | RU4 [96: 121] | RU 5 [-16: -4, 4: 16] |
| | RU6 [17: 42] | RU 7 [43: 68] | RU 8 [-68: -43] | RU 9 [-42: -17] | |
| 52-tone RU | RU 1 [-121: -70] | RU2 [70: 121] | RU 3 [17: 68] | RU 4 [-68: -17] | |
| 106-tone RU | RU 1 [-122, -121: -70, 70: 121] | | RU 2 [17: 68, -68: -17, 122] | | |
| 242-tone RU | RU 1 [-122: -2, 2:122] | | | | |

It should be noted that subcarriers whose indices are -122 and 122 in the foregoing Table 17 do not participate in permutation. Therefore, the subcarriers do not change in frequency domain before and after permutation.

It should be understood that mapped index tables of the data and pilot subcarrier indices for RUs in 40 MHz to 320 MHz shown in Table 3 to Table 6 may also be determined based on the mapping relationship shown in FIG. 10A. For details, refer to the foregoing manner of determining mapped index tables of the data and pilot subcarrier indices for RUs (the first VRUs) in 20 MHz, that is, refer to the determining manner in Table 17. Details are not separately described below again. For example, it is assumed that the first VRU indicated by the AP includes an RU 2 and an RU 3 in a 26-tone RU of 40 MHz. In this case, the STA may determine that the RUs included in the first PRU may be the RU 2 and the RU 8 in the 26-tone RU shown in Table 3. In other words, subcarrier indices of the first PRU include [-217: -192] and [-55: -30].

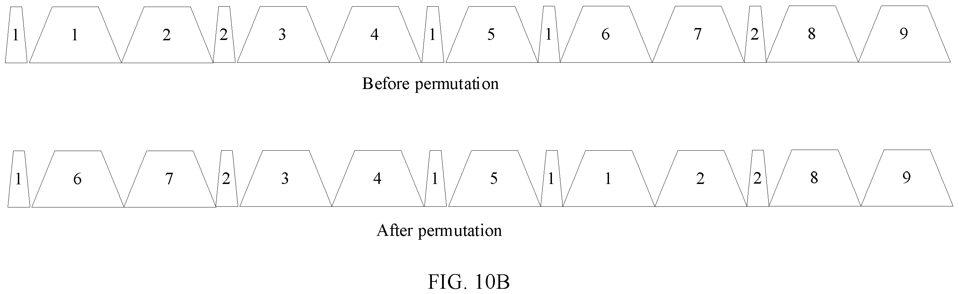

FIG. 10B is another schematic diagram of a permutation manner 1 according to an embodiment of this application. The 242-tone RU includes 9 26-tone RUs, and indices are respectively {1, 2, 3, 4, 5, 6, 7, 8, 9}. An RU whose index is 5 and that is located in the middle in frequency domain may not be considered. Permutation is performed on an RU whose index is 1 and an RU whose index is 2 at symmetrical locations, and permutation is performed on an RU whose index is 6 and an RU whose index is 7 at symmetrical locations. That is, indices of RUs included in a PRU obtained through permutation are {6, 7, 3, 4, 5, 1, 2, 8, 9}.

It is assumed that the first VRU allocated by the AP to the STA 1 includes 26-tone RUs 1 to 4 before permutation shown in FIG. 10A. In this case, the STA 1 may obtain the discrete PRU based on the mapping relationship between the VRU and the PRU. Actually, the RUs included in the PRU are RUs whose indices are respectively 6, 7, 3, and 4 in frequency domain.

It should be noted that a pilot subcarrier may participate in permutation, or may not participate in permutation. Alternatively, a pilot subcarrier may be reallocated in the PRU obtained through permutation. This is not specifically limited in this application.

It should be understood that, for 40 MHz, 80 MHz, 160 MHz, 320 MHz, and the like, the bandwidth may be considered as including a plurality of 242-tone RUs, and pairwise permutation is performed inside each 242-tone RU. For example, 40 MHz may be divided into two 242-tone RUs, and permutation shown in FIG. 10B is performed on each 242-tone RU.

It is assumed that the first VRU allocated by the AP to the STA includes the RU 2 and the RU 3 in the 26-tone RU shown in Table 2, and subcarrier indices of the RU 2 and the RU 3 include [-95: -70] and [-68: -43]. In this case, the STA may map, to the first PRU in the permutation manner shown in FIG. 10B, the first VRU allocated by the AP. In other words, the first PRU includes the RU 7 and the RU 3 in the 26-tone RU shown in Table 2, and subcarrier indices include [43: 68] and [-68: -43].

Locations of the VRU and the PRU on a frequency band may be determined based on a subcarrier sequence number. Therefore, in the foregoing permutation manner 1, the mapping relationship between the VRU and the PRU in a 20 MHz bandwidth may be indicated by using a relationship in Table 2 and Table 18. For example, the STA may search Table 18 based on the first VRU indicated by the AP, to determine RUs and subcarrier indices of the first PRU. For example, it is assumed that the first RU indicated by the AP includes an RU 1 and an RU 4 in a 26-tone RU of 20 MHz. In this case, the STA may search Table 18 to determine that subcarrier indices of the first PRU include [17: 42] and [-42: -17], and send data on subcarriers of the first PRU. For another example, if the first VRU indicated by the AP includes an RU 6 and an RU 8 in a 26-tone RU of 20 MHz, the STA may search Table 18 to determine that subcarrier indices of the first PRU include [-121: -96] and [70: 95], and send data on subcarriers of the first PRU.

**Table 18: Mapping table of data and pilot subcarrier indices for RUs in a 20 MHz EHT PPDU**

| Data and pilot subcarrier indices for RUs in a 20 MHz EHT PPDU | | | | |
|---|---|---|---|---|
| RU type (type) | RU index and subcarrier range (RU index and subcarrier range) | | | |
| 26-tone RU | RU 1 [17: 42] | RU 2 [43: 68] | RU 3 [-68: -43] | RU 4 [-42: -17] | RU 5 [-16: -4, 4: 16] |
| | RU 6 [-121: -96] | RU 7 [-95: -70] | RU 8 [70: 95] | RU 9 [96: 121] | |
| 52-tone RU | RU 1 [17: 68] | RU 2 [-68: -17] | RU 3 [-121: -70] | RU 4 [70: 121] | |
| 106-tone RU | RU 1 [-122, 17: 68, -68: -17] | RU2 [-121: -70, 70:121, 122] | | | |
| 242-tone RU | RU 1 [-122: -2, 2:122] | | | | |

It should be noted that subcarriers whose indices are -122 and 122 in the foregoing Table 18 do not participate in permutation. Therefore, the subcarrier indices do not change before and after permutation.

It should be understood that, for details of mapped index tables of the data and pilot subcarrier indices for RUs in 40 MHz to 320 MHz shown in Table 3 to Table 6, refer to the foregoing manner of determining mapped index tables of the data and pilot subcarrier indices for RUs in 20 MHz, that is, refer to the determining manner in Table 18. The mapped index tables may also be determined based on the mapping relationship shown in FIG. 10B. Details are not separately described below again. For example, it is assumed that the first VRU indicated by the AP includes an RU 2 and an RU 3 in a 26-tone RU of 40 MHz. In this case, the STA may determine that the RUs included in the first PRU may be the RU 7 and the RU 3 in the 26-tone RU shown in Table 3. In other words, subcarrier indices of the first PRU include [-83: -58] and [-189: -164].

It may be understood that, in FIG. 10A and FIG. 10B, permutation is performed by using a 52-tone RU as a granularity, or may be considered as permutation performed by using two 26-tone RUs included in a 52-tone RU as a group. For example, in FIG. 10A, symmetrical permutation is performed on two 26-tone RUs included in even-numbered groups on two sides of a middle 26-tone RU by using the 26-tone RU as a boundary; and in FIG. 10B, symmetrical permutation is performed on two 26-tone RUs included in odd-numbered groups on two sides of the 26-tone RU. An even-numbered group and an odd-numbered group may be considered as follows: For example, 9 26-tone RUs included in a 242-tone RU are numbered from 1 to 9. RUs other than a 26-tone RU numbered 5 in the middle are sequentially grouped two by two. For example, an RU 1 and an RU 2 are one group, and a group number is 1; an RU 3 and an RU 4 are one group, and a group number is 2; an RU 6 and an RU 7 are one group, and a group number is 3; and an RU 8 and an RU 9 are one group, and a group number is 4. A group with an even group number is referred to as an even-numbered group, and a group with an odd group number is referred to as an odd-numbered group.

In some examples, an embodiment of this application further provides another method for performing permutation by using a 52-tone RU as a minimum unit. The 242-tone RU includes four 52-tone RUs whose indices are respectively {1, 2, 3, 4}. Permutation is performed on an RU whose index is 1 and an RU whose index is 3 at symmetrical locations. That is, indices of RUs included in a PRU obtained through permutation are 13, 2, 1, 4}. In other words, the 52-tone RU herein is not considered as including two 26-tone RUs, but the 52-tone RU is considered as a whole.

Similarly, in another bandwidth, for example, 40 MHz, 80 MHz, 160 MHz, 320 MHz, or a larger bandwidth, the foregoing method for performing permutation by using a 26-tone RU as a minimum unit may also be used, or permutation may be performed according to a specific bandwidth by using a larger RU (for example, a 52-tone RU or a 106-tone RU) as a unit (the larger RU herein is not considered as including 26-tone RUs, but as a whole). For details, refer to the foregoing embodiments. Details are not described again.

For example, it is assumed that the first VRU indicated by the AP includes an RU 1 and an RU 2 in a 52-tone RU of 20 MHz. In this case, the STA may determine, based on the foregoing permutation relationship and Table 2, that subcarrier indices of the first PRU include [-121: -70] and [70: 121], and send data on subcarriers of the first PRU.

It should be noted that a pilot subcarrier may participate in permutation, or may not participate in permutation. Alternatively, a pilot subcarrier may be reallocated in the PRU obtained through permutation. This is not specifically limited in this application.

It should be noted that, in the foregoing permutation manner 1, a permutation process performed inside a 242-tone RU is described by using a 242-tone RU as a granularity. For a resource allocation bandwidth including a plurality of 242-tone RUs, for example, 40 MHz, 80 MHz, 160 MHz, 320 MHz, and a larger bandwidth, each 242-tone RU may be implemented in the permutation manner 1.

In the foregoing permutation manner 1, the 242-tone RU may be considered as including a plurality of 26-tone RUs discrete in frequency domain, so that the STA can send data on the discrete first PRU, to obtain a larger transmit power. The foregoing permutation manner 1 may be applied to 20 MHz, 40 MHz, 80 MHz, 160 MHz, 320 MHz, and a larger bandwidth.

It should be noted that, in the foregoing permutation manner 1, the middle 26-tone RU is mainly used as a boundary, and distribution is performed on the left side and the right side of the middle 26-tone RU through symmetrical permutation, so that subcarriers are more evenly distributed. During actual application, distribution is not limited to a symmetrical manner, and may be performed in an asymmetrical manner. This is not limited in this application.

Further, a large bandwidth such as 40 MHz, 80 MHz, 160 MHz, and 320 MHz includes a large quantity of 26-tone RUs. Therefore, the following permutation manner 2 may be used, so that a plurality of 26-tone RUs included in the 242-tone RU are more discrete in frequency domain. It should be noted that, in a large bandwidth such as 40 MHz, 80 MHz, 160 MHz, and 320 MHz, the foregoing permutation manner 1 may still be used, that is, permutation is performed by using a 26-tone RU as a granularity.

Permutation manner 2: Pairwise permutation is performed between 242-tone RUs.

A maximum resource bandwidth allocated by the AP is greater than or equal to 40 MHz, and the maximum resource bandwidth includes at least two 242-tone RUs. In the permutation manner 2, permutation is performed between the at least two 242-tone RUs included in the maximum resource bandwidth.

It should be noted that the maximum resource bandwidth allocated by the AP is greater than or equal to a bandwidth formed by one or more first VRUs allocated to one or more STAs in the resource indication information. For example, when the maximum bandwidth allocated by the AP is 40 MHz, the AP may allocate RUs included in 40 MHz shown in FIG. 3 to the one or more STAs. A bandwidth formed by the first VRUs allocated by the AP to the one or more STAs is less than or equal to 40 MHz.

It should be understood that permutation between the 242-tone RUs may be permutation between two 242-tone RUs adjacent in frequency domain. For example, permutation is performed between a first 242-tone RU and a second 242-tone RU. Alternatively, permutation is performed between two 242-tone RUs discontinuous in frequency domain. For example, permutation is performed between the first 242-tone RU and a third 242-tone RU, or permutation is performed between the first 242-tone RU and a fourth 242-tone RU. For example, it is assumed that pairwise permutation is performed between the first 242-tone RU and the third 242-tone RU. In this case, one 26-tone RU located in the first 242-tone RU in frequency domain is actually located in a frequency domain location of one 26-tone RU in the third 242-tone RU after permutation. Compared with the permutation manner 1, frequency domain locations of one 26-tone RU before and after permutation are far away from each other, so that the PRU obtained through mapping can be more discrete.

When pairwise permutation is performed between the 242-tone RUs, a middle 26-tone RU in frequency domain in each 242-tone RU is not considered, and permutation is performed between a 26-tone RU in remaining 8 26-tone RUs in one 242-tone RU and a 26-tone RU at a same location in the other 242-tone RU every two 26-tone RUs.

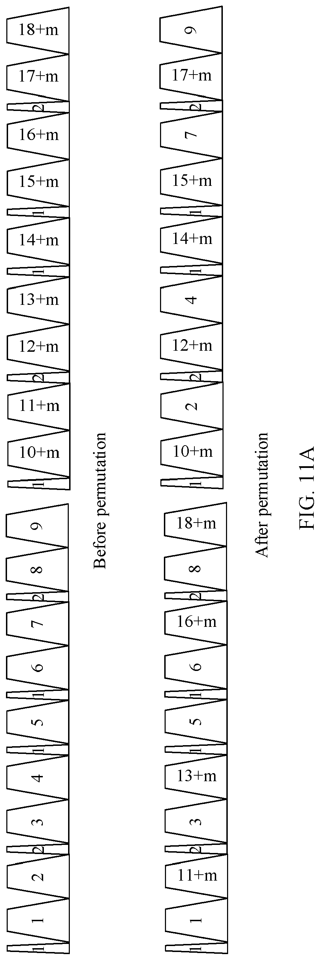

FIG. 11A is a schematic diagram of a permutation manner 2 according to an embodiment of this application. The left 242-tone RU includes 9 26-tone RUs whose indices are {1, 2, 3, 4, 5, 6, 7, 8, 9}. The right 242-tone RU includes 9 26-tone RUs, and indices of the 9 262-tone RUs are respectively {10, 11, 12, 13, 14, 15, 16, 17, 18}+m. Herein, m is an integer, m = 9*a, a is an integer, and a may be understood as a quantity of 242-tone RUs between two 242-tone RUs. For example, m = 0, 9, 18, 27, or the like.

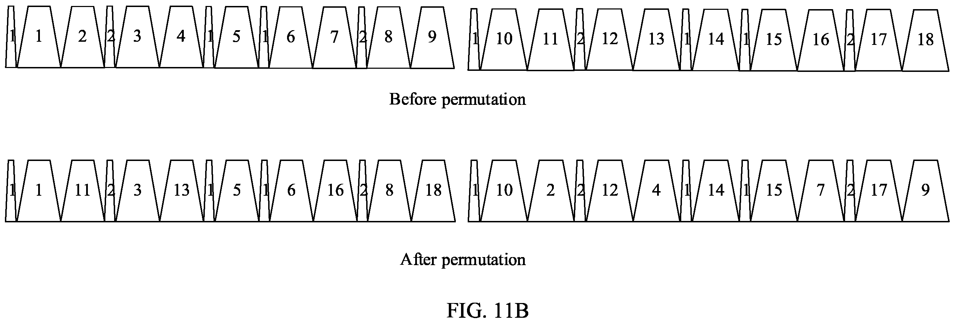

As shown in FIG. 11B, if the left 242-tone RU and the right 242-tone RU are adjacent in frequency domain, m = 0.

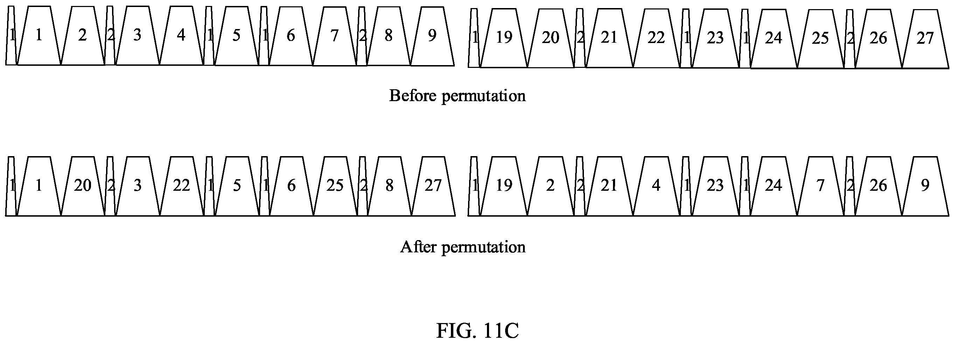

As shown in FIG. 11C, if there is one 242-tone RU between the left 242-tone RU and the right 242-tone RU, m = 9. If there are two 242-tone RUs between the left 242-tone RU and the right 242-tone RU, m = 18. The rest may be deduced by analogy. During permutation, 26-tone RUs whose indices are 5 and 14+m and that are located in the middle in frequency domain in the two 242-tone RUs may not be considered, and permutation is performed on 26-tone RUs at same locations in the two 242-tone RUs. For example, permutation is performed on a left RU whose index is 2 and a right RU whose index is 11+m, permutation is performed on a left RU whose index is 4 and a right RU whose index is 13+m, permutation is performed on a left RU whose index is 7 and a right RU whose index is 16+m, and permutation is performed on a left RU whose index is 9 and a right RU whose index is 18+m. That is, indices of a PRU obtained through permutation are {1, 11+m, 3, 13+m, 5, 6, 16+m, 8, 18+m}, {10+m, 2, 12+m, 4, 14+m, 15+m, 7, 17+m, 9}.

One first VRU allocated by the AP may be one or more of the 18 26-tone RUs before permutation. For example, if one first VRU allocated by the AP is a 106-tone RU, the first VRU allocated by the AP may be considered as including four 26-tone RUs. The first PRU corresponding to the first VRU may be one or more of the 18 26-tone RUs after permutation of the corresponding first VRU. For example, it is assumed that the first VRU allocated by the AP to the STA 1 includes 26-tone RUs 1 and 2 before permutation shown in FIG. 11A. In this case, the STA 1 may obtain the PRU after permutation based on the mapping relationship between the VRU and the PRU. Actually, RUs included in the PRU are RUs whose indices are respectively 1 and 11+m in frequency domain.

It should be noted that a pilot subcarrier may participate in permutation, or may not participate in permutation. Alternatively, a pilot subcarrier may be reallocated in the PRU obtained through permutation. This is not specifically limited in this application.

It should be understood that the foregoing permutation manner 2 may be applied to 40 MHz, 80 MHz, 160 MHz, 320 MHz, and a larger bandwidth. For a 40 MHz bandwidth, the 40 MHz bandwidth includes two 242-tone RUs. Therefore, when the foregoing permutation manner 2 is performed, a permutation operation shown in FIG. 11A may be performed on the two adjacent 242-tone RUs. For an 80 MHz bandwidth, the 80 MHz bandwidth includes four 242-tone RUs. Therefore, when the foregoing permutation manner 2 is performed, a permutation operation shown in FIG. 11A may be performed on two adjacent 242-tone RUs. For example, the permutation operation shown in FIG. 11A may be performed between a first 242-tone RU and a second 242-tone RU, or the permutation operation shown in FIG. 11A may be performed between a third 242-tone RU and a fourth 242-tone RU. Alternatively, a permutation operation shown in FIG. 11A may be performed on two non-adjacent 242-tone RUs. For example, the permutation operation shown in FIG. 11A may be performed between a first 242-tone RU and a third 242-tone RU, or the permutation operation shown in FIG. 11A may be performed between a second 242-tone RU and a fourth 242-tone RU. Alternatively, the permutation operation shown in FIG. 11A may be performed between the first 242-tone RU and the fourth 242-tone RU.

An example in which the permutation operation shown in FIG. 11A is performed on the two adjacent 242-tone RUs is used below for description. It is assumed that the first VRU allocated by the AP to the STA includes the RU 1 and the RU 2 in the 26-tone RU shown in Table 3. In this case, the STA may map, to the first PRU in the permutation manner shown in FIG. 11A, the first VRU allocated by the AP. In other words, the first PRU includes the RU 1 and the RU 11 in the 26-tone RU shown in Table 2, and subcarrier indices include [-243: -218] and [30: 55].

Locations of the VRU and the PRU on a frequency band may be determined based on a subcarrier sequence number. Therefore, in the permutation manner shown in FIG. 11A, the mapping relationship between the VRU and the PRU in a 20 MHz bandwidth may be indicated by using Table 3 and Table 18. For example, the STA may search Table 19 based on the first VRU indicated by the AP, to determine RUs and subcarrier indices of the first PRU. For example, it is assumed that the first VRU indicated by the AP includes an RU 1 and an RU 2 in a 26-tone RU of 40 MHz. In this case, the STA may search Table 19 to determine that subcarrier indices of the first PRU include [-243: -218] and [30: 55], and send data on subcarriers of the first PRU.

**Table 19: Mapping table of data and pilot subcarrier indices for RUs in a 40 MHz EHT PPDU**

| Data and pilot subcarrier indices for RUs in a 40 MHz EHT PPDU | | | | | |
|---|---|---|---|---|---|
| RU type (type) | RU index and subcarrier range (RU index and subcarrier range) | | | | |
| 26-tone RU | RU 1 [-243: -218] | RU 2 [30: 55] | RU3 [-189: -164] | RU4 [84: 109] | RU 5 [-136: -111] |
| | RU 6 [-109: -84] | RU7 [164: 189] | RU 8 [-55: -30] | RU 9 [218: 243] | |
| | RU 10 [4: 29] | RU 11 [-217: -192] | RU 12 [58: 83] | RU 13 [-163: -138] | RU 14 [111: 136] |
| | RU 15 [138: 163] | RU 16 [-83: -58] | RU 17 [192: 217] | RU 18 [-29: -4] | |
| 52-tone RU | RU 1 [-243: -218, 30: 55] | RU2 [-189: -164, 84: 109] | RU3 [-109: -84, 164: 189] | RU 4 [-55: -30, 218: 243] | |
| | RU 5 [4: 29, -217: - 192] | RU 6 [58: 83, -163: - 138] | RU7 [138: 163, -83: -58] | RU 8 [192: 217, -29: -4] | |
| RU type (type) | RU index and subcarrier range (RU index and subcarrier range) | | | | |
| 106-tone RU | RU 1 [-243: -218, 30: 55, -189: -164, 84: 109] | RU 2 [-109: -84, 164: 189, -55: -30, 218: 243] | RU 3 [4: 29, -217: - 192, 58: 83, -163: -138] | RU4 [138: 163, -83: -58, 192: 217, -29: -4] | |
| 242-tone RU | RU 1 [-244, -243: -218, 30: 55, -189: - 164, 84: 109, -109: -84, 164: 189, - 55: -30, 218: 243, -3] | | RU 2 [3, 4: 29, -217: -192, 58: 83, -163: -138, 138: 163, -83: -58, 192: 217, -29: -4, 244] | | |
| 484-tone RU | RU 1 [-244: -3, 3: 244] | | | | |

It should be noted that subcarriers whose indices are -244, -3, 3, and 244 in the foregoing Table 19 do not participate in permutation. Therefore, the subcarriers do not change in frequency domain before and after permutation.

It should be understood that mapped index tables of the data and pilot subcarrier indices for RUs in 80 MHz to 320 MHz shown in Table 4 to Table 6 may also be determined in the permutation manner shown in FIG. 11A. For details, refer to the foregoing manner of determining mapped index tables of the data and pilot subcarrier indices for RUs in a 20 MHz bandwidth, that is, refer to the determining manner in Table 19. For example, it is assumed that the first VRU indicated by the AP includes an RU 1 and an RU 2 in a 26-tone RU of 80 MHz. In this case, the STA may determine that the RUs included in the first PRU may be the RU 1 and the RU 11 in the 26-tone RU shown in Table 4, and subcarrier indices include [-499: -474] and [-226: -201].

The following shows a mapped index table of the data and pilot subcarrier indices for RUs in 80 MHz to 320 MHz corresponding to Table 4 to Table 6.

**Table 20: Data and pilot subcarrier indices for RUs in an 80 MHz EHT PPDU**

Data and pilot subcarrier indices for RUs in an 80 MHz EHT PPDU

| RU type (type) | RU index and subcarrier range (RU index and subcarrier range) | | | | |
|---|---|---|---|---|---|
| 26-tone | RU 1 | RU 2 | RU 3 | RU 4 | RU 5 |

| RU type (type) | RU index and subcarrier range (RU index and subcarrier range) | | | | |
|---|---|---|---|---|---|
| RU | [−499: −474] | [−226: −201] | [−445: −420] | [−172: −147] | [−392: −367] |
| | RU 6 [−365: −340] | RU 7 [−92: −67] | RU 8 [−311: −286] | RU 9 [−38: −13] | |
| | RU 10 [−252: −227] | RU 11 [−473: −448] | RU 12 [−198: −173] | RU 13 [−419: −394] | RU 14 [−145: −120] |
| | RU 15 [−118: −93] | RU 16 [−339: −314] | RU 17 [−64: −39] | RU 18 [−285: −260] | RU 19 [not defined] |
| | RU 20 [13: 38] | RU 21 [286: 311] | RU 22 [67: 92] | RU 23 [340: 365] | RU 24 [120: 145] |
| | RU 25 [147: 172] | RU 26 [420: 445] | RU 27 [201: 226] | RU 28 ] [474: 499] | |
| | RU 29 [260: 285] | RU 30 [39: 64] | RU 31 [314: 339] | RU 32 [93: 118] | RU 33 [367: 392] |
| | RU 34 [394: 419] | RU 35 [173: 198] | RU 36 [448: 473] | RU 37 [227: 252] | |
| 52-tone RU | RU 1 [−499: −474, −226: −201] | RU 2 [−445: −420, −172: −147] | RU 3 [−365: −340, [−92: −67] | RU 4 [−311: −286, −38: −13] | |
| | RU 5 [−252: −227, −473: −448] | RU 6 [−198: −173, −419: −394] | RU 7 [−118: −93, −339: −314] | RU 8 [−64: −39, −285: −260] | |
| | RU 9 [13: 38, 286: 311] | RU 10 [67: 92, 340: 365] | RU 11 [147: 172, 420: 445] | RU 12 [201: 226, 474: 499] | |
| | RU 13 [260: 285, 39: 64] | RU 14 [314: 339, 93: 118] | RU 15 [394: 419, 173: 198] | RU 16 [448: 473, 227: 252] | |
| 106-tone RU | RU 1 [−499: −474, −226: −201, −445: −420, −172: −147] | RU 2 [−365: −340, [−92: −67, −311: −286, −38: −13] | RU 3 [−252: −227, −473: −448, −198: −173, −419: −394] | RU 4 [−118: −93, −339: −314, −64: −39, −285: −260] | |

| RU type (type) | RU index and subcarrier range (RU index and subcarrier range) | | | | |
|---|---|---|---|---|---|
| | RU 5 [13: 38, 286: 311, 67: 92, 340: 365] | RU 6 [147: 172, 420: 445, 201: 226, 474: 499] | RU 7 [260: 285, 39: 64, 314: 339, 93: 118] | RU 8 [394: 419, 173: 198, 448: 473, 227: 252] | |
| 242-tone RU | RU 1 [−500, −499: −474, −226: −201, −445: −420, −172: −147, −365: −340, [−92: −67, −311: −286, −38: −13, −259] | RU 2 [−253, −252: −227, −473: −448, −198: −173, −419: −394, −118: −93, −339: −314, −64: −39, −285: −260, −12] | RU 3 [12, 13: 38, 286: 311, 67: 92, 340: 365, 147: 172, 420: 445, 201: 226, 474: 499, 253] | RU 4 [259, 260: 285, 39: 64, 314: 339, 93: 118, 394: 419, 173: 198, 448: 473, 227: 252, 500] | |
| 484-tone RU | RU 1 [−500, −499: −474, −226: −201, −445: −420, −172: −147, −365: −340, [−92: −67, −311: −286, −38: −13, −259, −253, −252: −227, −473: −448, −198: −173, −419: −394, −118: −93, −339: −314, −64: −39, −285: −260, −12] | RU 2 [12, 13: 38, 286: 311, 67: 92, 340: 365, 147: 172, 420: 445, 201: 226, 474: 499, 253, 259, 260: 285, 39: 64, 314: 339, 93: 118, 394: 419, 173: 198, 448: 473, 227: 252, 500] | | | |
| 996-tone RU | RU 1 [−500: −3, 3: 500] | | | | |

It should be noted that subcarriers whose indices are -500, -259, -253, -12, 12, 253, 259, and 500 in the foregoing Table 20 do not participate in permutation. Therefore, the subcarriers do not change in frequency domain before and after permutation.

**Table 21: Data and pilot subcarrier indices for RUs in a 160 MHz EHT PPDU**

Data and pilot subcarrier indices for RUs in a 160 MHz EHT PPDU

| RU type (type) | RU index and subcarrier range (RU index and subcarrier range) | | | | |
|---|---|---|---|---|---|
| 26-tone RU | RU 1 [−1011: −986] | RU 2 [−738: −713] | RU 3 [−957: −932] | RU 4 [−684: −659] | RU 5 [−904: −879] |
| | RU 6 [−877: −852] | RU 7 [−604: −579] | RU 8 [−823: −798] | RU 9 [−550: −525] | |
| | RU 10 [−764: −739] | RU 11 [−985: −960] | RU 12 [−710: −685] | RU 13 [−931: −906] | RU 14 [−657: −632] |
| | RU 15 [−630: −605] | RU 16 [−851: −826] | RU 17 [−576: −551] | RU 18 [−797: −772] | RU 19 [not defined] |
| | RU 20 [−499: −474] | RU 21 [−226: −201] | RU 22 [−445: −420] | RU 23 [−172: −147] | RU 24 [−392: −367] |
| | RU 25 [−365: −340] | RU 26 [−92: −67] | RU 27 [−311: −286] | RU 28 [−38: −13] | |
| | RU 29 [−252: −227] | RU 30 [−473: −448] | RU 31 [−198: −173] | RU 32 [−419: −394] | RU 33 [−145: −120] |
| | RU 34 [−118: −93] | RU 35 [−339: −314] | RU 36 [−64: −39] | RU 37 [−285: −260] | |
| | RU 38 [13: 38] | RU 39 [286: 311] | RU 40 [67: 92] | RU 41 [340: 365] | RU 42 [120: 145] |
| | RU 43 [147: 172] | RU 44 [420: 445] | RU 45 [201: 226] | RU 46 [474: 499] | |
| | RU 47 [260: 285] | RU 48 [39: 64] | RU 49 [314: 339] | RU 50 [93: 118] | RU 51 [367: 392] |
| | RU 52 [394: 419] | RU 53 [173: 198] | RU 54 [448: 473] | RU 55 [227: 252] | RU 56 [not defined] |
| | RU 57 [525: 550] | RU 58 [798: 823] | RU 59 [579: 604] | RU 60 [852: 877] | RU 61 [632: 657] |
| | RU 62 [659: 684] | RU 63 [932: 957] | RU 64 [713: 738] | RU 65 [986: 1011] | |
| | RU 66 [772: 797] | RU 67 [551: 576] | RU 68 [826: 851] | RU 69 [605: 630] | RU 70 [879: 904] |
| | RU 71 | RU 72 | RU 73 | RU 74 | |

| RU type (type) | RU index and subcarrier range (RU index and subcarrier range) | | | | |
|---|---|---|---|---|---|
| | [906: 931] | [685: 710] | [960: 985] | [739: 764] | |
| 52-tone RU | RU 1 [−1011: −986, −738: −713] | RU 2 [−957: −932, −684: −659] | RU 3 [−877: −852, −604: −579] | RU 4 [−823: −798, −550: −525] | |
| | RU 5 [−764: −739, −985: −960] | RU 6 [−710: −685, −931: −906] | RU 7 [−630: −605, −851: −826] | RU 8 [−576: −551, −797: −772] | |
| | RU 9 [−499: −474, −226: −201] | RU 10 [−445: −420, −172: −147] | RU 11 [−365: −340, −92: −67] | RU 12 [−311: −286, −38: −13] | |
| | RU 13 [−252: −227, −473: −448] | RU 14 [−198: −173, −419: −394] | RU 15 [−118: −93, −339: −314] | RU 16 [−64: −39, −285: −260] | |
| | RU 17 [13: 38, 286: 311] | RU 18 [67: 92, 340: 365] | RU 19 [147: 172, 420: 445] | RU 20 [201: 226, 474: 499] | |
| | RU 21 [260: 285, 39: 64] | RU 22 [314: 339, 93: 118] | RU 23 [394: 419, 173: 198] | RU 24 [448: 473, 227: 252] | |
| | RU 25 [525: 550, 798: 823] | RU 26 [579: 604, 852: 877] | RU 27 [659: 684, 932: 957] | RU 28 [713: 738, 986: 1011] | |
| | RU 29 [772: 797, 551: 576] | RU 30 [826: 851, 605: 630] | RU 31 [906: 931, 685: 710] | RU 32 [960: 985, 739: 764] | |
| 106-tone RU | RU 1 [−1011: −986, −738: −713, −957: −932, −684: −659] | RU 2 [−877: −852, −604: −579, −823: −798, −550: −525] | RU 3 [−764: −739, −985: −960, −710: −685, −931: −906] | RU 4 [−630: −605, −851: −826, −576: −551, −797: −772] | |
| | RU 5 [−499: −474, −226: −201, −445: −420, −172: −147] | RU 6 [−365: −340, −92: −67, −311: −286, −38: −13] | RU 7 [−252: −227, −473: −448, −198: −173, −419: −394] | RU 8 [−118: −93, −339: −314, −64: −39, −285: −260] | |

| RU type (type) | RU index and subcarrier range (RU index and subcarrier range) | | | | |
|---|---|---|---|---|---|
| | RU 9<br>[13: 38, 286: 311, 67: 92, 340: 365] | RU 10<br>[147: 172, 420: 445, 201: 226, 474: 499] | RU 11<br>[260: 285, 39: 64, 314: 339, 93: 118] | RU 12<br>[394: 419, 173: 198, 448: 473, 227: 252] | |
| | RU 13<br>[525: 550, 798: 823, 579: 604, 852: 877] | RU 14<br>[659: 684, 932: 957, 713: 738, 986: 1011] | RU 15<br>[772: 797, 551: 576, 826: 851, 605: 630] | RU 16<br>[906: 931, 685: 710, 960: 985, 739: 764] | |
| 242-tone RU | RU 1<br>[−1012, −1011: −986, −738: −713, −957: −932, −684: −659, −877: −852, −604: −579, −823: −798, −550: −525, −771] | RU 2<br>[−765, −764: −739, −985: −960, −710: −685, −931: −906, −630: −605, −851: −826, −576: −551, −797: −772, −524] | RU 3<br>[−500, −499: −474, −226: −201, −445: −420, −172: −147, −365: −340, −92: −67, −311: −286, −38: −13, −259] | RU 4<br>[−253, −252: −227, −473: −448, −198: −173, −419: −394, −118: −93, −339: −314, −64: −39, −285: −260, −12] | |
| | RU 5<br>[12, 13: 38, 286: 311, 67: 92, 340: 365, 147: 172, 420: 445, 201: 226, 474: 499, 253] | RU 6<br>[259, 260: 285, 39: 64, 314: 339, 93: 118, 394: 419, 173: 198, 448: 473, 227: 252, 500] | RU 7<br>[524, 525: 550, 798: 823, 579: 604, 852: 877, 659: 684, 932: 957, 713: 738, 986: 1011, 765] | RU 8<br>[771, 772: 797, 551: 576, 826: 851, 605: 630, 906: 931, 685: 710, 960: 985, 739: 764, 1012] | |
| 484-tone RU | RU 1<br>[−1012, −1011: −986, −738: −713, −957: −932, −684: −659, −877: −852, −604: −579, −823: −798, −550: −525, −771, −765, −764: −739, −985: −960, −710: −685, −931: −906, −630: −605, −851: −826, −576: −551, −797: −772, − | RU 2<br>[−500, −499: −474, −226: −201, −445: −420, −172: −147, −365: −340, −92: −67, −311: −286, −38: −13, −259, −253: −252: −227, −473: −448, −198: −173, −419: −394, −118: −93, −339: −314, −64: | RU 3<br>[12, 13: 38, 286: 311, 67: 92, 340: 365, 147: 172, 420: 445, 201: 226, 474: 499, 253, 259, 260: 285, 39: 64, 314: 339, 93: 118, 394: 419, 173: 198, 448: 473, 227: 252, 500] | RU 4<br>[524, 525: 550, 798: 823, 579: 604, 852: 877, 659: 684, 932: 957, 713: 738, 986: 1011, 765, 771, 772: 797, 551: 576, 826: 851, 605: 630, 906: 931, 685: 710, 960: 985, 739: 764, 1012] | |

| RU type (type) | RU index and subcarrier range (RU index and subcarrier range) | | | | |
|---|---|---|---|---|---|
| | 52] | −39, −285: −260, −12] | | | |
| 996-tone RU | RU 1 [−1012: −515, −509: −12] | RU 2 [12: 509, 515: 1012] | | | |
| 2*996-tone RU | RU 1 [−1012: −515, −509: −12, 12: 509, 515: 1012] | | | | |

It should be noted that subcarriers whose indices are -1012, -771, -765, -524, -500, -259, -253, -12, 12, 253, 259, 500, 524, 765, 771, and 1012 in the foregoing Table 21 do not participate in permutation. Therefore, the subcarriers do not change in frequency domain before and after permutation.

**Table 22: Data and pilot subcarrier indices for RUs in a 320 MHz EHT PPDU**

Data and pilot subcarrier indices for RUs in a 320 MHz EHT PPDU

| RU type (type) | RU index and subcarrier range (RU index and subcarrier range) | | | | |
|---|---|---|---|---|---|
| 26-tone RU | RU 1 [−2035: −2010] | RU 2 [−1762: −1737] | RU 3 [−1981: −1956] | RU 4 [−1708: −1683] | RU 5 [−1928: −1903] |
| | RU 6 [−1901: −1876] | RU 7 [−1628: −1603] | RU 8 [−1847: −1822] | RU 9 [−1574: −1549] | |
| | RU 10 [−1788: −1763] | RU 11 [−2009: −1984] | RU 12 [−1734: −1709] | RU 13 [−1955: −1930] | RU 14 [−1681: −1656] |
| | RU 15 [−1654: −1629] | RU 16 [−1875: −1850] | RU 17 [−1600: −1575] | RU 18 [−1821: −1796] | RU 19 [not defined] |
| | RU 20 [−1523: −1498] | RU 21 [−1250: −1225] | RU 22 [−1469: −1444] | RU 23 [−1196: −1171] | RU 24 [−1416: −1391] |

| RU type (type) | RU index and subcarrier range (RU index and subcarrier range) | | | |
|---|---|---|---|---|
| | RU 25<br>[−1389: −1364] | RU 26<br>[−1116: −1091] | RU 27<br>[−1335: −1310] | RU 28<br>[−1062: −1037] | |
| | RU 29<br>[−1276: −1251] | RU 30<br>[−1497: −1472] | RU 31<br>[−1222: −1197] | RU 32<br>[−1443: −1418] | RU 33<br>[−1169: −1144] |
| | RU 34<br>[−1142: −1117] | RU 35<br>[−1363: −1338] | RU 36<br>[−1088: −1063] | RU 37<br>[−1309: −1284] | |
| | RU 38<br>[−1011: −986] | RU 39<br>[−738: −713] | RU 40<br>[−957: −932] | RU 41<br>[−684: −659] | RU 42<br>[−904: −879] |
| | RU 43<br>[−877: −852] | RU 44<br>[−604: −579] | RU 45<br>[−823: −798] | RU 46<br>[−550: −525] | |
| | RU 47<br>[−764: −739] | RU 48<br>[−985: −960] | RU 49<br>[−710: −685] | RU 50<br>[−931: −906] | RU 51<br>[−657: −632] |
| | RU 52<br>[−630: −605] | RU 53<br>[−851: −826] | RU 54<br>[−576: −551] | RU 55<br>[−797: −772] | RU 56<br>[not defined] |
| | RU 57<br>[−499: −474] | RU 58<br>[−226: −201] | RU 59<br>[−445: −420] | RU 60<br>[−172: −147] | RU 61<br>[−392: −367] |
| | RU 62<br>[−365: −340] | RU 63<br>[−92: −67] | RU 64<br>[−311: −286] | RU 65<br>[−38: −13] | |
| | RU 66<br>[−252: −227] | RU 67<br>[−473: −448] | RU 68<br>[−198: −173] | RU 69<br>[−419: −394] | RU 70<br>[−145: −120] |
| | RU 71<br>[−118: −93] | RU 72<br>[−339: −314] | RU 73<br>[−64: −39] | RU 74<br>[−285: −260] | |
| | RU 75<br>[13: 38] | RU 76<br>[286: 311] | RU 77<br>[67: 92] | RU 78<br>[340: 365] | RU 79<br>[120: 145] |
| | RU 80<br>[147: 172] | RU 81<br>[420: 445] | RU 82<br>[201: 226] | RU 83<br>[474: 499] | |
| | RU 84<br>[260: 285] | RU 85<br>[39: 64] | RU 86<br>[314: 339] | RU 87<br>[93: 118] | RU 88<br>[367: 392] |
| | RU 89<br>[394: 419] | RU 90<br>[173: 198] | RU 91<br>[448: 473] | RU 92<br>[227: 252] | RU 93<br>[not defined] |

| RU type (type) | RU index and subcarrier range (RU index and subcarrier range) | | | | |
|---|---|---|---|---|---|
| | RU 94 [525: 550] | RU 95 [798: 823] | RU 96 [579: 604] | RU 97 [852: 877] | RU 98 [632: 657] |

Specifically:

| RU type (type) | RU index and subcarrier range (RU index and subcarrier range) | | | | |
|---|---|---|---|---|---|
| 26-tone RU | RU 99 [659: 684] | RU 100 [932: 957] | RU 101 [713: 738] | RU 102 [986: 1011] | |
| | RU 103 [772: 797] | RU 104 [551: 576] | RU 105 [826: 851] | RU 106 [605: 630] | RU 107 [879: 904] |
| | RU 108 [906: 931] | RU 109 [685: 710] | RU 110 [960: 985] | RU 111 [739: 764] | |
| | RU 112 [1037: 1062] | RU 113 [1310: 1335] | RU 114 [1091: 1116] | RU 115 [1364: 1389] | RU 116 [1144: 1169] |
| | RU 117 [1171: 1196] | RU 118 [1444: 1469] | RU 119 [1225: 1250] | RU 120 [1498: 1523] | |
| | RU 121 [1284: 1309] | RU 122 [1063: 1088] | RU 123 [1338: 1363] | RU 124 [1117: 1142] | RU 125 [1391: 1416] |
| | RU 126 [1418: 1443] | RU 127 [1197: 1222] | RU 128 [1472: 1497] | RU 129 [1251: 1276] | RU 130 [not defined] |
| | RU 131 [1549: 1574] | RU 132 [1822: 1847] | RU 133 [1603: 1628] | RU 134 [1876: 1901] | RU 135 [1656: 1681] |
| | RU 136 [1683: 1708] | RU 137 [1956: 1981] | RU 138 [1737: 1762] | RU 139 [2010: 2035] | |
| | RU 140 [1796: 1821] | RU 141 [1575: 1600] | RU 142 [1850: 1875] | RU 143 [1629: 1654] | RU 144 [1903: 1928] |
| | RU 145 [1930: 1955] | RU 146 [1709: 1734] | RU 147 [1984: 2009] | RU 148 [1763: 1788] | |
| 52-tone RU | RU 1 [−2035: −2010, −1762: −1737] | RU 2 [−1981: −1956, −1708: −1683] | RU 3 [−1901: −1876, −1628: −1603] | RU 4 [−1847: −1822, −1574: −1549] | |

| RU type (type) | RU index and subcarrier range (RU index and subcarrier range) | | | | |
|---|---|---|---|---|---|
| | RU 5 [−1788: −1763, −2009: −1984] | RU 6 [−1734: −1709, −1955: −1930] | RU 7 [−1654: −1629, −1875: −1850] | RU 8 [−1600: −1575, −1821: −1796] | |
| | RU 9 [−1523: −1498, −1250: −1225] | RU 10 [−1469: −1444, −1196: −1171] | RU 11 [−1389: −1364, −1116: −1091] | RU 12 [−1335: −1310, −1062: −1037] | |
| | RU 13 [−1276: −1251, −1497: −1472] | RU 14 [−1222: −1197, −1443: −1418] | RU 15 [−1142: −1117, −1363: −1338] | RU 16 [−1088: −1063, −1309: −1284] | |
| | RU 17 [−1011: −986, −738: −713] | RU 18 [−957: −932, −684: −659] | RU 19 [−877: −852, −604: −579] | RU 20 [−823: −798, −550: −525] | |
| | RU 21 [−764: −739, −985: −960] | RU 22 [−710: −685, −931: −906] | RU 23 [−630: −605, −851: −826] | RU 24 [−576: −551, −797: −772] | |
| | RU 25 [−499: −474, −226: −201] | RU 26 [−445: −420, −172: −147] | RU 27 [−365: −340, −92: −67] | RU 28 [−311: −286, −38: −13] | |
| | RU 29 [−252: −227, −473: −448] | RU 30 [−198: −173, −419: −394] | RU 31 [−118: −93, −339: −314] | RU 32 [−64: −39, −285: −260] | |
| | RU 33 [13: 38, 286: 311] | RU 34 [67: 92, 340: 365] | RU 35 [147: 172, 420: 445] | RU 36 [201: 226, 474: 499] | |
| | RU 37 [260: 285, 39: 64] | RU 38 [314: 339, 93: 118] | RU 39 [394: 419, 173: 198] | RU 40 [448: 473, 227: 252] | |

| RU type (type) | RU index and subcarrier range (RU index and subcarrier range) | | | | |
|---|---|---|---|---|---|
| 52-tone RU | RU 41 [525: 550, 798: 823] | RU 42 [579: 604, 852: 877] | RU 43 [659: 684, 932: 957] | RU 44 [713: 738, 986: 1011] | |
| | RU 45 [772: 797, 551: 576] | RU 46 [826: 851, 605: 630] | RU 47 [906: 931, 685: 710] | RU 48 [960: 985, 739: 764] | |

| RU type (type) | RU index and subcarrier range (RU index and subcarrier range) | | | | |
|---|---|---|---|---|---|
| | RU 49<br>[1037: 1062, 1310: 1335] | RU 50<br>[1091: 1116, 1364: 1389] | RU 51<br>[1171: 1196, 1444: 1469] | RU 52<br>[1225: 1250, 1498: 1523] | |
| | RU 53<br>[1284: 1309, 1063: 1088] | RU 54<br>[1338: 1363, 1117: 1142] | RU 55<br>[1418: 1443, 1197: 1222] | RU 56<br>[1472: 1497, 1251: 1276] | |
| | RU 57<br>[1549: 1574, 1822: 1847] | RU 58<br>[1603: 1628, 1876: 1901] | RU 59<br>[1683: 1708, 1956: 1981] | RU 60<br>[1737: 1762, 2010: 2035] | |
| | RU 61<br>[1796: 1821],<br>1575: 1600] | RU 62<br>[1850: 1875, 1629: 1654] | RU 63<br>[1930: 1955, 1709: 1734] | RU 64<br>[1984: 2009, 1763: 1788] | |
| 106-tone RU | RU 1<br>[−2035: −2010, −1762: −1737, −1981: −1956, −1708: −1683] | RU 2<br>[−1901: −1876, −1628: −1603, −1847: −1822, −1574: −1549] | RU 3<br>[−1788: −1763, −2009: −1984, −1734: −1709, −1955: −1930] | RU 4<br>[−1654: −1629, −1875: −1850, −1600: −1575, −1821: −1796] | |
| | RU 5<br>[−1523: −1498, −1250: −1225, −1469: −1444, −1196: −1171] | RU 6<br>[−1389: −1364, −1116: −1091, −1335: −1310, −1062: −1037] | RU 7<br>[−1276: −1251, −1497: −1472, −1222: −1197, −1443: −1418] | RU 8<br>[−1142: −1117, −1363: −1338, −1088: −1063, −1309: −1284] | |
| | RU 9<br>[−1011: −986, −738: −713, −957: −932, −684: −659] | RU 10<br>[−877: −852, −604: −579, −823: −798, −550: −525] | RU 11<br>[−764: −739, −985: −960, −710: −685, −931: −906] | RU 12<br>[−630: −605, −851: −826, −576: −551, −797: −772] | |
| | RU 13<br>[−499: −474, −226: −201, −445: −420, −172: −147] | RU 14<br>[−365: −340, −92: −67, −311: −286, −38: −13] | RU 15<br>[−252: −227, −473: −448, −198: −173, −419: −394] | RU 16<br>[−118: −93, −339: −314, −64: −39, −285: −260] | |
| | RU 17<br>[13: 38, 286: 311, 67: 92, 340: 365] | RU 18<br>[147: 172, 420: 445, 201: 226, 474: 499] | RU 19<br>[260: 285, 39: 64, 314: 339, 93: 118] | RU 20<br>[394: 419, 173: 198, 448: 473, 227: 252] | |
| | RU 21 | RU 22 | RU 23 | RU 24 | |

| RU type (type) | RU index and subcarrier range (RU index and subcarrier range) | | | | |
|---|---|---|---|---|---|
| | [525: 550, 798: 823, 579: 604, 852: 877] | [659: 684, 932: 957, 713: 738, 986: 1011] | [772: 797, 551: 576, 826: 851, 605: 630] | [906: 931, 685: 710, 960: 985, 739: 764] | |
| | RU 25 [1037: 1062, 1310: 1335, 1091: 1116, 1364: 1389] | RU 26 [1171: 1196, 1444: 1469, 1225: 1250, 1498: 1523] | RU 27 [1284: 1309, 1063: 1088, 1338: 1363, 1117: 1142] | RU 28 [1418: 1443, 1197: 1222, 1472: 1497, 1251: 1276] | |
| | RU 29 [1549: 1574, 1822: 1847, 1603: 1628, 1876: 1901] | RU 30 [1683: 1708, 1956: 1981, 1737: 1762, 2010: 2035] | RU 31 [1796: 1821], 1575: 1600, 1850: 1875, 1629: 1654] | RU 32 [1930: 1955, 1709: 1734, 1984: 2009, 1763: 1788] | |
| 242-tone RU | RU 1 [−2036, −2035: −2010, −1762: −1737, −1981: −1956, −1708: −1683, −1901: −1876, −1628: −1603, −1847: −1822, −1574: −1549, −1795] | RU 2 [−1789, −1788: −1763, −2009: −1984, −1734: −1709, −1955: −1930, −1654: −1629, −1875: −1850, −1600: −1575, −1821: −1796, −1548] | RU 3 [−1524, −1523: −1498, −1250: −1225, −1469: −1444, −1196: −1171, −1389: −1364, −1116: −1091, −1335: −1310, −1062: −1037, −1283] | RU 4 [−1277, −1276: −1251, −1497: −1472, −1222: −1197, −1443: −1418, −1142: −1117, −1363: −1338, −1088: −1063, −1309: −1284, −1036] | |
| | RU 5 [−1012, −1011: −986, −738: −713, −957: −932, −684: −659, −877: −852, −604: −579, −823: −798, −550: −525, −771] | RU 6 [−765, −764: −739, −985: −960, −710: −685, −931: −906, −630: −605, −851: −826, −576: −551, −797: −772, −524] | RU 7 [−500, −499: −474, −226: −201, −445: −420, −172: −147, −365: −340, −92: −67, −311: −286, −38: −13, −259] | RU 8 [−253, −252: −227, −473: −448, −198: −173, −419: −394, −118: −93, −339: −314, −64: −39, −285: −260, −12] | |
| | RU 9 [12, 13: 38, 286: 311, 67: 92, 340: 365, 147: 172, 420: 445, 201: 226, 474: 499, 253] | RU 10 [259, 260: 285, 39: 64, 314: 339, 93: 118, 394: 419, 173: 198, 448: 473, 227: 252, 500] | RU 11 [524, 525: 550, 798: 823, 579: 604, 852: 877, 659: 684, 932: 957, 713: 738, 986: 1011, 765] | RU 12 [771, 772: 797, 551: 576, 826: 851, 605: 630, 906: 931, 685: 710, 960: 985, 739: 764, 1012] | |

| RU type (type) | RU index and subcarrier range (RU index and subcarrier range) | | | | |
|---|---|---|---|---|---|
| | RU 13 [1036, 1037: 1062, 1310: 1335, 1091: 1116, 1364: 1389, 1171: 1196, 1444: 1469, 1225: 1250, 1498: 1523, 1277] | RU 14 [1283, 1284: 1309, 1063: 1088, 1338: 1363, 1117: 1142, 1418: 1443, 1197: 1222, 1472: 1497, 1251: 1276, 1524] | RU 15 [1548, 1549: 1574, 1822: 1847, 1603: 1628, 1876: 1901, 1683: 1708, 1956: 1981, 1737: 1762, 2010: 2035, 1789] | RU 16 [1795, 1796: 1821], 1575: 1600, 1850: 1875, 1629: 1654, 1930: 1955, 1709: 1734, 1984: 2009, 1763: 1788, 2036] | |
| 484-tone RU | RU 1 [−2036, −2035: −2010, −1762: −1737, −1981: −1956, −1708: −1683, −1901: −1876, −1628: −1603, −1847: −1822, −1574: −1549, −1795, −1789, −1788: −1763, −2009: −1984, −1734: −1709, −1955: −1930, −1654: −1629, −1875: −1850, −1600: −1575, −1821: −1796, −1548] | RU 2 [−1524, −1523: −1498, −1250: −1225, −1469: −1444, −1196: −1171, −1389: −1364, −1116: −1091, −1335: −1310, −1062: −1037, −1283, −1277: −1276: −1251, −1497: −1472, −1222: −1197, −1443: −1418, −1142: −1117, −1363: −1338, −1088: −1063, −1309: −1284, −1036] | RU 3 [−1012, −1011: −986, −738: −713, −957: −932, −684: −659, −877: −852, −604: −579, −823: −798, −550: −525, −771, −765, −764: −739, −985: −960, −710: −685, −931: −906, −630: −605, −851: −826, −576: −551, −797: −772, −524] | RU 4 [−500, −499: −474, −226: −201, −445: −420, −172: −147, −365: −340, −92: −67, −311: −286, −38: −13, −259, −253, −252: −227, −473: −448, −198: −173, −419: −394, −118: −93, −339: −314, −64: −39, −285: −260, −12] | |
| | RU 5 [12, 13: 38, 286: 311, 67: 92, 340: 365, 147: 172, 420: 445, 201: 226, 474: 499, 253, 259, 260: 285, 39: 64, 314: 339, 93: 118, 394: 419, 173: 198, 448: 473, 227: 252, | RU 6 [524, 525: 550, 798: 823, 579: 604, 852: 877, 659: 684, 932: 957, 713: 738, 986: 1011, 765, 771, 772, 797, 551: 576, 826: 851, 605: 630, 906: 931, 685: 710, 960: 985, 739: | RU 7 [1036, 1037: 1062, 1310: 1335, 1091: 1116, 1364: 1389, 1171: 1196, 1444: 1469, 1225: 1250, 1498: 1523, 1277, | RU 8 [1548, 1549: 1574, 1822: 1847, 1603: 1628, 1876: 1901, 1683: 1708, 1956: 1981, 1737: 1762, 2010: 2035, 1789, | |

| RU type (type) | RU index and subcarrier range (RU index and subcarrier range) | | | | |
|---|---|---|---|---|---|
| | 500] | 764, 1012] | 1283, 1284: 1309, 1063: 1088, 1338: 1363, 1117: 1142, 1418: 1443, 1197: 1222, 1472: 1497, 1251: 1276, 1524] | 1795, 1796: 1821], 1575: 1600, 1850: 1875, 1629: 1654, 1930: 1955, 1709: 1734, 1984: 2009, 1763: 1788, 2036] | |

| RU type (type) | RU index and subcarrier range (RU index and subcarrier range) | | | | |
|---|---|---|---|---|---|
| 996-tone RU | RU 1 [−2036: −1539, −1533: −1036] | RU 2 [−1012: −515, −509: −12] | RU 3 [12: 509, 515: 1012] | RU 4 [1036: 1533, 1539: 2036] | |
| 2*996-tone RU | RU 1 [−2036: −1539, −1533: −1036, −1012: −515, −509: −12] | RU 2 [12: 509, 515: 1012, 1036: 1533, 1539: 2036] | | | |
| 4*996-tone RU | RU 1 [−2036: −1539, −1533: −1036, −1012: −515, −509: −12, 12: 509, 515: 1012, 1036: 1533, 1539: 2036] | | | | |

It should be noted that subcarriers whose indices are -2036, -1795, -1789, -1548, -1524, -1283, -1277, -1036, -1012, -771, -765, -524, -500, -259, -253, -12, 12, 253, 259, 500, 524, 765, 771, 1012, 1036, 1277, 1283, 1524, 1548, 1789, 1795, and 2036 in the foregoing Table 22 do not participate in permutation. Therefore, the subcarriers do not change in frequency domain before and after permutation.

An example in which the permutation operation shown in FIG. 11A is performed between the two non-adjacent 242-tone RUs is used below for description. It is assumed that the permutation operation shown in FIG. 11A is performed between a first 242-tone RU and a third 242-tone RU. It is assumed that the first VRU allocated by the AP to the STA includes the RU 1 and the RU 2 in the 26-tone RU shown in Table 4. In this case, the STA may map, to the first PRU in the permutation manner shown in FIG. 11A, the first VRU allocated by the AP. In other words, the first PRU includes the RU 1 and the RU 21 in the 26-tone RU shown in Table 5, and subcarrier indices include [-499: -474] and [39: 64].

Locations of the VRU and the PRU on a frequency band may be determined based on a subcarrier sequence number. Therefore, in the permutation manner shown in FIG. 11A, the mapping relationship between the VRU and the PRU in an 80 MHz bandwidth may be indicated by using Table 5 and Table 23. For example, the STA may search Table 23 based on the first VRU indicated by the AP, to determine RUs and subcarrier indices of the first PRU. For example, it is assumed that the first VRU indicated by the AP includes an RU 1 and an RU 2 in a 26-tone RU of 80 MHz. In this case, the STA may search Table 23 to determine that subcarrier indices of the first PRU include [-499: -474] and [39: 64], and send data on subcarriers of the first PRU. For another example, if the first VRU indicated by the AP includes an RU 3 and an RU 4 in a 26-tone RU of 80 MHz, the STA may search Table 23 to determine that subcarrier indices of the first PRU include [-445: -420] and [93: 118], and send data on subcarriers of the first PRU.

**Table 23: Data and pilot subcarrier indices for RUs in an 80 MHz EHT PPDU**

Data and pilot subcarrier indices for RUs in an 80 MHz EHT PPDU

| RU type (type) | RU index and subcarrier range (RU index and subcarrier range) | | | | |
|---|---|---|---|---|---|
| 26-tone RU | RU 1 [−499: −474] | RU 2 [39: 64] | RU 3 [−445: −420] | RU 4 [93: 118] | RU 5 [−392: −367] |
| | RU 6 [−365: −340] | RU 7 [173: 198] | RU 8 [−311: −286] | RU 9 [227: 252] | |
| | RU 10 [−252: −227] | RU 11 [−226: −201] | RU 12 [−198: −173] | RU 13 [−172: −147] | RU 14 [−145: −120] |
| | RU 15 [−118: −93] | RU 16 [−92: −67] | RU 17 [−64: −39] | RU 18 [−38: −13] | RU 19 [not defined] |
| | RU 20 [13: 38] | RU 21 [−473: −448] | RU 22 [67: 92] | RU 23 [−419: −394] | RU 24 [120: 145] |
| | RU 25 [147: 172] | RU 26 [−339: −314] | RU 27 [201: 226] | RU 28 [−285: −260] | |

| RU type (type) | RU index and subcarrier range (RU index and subcarrier range) | | | | |
|---|---|---|---|---|---|
| | RU 29 [260: 285] | RU 30 [286: 311] | RU 31 [314: 339] | RU 32 [340: 365] | RU 33 [367: 392] |
| | RU 34 [394: 419] | RU 35 [420: 445] | RU 36 [448: 473] | RU 37 [474: 499] | |
| 52-tone RU | RU 1 [–499: –474, 39: 64] | RU 2 [–445: –420, 93: 118] | RU 3 [–365: –340, 173: 198] | RU 4 [–311: –286, 227: 252] | |
| | RU 5 [–252: –201] | RU 6 [–198: –147] | RU 7 [–118: –67] | RU 8 [–64: –13] | |
| | RU 9 [13: 38, –473: –448] | RU 10 [67: 92, –419: –394] | RU 11 [147: 172, –339: –314] | RU 12 [201: 226, –285: –260] | |
| | RU 13 [260: 311] | RU 14 [314: 365] | RU 15 [394: 445] | RU 16 [448: 499] | |
| 106-tone RU | RU 1 [–499: –474, 39: 64, –445: –420, 93: 118] | RU 2 [–365: –340, 173: 198, –311: –286, 227: 252] | RU 3 [–252: –147] | RU 4 [–118: –13] | |
| | RU 5 [13: 38, –473: –448, 67: 92, –419: –394] | RU 6 [147: 172, –339: –314, 201: 226, –285: –260] | RU 7 [260: 365] | RU 8 [394: 499] | |
| 242-tone RU | RU 1 [–500–499: –474, 39: 64, –445: –420, 93: 118, –365: –340, 173: 198, –311: –286, 227: 252, –259] | RU 2 [–253: –12] | RU 3 [12, 13: 38, –473: –448, 67: 92, –419: –394, 147: 172, –339: –314, 201: 226, –285: –260, 253] | RU 4 [259: 500] | |
| 484-tone RU | RU 1 [–500–499: –474, 39: 64, –445: –420, 93: 118, –365: –340, 173: 198, –311: –286, | RU 2 [12, 13: 38, –473: –448, 67: 92, –419: –394, 147: 172, –339: –314, 201: 226, –285: – | | | |

| RU type (type) | RU index and subcarrier range (RU index and subcarrier range) | | | | |
|---|---|---|---|---|---|
| | 227: 252, –259, –253: –12] | 260, 253, 259: 500] | | | |
| 996-tone RU | RU 1 [–500: –3, 3: 500] | | | | |

It should be noted that subcarriers whose indices are -500, -259, -256, -12, 12, 253, 259, and 500 in the foregoing Table 23 do not participate in mapping. Therefore, the foregoing subcarrier indices do not change before and after permutation.

It should be understood that mapped index tables of the data and pilot subcarrier indices for RUs in 160 MHz to 320 MHz shown in Table 5 and Table 6 may also be determined in the permutation manner shown in FIG. 11A. For details, refer to the foregoing manner of determining mapped index tables of the data and pilot subcarrier indices for RUs (the first VRUs) in a 20 MHz bandwidth, that is, refer to the determining manner in Table 23. For example, it is assumed that the first VRU indicated by the AP includes an RU 1 and an RU 2 in a 26-tone RU of 160 MHz. In this case, the STA may determine that the RUs included in the first PRU may be the RU 1 and the RU 21 in the 26-tone RU shown in Table 5. In other words, subcarrier indices of the first PRU include [-1011: -986] and [-473: -448]. Similarly, if the pilot subcarriers do not participate in permutation, indices of the pilot subcarriers do not change before and after permutation. Details are not described herein again.

The following shows a mapped index table of the data and pilot subcarrier indices for RUs (the first VRUs) in 160 MHz to 320 MHz corresponding to Table 5 and Table 6.

**Table 24: Data and pilot subcarrier indices for RUs in a 160 MHz EHT PPDU**

Data and pilot subcarrier indices for RUs in a 160 MHz EHT PPDU

| RU type (type) | RU index and subcarrier range (RU index and subcarrier range) | | | | |
|---|---|---|---|---|---|
| 26-tone RU | RU 1 [–1011: –986] | RU 2 [–473: –448] | RU 3 [–957: –932] | RU 4 [–419: –394] | RU 5 [–904: –879] |
| | RU 6 [–877: –852] | RU 7 [–339: –314] | RU 8 [–823: –798] | RU 9 [–285: –260] | |

| RU type (type) | RU index and subcarrier range (RU index and subcarrier range) | | | | |
|---|---|---|---|---|---|
| | RU 10 [–764: –739] | RU 11 [–738: –713] | RU 12 [–710: –685] | RU 13 [–684: –659] | RU 14 [–657: –632] |
| | RU 15 [–630: –605] | RU 16 [–604: –579] | RU 17 [–576: –551] | RU 18 [–550: –525] | RU 19 [not defined] |
| | RU 20 [–499: –474] | RU 21 [–985: –960] | RU 22 [–445: –420] | RU 23 [–931: –906] | RU 24 [–392: –367] |
| | RU 25 [–365: –340] | RU 26 [–851: –826] | RU 27 [–311: –286] | RU 28 [–797: –772] | |
| | RU 29 [–252: –227] | RU 30 [–226: –201] | RU 31 [–198: –173] | RU 32 [–172: –147] | RU 33 [–145: –120] |
| | RU 34 [–118: –93] | RU 35 [–92: –67] | RU 36 [–64: –39] | RU 37 [–38: –13] | |
| | RU 38 [13: 38] | RU 39 [551: 576] | RU 40 [67: 92] | RU 41 [605: 630] | RU 42 [120: 145] |
| | RU 43 [147: 172] | RU 44 [685: 710] | RU 45 [201: 226] | RU 46 [739: 764] | |
| | RU 47 [260: 285] | RU 48 [286: 311] | RU 49 [314: 339] | RU 50 [340: 365] | RU 51 [367: 392] |
| | RU 52 [394: 419] | RU 53 [420: 445] | RU 54 [448: 473] | RU 55 [474: 499] | RU 56 [not defined] |
| | RU 57 [525: 550] | RU 58 [39: 64] | RU 59 [579: 604] | RU 60 [93: 118] | RU 61 [632: 657] |
| | RU 62 [659: 684] | RU 63 [173: 198] | RU 64 [713: 738] | RU 65 [227: 252] | |
| | RU 66 [772: 797] | RU 67 [798: 823] | RU 68 [826: 851] | RU 69 [852: 877] | RU 70 [879: 904] |
| | RU 71 [906: 931] | RU 72 [932: 957] | RU 73 [960: 985] | RU 74 [986: 1011] | |
| 52-tone RU | RU 1 [–1011: –986, –473: –448] | RU 2 [–957: –932, –419: –394] | RU 3 [–877: –852, –339: –314] | RU 4 [–823: –798, –285: –260] | |
| | RU 5 | RU 6 | RU 7 | RU 8 | |

| RU type (type) | RU index and subcarrier range (RU index and subcarrier range) | | | | |
|---|---|---|---|---|---|
| | [−764: −713] | [−710: −659] | [−630: −579] | [−576: −525] | |
| | RU 9 [−499: −474, −985: −960] | RU 10 [−445: −420, −931: −906] | RU 11 [−365: −340, −851: −826] | RU 12 [−311: −286, −797: −772] | |
| | RU 13 [−252: −201] | RU 14 [−198: −147] | RU 15 [−118: −67] | RU 16 [−64: −13] | |
| | RU 17 [13: 38, 551: 576] | RU 18 [67: 92, 605: 630] | RU 19 [147: 172, 685: 710] | RU 20 [201: 226, 739: 764] | |
| | RU 21 [260: 311] | RU 22 [314: 365] | RU 23 [394: 445] | RU 24 [448: 499] | |
| | RU 25 [525: 550, 39: 64] | RU 26 [579: 604, 93: 118] | RU 27 [659: 684, 173: 198] | RU 28 [713: 738, 227: 252] | |
| | RU 29 [772: 823] | RU 30 [826: 877] | RU 31 [906: 957] | RU 32 [960: 1011] | |
| 106-tone RU | RU 1 [−1011: −986, −473: −448, −957: −932, −419: −394] | RU 2 [−877: −852, −339: −314, −823: −798, −285: −260] | RU 3 [−764: −659] | RU 4 [−630: −525] | |
| | RU 5 [−499: −474, −985: −960, −445: −420, −931: −906] | RU 6 [−365: −340, −851: −826, −311: −286, −797: −772] | RU 7 [−252: −147] | RU 8 [−118: −13] | |
| | RU 9 [13: 38, 551: 576, 67: 92, 605: 630] | RU 10 [147: 172, 685: 710, 201: 226, 739: 764] | RU 11 [260: 365] | RU 12 [394: 499] | |
| | RU 13 [525: 550, 39: 64, 579: 604, 93: 118] | RU 14 [659: 684, 173: 198, 713: 738, 227: 252] | RU 15 [772: 877] | RU 16 [906: 1011] | |

| RU type (type) | RU index and subcarrier range (RU index and subcarrier range) | | | | |
|---|---|---|---|---|---|
| 242-tone RU | RU 1 [−1012, −1011: −986, −473: −448, −957: −932, −419: −394, −877: −852, −339: −314, −823: −798, −285: −26, −771] | RU 2 [−765: −524] | RU 3 [−500, −499: −474, −985: −960, −445: −420, −931: −906, −365: −340, −851: −826, −311: −286, −797: −772, −259] | RU 4 [−253: −12] | |
| | RU 5 [12, 13: 38, 551: 576, 67: 92, 605: 630, 147: 172, 685: 710, 201: 226, 739: 764, 253] | RU 6 [259: 500] | RU 7 [524, 525: 550, 39: 64, 579: 604, 93: 118, 659: 684, 173: 198, 713: 738, 227: 252, 765] | RU 8 [771: 1012] | |
| 484-tone RU | RU 1 [−1012, −1011: −986, −473: −448, −957: −932, −419: −394, −877: −852, −339: −314, −823: −798, −285: −26, −771 −765: −524] | RU 2 [−500, −499: −474, −985: −960, −445: −420, −931: −906, −365: −340, −851: −826, −311: −286, −797: −772, −259 −253: −12] | RU 3 [12, 13: 38, 551: 576, 67: 92, 605: 630, 147: 172, 685: 710, 201: 226, 739: 764, 253 259: 500] | RU 4 [524, 525: 550, 39: 64, 579: 604, 93: 118, 659: 684, 173: 198, 713: 738, 227: 252, 765771: 1012] | |
| 996-tone RU | RU 1 [−1012: −515, −509: −12] | RU 2 [12: 509, 515: 1012] | | | |
| 2*996-tone RU | RU 1 [−1012: −515, −509: −12, 12: 509, 515: 1012] | | | | |

It should be noted that subcarriers whose indices are -1012, -771, -765, -524, -500, -259, -253, -12, 12, 253, 259, 600, 524, 765, 771, and 1012 in the foregoing Table 24 do not participate in permutation. Therefore, the subcarriers do not change in frequency domain before and after permutation.

**Table 25: Data and pilot subcarrier indices for RUs in a 320 MHz EHT PPDU**

| Data and pilot subcarrier indices for RUs in a 320 MHz EHT PPDU | | | | |
|---|---|---|---|---|
| RU type (type) | RU index and subcarrier range (RU index and subcarrier range) | | | |
| 26-tone RU | RU 1 [-2035: -2010] | RU2 [-1497: -1472] | RU3 [-1981: -1956] | RU4 [-1443: -1418] | RU 5 [-1928: -1903] |
| | RU 6 [-1901: -1876] | RU 7 [-1363: -1338] | RU8 [-1847: -1822] | RU 9 [-1309: -1284] | |
| | RU 10 [-1788: -1763] | RU 11 [-1762: -1737] | RU 12 [-1734: -1709] | RU 13 [-1708: -1683] | RU 14 [-1681: -1656] |
| | RU 15 [-1654: -1629] | RU 16 [-1628: -1603] | RU 17 [-1600: -1575] | RU 18 [-1574: -1549] | RU 19 [not defined] |
| | RU20 [-1523: -1498] | RU 21 [-2009: -1984] | RU 22 [-1469: -1444] | RU 23 [-1955: -1930] | RU 24 [-1416: -1391] |
| | RU 25 [-1389: -1364] | RU 26 [-1875: -1850] | RU 27 [-1335: -1310] | RU 28 [-1821: -1796] | |
| | RU 29 [-1276: -1251] | RU30 [-1250: -1225] | RU 31 [-1222: -1197] | RU 32 [-1196: -1171] | RU 33 [-1169: -1144] |
| | RU 34 [-1142: -1117] | RU 35 [-1116: -1091] | RU 36 [-1088: -1063] | RU 37 [-1062: -1037] | |
| | RU 38 [-1011: -986] | RU 39 [-473: -448] | RU40 [-957: -932] | RU 41 [-419: -394] | RU 42 [-904: -879] |
| | RU 43 [-877: -852] | RU 44 [-339: -314] | RU 45 [-823: -798] | RU 46 [-285: -260] | |
| | RU 47 [-764: -739] | RU 48 [-738: -713] | RU 49 [-710: -685] | RU50 [-684: -659] | RU 51 [-657: -632] |
| | RU 52 [-630: -605] | RU 53 [-604: -579] | RU 54 [-576: -551] | RU 55 [-550: -525] | RU 56 [not defined] |
| | RU 57 [-499: -474] | RU 58 [-985: -960] | RU 59 [-445: -420] | RU 60 [-931: -906] | RU 61 [-392: -367] |
| | RU 62 [-365: -340] | RU 63 [-851: -826] | RU 64 [-311: -286] | RU 65 [-797: -772] | |
| | RU 66 [-252: -227] | RU 67 [-226: -201] | RU 68 [-198: -173] | RU 69 [-172: -147] | RU70 [-145: -120] |
| RU type (type) | RU index and subcarrier range (RU index and subcarrier range) | | | |
| | RU 71 [-118:-93] | RU 72 [-92: -67] | RU 73 [-64: -39] | RU 74 [-38: -13] | |
| | RU 75 [13: 38] | RU 76 [551: 576] | RU 77 [67: 92] | RU 78 [605: 630] | RU 79 [120: 145] |
| | RU80 [147: 172] | RU 81 [685: 710] | RU 82 [201: 226] | RU 83 [739: 764] | |
| | RU 84 [260: 285] | RU 85 [286: 311] | RU 86 [314: 339] | RU 87 [340: 365] | RU 88 [367: 392] |
| | RU 89 [394: 419] | RU90 [420: 445] | RU 91 [448: 473] | RU 92 [474: 499] | RU 93 [not defined] |
| | RU 94 [525: 550] | RU 95 [39: 64] | RU 96 [579: 604] | RU 97 [93: 118] | RU 98 [632: 657] |

Specifically:

| RU type (type) | RU index and subcarrier range (RU index and subcarrier range) | | | |
|---|---|---|---|---|
| 26-tone RU | RU 99 [659: 684] | RU 100 [173: 198] | RU 101 [713: 738] | RU 102 [227: 252] | |
| | RU 103 [772: 797] | RU 104 [798: 823] | RU 105 [826: 851] | RU 106 [852: 877] | RU 107 [879: 904] |
| | RU 108 [906: 931] | RU 109 [932: 957] | RU 110 [960: 985] | RU 111 [986: 1011] | |
| | RU 112 [1037: 1062] | RU 113 [1575: 1600] | RU 114 [1091: 1116] | RU 115 [1629: 1654] | RU 116 [1144: 1169] |
| | RU 117 [1171: 1196] | RU 118 [1709: 1734] | RU 119 [1225: 1250] | RU 120 [1763: 1788] | |
| | RU 121 [1284: 1309] | RU 122 [1310: 1335] | RU 123 [1338: 1363] | RU 124 [1364: 1389] | RU 125 [1391: 1416] |
| | RU 126 [1418: 1443] | RU 127 [1444: 1469] | RU 128 [1472: 1497] | RU 129 [1498: 1523] | RU 130 [not defined] |
| | RU 131 [1549: 1574] | RU 132 [1063: 1088] | RU 133 [1603: 1628] | RU 134 [1117: 1142] | RU 135 [1656: 1681] |
| | RU 136 [1683: 1708] | RU 137 [1197: 1222] | RU 138 [1737: 1762] | RU 139 [1251: 1276] | |
| | RU 140 [1796: 1821] | RU 141 [1822: 1847] | RU 142 [1850: 1875] | RU 143 [1876: 1901] | RU 144 [1903: 1928] |
| | RU 145 [1930: 1955] | RU 146 [1956: 1981] | RU 147 [1984: 2009] | RU 148 [2010: 2035] | |
| 52-tone RU | RU 1 [-2035: -2010,-1497: -1472] | RU2 [-1981: -1956, - 1443: -1418] | RU3 [-1901: -1876, - 1363: -1338] | RU 4 [-1847: -1822,-1309: -1284] | |
| | RU 5 [-1788: -1737] | RU 6 [-1734: -1683] | RU 7 [-1654: -1603] | RU 8 [-1600: -1549] | |
| | RU 9 [-1523: -1498,-2009: -1984] | RU 10 [-1469: -1444,-1955: -1930] | RU 11 [-1389: -1364, - 1875:-1850] | RU 12 [-1335:-1310,-1821:-1796] | |
| | RU 13 [-1276:-1225] | RU 14 [-1222: -1171] | RU 15 [-1142: -1091] | RU 16 [-1088: -1037] | |
| | RU 17 [-1011: -986, - 473: -448] | RU 18 [-957: -932,-419: -394] | RU 19 [-877: -852, - 339: -314] | RU20[-823:-798, - 285: -260] | |
| | RU 21 [-764: -713] | RU 22 [-710: -659] | RU 23 [-630: -579] | RU 24 [-576: -525] | |
| | RU 25 [-499: -474, - 985: -960] | RU 26 [-445: -420, - 931: -906] | RU 27 [-365: -340,-851: -826] | RU 28 [-311: -286, - 797: -772] | |
| | RU 29 [-252: -201] | RU30 [-198: -147] | RU 31 [-118: -67] | RU 32 [-64: -13] | |
| | RU 33 [13: 38, 551: 576] | RU 34 [67: 92, 605: 630] | RU 35 [147: 172, 685: 710] | RU 36 [201: 226,739: 764] | |
| | RU 37 [260: 311] | RU 38 [314: 365] | RU 39 [394: 445] | RU40 [448: 499] | |

| RU type (type) | RU index and subcarrier range (RU index and subcarrier range) | | | | |
|---|---|---|---|---|---|
| 52-tone RU | RU 41 [525: 550, 39: 64] | RU 42 [579: 604, 93: 118] | RU 43 [659: 684, 173: 198] | RU44 [713: 738, 227: 252] | |
| | RU 45 [772: 823] | RU 46 [826: 877] | RU 47 [906: 957] | RU 48 [960: 1011] | |
| | RU 49 [1037: 1062, 1575: 1600] | RU50 [1091: 1116, 1629: 1654] | RU 51 [1171: 1196, 1709: 1734] | RU 52 [1225: 1250, 1763: 1788] | |
| | RU 53 [1284: 1335] | RU 54 [1338: 1389] | RU 55 [1418: 1469] | RU 56 [1472: 1523] | |
| | RU 57 [1549: 1574, 1063: 1088] | RU 58 [1603: 1628, 1117: 1142] | RU 59 [1683: 1708, 1197: 1222] | RU60 [1737: 1762, 1251: 1276] | |
| | RU 61 [1796: 1847] | RU 62 [1850: 1901] | RU 63 [1930: 1981] | RU 64 [1984: 2035] | |
| 106-tone RU | RU 1 [-2035: -2010, -1497: -1472,-1981: -1956,-1443: -1418] | RU 2 [-1901: -1876, -1363: -1338, - 1847: -1822,-1309: -1284] | RU3 [-1788: -1683] | RU 4 [-1654: -1549] | |
| | RU 5 [-1523: -1498,-2009: -1984, - 1469: -1444, - 1955: -1930] | RU 6 [-1389: -1364, -1875:-1850,-1335: -1310, - 1821: -1796] | RU 7 [-1276: -1171] | RU 8 [-1142: -1037] | |
| | RU 9 [-1011: -986, -473: -448, -957: -932, -419: -394] | RU 10 [-877: -852, - 339: -314, -823: -798, -285: -260] | RU 11 [-764: -659] | RU 12 [-630: -525] | |
| | RU 13 [-499: -474, - 985: -960, -445: -420, -931: -906] | RU 14 [-365: -340, - 851: -826, -311: -286, -797: -772] | RU 15 [-252: -147] | RU 16 [-118: -13] | |
| | RU 17 [13: 38, 551: 576, 67: 92, 605: 630] | RU 18 [147: 172,685: 710, 201: 226, 739: 764] | RU 19 [260: 365] | RU20 [394: 499] | |
| | RU 21 [525: 550, 39: 64, 579: 604, 93: 118] | RU 22 [659: 684, 173: 198, 713: 738, 227: 252] | RU 23 [772: 877] | RU 24 [906: 1011] | |
| | RU 25 [1037: 1062, 1575: 1600, 1091: 1116, 1629: 1654] | RU26 [1171: 1196, 1709: 1734, 1225: 1250, 1763: 1788] | RU 27 [1284: 1389] | RU 28 [1418: 1523] | |
| | RU 29 [1549: 1574, 1063: 1088, 1603: 1628, 1117: 1142] | RU30 [1683: 1708, 1197: 1222, 1737: 1762, 1251: 1276] | RU 31 [1796: 1901] | RU 32 [1930: 2035] | |

(continued)

| RU type (type) | RU index and subcarrier range (RU index and subcarrier range) | | | | |
|---|---|---|---|---|---|
| 242-tone RU | RU 1 [-2036, -2035: -2010, -1497:-1472, -1981:-1956, -1443:-1418, -1901:-1876, -1363:-1338, -1847:-1822, -1309:-1284, -1795] | RU2 [-1789: -1548] | RU 3 [-1524, -1523: -1498, -2009:-1984, -1469:-1444, -1955:-1930, -1389:-1364, -1875:-1850, -1335:-1310, -1821:-1796, -1283] | RU 4 [-1277: -1036] | |
| | RU 5 [-1012, -1011: -986, -473: -448, -957: -932, -419: -394, -877: -852, -339: -314, -823: -798, -285: -260, -771] | RU 6 [-765: -524] | RU 7 [-500, -499: -474, -985: -960, -445: -420, -931: -906, -365: -340, -851: -826, -311: -286, -797: -772, -259] | RU 8 [-253: -12] | |
| | RU 9 [12, 13: 38, 551: 576, 67: 92, 605: 630, 147: 172, 685: 710, 201: 226, 739: 764, 253] | RU 10 [259: 500] | RU 11 [524, 525: 550, 39: 64, 579: 604, 93: 118, 659: 684, 173: 198, 713: 738, 227: 252, 765] | RU 12 [771: 1012] | |
| | RU 13 [1036, 1037: 1062, 1575: 1600, 1091: 1116, 1629: 1654, 1171: 1196, 1709: 1734, 1225: 1250, 1763: 1788, 1277] | RU 14 [1283: 1524] | RU 15 [1548, 1549: 1574, 1063: 1088, 1603: 1628, 1117: 1142, 1683: 1708, 1197: 1222, 1737: 1762, 1251: 1276, 1789] | RU 16 [1795: 2036] | |
| 484-tone RU | RU 1 [-2036, -2035: -2010, -1497:-1472, -1981: -1956, -1443:-1418, -1901: -1876, -1363: -1338, -1847: -1822, -1309:-1284, -1795, -1789: -1548] | RU2 [-1524, -1523: -1498, -2009: - 1984, -1469: - 1444,-1955: -1930, -1389: - 1364, -1875: - 1850, -1335: -1310, -1821: - 1796, -1283, -1277: -1036] | RU 3 [-1012, -1011: -986, -473: -448, -957: -932, -419: -394, -877: -852, -339: -314, -823: -798, -285: -260, -771, -765: -524] | RU 4 [-500, -499: -474, -985: -960, -445: -420, -931: -906, -365: -340, -851: -826, -311: -286, -797: -772, -259, -253: -12] | |
| | RU 5 [12, 13: 38, 551: 576, 67: 92, 605: 630, 147: 172, 685: 710, 201: 226, 739: 764, 253, 259: 500] | RU 6 [524, 525: 550, 39: 64, 579: 604, 93: 118, 659: 684, 173: 198, 713: 738, 227: 252, 765, 771: 1012] | RU7 [1036, 1037: 1062, 1575: 1600, 1091: 1116, 1629: 1654, 1171: 1196, 1709: 1734, 1225: 1250, 1763: 1788, 1277, 1283: 1524] | RU 8 [1548, 1549: 1574, 1063: 1088, 1603: 1628, 1117: 1142, 1683: 1708, 1197: 1222, 1737: 1762, 1251: 1276, 1789, 1795: 2036] | |

| RU type (type) | RU index and subcarrier range (RU index and subcarrier range) | | | | |
|---|---|---|---|---|---|
| 996-tone | RU 1 | RU 2 | RU 3 | RU 4 | |

| RU type (type) | RU index and subcarrier range (RU index and subcarrier range) | | | | |
|---|---|---|---|---|---|
| RU | [−2036, −2035: −2010, −1497: −1472, −1981: −1956, −1443: −1418, −1901: −1876, −1363: −1338, −1847: −1822, −1309: −1284, −1795, −1789: −1548, −1524, −1523: −1498, −2009: −1984, −1469: −1444, −1955: −1930, −1389: −1364, −1875: −1850, −1335: −1310, −1821: −1796, −1283, −1277: −1036] | [−1012, −1011: −986, −473: −448, −957: −932, −419: −394, −877: −852, −339: −314, −823: −798, −285: −260, −771, −765: −524, −500, −499: −474, −985: −960, −445: −420, −931: −906, −365: −340, −851: −826, −311: −286, −797: −772, −259, −253: −12] | [12, 13: 38, 551: 576, 67: 92, 605: 630, 147: 172, 685: 710, 201: 226, 739: 764, 253, 259: 500, 524, 525: 550, 39: 64, 579: 604, 93: 118, 659: 684, 173: 198, 713: 738, 227: 252, 765, 771: 1012] | [1036, 1037: 1062, 1575: 1600, 1091: 1116, 1629: 1654, 1171: 1196, 1709: 1734, 1225: 1250, 1763: 1788, 1277, 1283: 1524, 1548, 1549: 1574, 1063: 1088, 1603: 1628, 1117: 1142, 1683: 1708, 1197: 1222, 1737: 1762, 1251: 1276, 1789, 1795: 2036] | |
| 2*996-tone RU | RU 1 [−2036: −1539, −1533: −1036, −1012: −515, −509: −12] | RU 2 [12: 509, 515: 1012, 1036: 1533, 1539: 2036] | | | |

| RU type (type) | RU index and subcarrier range (RU index and subcarrier range) | | | | |
|---|---|---|---|---|---|
| 4*996-tone RU | RU 1 [−2036: −1539, −1533: −1036, −1012: −515, −509: −12, 12: 509, 515: 1012, 1036: 1533, 1539: 2036] | | | | |

It should be noted that subcarriers whose indices are -2036, -1795, -1789, -1548, -1524, -1283, -1277, -1036, -1012, -771, -765, -524, -500, -259, -253, -12, 12, 253, 259, 500, 524, 765, 771, 1012, 1036, 1277, 1283, 1524, 1548, 1789, 1795, and 2036 in the foregoing Table 25 do not participate in permutation. Therefore, the subcarriers do not change in frequency domain before and after permutation.

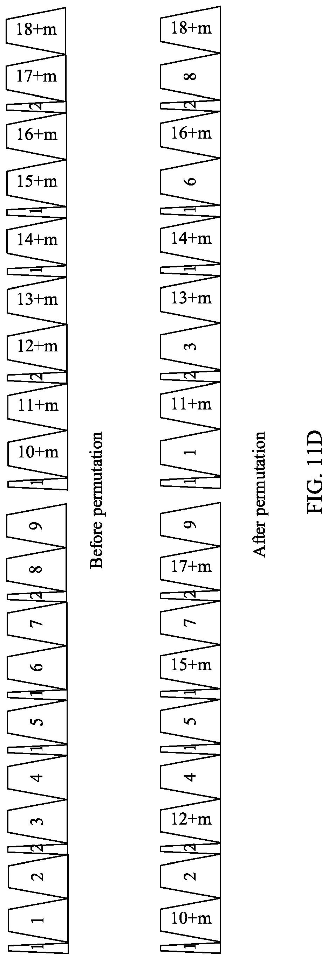

FIG. 11D is a schematic diagram of a permutation manner 2 according to an embodiment of this application. The left 242-tone RU includes 9 26-tone RUs whose indices are respectively {1, 2, 3, 4, 5, 6, 7, 8, 9}. The right 242-tone RU includes 9 26-tone RUs whose indices are respectively {10, 11, 12, 13, 14, 15, 16, 17, 18}+m. Herein, m is an integer, m = 9*a, a is an integer, and a may be understood as a quantity of 242-tone RUs between two 242-tone RUs. For example, m = 0, 9, 18, 27, or the like.

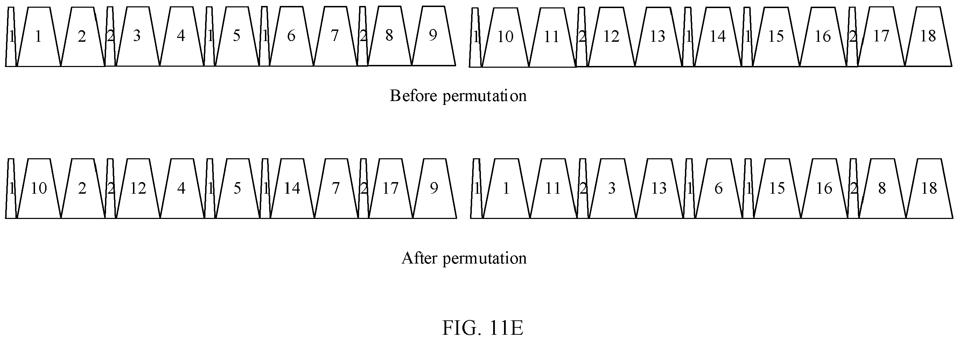

As shown in FIG. 11E, if the left 242-tone RU and the right 242-tone RU are adjacent in frequency domain, m = 0.

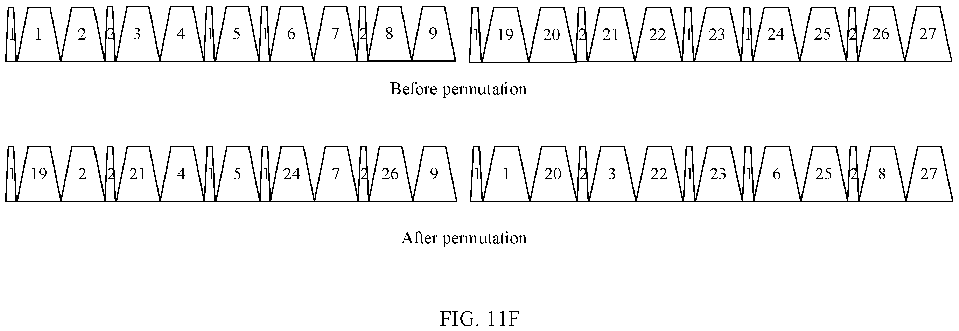

As shown in FIG. 11F, if there is one 242-tone RU between the left 242-tone RU and the right 242-tone RU, m = 9. If there are two 242-tone RUs between the left 242-tone RU and the right 242-tone RU, m = 18. The rest may be deduced by analogy. During permutation, 26-tone RUs whose indices are 5 and 14+m and that are located in the middle in frequency domain in the two 242-tone RUs may not be considered, and permutation is performed on 26-tone RUs at same locations in the two 242-tone RUs. For example, permutation is performed on a left RU whose index is 1 and a right RU whose index is 10+m, permutation is performed on a left RU whose index is 3 and a right RU whose index is 12+m, permutation is performed on a left RU whose index is 6 and a right RU whose index is 15+m, and permutation is performed on a left RU whose index is 8 and a right RU whose index is 17+m. That is, indices of a PRU obtained through permutation are respectively {10+m, 2, 12+m, 4, 5, 15+m, 7, 17+m, 9}, {1, 11+m, 3, 13+m, 14+m, 6, 16+m, 8, 18+m}.

It is assumed that the first VRU allocated by the AP to the STA 1 includes 26-tone RUs 1 and 2 before permutation shown in FIG. 11D. In this case, the STA 1 may obtain the PRU after permutation based on the mapping relationship between the VRU and the PRU. Actually, the RUs included in the PRU are RUs whose indices are respectively 10+m and 2 in frequency domain.

It should be noted that a pilot subcarrier may participate in permutation, or may not participate in permutation. Alternatively, a pilot subcarrier may be reallocated in the PRU obtained through permutation. This is not specifically limited in this application.

It should be understood that the foregoing permutation manner 2 may be applied to 40 MHz, 80 MHz, 160 MHz, 320 MHz, and a larger bandwidth. For a 40 MHz bandwidth, the 40 MHz bandwidth includes two 242-tone RUs. Therefore, when the foregoing permutation manner 2 is performed, a permutation operation shown in FIG. 11D may be performed on the two adjacent 242-tone RUs. For an 80 MHz bandwidth, the 80 MHz bandwidth includes four 242-tone RUs. Therefore, when the foregoing permutation manner 2 is performed, a permutation operation shown in FIG. 11D may be performed on two adjacent 242-tone RUs. Alternatively, a permutation operation shown in FIG. 11D may be performed on two non-adjacent 242-tone RUs. Details are not described herein again.

An example in which the permutation operation shown in FIG. 11D is performed on the two adjacent 242-tone RUs is used below for description. It is assumed that the first VRU allocated by the AP to the STA includes the RU 1 and the RU 2 in the 26-tone RU shown in Table 5. In this case, the STA may map, to the first PRU in the permutation manner shown in FIG. 11D, the first VRU allocated by the AP. In other words, the first PRU includes the RU 10 and the RU 2 in the 26-tone RU shown in Table 3, and subcarrier indices include [4: 29] and [-217: -192].

Locations of the VRU and the PRU on a frequency band may be determined based on a subcarrier sequence number. Therefore, in the permutation manner shown in FIG. 11D, the mapping relationship between the VRU and the PRU in a 40 MHz bandwidth may be indicated by using Table 3 and Table 26. For example, the STA may search Table 26 based on the first VRU indicated by the AP, to determine RUs and subcarrier indices of the first PRU. For example, it is assumed that the first VRU indicated by the AP includes an RU 1 and an RU 2 in a 26-tone RU of 40 MHz. In this case, the STA may search Table 26 to determine that subcarrier indices of the first PRU include [4: 29] and [-217: -192], and send data on subcarriers.

**Table 26: Mapping table of data and pilot subcarrier indices for RUs in a 40 MHz EHT PPDU**

| Data and pilot subcarrier indices for RUs in a 40 MHz EHT PPDU | | | | |
|---|---|---|---|---|
| RU type (type) | RU index and subcarrier range (RU index and subcarrier range) | | | |
| 26-tone RU | RU 1 [4: 29] | RU2 [-217: -192] | RU 3 [58: 83] | RU 4 [-163: -138] | RU 5 [-136: -111] |
| | RU 6 [138: 163] | RU 7 [-83: -58] | RU 8 [192: 217] | RU 9 [-29: -4] | |
| | RU 10 [-243: -218] | RU 11 [30: 55] | RU 12 [-189: -164] | RU 13 [84: 109] | RU 14 [111: 136] |
| | RU 15 [-109: -84] | RU 16 [164: 189] | RU 17 [-55: -30] | RU 18 [218: 243] | |
| 52-tone RU | RU 1 [4: 29, -217: -192] | RU 2 [58: 83, -163: -138] | RU 3 [138: 163, -83: - 58] | RU4 [192: 217, -29:-4] | |
| | RU 5 [-243: -218, 30: 55] | RU6 [-189: -164, 84: 109] | RU 7 [-109: -84, 164: 189] | RU 8 [-55: -30, 218: 243] | |
| 106-tone RU | RU 1 [4: 29, -217: -192, 58: 83, -163:-138] | RU2 [138: 163, -83: -58, 192: 217, -29:-4] | RU 3 [-243: -218, 30: 55, -189: -164, 84: 109] | RU4 [-109:-84, 164: 189, -55: -30, 218: 243] | |
| 242-tone RU | RU 1 [-244, 4: 29, -217: -192, 58: 83, -163: - 138, 138: 163, -83: -58, 192: 217, -29: -4,-3] | | RU 2 [3, -243: -218, 30: 55, -189: -164, 84: 109, -109: -84, 164: 189, -55: - 30, 218: 243, 244] | | |
| 484-tone RU | RU 1 [-244: -3, 3: 244] | | | | |

It should be noted that subcarriers whose indices are -244, 244, 3, and -3 in the 242-tone RU in the foregoing Table 26 do not participate in permutation. Therefore, the subcarriers do not change in frequency domain before and after permutation.

It should be understood that mapped index tables of the data and pilot subcarrier indices for RUs in 80 MHz to 320 MHz shown in Table 4 to Table 6 may also be determined in the permutation manner shown in FIG. 11D. For details, refer to the foregoing manner of determining mapped index tables of the data and pilot subcarrier indices for RUs (the first VRUs) in a 20 MHz bandwidth, that is, refer to the determining manner in Table 26. For example, it is assumed that the first VRU indicated by the AP includes an RU 1 and an RU 2 in a 26-tone RU of 80 MHz. In this case, the STA may determine that the RUs included in the first PRU may be the RU 10 and the RU 2 in the 26-tone RU shown in Table 4, and subcarrier indices include [-252: -227] and [-473: -448].

The following shows a mapping table of the data and pilot subcarrier indices for RUs in 80 MHz to 320 MHz corresponding to Table 4 to Table 6.

**Table 27: Data and pilot subcarrier indices for RUs in an 80 MHz EHT PPDU**

| Data and pilot subcarrier indices for RUs in an 80 MHz EHT PPDU | | | | |
|---|---|---|---|---|
| RU type (type) | RU index and subcarrier range (RU index and subcarrier range) | | | |
| 26-tone RU | RU 1 [-252: -227] | RU 2 [-473: -448] | RU 3 [-198: -173] | RU 4 [-419: -394] | RU 5 [-392: -367] |
| | RU 6 [-118: -93] | RU 7 [-339:-314] | RU 8 [-64: -39] | RU 9 [-285: -260] | |
| | RU 10 [-499: -474] | RU 11 [-226: -201] | RU 12 [-445: -420] | RU 13 [-172: -147] | RU 14 [-145: -120] |
| | RU 15 [-365: -340] | RU 16 [-92: -67] | RU 17 [-311: -286] | RU 18 [-38: -13] | RU 19 [not defined] |
| | RU20 [260: 285] | RU 21 [39: 64] | RU 22 [314: 339] | RU 23 [93: 118] | RU 24 [120: 145] |
| | RU 25 [394: 419] | RU 26 [173: 198] | RU 27 [448: 473] | RU 28 [227: 252] | |
| | RU 29 [13: 38] | RU30 [286: 311] | RU 31 [67: 92] | RU 32 [340: 365] | RU 33 [367: 392] |
| | RU 34 [147: 172] | RU 35 [420: 445] | RU 36 [201: 226] | RU 37 [474: 499] | |
| 52-tone RU | RU 1 [-252: -227,-473: -448] | RU 2 [-198: -173,-419: -394] | RU 3 [-118: -93, -339: -314] | RU 4 [-64: -39, -285:-260] | |
| | RU 5 [-499: -474,-226: -201] | RU 6 [-445: -420,-172: -147] | RU 7 [-365: -340,-92: -67] | RU 8 [-311: -286, - 38: -13] | |
| | RU 9 [260: 285, 39: 64] | RU 10 [314: 339, 93: 118] | RU 11 [394: 419, 173: 198] | RU 12 [448: 473, 227: 252] | |
| | RU 13 [13: 38, 286: 311] | RU 14 [67: 92, 340: 365] | RU 15 [147: 172, 420: 445] | RU 16 [201: 226, 474: 499] | |
| RU type (type) | RU index and subcarrier range (RU index and subcarrier range) | | | |
| 106-tone RU | RU 1 [-252: -227, - 473: -448, -198: -173, -419: -394] | RU 2 [-118: -93, -339: -314, -64: -39, - 285: -260] | RU 3 [-499: -474, - 226: -201, -445: -420, -172: -147] | RU 4 [-365: -340, -92: -67, -311: -286, - 38: -13] | |
| | RU 5 [260: 285, 39: 64, 314: 339, 93: 118] | RU 6 [394: 419, 173: 198, 448: 473, 227: 252] | RU 7 [13: 38, 286: 311, 67: 92, 340: 365] | RU 8 [147: 172,420: 445, 201: 226, 474: 499] | |

(continued)

| RU type (type) | RU index and subcarrier range (RU index and subcarrier range) | | | | |
|---|---|---|---|---|---|
| 242-tone RU | RU 1 [-500, -252: - 227, -473: -448, -198: -173, -419: -394, -118: -93, - 339: -314, -64: -39, -285: -260, - 259] | RU 2 [-253, -499: - 474, -226: -201, -445: -420, -172: -147, -365: -340, -92: -67, -311: - 286, -38: -13, - 12] | RU 3 [12, 260: 285, 39: 64, 314: 339, 93: 118, 394: 419, 173: 198, 448: 473, 227: 252, 253] | RU 4 [259, 13: 38,286:311,67: 92, 340: 365, 147: 172, 420: 445, 201: 226, 474: 499, 500] | |
| 484-tone RU | RU 1 [-500, -252: - 227, -473: -448, -198: -173, -419: -394, -118: -93,-339: -314, -64: -39, -285: -260, - 259, -253, -499: -474, -226: -201, -445: -420, -172: -147, -365: -340, -92: -67, -311: - 286, -38: -13, - 12] | RU 2 [12, 260: 285, 39: 64, 314: 339, 93: 118, 394: 419, 173: 198, 448: 473, 227: 252, 253, 259, 13: 38, 286: 311, 67: 92, 340: 365, 147: 172, 420: 445, 201: 226, 474: 499, 500] | | | |
| 996-tone RU | RU 1 [-500: -3, 3: 500] | | | | |

It should be noted that subcarriers whose indices are -500, -259, -253, -12, 12, 253, 259, and 500 in the foregoing Table 27 do not participate in permutation. Therefore, the subcarriers do not change in frequency domain before and after permutation.

**Table 28: Data and pilot subcarrier indices for RUs in a 160 MHz EHT PPDU**

Data and pilot subcarrier indices for RUs in a 160 MHz EHT PPDU

| RU type (type) | RU index and subcarrier range (RU index and subcarrier range) | | | | |
|---|---|---|---|---|---|
| 26-tone RU | RU 1 [−764: −739] | RU 2 [−985: −960] | RU 3 [−710: −685] | RU 4 [−931: −906] | RU 5 [−904: −879] |
| | RU 6 [−630: −605] | RU 7 [−851: −826] | RU 8 [−576: −551] | RU 9 [−797: −772] | |
| | RU 10 [−1011: −986] | RU 11 [−738: −713] | RU 12 [−957: −932] | RU 13 [−684: −659] | RU 14 [−657: −632] |
| | RU 15 [−877: −852] | RU 16 [−604: −579] | RU 17 [−823: −798] | RU 18 [−550: −525] | RU 19 [not defined] |
| | RU 20 [−252: −227] | RU 21 [−473: −448] | RU 22 [−198: −173] | RU 23 [−419: −394] | RU 24 [−392: −367] |
| | RU 25 [−118: −93] | RU 26 [−339: −314] | RU 27 [−64: −39] | RU 28 [−285: −260] | |
| | RU 29 [−499: −474] | RU 30 [−226: −201] | RU 31 [−445: −420] | RU 32 [−172: −147] | RU 33 [−145: −120] |
| | RU 34 [−365: −340] | RU 35 [−92: −67] | RU 36 [−311: −286] | RU 37 [−38: −13] | |
| | RU 38 [260: 285] | RU 39 [39: 64] | RU 40 [314: 339] | RU 41 [93: 118] | RU 42 [120: 145] |
| | RU 43 [394: 419] | RU 44 [173: 198] | RU 45 [448: 473] | RU 46 [227: 252] | |
| | RU 47 [13: 38] | RU 48 [286: 311] | RU 49 [67: 92] | RU 50 [340: 365] | RU 51 [367: 392] |
| | RU 52 [147: 172] | RU 53 [420: 445] | RU 54 [201: 226] | RU 55 [474: 499] | RU 56 [not defined] |
| | RU 57 [772: 797] | RU 58 [551: 576] | RU 59 [826: 851] | RU 60 [605: 630] | RU 61 [632: 657] |
| | RU 62 [906: 931] | RU 63 [685: 710] | RU 64 [960: 985] | RU 65 [739: 764] | |

| RU type (type) | RU index and subcarrier range (RU index and subcarrier range) | | | | |
|---|---|---|---|---|---|
| | RU 66 [525: 550] | RU 67 [798: 823] | RU 68 [579: 604] | RU 69 [852: 877] | RU 70 [879: 904] |
| | RU 71 [659: 684] | RU 72 [932: 957] | RU 73 [713: 738] | RU 74 [986: 1011] | |
| 52-tone RU | RU 1 [−764: −739, −985: −960] | RU 2 [−710: −685, −931: −906] | RU 3 [−630: −605, −851: −826] | RU 4 [−576: −551, −797: −772] | |
| | RU 5 [−1011: −986], −738: −713] | RU 6 [−957: −932, −684: −659] | RU 7 [−877: −852, −604: −579] | RU 8 [−823: −798, −550: −525] | |
| | RU 9 [−252: −227, −473: −448] | RU 10 [−198: −173, −419: −394] | RU 11 [−118: −93, −339: −314] | RU 12 [−64: −39, −285: −260] | |
| | RU 13 [−499: −474, −226: −201] | RU 14 [−445: −420, −172: −147] | RU 15 [−365: −340, −92: −67] | RU 16 [−311: −286, −38: −13] | |
| | RU 17 [260: 285, 39: 64] | RU 18 [314: 339, 93: 118] | RU 19 [394: 419, 173: 198] | RU 20 [448: 473, 227: 252] | |
| | RU 21 [13: 38, 286: 311] | RU 22 [67: 92, 340: 365] | RU 23 [147: 172, 420: 445] | RU 24 [201: 226, 474: 499] | |
| | RU 25 [772: 797, 551: 576] | RU 26 [826: 851, 605: 630] | RU 27 [906: 931, 685: 710] | RU 28 [960: 985, 739: 764] | |
| | RU 29 [525: 550, 798: 823] | RU 30 [579: 604, 852: 877] | RU 31 [659: 684, 932: 957] | RU 32 [713: 738, 986: 1011] | |
| 106-tone RU | RU 1 [−764: −739, −985: −960, −710: −685, −931: −906] | RU 2 [−630: −605, −851: −826, −576: −551, −797: −772] | RU 3 [−1011: −986], −738: −713, −957: −932, −684: −659] | RU 4 [−877: −852, −604: −579, −823: −798, −550: −525] | |
| | RU 5 [−252: −227, − | RU 6 [−118: −93, −339: | RU 7 [−499: −474, − | RU 8 [−365: −340, −92: | |

| RU type (type) | RU index and subcarrier range (RU index and subcarrier range) | | | |
|---|---|---|---|---|
| | 473: –448, –198: –173, –419: –394] | –314, –64: –39, –285: –260] | 226: –201, –445: –420, –172: –147] | –67, –311: –286, –38: –13] | |
| | RU 9 [260: 285, 39: 64, 314: 339, 93: 118] | RU 10 [394: 419, 173: 198, 448: 473, 227: 252] | RU 11 [13: 38, 286: 311, 67: 92, 340: 365] | RU 12 [147: 172, 420: 445, 201: 226, 474: 499] | |
| | RU 13 [772: 797, 551: 576, 26: 851, 605: 630] | RU 14 [906: 931, 685: 710, 960: 985, 739: 764] | RU 15 [525: 550, 798: 823, 579: 604, 852: 877] | RU 16 [659: 684, 932: 957, 713: 738, 986: 1011] | |
| 242-tone RU | RU 1 [–1012, –764: –739, –985: –960, –710: –685, –931: –906, –630: –605, –851: –826, –576: –551, –797: –772, –771] | RU 2 [–765, –1011: –986], –738: –713, –957: –932, –684: –659, –877: –852, –604: –579, –823: –798, –550: –525, –524] | RU 3 [–500, –252: –227, –473: –448, –198: –173, –419: –394, –118: –93, –339: –314, –64: –39, –285: –260, –259] | RU 4 [–25, –499: –474, –226: –201, –445: –420, –172: –147, –365: –340, –92: –67, –311: –286, –38: –13, –12] | |
| | RU 5 [12, 260: 285, 39: 64, 314: 339, 93: 118, 394: 419, 173: 198, 448: 473, 227: 252, 253] | RU 6 [259, 13: 38, 286: 311, 67: 92, 340: 365, 147: 172, 420: 445, 201: 226, 474: 499, 500] | RU 7 [524, 772: 797, 551: 576, 26: 851, 605: 630, 906: 931, 685: 710, 960: 985, 739: 764, 765] | RU 8 [771, 525: 550, 798: 823, 579: 604, 852: 877, 659: 684, 932: 957, 713: 738, 986: 1011, 1012] | |
| 484-tone RU | RU 1 [–1012, –764: –739, –985: –960, –710: –685, –931: –906, –630: –605, –851: –826, –576: –551, –797: –772, –771, –765, –1011: –986], –738: –713, –957: –932, –684: –659, | RU 2 [–500, –252: –227, –473: –448, –198: –173, –419: –394, –118: –93, –339: –314, –64: –39, –285: –260, –259, –25, –499: –474, –226: –201, –445: –420, –172: –147, –365: –340, | RU 3 [12, 260: 285, 39: 64, 314: 339, 93: 118, 394: 419, 173: 198, 448: 473, 227: 252, 253, 259, 13: 38, 286: 311, 67: 92, 340: 365, 147: 172, 420: 445, 201: 226, 474: | RU 4 [524, 772: 797, 551: 576, 26: 851, 605: 630, 906: 931, 685: 710, 960: 985, 739: 764, 765, 771, 525: 550, 798: 823, 579: 604, 852: 877, 659: 684, 932: 957, | |

| RU type (type) | RU index and subcarrier range (RU index and subcarrier range) | | | | |
|---|---|---|---|---|---|
| | –877: –852, –604: –579, –823: –798, –550: –525, –524] | –92: –67, –311: –286, –38: –13, –12] | 499, 500] | 713: 738, 986: 1011, 1012] | |
| 996-tone RU | RU 1 [–1012, –764: –739, –985: –960, –710: –685, –931: –906, –630: –605, –851: –826, –576: –551, –797: –772, –771, –765, –1011: –986], –738: –713, –957: –932, –684: –659, –877: –852, –604: –579, –823: –798, –550: –525, –524, –500, –252: –227, –473: –448, –198: –173, –419: –394, –118: –93, –339: –314, –64: –39, –285: –260, –259, –25, –499: –474, –226: –201, –445: –420, –172: –147, –365: –340, –92: –67, –311: –286, –38: –13, –12] | RU 2 [12, 260: 285, 39: 64, 314: 339, 93: 118, 394: 419, 173: 198, 448: 473, 227: 252, 253, 259, 13: 38, 286: 311, 67: 92, 340: 365, 147: 172, 420: 445, 201: 226, 474: 499, 500, 524, 772: 797, 551: 576, 26: 851, 605: 630, 906: 931, 685: 710, 960: 985, 739: 764, 765, 771, 525: 550, 798: 823, 579: 604, 852: 877, 659: 684, 932: 957, 713: 738, 986: 1011, 1012] | | | |
| 2*996-tone RU | RU 1 [–1012: –515, –509: –12, 12: 509, 515: 1012] | | | | |

It should be noted that subcarriers whose indices are -1012, -771, -765, -524, -500, -259, -253, -12, 12, 253, 259, 500, 524, 765, 771, and 1012 in the foregoing Table 28 do not participate in permutation. Therefore, the subcarriers do not change in frequency domain before and after permutation.

**Table 29: Data and pilot subcarrier indices for RUs in a 320 MHz EHT PPDU**

| Data and pilot subcarrier indices for RUs in a 320 MHz EHT PPDU | | | | | |
|---|---|---|---|---|---|
| RU type (type) | RU index and subcarrier range (RU index and subcarrier range) | | | | |
| 26-tone RU | RU 1<br>[-1788: -1763] | RU 2<br>[-2009: -1984] | RU 3<br>[-1734: -1709] | RU 4<br>[-1955: -1930] | RU 5<br>[-1928: -1903] |
| | RU 6<br>[-1654: -1629] | RU 7<br>[-1875: -1850] | RU 8<br>[-1600: -1575] | RU 9<br>[-1821: -1796] | |
| | RU 10<br>[-2035: -2010] | RU 11<br>[-1762: -1737] | RU 12<br>[-1981: -1956] | RU 13<br>[-1708: -1683] | RU 14<br>[-1681: -1656] |
| | RU 15<br>[-1901: -1876] | RU 16<br>[-1628: -1603] | RU 17<br>[-1847: -1822] | RU 18<br>[-1574: -1549] | RU 19<br>[not defined] |
| | RU 20<br>[-1276: -1251] | RU 21<br>[-1497: -1472] | RU 22<br>[-1222: -1197] | RU 23<br>[-1443: -1418] | RU 24<br>[-1416: -1391] |
| | RU 25<br>[-1142: -1117] | RU 26<br>[-1363: -1338] | RU 27<br>[-1088: -1063] | RU 28<br>[-1309: -1284] | |
| | RU 29<br>[-1523: -1498] | RU 30<br>[-1250: -1225] | RU 31<br>[-1469: -1444] | RU 32<br>[-1196: -1171] | RU 33<br>[-1169: -1144] |
| | RU 34<br>[-1389: -1364] | RU 35<br>[-1116: -1091] | RU 36<br>[-1335: -1310] | RU 37<br>[-1062: -1037] | |
| | RU 38<br>[-764: -739] | RU 39<br>[-985: -960] | RU 40<br>[-710: -685] | RU 41<br>[-931: -906] | RU 42<br>[-904: -879] |
| | RU 43<br>[-630: -605] | RU 44<br>[-851: -826] | RU 45<br>[-576: -551] | RU 46<br>[-797: -772] | |
| | RU 47<br>[-1011: -986] | RU 48<br>[-738: -713] | RU 49<br>[-957: -932] | RU50<br>[-684: -659] | RU 51<br>[-657: -632] |
| | RU 52<br>[-877: -852] | RU 53<br>[-604: -579] | RU 54<br>[-823: -798] | RU 55<br>[-550: -525] | RU 56<br>[not defined] |
| | RU 57<br>[-252: -227] | RU 58<br>[-473: -448] | RU 59<br>[-198: -173] | RU 60<br>[-419: -394] | RU 61<br>[-392: -367] |
| | RU 62<br>[-118: -93] | RU 63<br>[-339: -314] | RU 64<br>[-64: -39] | RU 65<br>[-285: -260] | |
| | RU 66<br>[-499: -474] | RU 67<br>[-226:-201] | RU 68<br>[-445: -420] | RU 69<br>[-172: -147] | RU 70<br>[-145: -120] |

(continued)

| RU type (type) | RU index and subcarrier range (RU index and subcarrier range) | | | | |
|---|---|---|---|---|---|
| | RU 71 [-365:-340] | RU 72 [-92: -67] | RU 73 [-311:-286] | RU 74 [-38: -13] | |
| | RU 75 [260: 285] | RU 76 [39: 64] | RU 77 [314: 339] | RU 78 [93: 118] | RU 79 [120: 145] |
| | RU80 [394: 419] | RU 81 [173: 198] | RU 82 [448: 473] | RU 83 [227: 252] | |
| | RU 84 [13: 38] | RU 85 [286: 311] | RU 86 [67: 92] | RU 87 [340: 365] | RU 88 [367: 392] |
| | RU 89 [147: 172] | RU 90 [420: 445] | RU 91 [201: 226] | RU 92 [474: 499] | RU 93 [not defined] |
| | RU 94 [772: 797] | RU 95 [551: 576] | RU 96 [826: 851] | RU 97 [605: 630] | RU 98 [632: 657] |

Specifically:

| RU type (type) | RU index and subcarrier range (RU index and subcarrier range) | | | | |
|---|---|---|---|---|---|
| 26-tone RU | RU 99 [906: 931] | RU 100 [685: 710] | RU 101 [960: 985] | RU 102 [739: 764] | |
| | RU 103 [525: 550] | RU 104 [798: 823] | RU 105 [579: 604] | RU 106 [852: 877] | RU 107 [879: 904] |
| | RU 108 [659: 684] | RU 109 [932: 957] | RU 110 [713: 738] | RU 111 [986: 1011] | |
| | RU 112 [1284: 1309] | RU 113 [1063: 1088] | RU 114 [1338: 1363] | RU 115 [1117: 1142] | RU 116 [1144: 1169] |
| | RU 117 [1418: 1443] | RU 118 [1197: 1222] | RU 119 [1472: 1497] | RU 120 [1251: 1276] | |
| | RU 121 [1037: 1062] | RU 122 [1310: 1335] | RU 123 [1091: 1116] | RU 124 [1364: 1389] | RU 125 [1391: 1416] |
| | RU 126 [1171: 1196] | RU 127 [1444: 1469] | RU 128 [1225: 1250] | RU 129 [1498: 1523] | RU 130 [not defined] |
| | RU 131 [1796: 1821] | RU 132 [1575: 1600] | RU 133 [1850: 1875] | RU 134 [1629: 1654] | RU 135 [1656: 1681] |
| | RU 136 [1930: 1955] | RU 137 [1709: 1734] | RU 138 [1984: 2009] | RU 139 [1763: 1788] | |
| | RU 140 [1549: 1574] | RU 141 [1822: 1847] | RU 142 [1603: 1628] | RU 143 [1876: 1901] | RU 144 [1903: 1928] |
| | RU 145 [1683: 1708] | RU 146 [1956: 1981] | RU 147 [1737: 1762] | RU 148 [2010: 2035] | |

(continued)

| RU type (type) | RU index and subcarrier range (RU index and subcarrier range) | | | | |
|---|---|---|---|---|---|
| 52-tone RU | RU 1 [-1788: -1763,-2009: -1984] | RU 2 [-1734: -1709, - 1955:-1930] | RU 3 [-1654: -1629, -1875: -1850] | RU 4 [-1600: -1575,-1821:-1796] | |
| | RU5 [-2035: -2010, - 1762: -1737] | RU 6 [-1981: -1956, - 1708: -1683] | RU 7 [-1901: -1876, -1628: -1603] | RU 8 [-1847: -1822,-1574: -1549] | |
| | RU 9 [-1276: -1251, - 1497: -1472] | RU 10 [-1222: -1197, - 1443: -1418] | RU 11 [-1142: -1117, -1363: -1338] | RU 12 [-1088: -1063,-1309: -1284] | |
| | RU 13 [-1523: -1498,-1250: -1225] | RU 14 [-1469: -1444,-1196: -1171] | RU 15 [-1389: -1364,-1116: -1091] | RU 16 [-1335: -1310,-1062:-1037] | |
| | RU 17 [-764: -739, - 985: -960] | RU 18 [-710: -685,-931: -906] | RU 19 [-630: -605, - 851:-826] | RU 20 [-576: -551,-797:-772] | |
| | RU 21 [-1011: -986,-738: -713] | RU 22 [-957: -932,-684: -659] | RU 23 [-877: -852, - 604: -579] | RU 24 [-823: -798, - 550: -525] | |
| | RU 25 [-252: -227,-473: -448] | RU 26 [-198: -173, - 419: -394] | RU 27 [-118: -93, -339: -314] | RU 28 [-64: -39, -285: - 260] | |
| | RU 29 [-499: -474, - 226:-201] | RU 30 [-445: -420, - 172: -147] | RU 31 [-365: -340, -92: -67] | RU 32 [-311: -286, -38: -13] | |
| | RU 33 [260: 285, 39: 64] | RU 34 [314: 339, 93: 118] | RU 35 [394: 419, 173: 198] | RU 36 [448: 473, 227: 252] | |
| | RU 37 [13: 38, 286: 311] | RU 38 [67: 92, 340: 365] | RU 39 [147: 172, 420: 445] | RU 40 [201: 226, 474: 499] | |
| 52-tone RU | RU 41 [772: 797, 551: 576] | RU 42 [826: 85, 605: 630] | RU 43 [906: 931, 685: 710] | RU 44 [960: 985, 739: 764] | |
| | RU 45 [525: 550, 798: 823] | RU 46 [579: 604, 852: 877] | RU 47 [659: 684, 932: 957] | RU 48 [713: 738, 986: 1011] | |
| | RU 49 [1284: 1309, 1063: 1088] | RU 50 [1338: 1363, 1117: 1142] | RU 51 [1418: 1443, 1197: 1222] | RU 52 [1472: 1497, 1251: 1276] | |
| | RU 53 [1037: 1062, 1310: 1335] | RU 54 [1091: 1116, 1364: 1389] | RU 55 [1171: 1196, 1444: 1469] | RU 56 [1225: 1250, 1498: 1523] | |
| | RU 57 [1796: 1821, 1575: 1600] | RU 58 [1850: 1875, 1629: 1654] | RU 59 [1930: 1955, 1709: 1734] | RU 60 [1984: 2009, 1763: 1788] | |
| | RU 61 [1549: 1574, 1822: 1847] | RU 62 [1603: 1628, 1876: 1901] | RU 63 [1683: 1708, 1956: 1981] | RU 64 [1737: 1762, 2010: 2035] | |

(continued)

| RU type (type) | RU index and subcarrier range (RU index and subcarrier range) | | | | |
|---|---|---|---|---|---|
| 106-tone RU | RU 1<br>[-1788: -1763, - 2009: -1984,-1734: -1709,-1955: -1930] | RU 2<br>[-1654: -1629, - 1875: -1850,-1600: -1575,-1821: -1796] | RU 3<br>[-2035: -2010, - 1762: -1737,-1981: -1956,-1708: -1683] | RU 4<br>[-1901: -1876,-1628: -1603,-1847: -1822,-1574: -1549] | |
| | RU 5<br>[-1276: -1251, - 1497: -1472,-1222: -1197,-1443: -1418] | RU 6<br>[-1142: -1117, - 1363: -1338,-1088: -1063,-1309: -1284] | RU 7<br>[-1523: -1498,-1250: -1225, - 1469: -1444,-1196: -1171] | RU 8<br>[-1389: -1364,-1116: -1091,-1335:-1310,-1062: -1037] | |
| | RU 9<br>[-764:-739, -985: -960, -710:-685, -931: -906] | RU 10<br>[-630: -605, - 851: -826, -576: - 551, 797: -772] | RU 11<br>[-1011: -986, - 738: -713, -957: - 932, -684: -659] | RU 12<br>[-877: -852, - 604: -579, -823:-798, -550: -525] | |
| | RU 13<br>[-252:-227, -473:-448, -198:-173, -419: -394] | RU 14<br>[-118: -93, -339: -314, -64: -39, - 285: -260] | RU 15<br>[-499: -474,-226: -201, -445: - 420, -172: -147] | RU 16<br>[-365: -340, -92: -67, -311: -286, - 38: -13] | |
| | RU 17<br>[260: 285, 39: 64, 314: 339, 93: 118] | RU 18<br>[394: 419, 173: 198, 448: 473, 227: 252] | RU 19<br>[13: 38, 286: 311, 67: 92, 340: 365] | RU 20<br>[147: 172,420: 445, 201: 226, 474: 499] | |
| | RU 21<br>[772: 797, 551: 576, 826: 85, 605: 630] | RU 22<br>[906: 931,685: 710, 960: 985, 739: 764] | RU 23<br>[525: 550, 798: 823, 579: 604, 852: 877] | RU 24<br>[659: 684, 932: 957, 713: 738, 986: 1011] | |
| | RU 25<br>[1284: 1309, 1063: 1088, 1338: 1363, 1117: 1142] | RU 26<br>[1418: 1443, 1197: 1222, 1472: 1497, 1251: 1276] | RU 27<br>[1037: 1062, 1310: 1335, 1091: 1116, 1364: 1389] | RU 28<br>[1171: 1196, 1444: 1469, 1225: 1250, 1498: 1523] | |
| | RU 29<br>[1796: 1821, 1575: 1600, 1850: 1875, 1629: 1654] | RU 30<br>[1930: 1955, 1709: 1734, 1984: 2009, 1763: 1788] | RU 31<br>[1549: 1574, 1822: 1847, 1603: 1628, 1876: 1901] | RU 32<br>[1683: 1708, 1956: 1981, 1737: 1762, 2010: 2035] | |

(continued)

| RU type (type) | RU index and subcarrier range (RU index and subcarrier range) | | | | |
|---|---|---|---|---|---|
| 242-tone RU | RU 1<br>[-2036, -1788: - 1763, -2009:-1984, -1734:-1709, -1955:-1930, -1654:-1629, -1875:-1850, -1600:-1575, -1821:-1796, -1795] | RU 2<br>[-1789, -2035: - 2010, -1762:-1737, -1981:-1956, -1708:-1683, -1901:-1876, -1628:-1603, -1847:-1822, -1574:-1549, -1548] | RU 3<br>[-1524, -1276: - 1251, -1497:-1472, -1222:-1197, -1443:-1418, -1142:-1117, -1363:-1338, -1088:-1063, -1309:-1284, -1283] | RU 4<br>[-1277, -1523:-1498, -1250:-1225, -1469:-1444, -1196:-1171, -1389:-1364, -1116:-1091, -1335:-1310, -1062:-1037, -1036] | |
| | RU 5<br>[-1012, -764: - 739, -985: -960, - 710: -685, -931: - 906, -630: -605, - 851: -826, -576: - 551, -797: -772,-771] | RU 6<br>[-765, -1011: - 986, -738: -713, - 957: -932, -684: - 659, -877: -852, - 604: -579, -823: - 798, -550: -525, - 524] | RU 7<br>[-500, -252:-227, -473: -448, - 198: -173, -419: - 394, -118:-93,-339:-314, -64: - 39, -285: -260, - 259] | RU 8<br>[-253, -499:-474, -226: -201,-445: -420, -172:-147, -365: -340, - 92: -67, -311:-286, -38: -13, - 12] | |
| | RU 9<br>[12, 260: 285, 39: 64, 314: 339, 93: 118, 394: 419, 173: 198, 448: 473, 227: 252, 253] | RU 10<br>[259, 13: 38, 286: 311, 67: 92, 340: 365, 147: 172, 420: 445, 201:226, 474: 499, 500] | RU 11<br>[524, 772: 797, 551: 576, 826: 85, 605: 630, 906: 931, 685: 710, 960: 985, 739: 764,765] | RU 12<br>[771, 525: 550, 798: 823, 579: 604, 852: 877, 659: 684, 932: 957, 713: 738, 986: 1011, 1012] | |
| | RU 13<br>[1036, 1284: 1309, 1063: 1088, 1338: 1363, 1117: 1142, 1418: 1443, 1197: 1222, 1472: 1497, 1251: 1276, 1277] | RU 14<br>[1283, 1037: 1062, 1310: 1335, 1091: 1116, 1364: 1389, 1171: 1196, 1444: 1469, 1225: 1250, 1498: 1523, 1524] | RU 15<br>[1548, 1796: 1821, 1575: 1600, 1850: 1875, 1629: 1654, 1930: 1955, 1709: 1734, 1984: 2009, 1763: 1788, 1789] | RU 16<br>[1795, 1549: 1574, 1822: 1847, 1603: 1628, 1876: 1901, 683: 1708, 1956: 1981, 1737: 1762, 2010: 2035, 2036] | |

(continued)

| RU type (type) | RU index and subcarrier range (RU index and subcarrier range) | | | | |
|---|---|---|---|---|---|
| 484-tone RU | RU 1<br>[-2036, -1788: - 1763, -2009:-1984, -1734:-1709, -1955:-1930, -1654:-1629, -1875: - 1850, -1600: - 1575, -1821: - 1796, -1795,-1789, -2035: - 2010, -1762: - 1737, -1981: - 1956, -1708:-1683, -1901: - 1876, -1628: - 1603, -1847: - 1822, -1574:-1549, -1548] | RU 2<br>[-1524, -1276: - 1251, -1497:-1472, -1222:-1197, -1443:-1418, -1142:-1117, -1363: - 1338, -1088: - 1063, -1309: - 1284, -1283,-1277, -1523: - 1498, -1250: - 1225, -1469: - 1444, -1196:-1171, -1389:-1364, -1116:-1091, -1335:-1310, -1062:-1037, -1036] | RU 3<br>[-1012, -764: - 739, -985: -960, - 710: -685, -931:-906, -630, -605, - 851: -826, -576: - 551, -797: -772, - 771, -765, -1011: -986, -738: -713, -957: -932, -684: -659, -877: -852, -604: -579, -823: -798, -550: -525, -524] | RU 4<br>[-500, -252: - 227, -473: -448,-198: -173, -419:-394, -118: -93,-339: -314, -64:-39, -285: -260,-259, -253,-499:-474, -226: -201,-445: -420, -172:-147, -365: -340,-92: -67, -311:-286, -38: -13,-12] | |
| | RU 5<br>[12, 260: 285, 39: 64, 314: 339, 93: 118, 394: 419, 173: 198, 448: 473, 227: 252, 253, 259, 13: 38, 286: 311, 67: 92, 340: 365, 147: 172, 420: 445, 201: 226, 474: 499, 500] | RU 6<br>[524, 772: 797, 551: 576, 826: 85, 605: 630, 906: 931, 685: 710, 960: 985, 739: 764, 765, 771, 525: 550, 798: 823, 579: 604, 852: 877, 659: 684, 932: 957, 713: 738, 986: 1011, 1012] | RU 7<br>[1036, 1284: 1309, 1063: 1088, 1338: 1363, 1117: 1142, 1197: 1222, 1472: 1497, 1251: 1276, 1277, 1283, 1037: 1062, 1310: 1335, 1091: 1116, 1364: 1389, 1171: 1196, 1444: 1469, 1225: 1250, 1498: 1523, 1524] | RU 8<br>[1548, 1796: 1821, 1575: 1600, 1850: 1875, 1629: 1654, 1930: 1955, 1709: 1734, 1984: 2009, 1763: 1788, 1789, 1795, 1549: 1574, 1822: 1847, 1603: 1628, 1876: 1901, 683: 1708, 1956: 1981, 1737: 1762, 2010: 2035, 2036] | |

| RU type (type) | RU index and subcarrier range (RU index and subcarrier range) | | | | |
|---|---|---|---|---|---|
| 996-tone RU | RU 1 | RU 2 [−1012, −764: −739, −985: −960, −710: −685, −931: −906, −630: −605, −851: −826, −576: −551, −797: −772, −771, −765, −1011: −986, −738: −713, −957: −932, −684: −659, −877: −852, −604: −579, −823: −798, −550: −525, −524, −500, −252: −227, −473: −448, −198: −173, −419: −394, −118: −93, −339: −314, −64: −39, −285: −260, −259, −253, −499: −474, −226: −201, −445: −420, −172: −147, −365: −340, −92: −67, −311: −286, −38: −13, −12] | RU 3 [12, 260: 285, 39: 64, 314: 339, 93: 118, 394: 419, 173: 198, 448: 473, 227: 252, 253, 259, 13: 38, 286: 311, 67: 92, 340: 365, 147: 172, 420: 445, 201: 226, 474: 499, 500, 524, 772: 797, 551: 576, 826: 85, 605: 630, 906: 931, 685: 710, 960: 985, 739: 764, 765, 771, 525: 550, 798: 823, 579: 604, 852: 877, 659: 684, 932: 957, 713: 738, 986: 1011, 1012] | RU 4 [1036, 1284: 1309, 1063: 1088, 1338: 1363, 1117: 1142, 1418: 1443, 1197: 1222, 1472: 1497, 1251: 1276, 1277, 1283, 1037: 1062, 1310: 1335, 1091: 1116, 1364: 1389, 1171: 1196, 1444: 1469, 1225: 1250, 1498: 1523, 1524, 1548, 1796: 1821, 1575: 1600, 1850: 1875, 1629: 1654, 1930: 1955, 1709: 1734, 1984: 2009, 1763: 1788, 1789, 1795, 1549: 1574, 1822: 1847, 1603: 1628, 1876: 1901, 683: 1708, 1956: 1981, 1737: 1762, 2010: 2035, 2036] | |

| RU type (type) | RU index and subcarrier range (RU index and subcarrier range) | | | | |
|---|---|---|---|---|---|
|  | [−2036, −1788: −1763, −2009: −1984, −1734: −1709, −1955: −1930, −1654: −1629, −1875: −1850, −1600: −1575, −1821: −1796, −1795, −1789, −2035: −2010, −1762: −1737, −1981: −1956, −1708: −1683, −1901: −1876, −1628: −1603, −1847: −1822, −1574: −1549, −1548, −1524, −1276: −1251, −1497: −1472, −1222: −1197, −1443: −1418, −1142: −1117, −1363: −1338, −1088: −1063, −1309: −1284, −1283, −1277, −1523: −1498, −1250: −1225, −1469: −1444, −1196: −1171, −1389: −1364, −1116: −1091, −1335: −1310, −1062: −1037, −1036] | | | | |
| 2*996-tone RU | RU 1 [−2036: −1539, | RU 2 [12: 509, | | | |

| RU type (type) | RU index and subcarrier range (RU index and subcarrier range) | | | | |
|---|---|---|---|---|---|
| | −1533: −1036, −1012: −515, −509: −12] | 515: 1012, 1036: 1533, 1539: 2036] | | | |
| 4*996- tone RU | RU 1 [−2036: −1539, −1533: −1036, −1012: −515, −509: −12, 12: 509, 515: 1012, 1036: 1533, 1539: 2036] | | | | |

An example in which the permutation operation shown in FIG. 11D is performed on the two non-adjacent 242-tone RUs is used below for description. It is assumed that the permutation operation shown in FIG. 11D is performed between a first 242-tone RU and a third 242-tone RU. It is assumed that the first VRU allocated by the AP to the STA includes the RU 1 and the RU 2 in the 26-tone RU shown in Table 4. In this case, the STA may map, to the first PRU in the permutation manner shown in FIG. 11D, the first VRU allocated by the AP. In other words, the first PRU includes the RU 20 and the RU 2 in the 26-tone RU shown in Table 4, and subcarrier indices include [13: 38] and [-473: -448].

Locations of the VRU and the PRU on a frequency band may be determined based on a subcarrier sequence number. Therefore, in the permutation manner shown in FIG. 11D, the mapping relationship between the VRU and the PRU in an 80 MHz bandwidth may be indicated by using Table 4 and Table 30. For example, the STA may search Table 30 based on the first VRU indicated by the AP, to determine RUs and subcarrier indices of the first PRU. For example, it is assumed that the first VRU indicated by the AP includes an RU 1 and an RU 2 in a 26-tone RU of 80 MHz. In this case, the STA may search Table 30 to determine that subcarrier indices of the first PRU include [13: 38] and [-473: -448], and send data on subcarriers of the first PRU. For another example, if the first VRU indicated by the AP includes an RU 3 and an RU 4 in a 26-tone RU of 80 MHz, the STA may search Table 30 to determine that subcarrier indices of the first PRU include [67: 92] and [-419: -394], and send data on subcarriers of the first PRU.

**Table 30: Data and pilot subcarrier indices for RUs in an 80 MHz EHT PPDU**

Data and pilot subcarrier indices for RUs in an 80 MHz EHT PPDU

| RU type (type) | RU index and subcarrier range (RU index and subcarrier range) | | | | |
|---|---|---|---|---|---|
| 26-tone RU | RU 1 [13: 38] | RU 2 [−473: −448] | RU 3 [67: 92] | RU 4 [−419: −394] | RU 5 [−392: −367] |
| | RU 6 [147: 172] | RU 7 [−339: −314] | RU 8 [201: 226] | RU 9 [−285: −260] | |
| | RU 10 [−252: −227] | RU 11 [−226: −201] | RU 12 [−198: −173] | RU 13 [−172: −147] | RU 14 [−145: −120] |
| | RU 15 [−118: −93] | RU 16 [−92: −67] | RU 17 [−64: −39] | RU 18 [−38: −13] | RU 19 [not defined] |
| | RU 20 [−499: −474] | RU 21 [39: 64] | RU 22 [−445: −420] | RU 23 [93: 118] | RU 24 [120: 145] |
| | RU 25 [−365: −340] | RU 26 [173: 198] | RU 27 [−311: −286] | RU 28 [227: 252] | |
| | RU 29 [260: 285] | RU 30 [286: 311] | RU 31 [314: 339] | RU 32 [340: 365] | RU 33 [367: 392] |
| | RU 34 [394: 419] | RU 35 [420: 445] | RU 36 [448: 473] | RU 37 [474: 499] | |
| 52-tone RU | RU 1 [13: 38, −473: −448] | RU 2 [67: 92, −419: −394] | RU 3 [147: 172, −339: −314] | RU 4 [201: 226, −285: −260] | |
| | RU 5 [−252: −201] | RU 6 [−198: −147] | RU 7 [−118: −67] | RU 8 [−64: −13] | |
| | RU 9 [−499: −474, 39: 64] | RU 10 [−445: −420, 93: 118] | RU 11 [−365: −340, 173: 198] | RU 12 [−311: −286, 227: 252] | |
| | RU 13 [260: 311] | RU 14 [314: 365] | RU 15 [394: 445] | RU 16 [448: 499] | |
| 106-tone RU | RU 1 [13: 38, −473: −448, 67: 92, −419: −394] | RU 2 [147: 172, −339: −314, 201: 226, −285: −260] | RU 3 [−252: −147] | RU 4 [−118: −13] | |

| RU type (type) | RU index and subcarrier range (RU index and subcarrier range) | | | | |
|---|---|---|---|---|---|
| | RU 5 [−499: −474, 39: 64, −445: −420, 93: 118] | RU 6 [−365: −340, 173: 198, −311: −286, 227: 252] | RU 7 [260: 365] | RU 8 [394: 499] | |
| 242-tone RU | RU 1 [−500, 13: 38, − 473: −448, 67: 92, −419: −394, 147: 172, −339: −314, 201: 226, −285: − 260, −259] | RU 2 [−253: −12] | RU 3 [12, −499: −474, 39: 64, −445: − 420, 93: 118, − 365: −340, 173: 198, −311: −286, 227: 252, 253] | RU 4 [259: 500] | |
| 484-tone RU | RU 1 [−500, 13: 38, − 473: −448, 67: 92, −419: −394, 147: 172, −339: −314, 201: 226, −285: − 260, −259, −253: −12] | RU 2 [12, −499: −474, 39: 64, −445: − 420, 93: 118, − 365: −340, 173: 198, −311: −286, 227: 252, 253, 259: 500] | | | |
| 996-tone RU | RU 1 [−500: −3, 3: 500] | | | | |

It should be noted that subcarriers whose indices are -500, -259, -256, -12, 12, 253, 259, and 500 in the foregoing Table 30 do not participate in mapping. Therefore, the foregoing subcarrier indices do not change before and after permutation.

It should be understood that mapped index tables of the data and pilot subcarrier indices for RUs in 160 MHz to 320 MHz shown in Table 5 and Table 6 may also be determined in the permutation manner shown in FIG. 11D. For details, refer to the foregoing manner of determining mapped index tables of the data and pilot subcarrier indices for RUs (the first VRUs) in a 20 MHz bandwidth, that is, refer to the determining manner in Table 30. For example, it is assumed that the first VRU indicated by the AP includes an RU 1 and an RU 2 in a 26-tone RU of 160 MHz. In this case, the STA may determine that the RUs included in the first PRU may be the RU 20 and the RU 2 in the 26-tone RU shown in Table 5. In other words, subcarrier indices of the first PRU include [-499: -474] and [-985: -960]. Similarly, if the pilot subcarriers do not participate in permutation, indices of the pilot subcarriers do not change before and after permutation. Details are not described herein again.

The following shows a mapping table of the data and pilot subcarrier indices for RUs in 160 MHz to 320 MHz corresponding to Table 5 and Table 6.

## Table 31: Data and pilot subcarrier indices for RUs in a 160 MHz EHT PPDU

Data and pilot subcarrier indices for RUs in a 160 MHz EHT PPDU

| RU type (type) | RU index and subcarrier range (RU index and subcarrier range) | | | | |
|---|---|---|---|---|---|
| 26-tone RU | RU 1 [−499: −474] | RU 2 [−985: −960] | RU 3 [−445: −420] | RU 4 [−931: −906] | RU 5 [−904: −879] |
| | RU 6 [−365: −340] | RU 7 [−851: −826] | RU 8 [−311: −286] | RU 9 [−797: −772] | |
| | RU 10 [−764: −739] | RU 11 [−738: −713] | RU 12 [−710: −685] | RU 13 [−684: −659] | RU 14 [−657: −632] |
| | RU 15 [−630: −605] | RU 16 [−604: −579] | RU 17 [−576: −551] | RU 18 [−550: −525] | RU 19 [not defined] |
| | RU 20 [−1011: −986] | RU 21 [−473: −448] | RU 22 [−957: −932] | RU 23 [−419: −394] | RU 24 [−392: −367] |
| | RU 25 [−877: −852] | RU 26 [−339: −314] | RU 27 [−823: −798] | RU 28 [−285: −260] | |
| | RU 29 [−252: −227] | RU 30 [−226: −201] | RU 31 [−198: −173] | RU 32 [−172: −147] | RU 33 [−145: −120] |
| | RU 34 [−118: −93] | RU 35 [−92: −67] | RU 36 [−64: −39] | RU 37 [−38: −13] | |
| | RU 38 [525: 550] | RU 39 [39: 64] | RU 40 [579: 604] | RU 41 [93: 118] | RU 42 [120: 145] |
| | RU 43 [659: 684] | RU 44 [173: 198] | RU 45 [713: 738] | RU 46 [227: 252] | |
| | RU 47 [260: 285] | RU 48 [286: 311] | RU 49 [314: 339] | RU 50 [340: 365] | RU 51 [367: 392] |
| | RU 52 [394: 419] | RU 53 [420: 445] | RU 54 [448: 473] | RU 55 [474: 499] | RU 56 [not defined] |

| RU type (type) | RU index and subcarrier range (RU index and subcarrier range) | | | | |
|---|---|---|---|---|---|
| | RU 57 [13: 38] | RU 58 [551: 576] | RU 59 [67: 92] | RU 60 [605: 630] | RU 61 [632: 657] |
| | RU 62 [147: 172] | RU 63 [685: 710] | RU 64 [201: 226] | RU 65 [739: 764] | |
| | RU 66 [772: 797] | RU 67 [798: 823] | RU 68 [826: 851] | RU 69 [852: 877] | RU 70 [879: 904] |
| | RU 71 [906: 931] | RU 72 [932: 957] | RU 73 [960: 985] | RU 74 [986: 1011] | |
| 52-tone RU | RU 1 [−499: −474, −985: −960] | RU 2 [−445: −420, −931: −906] | RU 3 [−365: −340, −851: −826] | RU 4 [−311: −286, −797: −772] | |
| | RU 5 [−764: −713] | RU 6 [−710: −659] | RU 7 [−630: −579] | RU 8 [−576: −525] | |
| | RU 9 [−1011: −986, −473: −448] | RU 10 [−957: −932, −419: −394] | RU 11 [−877: −852, −339: −314] | RU 12 [−823: −798, −285: −260] | |
| | RU 13 [−252: −201] | RU 14 [−198: −147] | RU 15 [−118: −67] | RU 16 [−64: −13] | |
| | RU 17 [525: 550, 39: 64] | RU 18 [579: 604, 93: 118] | RU 19 [659: 684, 173: 198] | RU 20 [713: 738, 227: 252] | |
| | RU 21 [260: 311] | RU 22 [314: 365] | RU 23 [394: 445] | RU 24 [448: 499] | |
| | RU 25 [13: 38, 551: 576] | RU 26 [67: 92, 605: 630] | RU 27 [147: 172, 685: 710] | RU 28 [201: 226, 739: 764] | |
| | RU 29 [772: 823] | RU 30 [826: 877] | RU 31 [906: 957] | RU 32 [960: 1011] | |
| 106-tone RU | RU 1 [−499: −474, −985: −960, −445: −420, −931: −906] | RU 2 [−365: −340, −851: −826, −311: −286, −797: −772] | RU 3 [−764: −659] | RU 4 [−630: −525] | |
| | RU 5 | RU 6 | RU 7 | RU 8 | |

| RU type (type) | RU index and subcarrier range (RU index and subcarrier range) | | | | |
|---|---|---|---|---|---|
| | [–1011: –986, –473: –448, –957: –932, –419: –394] | [–877: –852, –339: –314, –823: –798, –285: –260] | [–252: –147] | [–118: –13] | |
| | RU 9 [525: 550, 39: 64, 579: 604, 93: 118] | RU 10 [659: 684, 173: 198, 713: 738, 227: 252] | RU 11 [260: 365] | RU 12 [394: 499] | |
| | RU 13 [13: 38, 551: 576, 67: 92, 605: 630] | RU 14 [147: 172, 685: 710, 201: 226, 739: 764] | RU 15 [772: 877] | RU 16 [906: 1011] | |
| 242-tone RU | RU 1 [–1012, –499: –474, –985: –960, –445: –420, –931: –906, –365: –340, –851: –826, –311: –286, –797: –772, –771] | RU 2 [–765: –524] | RU 3 [–500, –1011: –986, –473: –448, –957: –932, –419: –394, –877: –852, –339: –314, –823: –798, –285: –260, –259] | RU 4 [–253: –12] | |
| | RU 5 [12, 525: 550, 39: 64, 579: 604, 93: 118, 659: 684, 173: 198, 713: 738, 227: 252, 253] | RU 6 [259: 500] | RU 7 [524, 13: 38, 551: 576, 67: 92, 605: 630, 147: 172, 685: 710, 201: 226, 739: 764, 765] | RU 8 [771: 1012] | |
| 484-tone RU | RU 1 [–1012, –499: –474, –985: –960, –445: –420, –931: –906, –365: –340, –851: –826, –311: –286, –797: –772, –771, –765: –524] | RU 2 [–500, –1011: –986, –473: –448, –957: –932, –419: –394, –877: –852, –339: –314, –823: –798, –285: –260, –259, –253: –12] | RU 3 [12, 525: 550, 39: 64, 579: 604, 93: 118, 659: 684, 173: 198, 713: 738, 227: 252, 253, 259: 500] | RU 4 [524, 13: 38, 551: 576, 67: 92, 605: 630, 147: 172, 685: 710, 201: 226, 739: 764, 765, 771: 1012] | |

| RU type (type) | RU index and subcarrier range (RU index and subcarrier range) | | | | |
|---|---|---|---|---|---|
| 996-tone RU | RU 1 [–1012, –499: –474, –985: –960, –445: –420, –931: –906, –365: –340, –851: –826, –311: –286, –797: –772, –771, –765: –524, –500, –1011: –986, –473: –448, –957: –932, –419: –394, –877: –852, –339: –314, –823: –798, –285: –260, –259, –253: –12] | RU 2 [12, 525: 550, 39: 64, 579: 604, 93: 118, 659: 684, 173: 198, 713: 738, 227: 252, 253, 259: 500, 524, 13: 38, 551: 576, 67: 92, 605: 630, 147: 172, 685: 710, 201: 226, 739: 764, 765, 771: 1012] | | | |
| 2*996-tone RU | RU 1 [–1012: –515, –509: –12, 12: 509, 515: 1012] | | | | |

It should be noted that subcarriers whose indices are -1012, -771, -765, -524, -500, -259, -253, -12, 12, 253, 259, 500, 524, 765, 771, and 1012 in the foregoing Table 31 do not participate in permutation. Therefore, the subcarriers do not change in frequency domain before and after permutation.

**Table 32: Data and pilot subcarrier indices for RUs in a 320 MHz EHT PPDU**

Data and pilot subcarrier indices for RUs in a 320 MHz EHT PPDU

| RU type (type) | RU index and subcarrier range (RU index and subcarrier range) | | | | |
|---|---|---|---|---|---|
| 26-tone RU | RU 1 [–1523: –1498] | RU 2 [–2009: –1984] | RU 3 [–1469: –1444] | RU 4 [–1955: –1930] | RU 5 [–1928: –1903] |
| | RU 6 [–1389: –1364] | RU 7 [–1875: –1850] | RU 8 [–1335: –1310] | RU 9 [–1821: –1796] | |

| RU type (type) | RU index and subcarrier range (RU index and subcarrier range) | | | | |
|---|---|---|---|---|---|
| | RU 10 [−1788: −1763] | RU 11 [−1762: −1737] | RU 12 [−1734: −1709] | RU 13 [−1708: −1683] | RU 14 [−1681: −1656] |
| | RU 15 [−1654: −1629] | RU 16 [−1628: −1603] | RU 17 [−1600: −1575] | RU 18 [−1574: −1549] | RU 19 [not defined] |
| | RU 20 [−2035: −2010] | RU 21 [−1497: −1472] | RU 22 [−1981: −1956] | RU 23 [−1443: −1418] | RU 24 [−1416: −1391] |
| | RU 25 [−1901: −1876] | RU 26 [−1363: −1338] | RU 27 [−1847: −1822] | RU 28 [−1309: −1284] | |
| | RU 29 [−1276: −1251] | RU 30 [−1250: −1225] | RU 31 [−1222: −1197] | RU 32 [−1196: −1171] | RU 33 [−1169: −1144] |
| | RU 34 [−1142: −1117] | RU 35 [−1116: −1091] | RU 36 [−1088: −1063] | RU 37 [−1062: −1037] | |
| | RU 38 [−499: −474] | RU 39 [−985: −960] | RU 40 [−445: −420] | RU 41 [−931: −906] | RU 42 [−904: −879] |
| | RU 43 [−365: −340] | RU 44 [−851: −826] | RU 45 [−311: −286] | RU 46 [−797: −772] | |
| | RU 47 [−764: −739] | RU 48 [−738: −713] | RU 49 [−710: −685] | RU 50 [−684: −659] | RU 51 [−657: −632] |
| | RU 52 [−630: −605] | RU 53 [−604: −579] | RU 54 [−576: −551] | RU 55 [−550: −525] | RU 56 [not defined] |
| | RU 57 [−1011: −986] | RU 58 [−473: −448] | RU 59 [−957: −932] | RU 60 [−419: −394] | RU 61 [−392: −367] |
| | RU 62 [−877: −852] | RU 63 [−339: −314] | RU 64 [−823: −798] | RU 65 [−285: −260] | |
| | RU 66 [−252: −227] | RU 67 [−226: −201] | RU 68 [−198: −173] | RU 69 [−172: −147] | RU 70 [−145: −120] |
| | RU 71 [−118: −93] | RU 72 [−92: −67] | RU 73 [−64: −39] | RU 74 [−38: −13] | |
| | RU 75 [525: 550] | RU 76 [39: 64] | RU 77 [579: 604] | RU 78 [93: 118] | RU 79 [120: 145] |
| | RU 80 [659: 684] | RU 81 [173: 198] | RU 82 [713: 738] | RU 83 [227: 252] | |

| RU type (type) | RU index and subcarrier range (RU index and subcarrier range) | | | | |
|---|---|---|---|---|---|
| | RU 84 [260: 285] | RU 85 [286: 311] | RU 86 [314: 339] | RU 87 [340: 365] | RU 88 [367: 392] |
| | RU 89 [394: 419] | RU 90 [420: 445] | RU 91 [448: 473] | RU 92 [474: 499] | RU 93 [not defined] |
| | RU 94 [13: 38] | RU 95 [551: 576] | RU 96 [67: 92] | RU 97 [605: 630] | RU 98 [632: 657] |

Specifically:

| RU type (type) | RU index and subcarrier range (RU index and subcarrier range) | | | | |
|---|---|---|---|---|---|
| 26-tone RU | RU 99 [147: 172] | RU 100 [685: 710] | RU 101 [201: 226] | RU 102 [739: 764] | |
| | RU 103 [772: 797] | RU 104 [798: 823] | RU 105 [826: 851] | RU 106 [852: 877] | RU 107 [879: 904] |
| | RU 108 [906: 931] | RU 109 [932: 957] | RU 110 [960: 985] | RU 111 [986: 1011] | |
| | RU 112 [1549: 1574] | RU 113 [1063: 1088] | RU 114 [1603: 1628] | RU 115 [1117: 1142] | RU 116 [1144: 1169] |
| | RU 117 [1683: 1708] | RU 118 [1197: 1222] | RU 119 [1737: 1762] | RU 120 [1251: 1276] | |
| | RU 121 [1284: 1309] | RU 122 [1310: 1335] | RU 123 [1338: 1363] | RU 124 [1364: 1389] | RU 125 [1391: 1416] |
| | RU 126 [1418: 1443] | RU 127 [1444: 1469] | RU 128 [1472: 1497] | RU 129 [1498: 1523] | RU 130 [not defined] |
| | RU 131 [1037: 1062] | RU 132 [1575: 1600] | RU 133 [1091: 1116] | RU 134 [1629: 1654] | RU 135 [1656: 1681] |
| | RU 136 [1171: 1196] | RU 137 [1709: 1734] | RU 138 [1225: 1250] | RU 139 [1763: 1788] | |
| | RU 140 [1796: 1821] | RU 141 [1822: 1847] | RU 142 [1850: 1875] | RU 143 [1876: 1901] | RU 144 [1903: 1928] |
| | RU 145 [1930: 1955] | RU 146 [1956: 1981] | RU 147 [1984: 2009] | RU 148 [2010: 2035] | |

| RU type (type) | RU index and subcarrier range (RU index and subcarrier range) | | | | |
|---|---|---|---|---|---|
| 52-tone RU | RU 1 [−1523: −1498, −2009: −1984] | RU 2 [−1469: −1444, −1955: −1930] | RU 3 [−1389: −1364, −1875: −1850] | RU 4 [−1335: −1310, −1821: −1796] | |
| | RU 5 [−1788: −1737] | RU 6 [−1734: −1683] | RU 7 [−1654: −1603] | RU 8 [−1600: −1549] | |
| | RU 9 [−2035: −2010, −1497: −1472] | RU 10 [−1981: −1956, −1443: −1418] | RU 11 [−1901: −1876, −1363: −1338] | RU 12 [−1847: −1822, −1309: −1284] | |
| | RU 13 [−1276: −1225] | RU 14 [−1222: −1171] | RU 15 [−1142: −1091] | RU 16 [−1088: −1037] | |
| | RU 17 [−499: −474, −985: −960] | RU 18 [−445: −420, −931: −906] | RU 19 [−365: −340, −851: −826] | RU 20 [−311: −286, −797: −772] | |
| | RU 21 [−764: −713] | RU 22 [−710: −659] | RU 23 [−630: −579] | RU 24 [−576: −525] | |
| | RU 25 [−1011: −986, −473: −448] | RU 26 [−957: −932, −419: −394] | RU 27 [−877: −852, −339: −314] | RU 28 [−823: −798, −285: −260] | |
| | RU 29 [−252: −201] | RU 30 [−198: −147] | RU 31 [−118: −67] | RU 32 [−64: −13] | |
| | RU 33 [525: 550, 39: 64] | RU 34 [579: 604, 93: 118] | RU 35 [659: 684, 173: 198] | RU 36 [713: 738, 227: 252] | |
| | RU 37 [260: 311] | RU 38 [314: 365] | RU 39 [394: 445] | RU 40 [448: 499] | |

| RU type (type) | RU index and subcarrier range (RU index and subcarrier range) | | | | |
|---|---|---|---|---|---|
| 52-tone RU | RU 41 [13: 38, 551: 576] | RU 42 [67: 92, 605: 630] | RU 43 [147: 172, 685: 710] | RU 44 [201: 226, 739: 764] | |
| | RU 45 [772: 823] | RU 46 [826: 877] | RU 47 [906: 957] | RU 48 [960: 1011] | |
| | RU 49 | RU 50 | RU 51 | RU 52 | |

| RU type (type) | RU index and subcarrier range (RU index and subcarrier range) | | | | |
|---|---|---|---|---|---|
| | [1549: 1574, 1063: 1088] | [1603: 1628, 1117: 1142] | [1683: 1708, 1197: 1222] | [1737: 1762, 1251: 1276] | |
| | RU 53 [1284: 1335] | RU 54 [1338: 1389] | RU 55 [1418: 1469] | RU 56 [1472: 1523] | |
| | RU 57 [1037: 1062, 1575: 1600] | RU 58 [1091: 1116, 1629: 1654] | RU 59 [1171: 1196, 1709: 1734] | RU 60 [1225: 1250, 1763: 1788] | |
| | RU 61 [1796: 1847] | RU 62 [1850: 1901] | RU 63 [1930: 1981] | RU 64 [1984: 2035] | |
| 106-tone RU | RU 1 [-1523: -1498, - 2009:-1984,-1469:-1444,-1955:-1930] | RU 2 [-1389: -1364, - 1875:-1850,-1335:-1310,-1821:-1796] | RU 3 [-1788: -1683] | RU 4 [-1654: -1549] | |
| | RU 5 [-2035: -2010,-1497:-1472,-1981: -1956,-1443: -1418] | RU 6 [-1901: -1876, - 1363: -1338, - 1847:-1822,-1309:-1284] | RU 7 [-1276: -1171] | RU 8 [-1142: -1037] | |
| | RU 9 [-499: -474, - 985: -960, -445: -420, -931: -906] | RU 10 [-365: -340, - 851: -826, -311: -286, -797: -772] | RU 11 [-764: -659] | RU 12 [-630: -525] | |
| | RU 13 [-1011: -986,-473: -448, -957: -932, -419: -394] | RU 14 [-877: -852, - 339:-314,-823: -798, -285: -260] | RU 15 [-252: -147] | RU 16 [-118: -13] | |
| | RU 17 [25: 550, 39: 64, 579: 604, 93: 118] | RU 18 [659: 684, 173: 198, 713: 738, 227: 252] | RU 19 [260: 365] | RU20 [394: 499] | |
| | RU 21 [13: 38, 551: 576, 67: 92, 605: 630] | RU 22 [147: 172,685: 710, 201: 226, 739: 764] | RU 23 [772: 877] | RU 24 [906: 1011] | |
| | RU 25 | RU 26 | RU 27 | RU 28 | |

| RU type (type) | RU index and subcarrier range (RU index and subcarrier range) | | | | |
|---|---|---|---|---|---|
| | [1549: 1574, 1063: 108, 1603: 1628, 1117: 1142] | [1683: 1708, 1197: 1222, 1737: 1762, 1251: 1276] | [1284: 1389] | [1418: 1523] | |
| | RU 29 [1037: 1062, 1575: 1600, 1091: 1116, 1629: 1654] | RU 30 [1171: 1196, 1709: 1734, 1225: 1250, 1763: 1788] | RU 31 [1796: 1901] | RU 32 [1930: 2035] | |
| 242-tone RU | RU 1 [−2036, −1523: −1498, −2009: −1984, −1469: −1444, −1955: −1930, −1389: −1364, −1875: −1850, −1335: −1310, −1821: −1796, −1795] | RU 2 [−1789: −1548] | RU 3 [−1524, −2035: −2010, −1497: −1472, −1981: −1956, −1443: −1418, −1901: −1876, −1363: −1338, −1847: −1822, −1309: −1284, −1283] | RU 4 [−1277: −1036] | |
| | RU 5 [−1012, −499: −474, −985: −960, −445: −420, −931: −906, −365: −340, −851: −826, −311: −286, −797: −772, −771] | RU 6 [−765: −524] | RU 7 [−500, −1011: −986, −473: −448, −957: −932, −419: −394, −877: −852, −339: −314, −823: −798, −285: −260, −259] | RU 8 [−253: −12] | |
| | RU 9 [12, 25: 550, 39: 64, 579: 604, 93: 118, 659: 684, 173: 198, 713: 738, 227: 252, 253] | RU 10 [259: 500] | RU 11 [524, 13: 38, 551: 576, 67: 92, 605: 630, 147: 172, 685: 710, 201: 226, 739: 764, 765] | RU 12 [771: 1012] | |
| | RU 13 [1036, 1549: 1574, 1063: 108, 1603: 1628, 1117: 1142, 1683: 1708, | RU 14 [1283: 1524] | RU 15 [1548, 1037: 1062, 1575: 1600, 1091: 1116, 1629: 1654, 1171: 1196, | RU 16 [1795: 2036] | |

| RU type (type) | RU index and subcarrier range (RU index and subcarrier range) | | | | |
|---|---|---|---|---|---|
| | 1197: 1222, 1737: 1762, 1251: 1276, 1277] | | 1709: 1734, 1225: 1250, 1763: 1788, 1789] | | |
| 484-tone RU | RU 1 [−2036, −1523: −1498, −2009: −1984, −1469: −1444, −1955: −1930, −1389: −1364, −1875: −1850, −1335: −1310, −1821: −1796, −1795, −1789: −1548] | RU 2 [−1524, −2035: −2010, −1497: −1472, −1981: −1956, −1443: −1418, −1901: −1876, −1363: −1338, −1847: −1822, −1309: −1284, −1283, −1277: −1036] | RU 3 [−1012, −499: −474, −985: −960, −445: −420, −931: −906, −365: −340, −851: −826, −311: −286, −797: −772, −771, −765: −524] | RU 4 [−500, −1011: −986, −473: −448, −957: −932, −419: −394, −877: −852, −339: −314, −823: −798, −285: −260, −259, −253: −12] | |
| | RU 5 [12, 25: 550, 39: 64, 579: 604, 93: 118, 659: 684, 173: 198, 713: 738, 227: 252, 253, 259: 500] | RU 6 [524, 13: 38, 551: 576, 67: 92, 605: 630, 147: 172, 685: 710, 201: 226, 739: 764, 765, 771: 1012] | RU 7 [1036, 1549: 1574, 1063: 108, 1603: 1628, 1117: 1142, 1683: 1708, 1197: 1222, 1737: 1762, 1251: 1276, 1277, 1283: 1524] | RU 8 [1548, 1037: 1062, 1575: 1600, 1091: 1116, 1629: 1654, 1171: 1196, 1709: 1734, 1225: 1250, 1763: 1788, 1789, 1795: 2036] | |

| RU type (type) | RU index and subcarrier range (RU index and subcarrier range) | | | | |
|---|---|---|---|---|---|
| 996-tone | RU 1 | RU 2 | RU 3 | RU 4 | |

| RU type (type) | RU index and subcarrier range (RU index and subcarrier range) | | | | |
|---|---|---|---|---|---|
| RU | [−2036, −1523: −1498, −2009: −1984, −1469: −1444, −1955: −1930, −1389: −1364, −1875: −1850, −1335: −1310, −1821: −1796, −1795, −1789: −1548, −1524, −2035: −2010, −1497: −1472, −1981: −1956, −1443: −1418, −1901: −1876, −1363: −1338, −1847: −1822, −1309: −1284, −1283, −1277: −1036] | [−1012, −499: −474, −985: −960, −445: −420, −931: −906, −365: −340, −851: −826, −311: −286, −797: −772, −771, −765: −524, −500, −1011: −986, −473: −448, −957: −932, −419: −394, −877: −852, −339: −314, −823: −798, −285: −260, −259, −253: −12] | [12, 25: 550, 39: 64, 579: 604, 93: 118, 659: 684, 173: 198, 713: 738, 227: 252, 253, 259: 500, 524, 13: 38, 551: 576, 67: 92, 605: 630, 147: 172, 685: 710, 201: 226, 739: 764, 765, 771: 1012] | [1036, 1549: 1574, 1063: 108, 1603: 1628, 1117: 1142, 1683: 1708, 1197: 1222, 1737: 1762, 1251: 1276, 1277, 1283: 1524, 1548, 1037: 1062, 1575: 1600, 1091: 1116, 1629: 1654, 1171: 1196, 1709: 1734, 1225: 1250, 1763: 1788, 1789, 1795: 2036] | |
| 2*996-tone RU | RU 1 [−2036: −1539, −1533: −1036, −1012: −515, −509: −12] | RU 2 [12: 509, 515: 1012, 1036: 1533, 1539: 2036] | | | |

| RU type (type) | RU index and subcarrier range (RU index and subcarrier range) | | | | |
|---|---|---|---|---|---|
| 4*996-tone RU | RU 1 [−2036: −1539, −1533: −1036, −1012: −515, −509: −12, 12: 509, 515: 1012, 1036: 1533, 1539: 2036] | | | | |

It should be noted that subcarriers whose indices are -2036, -1795, -1789, -1548, -1524, -1283, -1277, -1036, -1012, -771, -765, -524, -500, -259, -253, -12, 12, 253, 259, 500, 524, 765, 771, 1012, 1036, 1277, 1283, 1524, 1548, 1789, 1795, and 2036 in the foregoing Table 32 do not participate in permutation. Therefore, the subcarriers do not change in frequency domain before and after permutation.

FIG. 11A to FIG. 11F are described by using an example in which a 26-tone RU is used as a minimum unit of permutation. In some examples, permutation may be performed by using a 52-tone RU as a minimum unit.

For the permutation manner shown in FIG. 11A, it is assumed that indices of RUs included in the VRU before permutation include {1, 2, 3, 4, 5, 6, 7, 8, 9}, {10, 11, 12, 13, 14, 15, 16, 17, 18}+m. In this case, indices of RUs included in the PRU after permutation include {1, 2, 12+m, 13+m, 5, 6, 7, 17+m, 18+m}, {10+m, 11+m, 3, 4, 14+m, 15+m, 16+m, 8, 9}, or {10+m, 11+m, 3, 4, 5, 15+m, 16+m, 8, 9}, {1, 2, 12+m, 13+m, 14+m, 3, 4, 17+m, 18+m}. Similarly, because both the VRU and the PRU may be indicated by using a subcarrier sequence number, mapping tables similar to those shown in Table 11 and Table 12 may also be obtained.

Using m = 0 as an example, it is assumed that the first VRU indicated by the AP includes an RU 1, an RU 2, an RU 3, and an RU 4 in a 26-tone RU of 40 MHz. In this case, the STA may determine that the RUs included in the first PRU may be the RU 1, the RU 2, the RU 12, and the RU 13 in the 26-tone RU shown in Table 3. In other words, subcarrier indices of the first PRU include [-243: -218], [-217: -192], [58: 83] and [84: 109]. Alternatively, the STA determines that the RUs included in the first PRU may be the RU 10, the RU 11, the RU 3, and the RU 4 in the 26-tone RU shown in Table 3. In other words, subcarrier indices of the first PRU include [4: 29], [30: 55], [58: 83], and [84: 109].

In some examples, an embodiment of this application further provides another method for performing permutation by using a 52-tone RU as a minimum unit. One 242-tone RU includes four 52-tone RUs whose indices are respectively {1, 2, 3, 4}, and the other 242-tone RU also includes four 52-tone RUs whose indices are respectively {5, 6, 7, 8}+k. In other words, the 52-tone RU herein is not considered as including two 26-tone RUs, but the 52-tone RU is considered as a whole. Permutation is performed on 52-tone RUs at same locations in the two 242-tone RUs. For example, permutation is performed on a 52-tone RU whose index is 1 and a 52-tone RU whose index is 5+k, and permutation is performed on a 52-tone RU whose index is 3 and a 52-tone RU whose index is 7+k. Alternatively, permutation is performed on a 52-tone RU whose index is 2 and a 52-tone RU whose index is 6+k, and permutation is performed on a 52-tone RU whose index is 4 and a 52-tone RU whose index is 8+k. Herein, k is an integer, and k may be understood as a quantity of 242-tone RUs between the two 242-tone RUs. For example, k = 0, 4, 8, 12, or the like. If the two 242-tone RUs are adjacent in frequency domain, k = 0. I there is one 242-tone RU between the two 242-tone RUs, k = 4. The rest may be deduced by analogy.

For example, when permutation is performed by using a 52-tone RU as a minimum unit, it is assumed that the first VRU allocated by the AP to the STA 1 includes the RU 1 and the RU 2 in the 52-tone RU shown in Table 4. In this case, the STA 1 may determine that the first PRU includes the RU 5 and the RU 2 in the 52-tone RU shown in Table 3. In other words, subcarrier indices include [-252: -201] and [-445: -394]. Alternatively, the STA 1 may determine that the first PRU includes the RU 9 and the RU 2 in the 52-tone RU shown in Table 3. In other words, subcarrier indices include [13: 64] and [-445: -394].

Alternatively, the STA 1 may determine that the first PRU includes the RU 1 and the RU 6 in the 52-tone RU shown in Table 3. In other words, subcarrier indices include [-499: -448] and [-198: -147]. Alternatively, the STA 1 may determine that the first PRU includes the RU 1 and the RU 10 in the 52-tone RU shown in Table 3. In other words, subcarrier indices include [-499: -448] and [67: 118].

Similarly, in another bandwidth, for example, 40 MHz, 80 MHz, 160 MHz, 320 MHz, or a larger bandwidth, the foregoing method for performing permutation between the two 242-tone RUs by using a 26-tone RU as a minimum unit may also be used by using a 242-tone RU as a granularity, or permutation may be performed according to a specific bandwidth by using a larger RU (for example, a 52-tone RU or a 106-tone RU) as a unit (the larger RU herein is not considered as including 26-tone RUs, but as a whole). For details, refer to the foregoing embodiments. Details are not described again.

It should be noted that a pilot subcarrier may participate in permutation, or may not participate in permutation. Alternatively, a pilot subcarrier may be reallocated in the PRU obtained through permutation. This is not specifically limited in this application.

It should be understood that, in this embodiment of this application, permutation may also be performed by using a 106-tone RU as a minimum unit. For details, refer to the foregoing manner of performing permutation by using a 26-tone RU as a minimum unit. Details are not described herein again.

It should be noted that, in the foregoing permutation manner 2, permutation may be performed on the 26-tone RUs in the two 242-tone RUs at symmetrical locations or asymmetrical locations. This is not limited in this application.

Further, this application provides another mapping relationship, namely, a mapping relationship 2, between the first VRU and the first PRU. The following describes the mapping relationship 2. Mapping relationship 2: In this embodiment of this application, subcarrier indices of subcarriers included in the first VRU may be mapped to subcarrier indices of subcarriers included in the first PRU.

In this embodiment of this application, some subcarriers, for example, DC, Null, Guard, and Pilot tone, do not participate in the mapping manner shown in the mapping relationship 2, and locations of these subcarriers in the VRU and the PRU do not change.

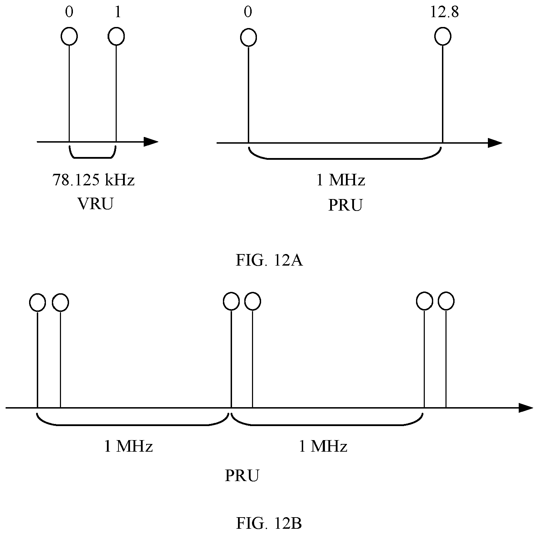

For example, for the VRU, there are 256 subcarriers in 20 MHz, including data, direct current, pilot, guard, and null subcarriers. As shown in FIG. 12A, a spacing between adjacent subcarriers is 20 M/256 = 78.125 kHz. If there is one subcarrier per 1 MHz, an index spacing between adjacent subcarriers in the PRU should be at least 1 MHz/78.125 kHz = 12.8. It should be noted that the subcarrier index is an integer, and is merely an example herein.

If a plurality of subcarriers still have remaining subcarriers after the bandwidth is fully occupied in a manner in which each 1 MHz includes one subcarrier, it is considered that 1 MHz includes two or more subcarriers, so that the plurality of subcarriers occupy adjacent frequency bands. For example, as shown in FIG. 12B, each 1 MHz may include two subcarriers. The two subcarriers are adjacent in frequency domain. In other words, the two subcarriers occupy adjacent frequency bands.

In this embodiment of this application, it is considered that the bandwidth of the first VRU is a positive integer power of 2 of 20 MHz, and is denoted as BW = 20x, where x may be 1, 2, 4, 8, 16, or the like. In other words, a transmission bandwidth corresponding to the first VRU may be 20 MHz, 40 MHz, 80 MHz, 160 MHz, or 320 MHz. If a subsequent WLAN protocol supports a larger bandwidth, the bandwidth corresponding to the first VRU may also be correspondingly increased. In a current WLAN protocol, each 20 MHz corresponds to 9 26-tone RUs, and each 26-tone RU has 26 subcarriers, including two pilot subcarriers and 24 data subcarriers. In this embodiment of this application, $M_t$ may indicate a quantity of 26-tone RUs that participate in mapping in one 20 MHz, $1 \leq M_t \leq 9$, $M_c$ may indicate a quantity of subcarriers that participate in mapping in one 26-tone RU, and $1 \leq M_c \leq 26$. It is assumed that k is an index of a subcarrier included in the VRU, k may be 0, 1, 2, 3, ..., or $M_t*M_c*x-1$, k' is an index of a subcarrier included in the PRU, and k' satisfies the following equation (1):

$$k' = M_t * x * \mathrm{mod}(k, M_c) + \lfloor k/M_c \rfloor \quad \text{equation (1)}$$

$\lfloor \ \rfloor$ indicates a rounding down operation. It should be understood that k herein is obtained by re-numbering subcarriers participating in mapping from 0. For example, for a first 26-tone RU in 20 MHz, it is assumed that all subcarriers participate in mapping. In this case, a subcarrier whose k = 0 may correspond to a subcarrier whose index is -121 in Table 2.

It is assumed that a sequence index of a subcarrier included in the first VRU allocated by the AP to the STA is [0, 1, 2, ..., $M_c$ - 1]+n*$M_c$. In this case, the STA may map the sequence index of the subcarrier of the VRU to the index of the subcarrier of the first PRU according to the foregoing equation (1). The sequence index included in the PRU is [0, 1*$M_t$ * x, 2*$M_t$ * x, 3*$M_t$ * x, ..., ($M_c$ - 1)*$M_t$ * x]+n, where n = 0, 1, 2, ..., or $M_t$ * x - 1.

In this embodiment of this application, a subcarrier included in the VRU is referred to as a virtual subcarrier (virtual subcarrier, VSC), and a subcarrier included in the PRU is referred to as a physical subcarrier (physical subcarrier,

PSC).

A 20 MHz bandwidth includes 9 26-tone RUs, and each 26-tone RU herein has two pilot subcarriers and 24 data subcarriers. It is assumed that all data subcarriers of the 9 26-tone RUs participate in mapping, that is, $M_c$ = 24. In this case, a quantity of 26-tone RUs that participate in mapping in one 20 MHz is $M_t$ = 9, a quantity of subcarriers that participate in mapping in one 26-tone RU is $M_c$ = 24, and x = 1. Herein, k indicates an index of a subcarrier in the VRU, k is an integer, and k is 0, 1, 2, 3, ..., or 24*9-1.

$$k' = 9 * \mathrm{mod}(k, 24) + \lfloor k/24 \rfloor$$

Optionally, in the foregoing equation, because the pilot subcarriers do not participate in mapping, $M_c$ = 24. In some examples, if both pilot subcarriers and data subcarriers participate in mapping, $M_c$ = 26, and k' = 9 * $\mathrm{mod}(k, 26) + \lfloor k/26 \rfloor$ . When the pilot subcarriers do not participate in mapping, locations of the pilot subcarriers may not be considered for numbering the data subcarriers. In other words, only the data subcarriers are numbered.

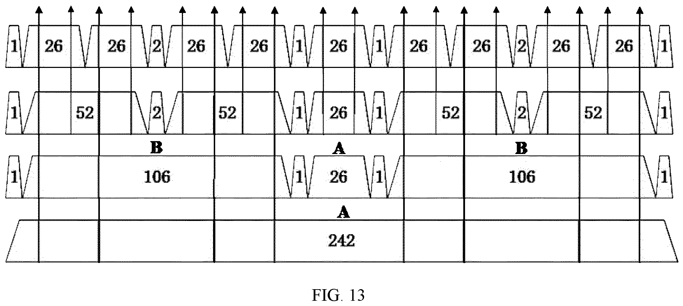

As shown in FIG. 13, for a first 26-tone RU, a range of the sequence index k of the VSC is [0, 23]. After mapping, a value of the sequence index k' of the PSC is [0, 9, 18, 27, ..., 23*9], and increases by 9. For a second 26-tone RU, a range of the sequence index k of the VSC is [24, 47]. After mapping, a value of the sequence index k' of the PSC is [1, 10, 19, 28, ..., 23*9+1], and increases by 9. For a third 26-tone RU, a range of the sequence index k of the VSC is [48, 71]. After mapping, a value of the sequence index k' of the PSC is [2, 11, 20, 29, ..., 23*9+2], and increases by 9. For a fourth 26-tone RU, a range of the sequence index k of the VSC is [72, 95]. After mapping, a value of the sequence index k' of the PSC is [3, 12, 21, 30, ..., 23*9+3], and increases by 9. For a fifth 26-tone RU, a range of the sequence index k of the VSC is [96, 119]. After mapping, a value of the sequence index k' of the PSC is [4, 13, 22, 31, ..., 23*9+4], and increases by 9. By analogy, for a ninth 26-tone RU, a range of the sequence index k of the VSC is [192, 215]. After mapping, a value of the sequence index k' of the PSC is [8, 17, 26, 35, ..., 23*9+8], and increases by 9.

If the AP allocates the first 26-tone RU to the STA, actually a PRU obtained by mapping the first 26-tone RU is allocated to the STA. It should be understood that, for the second to the ninth 26-tone RUs, refer to the descriptions of the first 26-tone RU.

A first 52-tone RU includes the first 26-tone RU and the second 26-tone RU. If the AP allocates the first 52-tone RU to the STA, actually two PRUs obtained by mapping the first 26-tone RU and the second 26-tone RU are allocated to the STA. Sequence indices of subcarriers allocated to the STA are a union set of [0, 9, 18, 27, ..., 23*9] and [1, 10, 19, 28, ..., 23*9+1], that is, [0, 1, 9, 10, 18, 19, 27, 28, ..., 23*9, 23*9+1]. In general, RU subcarriers are distributed on a larger bandwidth. In addition, every two subcarriers are on adjacent frequency bands, for example, subcarriers whose sequence indices are 0 and 1, and subcarriers whose sequence indices are 9 and 10. When every two subcarriers are distributed on adjacent frequency bands, an average value of channel estimation of the two subcarriers may be used as a value of channel estimation, which is referred to as channel smoothing (channel smoothing), so that an estimation result may be more accurate. It should be understood that, for second to fourth 52-tone RUs, refer to the descriptions of the first 52-tone RU.

A first 106-tone RU includes first, second, third, and fourth 26-tone RUs. If the AP allocates the first 106-tone RU to the STA, actually four PRUs obtained by mapping the first, second, third, and fourth 26-tone RUs are allocated to the STA. Sequence indices of subcarriers allocated to the STA are a union set of [0, 9, 18, 27, ..., 23*9], [1, 10, 19, 28, ., 23*9+1], [2, 11, 20, 29, ., 23*9+2], and [3, 12, 21, 30, ., 23*9+3], that is, [0, 1, 2, 3, 9, 10, 11, 12, 18, 19, 20, 21, ..., 23*9, 23*9+1, 23*9+2, 23*9+3]. It should be understood that for descriptions of a second 106-tone RU, refer to the descriptions of the first 106-tone RU. Channel smoothing may be performed on subcarriers distributed on adjacent frequency bands. A quantity of subcarriers shown above is 104, and a subcarrier with a lowest frequency and a subcarrier with a highest frequency do not participate in mapping. Therefore, frequency domain locations of the subcarrier with the lowest frequency and the subcarrier with the highest frequency do not change before and after mapping.

The index used above is a sequence number obtained in ascending order of indices of subcarriers on a frequency band. Sequence numbers one-to-one correspond to the indices of the subcarriers on the frequency band, as shown in Table 2 to Table 6. If the pilot subcarriers do not participate in mapping, when the data subcarriers are numbered, the pilot subcarriers included in each 26-tone RU may not be considered. In other words, only the data subcarriers may be numbered, to obtain sequence indices of the data subcarriers. For example, 9 26-tone RUs included in 20 MHz are used as an example, and an index of a data subcarrier included in the first 26-tone RU is [-121: -96], where the index of the pilot subcarrier is {-116, -102}. An index of a data subcarrier included in the second 26-tone RU is [-95: -70], where the index of the pilot subcarrier is {-90, -76}. By analogy, indices of data subcarriers included in the 9 26-tone RUs may be obtained.

The following shows frequency band indices of pilot subcarriers in each RU.

**Table 33: Frequency band indices of pilot subcarriers in each RU**

| Pilot indices for a 26-tone RU | |
|---|---|
| PPDU BW (protocol data unit bandwidth) | $K_{R26i}$ |
| 20 MHz, i = 1: 9 | {-116, -102}, {-90, -76}, {-62, -48,}, {-36, -22}, {-10, 10}, 122, 36}, {48, 62}, 176, 90}, {102, 116} |
| 40 MHz, i = 1: 18 | {-238, -224}, {-212, -198}, {-184, -170}, {-158, -144}, 1-130, - 116}, 1-104, -90}, 1-78, -64}, 1-50, -36}, 1-24, -10}, {10, 24}, 136, 50}, {64, 78}, {90, 104}, {116, 130}, {144, 158}, {170, 184}, {198, 212}, {224,238} |
| 80 MHz, i = 1: 37 | {-494, -480}, {-468, -454}, {-440, -426}, {-414, -400}, 1-386, - 372}, 1-360, -346}, 1-334, -320}, 1-306, -292}, 1-280, -266}, {-252,-238}, {-226,-212}, {-198,-184}, {-172,-158}, {-144,-130}, {-118, -104}, {-92, -78}, {-64, -50}, {-38, -24}, {-10, 10}, {24, 38}, 150, 64}, 178, 92}, {104, 118}, {130, 144}, {158, 172}, {184, 198}, {212, 226}, {238, 252}, {266, 280}, {292, 306}, {320, 334}, {346, 360}, {372, 386}, {400, 414}, {426, 440}, {454, 468}, {480, 494} |
| 160 MHz, i = 1: 74 | {Pilot subcarrier indices in 80 MHz-512, pilot subcarrier indices in 80 MHz+512} {pilot subcarrier indices in 80 MHz-512, pilot subcarrier indices in 80 MHz+512} |

In the foregoing Table 33, i indicates an index of a 26-tone RU, and values of i are also in ascending order of 26-tone RUs in frequency domain. $K_{R26i}$ indicates the frequency band index of the pilot subcarrier.

The following uses the first 26-tone RU as an example to describe a correspondence between a sequence index and a frequency band index.

**Table 34: Correspondence between sequence indices and frequency band indices of subcarriers in a first 26-tone RU in a 242-tone RU**

| Sequence index | 0 | 1 | 2 | 3 | 4 | 5 | 6 | 7 | 8 |
|---|---|---|---|---|---|---|---|---|---|
| Frequency band index | -121 | -120 | -119 | -118 | -117 | -115 | -114 | -113 | -112 |
| Sequence index | 9 | 10 | 11 | 12 | 13 | 14 | 15 | 16 | 17 |
| Frequency band index | -111 | -110 | -109 | -108 | -107 | -106 | -105 | -104 | -103 |
| Sequence index | 18 | 19 | 20 | 21 | 22 | 23 | | | |
| Frequency band index | -101 | -100 | -99 | -98 | -97 | -96 | | | |

For the foregoing 9 26-tone RUs, sequence indices of data subcarriers are numbered from 0 to 215, and corresponding frequency band indices are:

1-121, -111, -101, -92, -82, -72, -61, -52, -42, -32, -23, -13, 4, 14, 24, 33, 43, 53, 63, 73, 83, 93, 103, 112, -120, -110, -100, -91, -81, -71, -60, -51, -41, -31, -21, -12, 5, 15, 25, 34, 44, 54, 64, 74, 84, 94, 104, 113, - 119, -109, -99, -89, -80, -70, -59, -50, -40, -30, -20, -11, 6, 16, 26, 35, 45, 55, 65, 75, 85, 95, 105, 114, -118, - 108, -98, -88, -79, -68, -58, -49, -39, -29, -19, -9, 7, 17, 27, 37, 46, 56, 66, 77, 86, 96, 106, 115, -117, -107, -97, -87, -78, -67, -57, -47, -38, -28, -18, -8, 8, 18, 28, 38, 47, 57, 67, 78, 87, 97, 107, 117, -115, -106, -96, -86, -77, -66, -56, -46, -37, -27, -17, -7, 9, 19, 29, 39, 49, 58, 68, 79, 88, 98, 108, 118, -114, -105, -95, -85, -75, -65, -55, -45, -35, -26, -16, -6, 11, 20, 30, 40, 50, 59, 70, 80, 89, 99, 109, 119, -113, -104, -94, -84, -74, -64, -54, -44, -34, -25, -15, -5, 12, 21, 31, 41, 51, 60, 71, 81, 91, 100, 110, 120, -112, -103, -93, -83, -73, -63, -53, -43, -33, -24, - 14, -4, 13, 23, 32, 42, 52, 61, 72, 82, 92, 101, 111, 121}.

A 484-tone RU may be considered as including 18 26-tone RUs, and each 26-tone RU herein has two pilot subcarriers and 24 data subcarriers. It is assumed that all data subcarriers of the 18 26-tone RUs participate in mapping. A quantity of 26-tone RUs that participate in mapping in one 20 MHz is $M_t$ = 9, x = 2, and a quantity of subcarriers that participate in mapping in one 26-tone RU is $M_c$ = 24. If k indicates an index of a VSC in a VRU, the value of k is 0, 1, 2, 3, ..., 24*18-1, and each VSC is mapped to a PSC.

$$k' = 18 * \mathrm{mod}(k, 24) + \lfloor k/24 \rfloor$$

Optionally, in the foregoing equation, because the pilot subcarriers do not participate in mapping, $M_c = 24$. In some examples, if both pilot subcarriers and data subcarriers participate in mapping, $M_c = 26$, and k' = 18 *

$\mathrm{mod}(k, 26) + \lfloor k/26 \rfloor$ .

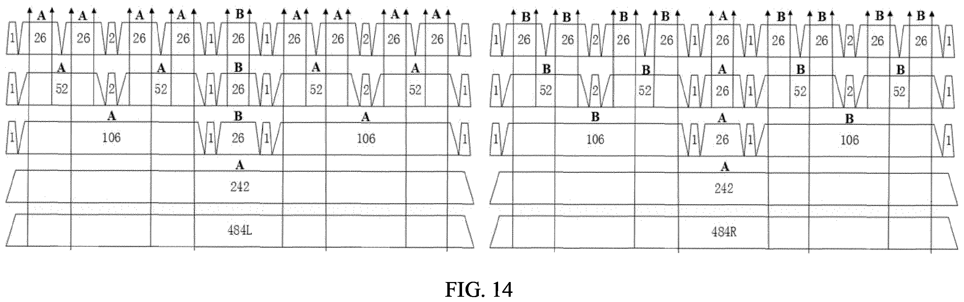

As shown in FIG. 14, for a first 26-tone RU, a range of the index k of the VSC is [0, 23]. After mapping, a value of the index k' of the PSC is [0, 18, 36, 54, ..., 23*18], and increases by 18. For a second 26-tone RU, a range of the index k of the VSC is [24, 47]. After mapping, a value of the index k' of the PSC is [1, 19, 37, 55, ..., 23*18+1], and increases by 18. For a third 26-tone RU, after mapping, a value of the index k' of the PSC is [2, 20, 38, 56, ..., 23*18+2], and increases by 18. By analogy, for a tenth 26-tone RU, after mapping, a value of the index k' of the PSC is [9, 27, 45, 63, ..., 23*18+9], and increases by 18. For an eleventh 26-tone RU, after mapping, a value of the index k' of the PSC is [10, 28, 46, 64, ..., 23*18+10], and increases by 18. For a thirteenth 26-tone RU, after mapping, a value of the index k' of the PSC is [12, 30, 48, 66, ..., 23*18+12], and increases by 18. For second to eighteenth 26-tone RUs, refer to the descriptions of the first 26-tone RU.

A first 52-tone RU includes the first 26-tone RU and the second 26-tone RU. If the AP allocates the first 52-tone RU to the STA, two PRUs obtained by mapping the first 26-tone RU and the second 26-tone RU are allocated to the STA. In this case, a PSC index obtained by mapping the first 52-tone RU is a union set of [0, 18, 36, 54, ..., 23*18] and [1, 19, 37, 55, ..., 23*18+1]. For second to eighth 52-tone RUs, refer to the descriptions of the first 52-tone RU. Channel smoothing may be performed on subcarriers distributed on adjacent frequency bands. In the foregoing mapping manner 2, subcarriers may be distributed on a larger bandwidth.

The index used above is a sequence number obtained in ascending order of indices of subcarriers on a frequency band. Sequence numbers one-to-one correspond to the indices of the subcarriers on the frequency band, as shown in Table 2 to Table 6.

An index of a data subcarrier included in the first 26-tone RU is [-243: -218], where the index of the pilot subcarrier is {-238, -224}.

An index of a data subcarrier included in the second 26-tone RU is [-217: -192], where the index of the pilot subcarrier is {-212, -198}.

By analogy, data subcarrier indices included in 18 26-tone RUs may be obtained.

For the 18 26-tone RUs, sequence indices of data subcarriers are numbered from 0 to 431, and corresponding frequency band indices are:

{-243, -223, -204, -182, -163, -143, -123, -102, -83, -63, -42, -22, 4, 23, 43, 65, 84, 103, 124, 145, 164, 183, 205, 225,
-242, -222, -203, -181, -162, -142, -122, -101, -82, -62, -41, -21, 5, 25, 44, 66, 85, 105, 125, 146, 165, 185, 206, 226,
-241, -221, -202, -180, -161, -141, -121, -100, -81, -61, -40, -20, 6, 26, 45, 67, 86, 106, 126, 147, 166, 186, 207, 227,
-240, -220, -201, -179, -160, -140, -120, -99, -80, -60, -39, -19, 7, 27, 46, 68, 87, 107, 127, 148, 167, 187, 208, 228,
-239, -219, -200, -178, -159, -139, -119, -98, -79, -59, -38, -18, 8, 28, 47, 69, 88, 108, 128, 149, 168, 188, 209, 229,
-237, -218, -199, -177, -157, -138, -118, -97, -77, -58, -37, -17, 9, 29, 48, 70, 89, 109, 129, 150, 169, 189, 210, 230,
-236, -217, -197, -176, -156, -136, -117, -96, -76, -55, -35, -16, 11, 30, 49, 71, 91, 111, 131, 151, 171, 192, 211, 231,
-235, -216, -196, -175, -155, -135, -115, -95, -75, -54, -34, -15, 12, 31, 51, 72, 92, 112, 132, 152, 172, 193, 213, 232,
-234, -215, -195, -174, -154, -134, -114, -94, -74, -53, -33, -14, 13, 32, 52, 73, 93, 113, 133, 153, 173, 194, 214, 233,
-233, -214, -194, -173, -153, -133, -113, -93, -73, -52, -32, -13, 14, 33, 53, 74, 94, 114, 134, 154, 174, 195, 215, 234,
-232, -213, -193, -172, -152, -132, -112, -92, -72, -51, -31, -12, 15, 34, 54, 75, 95, 115, 135, 155, 175, 196, 216, 235,
-231, -211, -192, -171, -151, -131, -111, -91, -71, -49, -30, -11, 16, 35, 55, 76, 96, 117, 136, 156, 176, 197, 217, 236,
-230, -210, -189, -169, -150, -129, -109, -89, -70, -48, -29, -9, 17, 37, 58, 77, 97, 118, 138, 157, 177, 199, 218, 237,
-229, -209, -188, -168, -149, -128, -108, - 88, -69, -47, -28, -8, 18, 38, 59, 79, 98, 119, 139, 159, 178, 200, 219, 239,
-228, -208, -187, -167, -148, -127, - 107, -87, -68, -46, -27, -7, 19, 39, 60, 80, 99, 120, 140, 160, 179, 201, 220, 240,
-227, -207, -186, -166, -147, - 126, -106, -86, -67, -45, -26, -6, 20, 40, 61, 81, 100, 121, 141, 161, 180, 202, 221, 241,
-226, -206, -185, -165, - 146, -125, -105, -85, -66, -44, -25, -5, 21, 41, 62, 82, 101, 122, 142, 162, 181, 203, 222, 242,
-225, -205, -183, - 164, -145, -124, -103, -84, -65, -43, -23, -4, 22, 42, 63, 83, 102, 123, 143, 163, 182, 204, 223, 243}.

Based on the foregoing mapping manner 2, subcarriers may be mapped to a large bandwidth, so that continuous subcarriers on the VRU are located far away from each other on a frequency band in the PRU. This can increase a transmit power.

The mapping manner 2 may be applied to 20 MHz, 40 MHz, 80 MHz, 160 MHz, and 320 MHz bandwidths. In some examples, the mapping manner 1 and the mapping manner 2 may alternatively be used in combination. In other words, an RU (for example, a 26-tone RU is used as a granularity) in a bandwidth may be discrete in frequency domain in the mapping manner 1, and then adjacent subcarriers are discrete in frequency domain in the mapping manner 2. In this way, subcarriers included in the first PRU obtained through mapping may occupy a large bandwidth. Compared with a single mapping manner 1 or mapping manner 2, a larger transmit power can be obtained.

For example, the 40 MHz bandwidth is used as an example for description. In the 40 MHz bandwidth, subcarriers of the PRU corresponding to the 52-tone RU may be distributed more dispersedly. For example, if the subcarriers are evenly distributed on the entire 40 MHz, the index spacing may be 40 M/48/78.125 k = 10.667. For example, in this embodiment of this application, a permutation operation shown in FIG. 11B or FIG. 11C may be performed on a plurality of 26-tone RUs in the 40 MHz bandwidth. Then, indices of subcarriers included in the PRU obtained through mapping are obtained according to the foregoing equation (1). The following describes an example in which a permutation operation shown in FIG. 11B is performed on a plurality of 26-tone RUs in the 40 MHz bandwidth, and then the indices of the subcarriers included in the PRU obtained through mapping are obtained according to the foregoing equation (1).

For example, after permutation, the first 52-tone RU includes a first 26-tone RU and an eleventh 26-tone RU (RUs represented by 1 and 11 in FIG. 11B). After mapping, an obtained PSC index is a union set of indices [0, 18, 36, 54, ..., 23*18] and [10, 28, 46, 64, ..., 23*18+10] of PSCs obtained by mapping the first 26-tone RU and the eleventh 26-tone RU, that is, [0, 10, 18, 28, 36, 46, 54, 64, ..., 23*18, 23*18+10]. An index spacing between adjacent subcarriers is 10 or 8, and is close to 10.667. According to the PRU obtained through mapping in this way, 52-tone RUs basically occupy the 40 MHz bandwidth. It may be learned that, compared with the mapping relationship 2, subcarriers may be distributed on a larger bandwidth by combining the mapping relationship 1 and the mapping relationship 2.

For another example, after permutation, the first 106-tone RU includes first, third, eleventh, and thirteenth 26-tone RUs (RUs represented by 1, 3, 11, and 13 in FIG. 11B). After mapping, an obtained PSC index is a union set of indices of PSCs obtained by mapping the first, third, eleventh, and thirteenth 26-tone RUs, namely, a union set of [0, 18, 36, 54, ..., 23*18], [2, 20, 38, 56, ..., 23*18+2], [10, 28, 46, 64, ..., 23*18+10], and [12, 30, 48, 66, ..., 23*18+12]. Channel smoothing may be performed on subcarriers distributed on adjacent frequency bands.

When the permutation manner shown in FIG. 11B is combined with the mapping manner shown in equation (1), for the foregoing 18 26-tone RUs, sequence indices of data subcarriers are numbered from 0 to 431, and corresponding frequency band indices are:

1-243, -223, 43, -182, 84, 103, -123, -102, 164, 183, -42, 225, 4, 23, -204, 65, -163, -143, 124, 145, - 83, -63, 205, -22, -242, -222, 44, -181, 85, 105, -122, -101, 165, 185, -41, 226, 5, 25, -203, 66, -162, -142, 125, 146, -82, -62, 206, -21, -241, -221, 45, -180, 86, 106, -121, -100, 166, 186, -40, 227, 6, 26, -202, 67, -161, -141, 126, 147, -81, -61, 207, -20, -240, -220, 46, -179, 87, 107, -120, -99, 167, 187, -39, 228, 7, 27, -201, 68, -160, - 140, 127, 148, -80, -60, 208, -19, -239, -219, 47, -178, 88, 108, -119, -98, 168, 188, -38, 229, 8, 28, -200, 69, - 159, -139, 128, 149, -79, -59, 209, -18, -237, -218, 48, -177, 89, 109, -118, -97, 169, 189, -37, 230, 9, 29, -199, 70, -157, -138, 129, 150, -77, -58, 210, -17, -236, 30, 49, -176, 91, -136, -117, -96, 171, -55, -35, 231, 11, -217, -197, 71, -156, 111, 131, 151, -76, 192, 211, -16, -235, 31, 51, -175, 92, -135, -115, -95, 172, -54, -34, 232, 12, - 216, -196, 72, -155, 112, 132, 152, -75, 193, 213, -15, -234, 32, 52, -174, 93, -134, -114, -94, 173, -53, -33, 233, 13, -215, -195, 73, -154, 113, 133, 153, -74, 194, 214, -14, -233, 33, 53, -173, 94, -133, -113, -93, 174, -52, -32, 234, 14, -214, -194, 74, -153, 114, 134, 154, -73, 195, 215, -13, -232, 34, 54, -172, 95, -132, -112, -92, 175, -51, -31, 235, 15, -213, -193, 75, -152, 115, 135, 155, -72, 196, 216, -12, -231, 35, 55, -171, 96, -131, -111, -91, 176, -49, -30, 236, 16, -211, -192, 76, -151, 117, 136, 156, -71, 197, 217, -11, -230, 37, -189, -169, 97, -129, -109, - 89, 177, -48, 218, 237, 17, -210, 58, 77, -150, 118, 138, 157, -70, 199, -29, -9, -229, 38, -188, -168, 98, -128, - 108, -88, 178, -47, 219, 239, 18, -209, 59, 79, -149, 119, 139, 159, -69, 200, -28, -8, -228, 39, -187, -167, 99, - 127, -107, -87, 179, -46, 220, 240, 19, -208, 60, 80, -148, 120, 140, 160, -68, 201, -27, -7, -227, 40, -186, -166, 100, -126, -106, -86, 180, -45, 221, 241, 20, -207, 61, 81,-147, 121, 141, 161, -67, 202, -26, -6, -226, 41, -185, - 165, 101, -125, -105, -85, 181, -44, 222, 242, 21, -206, 62, 82, -146, 122, 142, 162, -66, 203, -25, -5, -225, 42, - 183, -164, 102, -124, -103, -84, 182, -43, 223, 243, 22, -205, 63, 83, -145, 123, 143, 163, -65, 204, -23, -4}.

When the permutation manner shown in FIG. 11E is combined with the mapping manner shown in equation (1), for the 18 26-tone RUs, sequence indices of data subcarriers are numbered from 0 to 431, and corresponding frequency band indices are:

{4, 23, -204, 65, -163, -143, 124, 145, -83, -63, 205, -22, -243, -223, 43, -182, 84, 103, -123, -102, 164, 183, -42, 225, 5, 25, -203, 66, -162, -142, 125, 146, -82, -62, 206, -21, -242, -222, 44, -181, 85, 105, -122, - 101, 165, 185, -41, 226, 6, 26, -202, 67, -161, -141, 126, 147, -81, -61, 207, -20, -241, -221, 45, -180, 86, 106, - 121, -100, 166, 186, -40, 227, 7, 27, -201, 68, -160, -140, 127, 148, -80, -60, 208, -19, -240, -220, 46, -179, 87, 107, -120, -99, 167, 187, -39, 228, 8, 28, -200, 69, -159, -139, 128, 149, -79, -59, 209, -18, -239, -219, 47, -178, 88, 108, -119, -98, 168, 188, -38, 229, 9, 29, -199, 70, -157, -138, 129, 150, -77, -58, 210, -17, -237, -218, 48, - 177, 89, 109, -118, -97, 169, 189, -37, 230, 11, -217, -197, 71, -156, 111, 131, 151, -76, 192, 211, -16, -236, 30, 49, -176, 91, -136, -117, -96, 171, -55, -35, 231, 12, -216, -196, 72, -155, 112, 132, 152, -75, 193, 213, -15, -235, 31, 51, -175, 92, -135, -115, -95, 172, -54, -34, 232, 13, -215, -195, 73, -154, 113, 133, 153, -74, 194, 214, -14, - 234, 32, 52, -174, 93, -134, -114, -94, 173, -53, -33, 233, 14, -214, -194, 74, -153, 114, 134, 154, -73, 195, 215, - 13, -233, 33, 53, -173, 94, -133, -113, -93, 174, -52, -32, 234, 15, -213, -193, 75, -152, 115, 135, 155, -72, 196, 216, -12, -232, 34, 54, -172, 95, -132, -112, -92, 175, -51, -31, 235, 16, -211, -192, 76, -151, 117, 136, 156, -71, 197, 217, -11, -231, 35, 55, -171, 96, -131, -111, -91, 176, -49, -30, 236, 17, -210, 58, 77, -150, 118, 138, 157, - 70, 199, -29, -9, -230, 37, -189, -169, 97, -129, -109, -89, 177, -48, 218, 237, 18, -209, 59, 79, -149, 119, 139, 159, -69, 200, -28, -8, -229, 38, -188, -168, 98, -128, -108, -88, 178, -47, 219, 239, 19, -208, 60, 80, -148, 120, 140, 160, -68, 201, -27, -7, -228, 39, -187, -167, 99, -127, -107, -87, 179, -46, 220, 240, 20, -207, 61, 81, -147, 121, 141, 161, -67, 202, -26, -6, -227, 40, -186, -166, 100, -126, -106, -86, 180, -45, 221, 241, 21, -206, 62, 82, - 146, 122, 142, 162, -66, 203, -25, -5, -226, 41, -185, -165, 101, -125, -105, -85, 181, -44, 222, 242, 22, -205, 63, 83, -145, 123, 143, 163, -65, 204, -23, -4, -225, 42, -183, -164, 102, -124, -103, -84, 182, -43, 223, 243}.

An 80 MHz bandwidth includes 36 26-tone RUs, and each 26-tone RU herein has two pilot subcarriers and 24 data subcarriers. It is assumed that all data subcarriers of the 36 26-tone RUs participate mapping. A quantity of 26-tone RUs that participate in mapping in one 20 MHz is $M_t = 9$, and a quantity of subcarriers that participate in mapping in one 26-tone RU is $M_c = 24$. If k indicates an index of a VSC in a VRU, the value of k is 0, 1, 2, 3, ..., 24*36-1, and each VSC is mapped to a PSC.

$$k' = 36 * \mathrm{mod}(k, 24) + \lfloor k/24 \rfloor$$

Optionally, in the foregoing equation, because the pilot subcarriers do not participate in mapping, $M_c = 24$. In some examples, if both pilot subcarriers and data subcarriers participate in mapping, $M_c = 26$, and k' = 36 * $\mathrm{mod}(k, 26) + \lfloor k/26 \rfloor$.

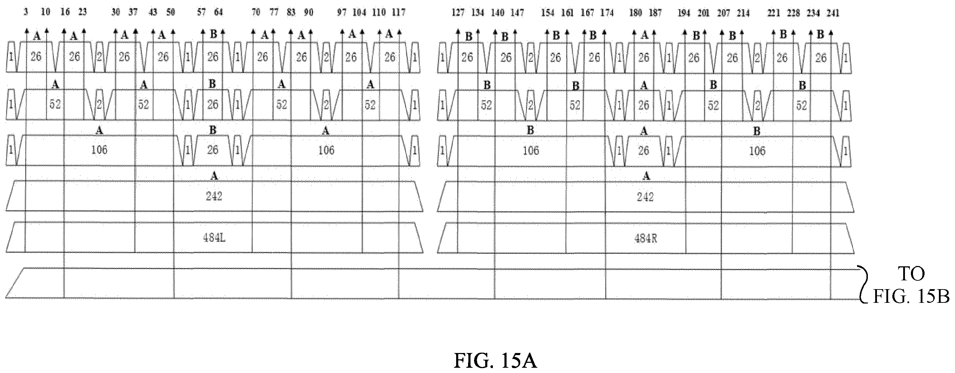

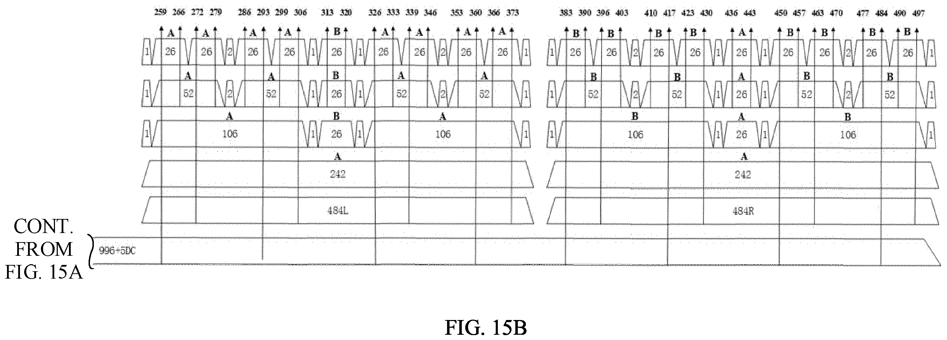

As shown in FIG. 15A and FIG. 15B, for a first 26-tone RU, a range of the index k of the VSC is [0, 23]. After mapping, a value of the index k' of the PSC is [0, 36, 72, ..., 23*36], and increases by 36. For a second 26-tone RU, a range of the index k of the VSC is [24, 47]. After mapping, a value of the index k' of the PSC is [1, 37, 73, ..., 23*36+1], and increases by 36. For a third 26-tone RU, after mapping, a value of the index k' of the PSC is [2, 38, 74, ..., 23*36+2], and increases by 36. For a fourth 26-tone RU, after mapping, a value of the index k' of the PSC is [3, 39, 75, ..., 23*36+3], and increases by 36. By analogy, for a tenth 26-tone RU, after mapping, a value of the index k' of the PSC is [9, 45, 81, ..., 23*36+9], and increases by 36. For an eleventh 26-tone RU, after mapping, a value of the index k' of the PSC is [10, 46, 82, ..., 23*36+10], and increases by 36. For a thirteenth 26-tone RU, after mapping, a value of the index k' of the PSC is [12, 48, 84, ..., 23*36+12], and increases by 36. For a nineteenth 26-tone RU, after mapping, a value of the index k' of the PSC is [18, 54, 90, ., 23*36+18], and increases by 36. For a twentieth 26-tone RU, after mapping, a value of the index k' of the PSC is [19, 55, 91, ..., 23*36+19], and increases by 36. For a twenty-second 26-tone RU, after mapping, a value of the index k' of the PSC is [21, 57, 93, ..., 23*36+21], and increases by 36.

A first 52-tone RU includes the first 26-tone RU and the second 26-tone RU. If the AP allocates the first 52-tone RU to the STA, two PRUs obtained by mapping the first 26-tone RU and the second 26-tone RU are allocated to the STA. In this case, a PSC index obtained by mapping the first 52-tone RU is a union set of [0, 36, 72, ..., 23*36] and [1, 37, 73, ..., 23*36+1]. Channel smoothing may be performed on subcarriers distributed on adjacent frequency bands.

Similarly, if the AP allocates the first 106-tone RU to the STA, four PRUs obtained by mapping the first, second, third, and fourth 26-tone RUs are allocated to the STA, and a corresponding PSC index obtained through mapping is a union set of [0, 36, 72, ..., 23*36], [1, 37, 73, ..., 23*36+1], [2, 38, 74, ..., 23*36+2], and [3, 39, 75, ..., 23*36+3]. Channel smoothing may be performed on subcarriers distributed on adjacent frequency bands.

It should be understood that, for other RUs in a 996-tone RU, such as second to thirty-second 52-tone RUs and second to sixteenth 106-tone RUs, refer to the foregoing descriptions. Details are not described herein again.

The index used above is a sequence number obtained in ascending order of indices of subcarriers on a frequency band. Sequence numbers one-to-one correspond to the indices of the subcarriers on the frequency band, as shown in Table 2 to Table 6.

An index of a data subcarrier included in the first 26-tone RU is [-499: -474], where the index of the pilot subcarrier is {-494, -480}.

An index of a data subcarrier included in the second 26-tone RU is [-473: -448], where the index of the pilot subcarrier is {-468, -454}.

By analogy, data subcarrier indices included in 36 26-tone RUs may be obtained.

For the foregoing 36 26-tone RUs, sequence indices of data subcarriers are numbered from 0 to 863, and corresponding frequency band indices are:
1-499, -460, -419, -379, -339, -298, -252, -213, -172, -132, -92, -51, 13, 52, 93, 133, 173, 214, 260, 299, 340, 380, 420, 461, -498, -459, -418, -378, -338, -297, -251, -212, -171, -131, -91, -50, 14, 53, 94, 134, 174, 215, 261, 300, 341, 381, 421, 462, -497, -458, -417, -377, -337, -296, -250, -211, -170, -130, -90, -49, 15, 54, 95, 135, 175, 216, 262, 301, 342, 382, 422, 463, -496, -457, -416, -376, -336, -295, -249, -210, -169, -129, -89, -48, 16, 55, 96, 136, 176, 217, 263, 302, 343, 383, 423, 464, -495, -456, -415, -375, -335, -294, -248, -209, -168, -128, -88, -47, 17, 56, 97, 137, 177, 218, 264, 303, 344, 384, 424, 465, -493, -455, -413, -374, -333, -293, -247, -208, - 167, -127, -87, -46, 19, 57, 99, 138, 179, 219, 265, 304, 345, 385, 425, 466, -492, -453, -412, -373, -332, -291, - 245, -207, -165, -125, -85, -45, 20, 59, 100, 139, 180, 221, 267, 305, 347, 387, 427, 467, -491, -452, -411, -371, - 331,-290, -244, -205, -164, -124, -84, -43, 21, 60, 101, 141, 181, 222, 268, 307, 348, 388, 428, 469, -490, -451, - 410, -370, -330, -289, -243, -204, -163, -123, -83, -42, 22, 61, 102, 142, 182, 223, 269, 308, 349, 389, 429, 470, - 489, -450, -409, -369, -329, -288, -242, -203, -162, -122, -82, -41, 23, 62, 103, 143, 183, 224, 270, 309, 350, 390, 430, 471, -488, -449, -408, -368, -328, -287, -241, -202, -161, -121, -81, -40, 24, 63, 104, 144, 184, 225, 271, 310, 351, 391, 431, 472, -487, -448, -407, -367, -327, -286, -240, -201, -160, -120, -80, -39, 25, 64, 105, 145, 185, 226, 272, 311, 352, 392, 432, 473, -486, -445, -406, -365, -326, -285, -239, -198, -159, -118, -79, -38, 26, 67, 106, 147, 186, 227, 273, 314, 353, 394, 433, 474, -485, -444, -405, -364, -325, -284, -238, -197, -158, -117, - 78, -37, 27, 68, 107, 148, 187, 228, 274, 315, 354, 395, 434, 475, -484, -443, -404, -363, -324, -283, -237, -196, - 157, -116, -77, -36, 28, 69, 108, 149, 188, 229, 275, 316, 355, 396, 435, 476, -483, -442, -403, -362, -323, -282, - 236, -195, -156, -115, -76, -35, 29, 70, 109, 150, 189, 230, 276, 317, 356, 397, 436, 477, -482, -441, -402, -361, - 322, -281,-235, -194, -155, -114, -75, -34, 30, 71, 110, 151, 190, 231, 277, 318, 357, 398, 437, 478, -481,-439, - 401,-359, -321,-279, -234, -193, -154, -113, -74, -33, 31, 73, 111, 153, 191, 233, 278, 319, 358, 399, 438, 479, - 479, -438, -399, -358, -319, -278, -233, -191, -153, -111, -73, -31, 33, 74, 113, 154, 193, 234, 279, 321, 359, 401, 439, 481, -478, -437, -398, -357, -318, -277, -231, -190, -151, -110, -71, -30, 34, 75, 114, 155, 194, 235, 281, 322, 361, 402, 441, 482, -477, -436, -397, -356, -317, -276, -230, -189, -150, -109, -70, -29, 35, 76, 115, 156, 195, 236, 282, 323, 362, 403, 442, 483, -476, -435, -396, -355, -316, -275, -229, -188, -149, -108, -69, -28, 36, 77, 116, 157, 196, 237, 283, 324, 363, 404, 443, 484, -475, -434, -395, -354, -315, -274, -228, -187, -148, -107, - 68, -27, 37, 78, 117, 158, 197, 238, 284, 325, 364, 405, 444, 485, -474, -433, -394, -353, -314, -273, -227, -186, - 147, -106, -67, -26, 38, 79, 118, 159, 198, 239, 285, 326, 365, 406, 445, 486, -473, -432, -392, -352, -311,-272, - 226, -185, -145, -105, -64, -25, 39, 80, 120, 160, 201, 240, 286, 327, 367, 407, 448, 487, -472, -431, -391, -351, - 310, -271, -225, -184, -144, -104, -63, -24, 40, 81, 121, 161, 202, 241, 287, 328, 368, 408, 449, 488, -471, -430, - 390, -350, -309, -270, -224, -183, -143, -103, -62, -23, 41, 82, 122, 162, 203, 242, 288, 329, 369, 409, 450, 489, - 470, -429, -389, -349, -308, -269, -223, -182, -142, -102, -61, -22, 42, 83, 123, 163, 204, 243, 289, 330, 370, 410, 451, 490, -469, -428, -388, -348, -307, -268, -222, -181, -141, -101, -60, -21, 43, 84, 124, 164, 205, 244, 290, 331, 371, 411, 452, 491, -467, -427, -387, -347, -305, -267, -221, -180, -139, -100, -59, -20, 45, 85, 125, 165, 207, 245, 291, 332, 373, 412, 453, 492, -466, -425, -385, -345, -304, -265, -219, -179, -138, -99, -57, -19, 46, 87, 127, 167, 208, 247, 293, 333, 374, 413, 455, 493, -465, -424, -384, -344, -303, -264, -218, -177, -137, -97, -56, - 17, 47, 88, 128, 168, 209, 248, 294, 335, 375, 415, 456, 495, -464, -423, -383, -343, -302, -263, -217, -176, -136, -96, -55, -16, 48, 89, 129, 169, 210, 249, 295, 336, 376, 416, 457, 496, -463, -422, -382, -342, -301,-262, -216, - 175, -135, -95, -54, -15, 49, 90, 130, 170, 211, 250, 296, 337, 377, 417, 458, 497, -462, -421, -381, -341, -300, - 261, -215, -174, -134, -94, -53, -14, 50, 91, 131, 171, 212, 251, 297, 338, 378, 418, 459, 498, -461, -420, -380, - 340, -299, -260, -214, -173, -133, -93, -52, -13, 51, 92, 132, 172, 213, 252, 298, 339, 379, 419, 460, 499}.

With the foregoing mapping relationship, subcarriers may be distributed on a larger bandwidth.

In the 80 MHz bandwidth, subcarriers of the PRU corresponding to the 52-tone RU and the 106-tone RU may also be distributed more dispersedly. For example, if the 52-tone RUs are evenly distributed on the entire 80 MHz, the index spacing may be 80 M/48/78.125 k = 21.333 > 12.8. If the 106-tone RUs are evenly distributed on the entire 80 MHz, the index spacing may be 80 M/98/78.125 k = 10.449.

In the 80 MHz bandwidth, permutation is separately performed on a left 484-tone RU and a right 484-tone RU in the permutation manner shown in FIG. 11B or FIG. 11E. The following describes an example in which in the 80 MHz bandwidth, permutation is separately performed on a left 484-tone RU and a right 484-tone RU in the permutation manner shown in FIG. 11B. It should be understood that the 160 MHz bandwidth may be considered as two replications of the foregoing 80 MHz bandwidth, and the 360 MHz bandwidth may be considered as four replications of the foregoing 80 MHz bandwidth.

For example, a second 26-tone RU (an RU represented by 2 in FIG. 11B) is permuted into an eleventh 26-tone RU (an RU represented by 11 in FIG. 11B). A PSC index obtained through mapping is an index of a PSC obtained by mapping the eleventh 26-tone RU, that is, [10, 46, 82, ..., 23*36+10], and increases by 36.

For example, after permutation, the first 52-tone RU includes a first 26-tone RU (an RU represented by 1 in FIG. 11B) and an eleventh 26-tone RU (an RU represented by 11 in FIG. 11B). After mapping, an obtained PSC index is a union set of indices [0, 36, 72, ..., 23*36] and [10, 46, 82, ..., 23*36+10] of PSCs obtained by mapping the first 26-tone RU and the eleventh 26-tone RU, that is, [0, 10, 36, 46, 72, 82, ..., 23*36, 23*36+10]. An index spacing between adjacent subcarriers is 10 or 26, and is close to or exceeds 12.8. According to the PRU of such a design, 52-tone RUs basically occupy the 80 MHz bandwidth. It may be learned that, compared with the mapping relationship 2, subcarriers are distributed on a larger bandwidth by combining the mapping relationship 1 and the mapping relationship 2.

For another example, after permutation, the first 106-tone RU includes first, third, eleventh, and thirteenth 26-tone RUs (RUs represented by 1, 3, 11, and 13 in FIG. 11B). After mapping, an obtained PSC index is a union set of indices of PSCs obtained by mapping the first, third, eleventh, and thirteenth 26-tone RUs, namely, a union set of [0, 36, 72, ..., 23*36], [2, 38, 74, ..., 23*36+2], [10, 46, 82, ..., 23*36+10], and [12, 48, 84, ..., 23*36+12]. Channel smoothing may be performed on subcarriers distributed on adjacent frequency bands.

In the permutation manner shown in FIG. 11B, for 36 26-tone RUs, sequence indices of data subcarrier are numbered from 0 to 863, and corresponding frequency band indices are:
1-499, -213, -172, -379, -92, -298, -252, -460, -419, -132, -339, -51, 13, 299, 340, 133, 420, 214, 260, 52, 93, 380, 173, 461, -498, -212, -171, -378, -91, -297, -251, -459, -418, -131, -338, -50, 14, 300, 341, 134, 421, 215, 261, 53, 94, 381, 174, 462, -497, -211,-170, -377, -90, -296, -250, -458, -417, -130, -337, -49, 15, 301, 342, 135, 422, 216, 262, 54, 95, 382, 175, 463, -496, -210, -169, -376, -89, -295, -249, -457, -416, -129, -336, -48, 16, 302, 343, 136, 423, 217, 263, 55, 96, 383, 176, 464, -495, -209, -168, -375, -88, -294, -248, -456, -415, -128, - 335, -47, 17, 303, 344, 137, 424, 218, 264, 56, 97, 384, 177, 465, -493, -208, -167, -374, -87, -293, -247, -455, - 413, -127, -333, -46, 19, 304, 345, 138, 425, 219, 265, 57, 99, 385, 179, 466, -492, -207, -165, -373, -85, -291, - 245, -453, -412, -125, -332, -45, 20, 305, 347, 139, 427, 221, 267, 59, 100, 387, 180, 467, -491, -205, -164, -371, -84, -290, -244, -452, -411, -124, -331, -43, 21, 307, 348, 141, 428, 222, 268, 60, 101, 388, 181, 469, -490, -204, -163, -370, -83, -289, -243, -451, -410, -123, -330, -42, 22, 308, 349, 142, 429, 223, 269, 61, 102, 389, 182, 470, -489, -203, -162, -369, -82, -288, -242, -450, -409, -122, -329, -41, 23, 309, 350, 143, 430, 224, 270, 62, 103, 390, 183, 471, -488, -202, -161, -368, -81, -287, -241, -449, -408, -121, -328, -40, 24, 310, 351, 144, 431, 225, 271, 63, 104, 391, 184, 472, -487, -201, -160, -367, -80, -286, -240, -448, -407, -120, -327, -39, 25, 311, 352, 145, 432, 226, 272, 64, 105, 392, 185, 473, -486, -445, -159, -365, -79, -38, -239, -198, -406, -118, -326, -285, 26, 67, 353, 147, 433, 474, 273, 314, 106, 394, 186, 227, -485, -444, -158, -364, -78, -37, -238, -197, -405, -117, -325, -284, 27, 68, 354, 148, 434, 475, 274, 315, 107, 395, 187, 228, -484, -443, -157, -363, -77, -36, -237, -196, -404, -116, -324, -283, 28, 69, 355, 149, 435, 476, 275, 316, 108, 396, 188, 229, -483, -442, -156, -362, -76, -35, -236, -195, -403, -115, -323, -282, 29, 70, 356, 150, 436, 477, 276, 317, 109, 397, 189, 230, -482, -441, -155, - 361, -75, -34, -235, -194, -402, -114, -322, -281, 30, 71, 357, 151, 437, 478, 277, 318, 110, 398, 190, 231, -481, - 439, -154, -359, -74, -33, -234, -193, -401, -113, -321, -279, 31, 73, 358, 153, 438, 479, 278, 319, 111, 399, 191, 233, -479, -438, -153, -358, -73, -31, -233, -191, -399, -111, -319, -278, 33, 74, 359, 154, 439, 481, 279, 321, 113, 401, 193, 234, -478, -437, -151, -357, -71, -30, -231, -190, -398, -110, -318, -277, 34, 75, 361, 155, 441, 482, 281, 322, 114, 402, 194, 235, -477, -436, -150, -356, -70, -29, -230, -189, -397, -109, -317, -276, 35, 76, 362, 156, 442, 483, 282, 323, 115, 403, 195, 236, -476, -435, -149, -355, -69, -28, -229, -188, -396, -108, -316, - 275, 36, 77, 363, 157, 443, 484, 283, 324, 116, 404, 196, 237, -475, -434, -148, -354, -68, -27, -228, -187, -395, - 107, -315, -274, 37, 78, 364, 158, 444, 485, 284, 325, 117, 405, 197, 238, -474, -433, -147, -353, -67, -26, -227, - 186, -394, -106, -314, -273, 38, 79, 365, 159, 445, 486, 285, 326, 118, 406, 198, 239, -226, -432, -392, -352, -311, -25, -473, -185, -145, -105, -64, -272, 286, 80, 120, 160, 201, 487, 39, 327, 367, 407, 448, 240, -225, -431, -391, -351,-310, -24, -472, -184, -144, -104, -63, -271, 287, 81, 121, 161, 202, 488, 40, 328, 368, 408, 449, 241, -224, -430, -390, -350, -309, -23, -471, -183, -143, -103, -62, -270, 288, 82, 122, 162, 203, 489, 41, 329, 369, 409, 450, 242, -223, -429, -389, -349, -308, -22, -470, -182, -142, -102, -61, -269, 289, 83, 123, 163, 204, 490, 42, 330, 370, 410, 451, 243, -222, -428, -388, -348, -307, -21, -469, -181, -141, -101, -60, -268, 290, 84, 124, 164, 205, 491, 43, 331, 371, 411, 452, 244, -221, -427, -387, -347, -305, -20, -467, -180, -139, -100, -59, -267, 291, 85, 125, 165, 207, 492, 45, 332, 373, 412, 453, 245, -219, -425, -385, -345, -304, -19, -466, -179, -138, -99, -57, - 265, 293, 87, 127, 167, 208, 493, 46, 333, 374, 413, 455, 247, -218, -424, -384, -344, -303, -17, -465, -177, -137, -97, -56, -264, 294, 88, 128, 168, 209, 495, 47, 335, 375, 415, 456, 248, -217, -423, -383, -343, -302, -16, -464, - 176, -136, -96, -55, -263, 295, 89, 129, 169, 210, 496, 48, 336, 376, 416, 457, 249, -216, -422, -382, -342, -301, - 15, -463, -175, -135, -95, -54, -262, 296, 90, 130, 170, 211, 497, 49, 337, 377, 417, 458, 250, -215, -421, -381, - 341, -300, -14, -462, -174, -134, -94, -53, -261, 297, 91, 131, 171, 212, 498, 50, 338, 378, 418, 459, 251, -214, - 420, -380, -340, -299, -13, -461, -173, -133, -93, -52, -260, 298, 92, 132, 172, 213, 499, 51, 339, 379, 419, 460, 252}.

If the permutation manner shown in 11E is used, for 36 26-tone RUs, sequence indices of data subcarriers are numbered from 0 to 863, and corresponding frequency band indices are:
{-499, 52, 93, -379, 173, -298, -252, 299, 340, -132, 420, -51, 13, -460, -419, 133, -339, 214, 260, - 213, -172, 380, -92, 461, -498, 53, 94, -378, 174, -297, -251, 300, 341, -131, 421, -50, 14, -459, -418, 134, -338, 215, 261, -212, -171, 381, -91, 462, -497, 54, 95, -377, 175, -296, -250, 301, 342, -130, 422, -49, 15, -458, -417, 135, -337, 216, 262, -211, -170, 382, -90, 463, -496, 55, 96, -376, 176, -295, -249, 302, 343, -129, 423, -48, 16,-457, -416, 136, -336, 217, 263, -210, -169, 383, -89, 464, -495, 56, 97, -375, 177, -294, -248, 303, 344, -128, 424, -47, 17, -456, -415, 137, -335, 218, 264, -209, -168, 384, -88, 465, -493, 57, 99, -374, 179, -293, -247, 304, 345, -127, 425, -46, 19, -455, -413, 138, -333, 219, 265, -208, -167, 385, -87, 466, -492, 59, 100, -373, 180, -291, - 245, 305, 347, -125, 427, -45, 20, -453, -412, 139, -332, 221, 267, -207, -165, 387, -85, 467, -491, 60, 101, -371, 181, -290, -244, 307, 348, -124, 428, -43, 21, -452, -411, 141, -331, 222, 268, -205, -164, 388, -84, 469, -490, 61, 102, -370, 182, -289, -243, 308, 349, -123, 429, -42, 22, -451, -410, 142, -330, 223, 269, -204, -163, 389, -83, 470, -489, 62, 103, -369, 183, -288, -242, 309, 350, -122, 430, -41, 23, -450, -409, 143, -329, 224, 270, -203, - 162, 390, -82, 471, -488, 63, 104, -368, 184, -287, -241, 310, 351, -121, 431, -40, 24, -449, -408, 144, -328, 225, 271, -202, -161, 391, -81, 472, -487, 64, 105, -367, 185, -286, -240, 311, 352, -120, 432, -39, 25, -448, -407, 145, -327, 226, 272, -201, -160, 392, -80, 473, -486, -445, 106, -365, 186, 227, -239, -198, 353, -118, 433, 474, 26, 67, -406, 147, -326, -285, 273, 314, -159, 394, -79, -38, -485, -444, 107, -364, 187, 228, -238, -197, 354, -117, 434, 475, 27, 68, -405, 148, -325, -284, 274, 315, -158, 395, -78, -37, -484, -443, 108, -363, 188, 229, -237, -196, 355, -116, 435, 476, 28, 69, -404, 149, -324, -283, 275, 316, -157, 396, -77, -36, -483, -442, 109, -362, 189, 230, -236, -195, 356, -115, 436, 477, 29, 70, -403, 150, -323, -282, 276, 317, -156, 397, -76, -35, -482, -441, 110, -361, 190, 231, -235, -194, 357, -114, 437, 478, 30, 71,-402, 151, -322, -281, 277, 318, -155, 398, -75, -34, -481, -439, 111, -359, 191, 233, -234, -193, 358, -113, 438, 479, 31, 73, -401, 153, -321, -279, 278, 319, -154, 399, -74, -33, -479, -438, 113, -358, 193, 234, -233, -191, 359, -111, 439, 481, 33, 74, -399, 154, -319, -278, 279, 321, -153, 401, -73, -31, -478, -437, 114, -357, 194, 235, -231, -190, 361, -110, 441, 482, 34, 75, -398, 155, -318, -277, 281, 322, - 151, 402, -71, -30, -477, -436, 115, -356, 195, 236, -230, -189, 362, -109, 442, 483, 35, 76, -397, 156, -317, -276, 282, 323, -150, 403, -70, -29, -476, -435, 116, -355, 196, 237, -229, -188, 363, -108, 443, 484, 36, 77, -396, 157, -316, -275, 283, 324, -149, 404, -69, -28, -475, -434, 117, -354, 197, 238, -228, -187, 364, -107, 444, 485, 37, 78, -395, 158, -315, -274, 284, 325, -148, 405, -68, -27, -474, -433, 118, -353, 198, 239, -227, -186, 365, -106, 445, 486, 38, 79, -394, 159, -314, -273, 285, 326, -147, 406, -67, -26, 39, -432, -392, -352, -311, 240, 286, -185, -145, -105, -64, 487, -473, 80, 120, 160, 201, -272, -226, 327, 367, 407, 448, -25, 40, -431, -391, -351, -310, 241, 287, -184, -144, -104, -63, 488, -472, 81, 121, 161, 202, -271, -225, 328, 368, 408, 449, -24, 41, -430, -390, -350, - 309, 242, 288, -183, -143, -103, -62, 489, -471, 82, 122, 162, 203, -270, -224, 329, 369, 409, 450, -23, 42, -429, - 389, -349, -308, 243, 289, -182, -142, -102, -61, 490, -470, 83, 123, 163, 204, -269, -223, 330, 370, 410, 451, - 22, 43, -428, -388, -348, -307, 244, 290, -181, -141, -101, -60, 491, -469, 84, 124, 164, 205, -268, -222, 331, 371, 411, 452, -21, 45, -427, -387, -347, -305, 245, 291, -180, -139, -100, -59, 492, -467, 85, 125, 165, 207, -267, - 221, 332, 373, 412, 453, -20, 46, -425, -385, -345, -304, 247, 293, -179, -138, -99, -57, 493, -466, 87, 127, 167, 208, -265, -219, 333, 374, 413, 455, -19, 47, -424, -384, -344, -303, 248, 294, -177, -137, -97, -56, 495, -465, 88, 128, 168, 209, -264, -218, 335, 375, 415, 456, -17, 48, -423, -383, -343, -302, 249, 295, -176, -136, -96, -55, 496, -464, 89, 129, 169, 210, -263, -217, 336, 376, 416, 457, -16, 49, -422, -382, -342, -301, 250, 296, -175, -135, - 95, -54, 497, -463, 90, 130, 170, 211, -262, -216, 337, 377, 417, 458, -15, 50, -421, -381, -341, -300, 251, 297, - 174, -134, -94, -53, 498, -462, 91, 131, 171, 212, -261, -215, 338, 378, 418, 459, -14, 51, -420, -380, -340, -299, 252, 298, -173, -133, -93, -52, 499, -461, 92, 132, 172, 213, -260, -214, 339, 379, 419, 460, -13}.

In the foregoing description, m = 0 in FIG. 11B means that after permutation is performed between adjacent 242-tone RUs, the VRU is mapped to the first PRU according to the equation shown in equation (1).

It should be understood that m may alternatively be 9, 18, 27, or the like. The following describes an example in which m = 9. In other words, permutation is performed between the first 242-tone RU and the third 242-tone RU, or permutation is performed between the second 242-tone RU and the fourth 242-tone RU.

As shown in FIG. 11C, for example, after permutation, the first 52-tone RU includes a first 26-tone RU and a twentieth 26-tone RU (RUs represented by 1L and 2R in the figure). After mapping, an obtained PSC index is a union set of indices [0, 36, 72, ..., 23*36] and [19, 55, 91, ., 23*36+19] of PSCs obtained by mapping the first 26-tone RU and the twentieth 26-tone RU, that is, [0, 19, 36, 55, 72, 91, ..., 23*36, 23*36+19]. An index spacing between adjacent subcarriers, for example, subcarriers whose indices are 0 and 19 or subcarriers whose indices are 19 and 36, is 19 or 17, and exceeds 12.8. According to the foregoing method, 52-tone RUs basically occupy the 80 MHz bandwidth. It may be learned that, compared with the mapping relationship 2, subcarriers are distributed on a larger bandwidth by combining the mapping relationship 1 and the mapping relationship 2.

For another example, after permutation, the first 106-tone RU includes first, twentieth, third, and twenty-second 26-tone RUs (RUs represented by 1L, 2R, 3L, and 4R in the figure). After mapping, an obtained PSC index is a union set of indices of PSCs obtained by mapping the first, twentieth, third, and twenty-second 26-tone RUs, namely, aunion set of [0, 36, 72, ..., 23*36], [19, 55, 91, ..., 23*36+19], [2, 38, 74, ..., 23*36+2], and [21, 57, 93, ..., 23*36+21]. Channel smoothing may be performed on subcarriers distributed on adjacent frequency bands. A spacing of subcarriers not on an adjacent frequency band, for example, subcarriers whose indices are 2 and 19 or subcarriers whose indices are 0 and 19, is 17 or 19, and exceeds 12.8. It may be learned that, compared with the mapping relationship 2, subcarriers are distributed on a larger bandwidth by combining the mapping relationship 1 and the mapping relationship 2.

In the permutation manner shown in FIG. 11C, for 36 26-tone RUs, sequence indices of data subcarrier are numbered from 0 to 863, and corresponding frequency band indices are:

{-499, 52, 93, -379, 173, -298, -252, 299, 340, -132, 420, -51, 13, -460, -419, 133, -339, 214, 260, - 213, -172, 380, -92, 461, -498, 53, 94, -378, 174, -297, -251, 300, 341, -131, 421, -50, 14, -459, -418, 134, -338, 215, 261, -212, -171, 381, -91, 462, -497, 54, 95, -377, 175, -296, -250, 301, 342, -130, 422, -49, 15, -458, -417, 135, -337, 216, 262, -211, -170, 382, -90, 463, -496, 55, 96, -376, 176, -295, -249, 302, 343, -129, 423, -48, 16,-457, -416, 136, -336, 217, 263, -210, -169, 383, -89, 464, -495, 56, 97, -375, 177, -294, -248, 303, 344, -128, 424, -47, 17, -456, -415, 137, -335, 218, 264, -209, -168, 384, -88, 465, -493, 57, 99, -374, 179, -293, -247, 304, 345, -127, 425, -46, 19, -455, -413, 138, -333, 219, 265, -208, -167, 385, -87, 466, -492, 59, 100, -373, 180, -291, - 245, 305, 347, -125, 427, -45, 20, -453, -412, 139, -332, 221, 267, -207, -165, 387, -85, 467, -491, 60, 101, -371, 181, -290, -244, 307, 348, -124, 428, -43, 21, -452, -411, 141, -331, 222, 268, -205, -164, 388, -84, 469, -490, 61, 102, -370, 182, -289, -243, 308, 349, -123, 429, -42, 22, -451, -410, 142, -330, 223, 269, -204, -163, 389, -83, 470, -489, 62, 103, -369, 183, -288, -242, 309, 350, -122, 430, -41, 23, -450, -409, 143, -329, 224, 270, -203, - 162, 390, -82, 471, -488, 63, 104, -368, 184, -287, -241, 310, 351, -121, 431, -40, 24, -449, -408, 144, -328, 225, 271, -202, -161, 391, -81, 472, -487, 64, 105, -367, 185, -286, -240, 311, 352, -120, 432, -39, 25, -448, -407, 145, -327, 226, 272, -201, -160, 392, -80, 473, -486, -445, 106, -365, 186, 227, -239, -198, 353, -118, 433, 474, 26, 67, -406, 147, -326, -285, 273, 314, -159, 394, -79, -38, -485, -444, 107, -364, 187, 228, -238, -197, 354, -117, 434, 475, 27, 68, -405, 148, -325, -284, 274, 315, -158, 395, -78, -37, -484, -443, 108, -363, 188, 229, -237, -196, 355, -116, 435, 476, 28, 69, -404, 149, -324, -283, 275, 316, -157, 396, -77, -36, -483, -442, 109, -362, 189, 230, -236, -195, 356, -115, 436, 477, 29, 70, -403, 150, -323, -282, 276, 317, -156, 397, -76, -35, -482, -441, 110, -361, 190, 231, -235, -194, 357, -114, 437, 478, 30, 71,-402, 151, -322, -281, 277, 318, -155, 398, -75, -34, -481, -439, 111, -359, 191, 233, -234, -193, 358, -113, 438, 479, 31, 73, -401, 153, -321, -279, 278, 319, -154, 399, -74, -33, -479, -438, 113, -358, 193, 234, -233, -191, 359, -111, 439, 481, 33, 74, -399, 154, -319, -278, 279, 321, -153, 401, -73, -31, -478, -437, 114, -357, 194, 235, -231, -190, 361, -110, 441, 482, 34, 75, -398, 155, -318, -277, 281, 322, - 151, 402, -71, -30, -477, -436, 115, -356, 195, 236, -230, -189, 362, -109, 442, 483, 35, 76, -397, 156, -317, -276, 282, 323, -150, 403, -70, -29, -476, -435, 116, -355, 196, 237, -229, -188, 363, -108, 443, 484, 36, 77, -396, 157, -316, -275, 283, 324, -149, 404, -69, -28, -475, -434, 117, -354, 197, 238, -228, -187, 364, -107, 444, 485, 37, 78, -395, 158, -315, -274, 284, 325, -148, 405, -68, -27, -474, -433, 118, -353, 198, 239, -227, -186, 365, -106, 445, 486, 38, 79, -394, 159, -314, -273, 285, 326, -147, 406, -67, -26, 39, -432, -392, -352, -311, 240, 286, -185, -145, -105, -64, 487, -473, 80, 120, 160, 201, -272, -226, 327, 367, 407, 448, -25, 40, -431, -391, -351, -310, 241, 287, -184, -144, -104, -63, 488, -472, 81, 121, 161, 202, -271, -225, 328, 368, 408, 449, -24, 41, -430, -390, -350, - 309, 242, 288, -183, -143, -103, -62, 489, -471, 82, 122, 162, 203, -270, -224, 329, 369, 409, 450, -23, 42, -429, - 389, -349, -308, 243, 289, -182, -142, -102, -61, 490, -470, 83, 123, 163, 204, -269, -223, 330, 370, 410, 451, - 22, 43, -428, -388, -348, -307, 244, 290, -181, -141, -101, -60, 491, -469, 84, 124, 164, 205, -268, -222, 331, 371, 411, 452, -21, 45, -427, -387, -347, -305, 245, 291, -180, -139, -100, -59, 492, -467, 85, 125, 165, 207, -267, - 221, 332, 373, 412, 453, -20, 46, -425, -385, -345, -304, 247, 293, -179, -138, -99, -57, 493, -466, 87, 127, 167, 208, -265, -219, 333, 374, 413, 455, -19, 47, -424, -384, -344, -303, 248, 294, -177, -137, -97, -56, 495, -465, 88, 128, 168, 209, -264, -218, 335, 375, 415, 456, -17, 48, -423, -383, -343, -302, 249, 295, -176, -136, -96, -55, 496, -464, 89, 129, 169, 210, -263, -217, 336, 376, 416, 457, -16, 49, -422, -382, -342, -301, 250, 296, -175, -135, - 95, -54, 497, -463, 90, 130, 170, 211, -262, -216, 337, 377, 417, 458, -15, 50, -421, -381, -341, -300, 251, 297, - 174, -134, -94, -53, 498, -462, 91, 131, 171, 212, -261, -215, 338, 378, 418, 459, -14, 51, -420, -380, -340, -299, 252, 298, -173, -133, -93, -52, 499, -461, 92, 132, 172, 213, -260, -214, 339, 379, 419, 460, -13}.

Certainly, before the subcarriers are mapped according to equation (1), pairwise permutation may alternatively be performed on the 26-tone RU or the 52-tone RU in a manner described in the mapping relationship 1 in FIG. 9A, FIG. 9B, FIG. 10A, FIG. 10B, or the like.

For an MRU/RU with a quantity of 2*996, 3*996, or 4*996 subcarriers, the mapping relationship shown in the foregoing 996-tone RU may be used for each 996-tone RU. For different 996-tone RUs, a same mapping relationship or different mapping relationships may be used, or mapping and permutation may be performed on all or only some 996-tone RUs. This is not specifically limited in this application.

It should be noted that the mapping relationship between the VRU and the PRU may be agreed on in advance in a protocol. For example, the mapping table provided in this embodiment of this application is pre-stored, and after the VRU is determined based on the resource allocation indication information, the PRU that actually sends data may be obtained by querying the table. Alternatively, the mapping relationship may be used as a rule. After receiving the resource indication information indicating the VRU, the first communication apparatus further calculates a corresponding PRU based on the rule. In addition, the first communication apparatus may be notified of the mapping relationship before or after the second communication apparatus sends the resource allocation indication information, or when the second communication apparatus sends the resource indication information, so that the first communication apparatus obtains the PRU based on the resource indication information and the mapping relationship. This is not limited in this application.

In the foregoing embodiments provided in this application, the methods provided in embodiments of this application are described from a perspective of interaction between a STA and an AP. To implement the functions in the method provided in embodiments of this application, the STA and the AP may include a hardware structure and/or a software module, to implement the foregoing functions by using the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

The following describes, with reference to the accompanying drawings, a communication apparatus for implementing the foregoing method in embodiments of this application. Therefore, all the foregoing content may be used in the following embodiments. Repeated content is not described again.

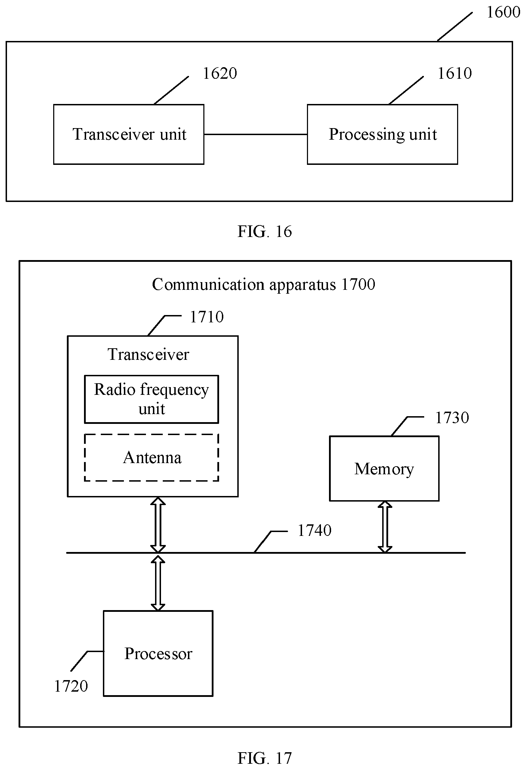

FIG. 16 is a schematic block diagram of a communication apparatus 1600 according to an embodiment of this application. The communication apparatus 1600 may correspondingly implement functions or steps of a STA or an AP in the method embodiments. The communication apparatus may include a processing unit 1610 and a transceiver unit 1620. Optionally, the communication apparatus may further include a storage unit. The storage unit may be configured to store instructions (code or a program) and/or data. The processing unit 1610 and the transceiver unit 1620 may be coupled to the storage unit. For example, the processing unit 1610 may read the instructions (the code or the program) and/or the data in the storage unit, to implement a corresponding method. The foregoing units may be independently disposed, or may be partially or completely integrated.

In some possible implementations, the communication apparatus 1600 can correspondingly implement behavior and functions of the communication device at the transmit end in the method embodiments. For example, the communication apparatus 1600 may be an AP, or may be a component (for example, a chip or a circuit) used in the AP. The transceiver unit 1620 may be configured to perform all receiving or sending operations performed by the AP in the embodiment shown in FIG. 7, for example, S701 and S703 in the embodiment shown in FIG. 7, and/or configured to support another process of the technology described in this specification. The processing unit 1610 is configured to perform all operations performed by the AP in the embodiment shown in FIG. 7 except receiving and sending operations, and/or configured to support another process of the technology described in this specification.

For example, the processing unit 1610 is configured to generate resource indication information, where the resource indication information includes resource unit allocation information for indicating one or more first virtual resource units VRUs and station information of a station to which the one or more first VRUs are allocated, and the first VRU includes a plurality of subcarriers continuous in frequency domain. The transceiver unit 1620 is configured to send the resource indication information. The transceiver unit 1620 is further configured to receive data on the first PRU.

In some possible implementations, the communication apparatus 1600 can correspondingly implement behavior and functions of the communication device at the receive end in the method embodiments. For example, the communication apparatus 1600 may be a STA or an AP, or may be a component (for example, a chip or a circuit) used in the STA or the AP. The transceiver unit 1620 may be configured to perform all receiving or sending operations performed by a second device in the embodiment shown in FIG. 7, for example, S701 and S703 in the embodiment shown in FIG. 7, and/or another process used to support the technology described in this specification. The processing unit 1610 is configured to perform all operations performed by the second device in the embodiment shown in FIG. 7 except a receiving and sending operation, for example, S702 in the embodiment shown in FIG. 7, and/or another process used to support the technology described in this specification.

For example, the transceiver unit 1620 is configured to receive resource indication information, where the resource indication information includes resource unit allocation information for indicating one or more first virtual resource units VRUs and station information of a station to which the one or more first VRUs are allocated, and the first VRU includes a plurality of subcarriers continuous in frequency domain. The processing unit 1610 is configured to determine a first physical resource unit PRU based on the resource indication information, where there is a mapping relationship between the first PRU and the first VRU, the first PRU includes a plurality of subcarrier groups discrete in the frequency domain, and one subcarrier group includes one subcarrier or includes at least two continuous subcarriers. The transceiver unit 1620 is further configured to transmit data on the first PRU.

It should be understood that the processing unit 1610 in this embodiment of this application may be implemented by a processor or a processor-related circuit assembly, and the transceiver unit 1620 may be implemented by a transceiver or a transceiver-related circuit assembly or a communication interface.

FIG. 17 shows a communication apparatus 1700 according to an embodiment of this application. The communication apparatus 1700 may be an AP or a STA or an interleaver, and can implement functions of the AP or the STA in the methods provided in embodiments of this application. Alternatively, the communication apparatus 1700 may be an apparatus that can support the AP to implement a corresponding function in the methods provided in embodiments of this application, or an apparatus that can support the STA to implement a corresponding function in the methods provided in embodiments of this application. The communication apparatus 1700 may be a chip or a chip system. In this embodiment of this application, the chip system may include a chip, or may include a chip and another discrete component.

In hardware implementation, the transceiver unit 1620 may be a transceiver 1710.

The communication apparatus 1700 includes at least one processor 1720, configured to implement or support the communication apparatus 1700 to implement a function of the AP or the STA in the method provided in embodiments of this application, for example, generating the foregoing resource indication information. The communication apparatus 1700 may further include at least one memory 1730, configured to store program instructions and/or data. The memory 1730 is coupled to the processor 1720. The coupling in this embodiment of this application may be an indirect coupling or a communication connection between apparatuses, units, or modules in an electrical form, a mechanical form, or another form, and is used for information exchange between the apparatuses, the units, or the modules. The processor 1720 may cooperate with the memory 1730. The processor 1720 may execute the program instructions and/or the data stored in the memory 1730, so that the communication apparatus 1700 implements a corresponding method. At least one of the at least one memory may be located in the processor

The communication apparatus 1700 may further include the transceiver 1710, configured to communicate with another device through a transmission medium, so that an apparatus in the communication apparatus 1700 may communicate with the another device. For example, when the communication apparatus is an AP, the another device is a STA or an AP; or when the communication apparatus is a STA, the another device is a STA or an AP. The processor 1720 may send and receive data by using the transceiver 1710. The transceiver 1710 may be specifically a transceiver. The communication apparatus 1700 may further include a radio frequency unit. The radio frequency unit may be independent of the communication apparatus 1700, or may be integrated into the communication apparatus 1700. Certainly, the transceiver 1710 may further include an antenna, for example, a remote antenna independent of the communication apparatus 1700, or may be an antenna integrated into the communication apparatus 1700.

A specific connection medium among the transceiver 1710, the processor 1720, and the memory 1730 is not limited in this embodiment of this application. In this embodiment of this application, the memory 1730, the processor 1720, and the transceiver 1710 are connected through a bus 1740 in FIG. 17. The bus is denoted by using a bold line in FIG. 17. A manner of connection between other components is merely an example for description, and cannot be construed as a limitation. The bus may be classified into an address bus, a data bus, a control bus, and the like. For ease of representation, only one thick line is used to represent the bus in FIG. 17, but this does not mean that there is only one bus or only one type of bus.

In this embodiment of this application, the processor 1720 may be a general-purpose processor, a digital signal processor, an application-specific integrated circuit, a field programmable gate array or another programmable logic device, a discrete gate or transistor logic device, or a discrete hardware component, and may implement or perform the methods, steps, and logical block diagrams disclosed in this embodiment of this application. The general purpose processor may be a microprocessor or any conventional processor or the like. The steps of the method disclosed with reference to embodiments of this application may be directly performed by a hardware processor, or may be performed by using a combination of hardware in the processor and a software module.

In this embodiment of this application, the memory 1730 may be a non-volatile memory, such as a hard disk drive (hard disk drive, HDD) or a solid-state drive (solid-state drive, SSD), or may be a volatile memory (volatile memory), such as a random-access memory (random-access memory, RAM). The memory is any other medium that can carry or store expected program code in a form of an instruction or a data structure and that can be accessed by a computer, but is not limited thereto. The memory in embodiments of this application may alternatively be a circuit or any other apparatus that can implement a storage function, and is configured to store the program instructions and/or the data.

It should be noted that the communication apparatus in the foregoing embodiments may be a terminal, a circuit, a chip used in the terminal, or another combined component, component, or the like that has a function of the terminal. When the communication apparatus is the terminal, the transceiver unit may be a transceiver, and may include an antenna, a radio frequency circuit, and the like. The processing module may be a processor, for example, a central processing unit (central processing unit, CPU). When the communication apparatus is the component that has functions of the terminal, the transceiver unit may be the radio frequency unit, and the processing module may be the processor. When the communication apparatus is the chip or the chip system, the transceiver module may be an input/output interface of the chip or the chip system, and the processing module may be a processor of the chip or the chip system.

As a possible product form, the AP or the STA described in this embodiment of this application may be further implemented by using the following components: one or more FPGAs (field programmable gate arrays), a PLD (programmable logic device), a controller, a state machine, gate logic, a discrete hardware component, any other suitable circuit, or any combination of circuits that can perform various functions described in this application.

The communication device at the transmit end in this embodiment of this application may be an AP or a STA. The communication device at the receive end may be an AP or a STA. It should be understood that the APs in the foregoing product forms have any function of the AP in the foregoing method embodiments, and implement the steps performed by the AP in the foregoing method embodiments. For beneficial effects, refer to the foregoing method embodiments. Details are not described herein again. The STAs in the foregoing product forms have any function of the STA in the foregoing method embodiments, and implement the steps performed by the STA in the foregoing method embodiments. For beneficial effects, refer to the foregoing method embodiments. Details are not described herein again.

An embodiment of this application further provides a communication system. Specifically, the communication system includes a second device and a first device, or may further include more first devices and second devices. For example, the communication system includes a STA and an AP that are configured to implement a related function in FIG. 7.

An embodiment of this application further provides a computer-readable storage medium, including instructions. When the instructions are run on a computer, the computer is enabled to perform the method performed by the STA or AP in FIG. 7.

An embodiment of this application further provides a computer program product, including computer program code or instructions. When the computer program code or the instructions are run on a computer, the computer is enabled to perform the method performed by the STA or the AP in FIG. 7.

An embodiment of this application provides a chip system. The chip system includes a processor and may further include a memory, and is configured to implement a function of the STA or the AP in the foregoing methods. The chip system may include a chip, or may include a chip and another discrete component.

An embodiment of this application further provides a communication apparatus, including a processor and an interface. The processor is configured to perform the resource indication method in any one of the foregoing method embodiments.

It should be understood that the communication apparatus may be a chip. The processor may be implemented by hardware, or may be implemented by software. When the processor is implemented by the hardware, the processor may be a logic circuit, an integrated circuit, or the like. When the processor is implemented by the software, the processor may be a general-purpose processor. The general-purpose processor is implemented by reading software code stored in a memory. The memory may be integrated into the processor, or may be located outside the processor and exist independently.

It should be understood that the terms "system" and "network" may be used interchangeably in embodiments of this application. "At least one" means one or more, and " a plurality of" means two or more. "And/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. At least one of the following items (pieces) or a similar expression thereof refers to any combination of these items, including any combination of singular items (pieces) or plural items (pieces). For example, at least one of a, b, or c may represent: a, b, c, a and b, a and c, b and c, or a, b, and c, where a, b, and c may be singular or plural.

In addition, unless otherwise stated, ordinal numbers such as "first" and "second" in embodiments of this application are for distinguishing between a plurality of objects, but are not intended to limit an order, a time sequence, priorities, or importance of the plurality of objects. For example, first information and second information are merely used to distinguish between different indication information, and do not indicate different priorities, importance, or the like of the two types of information.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

In addition, the term "for example" in embodiments of this application is used to represent an example or a description. Any embodiment or implementation solution described as an "example" in embodiments of this application should not be explained as being more preferred than another embodiment or implementation solution. That is, using the word "example" is intended to describe a concept in a specific manner.

In this application, unless otherwise specified, for same or similar parts of embodiments, refer to each other. In embodiments of this application and the implementations/implementation methods in embodiments, unless otherwise specified or a logical conflict occurs, terms and/or descriptions are consistent and may be mutually referenced between different embodiments and between the implementations/implementation methods in embodiments. Technical features in the different embodiments and the implementations/implementation methods in embodiments may be combined to form a new embodiment, implementation, or implementation method based on an internal logical relationship thereof. The following implementations of this application are not intended to limit the protection scope of this application.

All or some of the methods in embodiments of this application may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedure or functions according to embodiments of the present invention are all or partially generated. The computer may be a general-purpose computer, a dedicated computer, a computer network, a network device, user equipment, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL for short)) or wireless (for example, infrared, radio, or microwave) manner. The computer-readable storage medium may be any usable medium accessible by the computer, or a data storage device such as a server or a data center, integrating one or more usable media. The usable medium may be a magnetic medium (for example, a floppy disk, a hard disk, or a magnetic tape), an optical medium (for example, a digital video disc (digital video disc, DVD for short)), a semiconductor medium (for example, an SSD), or the like.

The foregoing descriptions are merely specific implementations of this application, but are not intended to limit the protection scope of this application. Any variation or permutation readily figured out by a person skilled in the art within the technical scope disclosed in this application shall fall within the protection scope of this application. Therefore, the protection scope of this application shall be subject to the protection scope of the claims.

**Claims**

1. A resource indication method, comprising:

receiving, by a first communication apparatus, resource indication information, wherein the resource indication information comprises resource unit allocation information for indicating one or more first virtual resource units VRUs and station information of a station to which the one or more first VRUs are allocated, and the first VRU comprises a plurality of subcarriers continuous in frequency domain;

determining, by the first communication apparatus, a first physical resource unit PRU based on the resource indication information, wherein there is a mapping relationship between the first PRU and the first VRU, the first PRU comprises a plurality of subcarrier groups discrete in frequency domain, and one subcarrier group comprises one subcarrier or comprises at least two continuous subcarriers; and

transmitting, by the first communication apparatus, data on the first PRU.

2. A resource indication method, comprising:

sending, by a second communication apparatus, resource indication information, wherein the resource indication information comprises resource unit allocation information for indicating one or more first virtual resource units VRUs and station information of a station to which the one or more first VRUs are allocated, and the first VRU comprises a plurality of subcarriers continuous in frequency domain; and

receiving, by the second communication apparatus, data on a first physical resource unit PRU, wherein there is a mapping relationship between the first PRU and the first VRU, the first PRU comprises a plurality of subcarrier groups discrete in frequency domain, and one subcarrier group comprises one subcarrier or comprises at least two continuous subcarriers.

3. The method according to claim 1 or 2, wherein the mapping relationship comprises:

a difference between an index of one first VRU in the one or more first VRUs and an index of the first PRU corresponding to the one first VRU is a first specified value; or

an index of one first VRU in the one or more first VRUs is the same as an index of the first PRU corresponding to the one first VRU; and

the index of the one first VRU in the one or more first VRUs is determined based on the resource unit allocation information.

4. The method according to claim 3, wherein the mapping relationship specifically comprises:

mapping is performed by using each 26-tone RU of 9 26-tone RUs comprised in each 20 MHz as a minimum unit, indices of the 9 26-tone RUs are respectively {1, 2, 3, 4, 5, 6, 7, 8, 9}+q, and indices obtained by mapping the 9 26-tone RUs are respectively {1, 7, 3, 9, 5, 6, 2, 8, 4}+q, {6, 2, 8, 4, 5, 1, 7, 3, 9}+q, {1, 2, 8, 9, 5, 6, 7, 3, 4}+q, or {6, 7, 3, 4, 5, 1, 2, 8, 9}+q, wherein q is an integer, q = 9*b, b is an integer, b indicates a quantity of 20 MHz comprised in a maximum resource bandwidth allocated by the second communication apparatus minus 1, and q = 0, 9, 18, 27, or the like; and

one first VRU in the one or more first VRUs is one or more of the 26-tone RUs whose indices are {1, 2, 3, 4, 5, 6, 7, 8, 9}+q, and the first PRU corresponding to the one first VRU in the one or more first VRUs is one or more of 26-tone RUs whose indices are {1, 7, 3, 9, 5, 6, 2, 8, 4}+q, or the first PRU corresponding to the one first VRU in the one or more first VRUs is one or more of 26-tone RUs whose indices are {6, 2, 8, 4, 5, 1, 7, 3, 9}+q, or the first PRU corresponding to the one first VRU in the one or more first VRUs is one or more of 26-tone RUs whose indices are {1, 2, 8, 9, 5, 6, 7, 3, 4}+q, or the first PRU corresponding to the one first VRU in the one or more first VRUs is one or more of 26-tone RUs whose indices are {6, 7, 3, 4, 5, 1, 2, 8, 9}+q.

5. The method according to claim 3, wherein the mapping relationship specifically comprises:
a maximum resource bandwidth allocated by the second communication apparatus is greater than or equal to 40 MHz, the maximum resource bandwidth comprises at least two 242-tone RUs, mapping is performed by using each 26-tone RU in 18 26-tone RUs comprised in the at least two 242-tone RUs as a minimum unit, indices of the 18 26-tone RUs are respectively {1, 2, 3, 4, 5, 6, 7, 8, 9}, {10, 11, 12, 13, 14, 15, 16, 17, 18}+m, and indices obtained by mapping the 18 26-tone RUs are respectively {1, 11+m, 3, 13+m, 5, 6, 16+m, 8, 18+m}, {10+m, 2, 12+m, 4, 14+m, 15+m, 7, 17+m, 9}, or {10+m, 2, 12+m, 4, 5, 15+m, 7, 17+m, 9}, {1, 11+m, 3, 13+m, 14+m, 6, 16+m, 8, 18+m}, wherein m is an integer, m = 9*a, a is an integer, a indicates a quantity of 242-tone RUs between the at least two 242-tone RUs, and m = 0, 9, 18, 27, or the like.

6. The method according to any one of claims 1 to 5, wherein a sequence number of a subcarrier in the first PRU determined for a subcarrier with a sequence number of k in the first VRUs based on the mapping relationship is k', and satisfies the following equation:

$$k' = M_t * x * \mathrm{mod}(k, M_c) + \lfloor k/M_c \rfloor$$

, wherein
$M_t$ indicates a quantity of first VRUs that participate in mapping in each 20 MHz, $M_t$ is an integer, $1 \le M_t \le 9$, x is an integer, x = 1, 2, 4, 8, 16, or the like, $M_t$*x indicates a total quantity of the first VRUs that participate in mapping, mode( ) indicates a modulo operation, $M_c$ indicates a quantity of subcarriers that participate in mapping in one first VRU, $1 \le M_c \le 26$, k is an integer, and k = 0, 1, 2, ..., or $M_t$*$M_c$*x-1.

7. The method according to claim 6, wherein indices of subcarriers comprised in the first VRUs are respectively [0, 1, 2, ..., $M_c$ - 1]+n*$M_c$, and indices of subcarrier groups comprised in the first PRU are respectively [0, 1*$M_t$ * x, 2*$M_t$ * x, 3*$M_t$ * x, ..., ($M_c$ - 1)*$M_t$ * x]+n, wherein n is an integer, and n = 0, 1, 2, ..., or $M_t$ * x - 1.

8. A communication apparatus, comprising a processing unit and a transceiver unit, wherein

the transceiver unit is configured to receive resource indication information, wherein the resource indication information comprises resource unit allocation information for indicating one or more first virtual resource units VRUs and station information of a station to which the one or more first VRUs are allocated, and the first VRU comprises a plurality of subcarriers continuous in frequency domain;
the processing unit is configured to determine a first physical resource unit PRU based on the resource indication information, wherein there is a mapping relationship between the first PRU and the first VRU, the first PRU comprises a plurality of subcarrier groups discrete in frequency domain, and one subcarrier group comprises one subcarrier or comprises at least two continuous subcarriers; and
the transceiver unit is further configured to transmit data on the first PRU.

9. A communication apparatus, comprising a processing unit and a transceiver unit, wherein

the processing unit is configured to generate resource indication information, wherein the resource indication information comprises resource unit allocation information for indicating one or more first virtual resource units VRUs and station information of a station to which the one or more first VRUs are allocated, and the first VRU comprises a plurality of subcarriers continuous in frequency domain;
the transceiver unit is configured to send the resource indication information; and
the transceiver unit is further configured to receive data on the first PRU.

10. The apparatus according to claim 8 or 9, wherein the mapping relationship comprises:

a difference between an index of one first VRU in the one or more first VRUs and an index of the first PRU corresponding to the one first VRU is a first specified value; or
an index of one first VRU in the one or more first VRUs is the same as an index of the first PRU corresponding to the one first VRU; and
the index of the one first VRU in the one or more first VRUs is determined based on the resource unit allocation information.

11. The apparatus according to claim 10, wherein the mapping relationship specifically comprises:

mapping is performed by using each 26-tone RU of 9 26-tone RUs comprised in each 20 MHz as a minimum unit, indices of the 9 26-tone RUs are respectively {1, 2, 3, 4, 5, 6, 7, 8, 9}+q, and indices obtained by mapping the 9 26-tone RUs are respectively {1, 7, 3, 9, 5, 6, 2, 8, 4}+q, {6, 2, 8, 4, 5, 1, 7, 3, 9}+q, {1, 2, 8, 9, 5, 6, 7, 3, 4}+q, or {6, 7, 3, 4, 5, 1, 2, 8, 9}+q, wherein q is an integer, q = 9*b, b is an integer, b indicates a quantity of 20 MHz comprised in a maximum resource bandwidth allocated by the second communication apparatus minus 1, and q = 0, 9, 18, 27, or the like; and
one first VRU in the one or more first VRUs is one or more of the 26-tone RUs whose indices are {1, 2, 3, 4, 5, 6, 7, 8, 9}+q, and the first PRU corresponding to the one first VRU in the one or more first VRUs is one or more of 26-tone RUs whose indices are {1, 7, 3, 9, 5, 6, 2, 8, 4}+q, or the first PRU corresponding to the one first VRU in the one or more first VRUs is one or more of 26-tone RUs whose indices are {6, 2, 8, 4, 5, 1, 7, 3, 9}+q, or the first PRU corresponding to the one first VRU in the one or more first VRUs is one or more of 26-tone RUs whose indices are {1, 2, 8, 9, 5, 6, 7, 3, 4}+q, or the first PRU corresponding to the one first VRU in the one or more first VRUs is one or more of 26-tone RUs whose indices are {6, 7, 3, 4, 5, 1, 2, 8, 9}+q.

12. The apparatus according to claim 10, wherein the mapping relationship specifically comprises:
    a maximum resource bandwidth allocated by the second communication apparatus is greater than or equal to 40 MHz, the maximum resource bandwidth comprises at least two 242-tone RUs, mapping is performed by using each 26-tone RU in 18 26-tone RUs comprised in the at least two 242-tone RUs as a minimum unit, indices of the 18 26-tone RUs are respectively {1, 2, 3, 4, 5, 6, 7, 8, 9}, {10, 11, 12, 13, 14, 15, 16, 17, 18}+m, and indices obtained by mapping the 18 26-tone RUs are respectively {1, 11+m, 3, 13+m, 5, 6, 16+m, 8, 18+m}, {10+m, 2, 12+m, 4, 14+m, 15+m, 7, 17+m, 9}, or {10+m, 2, 12+m, 4, 5, 15+m, 7, 17+m, 9}, {1, 11+m, 3, 13+m, 14+m, 6, 16+m, 8, 18+m}, wherein m is an integer, m = 9*a, a is an integer, a indicates a quantity of 242-tone RUs between the at least two 242-tone RUs, and m = 0, 9, 18, 27, or the like.

13. The apparatus according to any one of claims 8 to 12, wherein a sequence number of a subcarrier in the first PRU determined for a subcarrier with a sequence number of k in the first VRUs based on the mapping relationship is k', and satisfies the following equation:

$$k' = M_t * x * \text{mod}(k, M_c) + \lfloor k/M_c \rfloor$$

, wherein
$M_t$ indicates a quantity of first VRUs that participate in mapping in each 20 MHz, $M_t$ is an integer, $1 \leq M_t \leq 9$, x is an integer, x = 1, 2, 4, 8, 16, or the like, $M_t*x$ indicates a total quantity of the first VRUs that participate in mapping, mode( ) indicates a modulo operation, $M_c$ indicates a quantity of subcarriers that participate in mapping in one first VRU, $1 \leq M_c \leq 26$, and k = 0, 1, 2, ..., or $M_t*M_c*x-1$.

14. The apparatus according to claim 13, wherein indices of subcarriers comprised in the first VRUs are respectively [0, 1, 2, ..., $M_c$ - 1]+n*$M_c$, and indices of subcarrier groups comprised in the first PRU are respectively [0, 1*$M_t$ * x, 2*$M_t$ * x, 3*$M_t$ * x, ..., ($M_c$ - 1)*$M_t$ * x]+n, wherein n = 0, 1, 2, ..., or $M_t$ * x - 1.

15. A communication apparatus, wherein the apparatus comprises a processor and a memory;

    the memory is configured to store a computer program or instructions; and
    the processor is configured to execute the computer program or instructions stored in the memory, so that the method according to any one of claims 1 or 3 to 7 is performed or the method according to any one of claims 2 to 7 is performed.

16. A chip, comprising an input/output interface and a processing circuit, wherein
    the input/output interface is configured to input/output information or data, and the processing circuit is configured to perform the method according to any one of claims 1 or 3 to 7 or the method according to any one of claims 2 to 7.

17. A computer-readable storage medium, wherein the computer-readable storage medium stores computer-executable instructions, and when the computer-executable instructions are invoked by a computer, the computer is enabled to perform the method according to any one of claims 1 or 3 to 7 or the method according to any one of claims 2 to 7.

18. A computer program product, comprising computer-executable instructions, wherein when the instructions are run on a computer, the method according to any one of claims 1 or 3 to 7 is performed, or the method according to any one of claims 2 to 7 is performed.

Wireless access point
(AP)

Station 1
(STA 1)

Station 2
(STA 2)

FIG. 1

FIG. 2

EP 4 351 235 A1

Guard
subcarrier

Null
subcarrier

Null
subcarrier

52-
tone
RU

106-
tone
RU

242-
tone
RU

484-
tone
RU

| 26 | 26 | 26 | 26 | 26 | 26 | 26 | 26 | 26 | 26 | 26 | 26 | 26 | 26 | 26 | 26 | 26 | 26 |

| 52 | 52 | 52 | 52 | 52 | 52 | 52 | 52 |

| 106 | 106 | 106 | 106 |

| 242 | 242 |

484 + 5 DC

FIG. 3

FIG. 4

FIG. 5

FIG. 6

FIG. 7

VRU

Permutation

Bandwidth occupied by RU 1 and RU 2 after permutation

FIG. 8

Before permutation

After permutation

FIG. 9A

Before permutation

After permutation

FIG. 9B

Before permutation

After permutation

FIG. 10A

FIG. 10B

Before permutation

After permutation

FIG. 11A

Before permutation

After permutation

FIG. 11B

FIG. 11C

Before permutation

After permutation

FIG. 11D

Before permutation

After permutation

FIG. 11E

Before permutation

After permutation

FIG. 11F

0   1

78.125 kHz
VRU

0                    12.8

1 MHz
PRU

FIG. 12A

1 MHz          1 MHz

PRU

FIG. 12B

FIG. 13

FIG. 14

FIG. 15A

TO FIG. 15B

259 266 272 279    286 293 299 306    313 320    326 333 339 346    353 360 366 373        383 390 396 403    410 417 423 430    436 443    450 457 463 470    477 484 490 497

CONT.
FROM
FIG. 15A

FIG. 15B

FIG. 16

FIG. 17

## INTERNATIONAL SEARCH REPORT

| International application No. |
| --- |
| **PCT/CN2022/095006** |

### A. CLASSIFICATION OF SUBJECT MATTER

H04W 52/36(2009.01)i

According to International Patent Classification (IPC) or to both national classification and IPC

### B. FIELDS SEARCHED

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

WPABS; CNTXT; CNKI; ENTXT; CJFD; 3GPP: 虚拟资源, VRU, VRB, 物理资源, PRU, PRB, RU, RB, 子载波, 映射, 索引, 连续, 离散, 不连续, 非连续, physical, virtual, resource?, subcarrier, index, mapping, consecutive, inconsecutive, distribute, discrete

### C. DOCUMENTS CONSIDERED TO BE RELEVANT

| Category* | Citation of document, with indication, where appropriate, of the relevant passages | Relevant to claim No. |
| --- | --- | --- |
| X | WO 2021029442 A1 (SHARP K. K.) 18 February 2021 (2021-02-18) description, paragraphs 99-215 and 238-244 | 1, 2, 8, 9, 15-18 |
| A | US 2008240034 A1 (GOLLAMUDI, S.) 02 October 2008 (2008-10-02) entire document | 1-18 |
| A | US 2018192409 A1 (ZTE CORP.) 05 July 2018 (2018-07-05) entire document | 1-18 |
| A | US 2019123848 A1 (GUANDONG OPPO MOBILE TELECOMMUNICATIONS CORP., LTD.) 25 April 2019 (2019-04-25) entire document | 1-18 |
| A | US 2013034062 A1 (LG ELECTRONICS INC.) 07 February 2013 (2013-02-07) entire document | 1-18 |

☐ Further documents are listed in the continuation of Box C.　☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **10 August 2022** | **22 August 2022** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/095006**

| Patent document cited in search report | | | Publication date (day/month/year) | Patent family member(s) | | | Publication date (day/month/year) |
|---|---|---|---|---|---|---|---|
| WO | 2021029442 | A1 | 18 February 2021 | None | | | |
| US | 2008240034 | A1 | 02 October 2008 | WO | 2008115485 | A1 | 25 September 2008 |
| US | 2018192409 | A1 | 05 July 2018 | EP | 3319387 | A1 | 09 May 2018 |
| | | | | CN | 106332286 | A | 11 January 2017 |
| | | | | WO | 2017000903 | A1 | 05 January 2017 |
| US | 2019123848 | A1 | 25 April 2019 | JP | 2019503093 | A | 31 January 2019 |
| | | | | BR | 112018006742 | A2 | 16 October 2018 |
| | | | | CA | 2997527 | A1 | 18 May 2017 |
| | | | | ZA | 201801533 | B | 30 January 2019 |
| | | | | EP | 3331294 | A1 | 06 June 2018 |
| | | | | AU | 2015414651 | A1 | 29 March 2018 |
| | | | | CN | 108029105 | A | 11 May 2018 |
| | | | | WO | 2017079982 | A1 | 18 May 2017 |
| | | | | KR | 20180084735 | A | 25 July 2018 |
| US | 2013034062 | A1 | 07 February 2013 | None | | | |

Form PCT/ISA/210 (patent family annex) (January 2015)

**REFERENCES CITED IN THE DESCRIPTION**

**Patent documents cited in the description**

• CN 202110694205